(19) Europäisches Patentamt
European Patent Office
Office européen des brevets

(11) EP 1 354 908 A1

(12) EUROPEAN PATENT APPLICATION
published in accordance with Art. 158(3) EPC

(43) Date of publication:
22.10.2003 Bulletin 2003/43

(21) Application number: 01998583.7

(22) Date of filing: 30.11.2001

(51) Int Cl.[7]: C08G 85/00, C08G 63/68, C08J 5/00 // C08L67:00

(86) International application number:
PCT/JP01/10502

(87) International publication number:
WO 02/044249 (06.06.2002 Gazette 2002/23)

(84) Designated Contracting States:
AT BE CH CY DE DK ES FI FR GB GR IE IT LI LU MC NL PT SE TR

(30) Priority: 30.11.2000 JP 2000366340
30.03.2001 JP 2001101183
30.03.2001 JP 2001101200
30.03.2001 JP 2001101217
30.03.2001 JP 2001101230
30.03.2001 JP 2001101242
30.03.2001 JP 2001101257
30.03.2001 JP 2001101315
30.03.2001 JP 2001101338
30.03.2001 JP 2001101348
30.03.2001 JP 2001101367
30.03.2001 JP 2001101480

(71) Applicant: DAICEL CHEMICAL INDUSTRIES, Ltd.
Sakai-shi, Osaka 590-0905 (JP)

(72) Inventors:
- KATAYAMA, Hiroshi
Himeji-shi, Hyogo 672-8044 (JP)
- OKANO, Yoshimichi
Himeji-shi, Hyogo 672-8014 (JP)
- IIYAMA, Takashi
Himeji-shi, Hyogo 671-1262 (JP)
- ITO, Masaaki
Himeji-shi, Hyogo 671-1234 (JP)
- TERANISHI, Tadashi
Himeji-shi, Hyogo 671-1262 (JP)
- OMAE, Hitomi
Kanzaki-gun, Hyogo 679-2213 (JP)
- SUMIMOTO, Satoru
Himeji-shi, Hyogo 672-8079 (JP)
- NISHIMURA, Kenji
Himeji-shi, Hyogo 671-1211 (JP)
- NAKATA, Koji
Himeji-shi, Hyogo 671-1234 (JP)
- SHIMIZU, Kunio
Himeji-shi, Hyogo 671-1146 (JP)
- MURAKAMI, Tadashi
Matsudo-shi, Chiba 270-0035 (JP)

(74) Representative: Portal, Gérard et al
Cabinet Beau de Loménie
158, rue de l'Université
75340 Paris Cédex 07 (FR)

# (54) ALIPHATIC POLYESTER COPOLYMER AND PROCESS FOR PRODUCING THE SAME, BIODEGRADABLE RESIN MOLDING BASED ON ALIPHATIC POLYESTER, AND LACTONE-CONTAINING RESIN

(57) A high molecular weight aliphatic polyester copolymer, a high molecular weight aliphatic polyester copolymer containing polylactic acid; process for industrially producing these copolymers; composition of these copolymers; and various uses thereof. These copolymers have practical properties which make the copolymers moldable. They are free from the problem of plasticizer bleeding and can be degraded by microorganisms present in soils or water. They give moldings, such as sheets and films, which combine a sufficient strength with tear resistance. When the copolymers are ones having a branched structure, they give a molding having excellent mechanical properties. The moldings obtained from compositions containing either of these copolymers are excellent in elongation and biodegradability and have a satisfactory balanc therebetween. In particular, blending with one or more other biodegradable resins gives a molding having better moldability.

EP 1 354 908 A1

## Description

TECHNICAL FIELD

Group I of the present invention relates to high molecular weight aliphatic polyester copolymers, to processes for producing the same, and to moldings such as films made by molding the above-mentioned copolymer. In more detail, it relates to high molecular weight aliphatic polyester copolymers having physical properties which make the copolymers moldable, to moldings having physical properties which make the moldings practically usable, to high molecular weight aliphatic polyester copolymers which are degradable by microorganisms present in soils and waters, to production processes for industrially supplying the above-mentioned copolymers, and to film moldings obtained by molding these copolymers.

Group II of the present invention relates to polylactic acid-based high molecular weight aliphatic polyester copolymers having biodegradability and to processes for producing such copolymers. In more detail, it relates to polylactic acid-based high molecular weight aliphatic polyester copolymers having practical physical properties which make the copolymers moldable and biodegradability by microorganisms present in soils and water and to processes for producing these copolymers which can industrially supply them.

Group III of the present invention relates to high molecular weight aliphatic polyester copolymers and to processes for producing the copolymers. In more detail, it relates to biodegradable high molecular weight aliphatic polyester copolymers capable of giving moldings, such as sheets and films, which combine a sufficient strength with tear resistance and to processes for producing the copolymers.

Group IV of the present invention relates to biodegradable aliphatic polyester copolymers and to processes for producing the copolymers. In more detail, it relates to biodegradable aliphatic polyester copolymers having practical physical properties which make the copolymers moldable and being degradable by microorganisms present in soils and waters.

Group V of the present invention relates to aliphatic polyesters having branched structures obtained by the polymerization of aliphatic dicarboxylic acids and aliphatic diols, as well as by that of aliphatic hydroxycarboxylic acids or cyclic esters thereof having excellent moldability and capable of giving moldings having excellent mechanical properties, and to processes for producing the polyesters.

Group VI of the present invention relates to lactone-containing resins. In more detail, it relates to ones obtained by subjecting aliphatic polyester copolymers made of aliphatic dicarboxylic acids/aliphatic diols/lactones to treatment with radiation, having practical physical properties which make the copolymers moldable and being degradable by microorganisms present in soils and waters.

Group VII of the present invention relates to blends of aliphatic polyester copolymers with other aliphatic polyesters, having excellent mechanical properties and biodegradability, in particular excellent controlled biodegradation rates; moldings of the blends, in particular film moldings have physical properties which make them practically usable and excellent biodegradability.

When added to resins or resin compositions that have excellent mechanical properties, but have a problem in flowability, such as engineering plastics, the high molecular weight aliphatic polyester copolymers of the present invention also have the function of a flowability improver which can drastically increase the flowability of the resins or resin compositions without deteriorating the excellent mechanical property.

Furthermore, the addition of an inorganic filler to the high molecular weight aliphatic polyester copolymers of the present invention can give rise to resin compositions capable of giving moldings having excellent impact strengths.

BACKGROUND ART

The characteristics of plastics are in that they have sufficient strengths for practical use, and low specific gravity and are difficult to be corroded, and so on. In particular, general-purpose plastics are industrially mass-produced and at the same time are used widely in daily life and in industrial fields with their usage increasing greatly. Many plastics are not degraded in natural environments, and so in recent years, environmental destruction due to discarded plastics has turned into a problem. Accordingly, in recent years, development of plastics that can be biodegraded in natural environments has been desired.

As highly general-purpose biodegradable resins, aliphatic polyesters have attracted attention. Recently, polylactic acid (PLA), polybutylene succinate (PBS), polyethylene succinate (PES), polycaprolactone (PCL), etc. have become commercially available.

One of the uses for the biodegradable aliphatic polyesters lies in the field of films for packaging, agriculture, foods, etc., where it is an important object to simultaneously realize high strength, practical thermal resistance and controlled biodegradability for molded products.

Of the above-mentioned aliphatic polyesters, PLA has a melting point as high as one in the vicinity of 170°C,

and thus is highly heat resistant among those with a higher melting temperature. However, molded products thereof have low elongation because of its brittleness, and a composting facility is needed since they do not degrade in soils. PBS and PES have melting points in the vicinity of 100°C so that they have sufficient heat resistance. However, they have low biodegradation rates and are insufficient for practical use. In addition, as for the mechanical properties, they have insufficient flexibility. Although PCL has excellent flexibility, it has a low melting point as low as 60°C, i.e. a low heat resistance, so that its use is limited. However, it has a very high biodegradation rate.

As such, homopolymers of aliphatic polyesters are difficult to attain the above-mentioned objects therewith. The inventors of the present invention have found that introduction of a caprolactone unit into aliphatic polyester copolymers, as in the case of a polybutylene succinate/polycaprolactone copolymer (PBSC) described in JP 2997756 B can attain the object of realizing practical flexibility and moderate biodegradability and that controlling the content of caprolactone therein can attain the objects of setting the melting point at 80°C or more to retain sufficient heat resistance and of controlling the biodegradability.

As a process for producing such aliphatic polyester copolymers, the above-identified publication discloses a process based on a direct condensation polymerization method, which is a very useful process. However, such the process may in some cases require a long polymerization time for increasing the molecular weight of the copolymer since water or diol generated by dehydration reaction or interesterification reaction must be fully removed from the reaction system. If the molecular weight is low, the copolymer is insufficient for processing into fibers or films.

As measures for improving PLA homopolymers having brittleness, JP 9-95603 A discloses a copolymer of PLA with an aliphatic polyester made of an aliphatic dicarboxylic acid component and an aliphatic diol component. Although it has improved flexibility, this copolymer also has problems that it has poor biodegradability and that it needs to be composted.

Furthermore, the copolymer of PLA and polycaprolactone described in JP 63-145661 A also has a relatively good flexibility but it has low heat resistance and is opaque, so that it is subject to considerable limitation upon its use.

Moreover, many proposals have been made for the improvement of biodegradable high molecular weight aliphatic polyesters. For example, JP 8-311181 A discloses a biodegradable high molecular weight aliphatic polyester copolymer having a number average molecular weight of 15,000 to 80,000 obtained by condensation polymerization reaction of (A) an aliphatic dicarboxylic acid or its ester, (B) an aliphatic diol, and (C) an oxycarboxylic acid, oxycarboxylate or lactone in the presence of a catalyst.

JP 9-129691 A discloses a process for producing an aliphatic polyester having a number average molecular weight of 20,000 or more by condensation polymerization reaction of a di-lower alkyl ester of an aliphatic dibasic carboxylic acid with an aliphatic dihydric alcohol in the presence of a catalyst, in which the content of free carboxylic acid compounds in the di-lower alkyl ester of an aliphatic dibasic carboxylic acid is kept at 0.1 wt% or less and the molar ratio of raw materials charged is kept within the range that satisfies the expression: 1.0 < aliphatic dihydric alcohol/ di-lower alkyl ester of an aliphatic dibasic carboxylic acid ≤ 2.1.

JP 11-166044 A discloses a biodegradable high molecular weight aliphatic polyester ether made of an aliphatic polyester part A derived from a dicarboxylic acid-diol containing a divalent aliphatic group having 1 to 12 carbon atoms, an ether group-containing aliphatic polyester part B derived from the dicarboxylic acid-diol containing a divalent aliphatic group having 1 to 12 carbon atoms, and an aliphatic polyester part C derived from an oxycarboxylic acid-monohydric alcohol containing a divalent aliphatic group having 1 to 12 carbon atoms, in which the molar ratio "q" of the ester part B is within the range of 0.0005 to 0.005 and the molar fraction of the ester part C is within the range of 0.02 to 0.3.

JP 6-192374 A proposes a method of producing a polyester having a weight average molecular weight of 50,000 or more by reacting an aliphatic polyester obtained from a dicarboxylic acid-diol, 100 parts by weight of a polyester having a weight average molecular weight of 30, 000 or more and a melting point of 70°C or more of which the terminal groups are substantially hydroxyl groups, with 1 to 100 parts by weight of an aliphatic polyester having a weight average molecular weight of 500 to 30,000 of which the terminal groups are substantially isocyanate groups. This method yields considerable effects.

In addition, official gazettes of the JP 5-179016 A and JP 5-179018 A, etc. disclose biodegradable films made of a polyester having the basic skeleton of a polybutylene succinate with which a trifunctional or more monomer is copolymerized. In this method, the moldability is improved; however, comparison of the mechanical properties in the obtained film with those of a polyethylene showed that the film has a greatly decreased tensile elongation and is hard and brittle.

As described above, no polyester that has mechanical properties and moldability close to those of a polyethylene and physical properties sufficient for serving as a biodegradable film has been developed yet.

On the other hand, JP 2000-004689 A discloses an agricultural mulch film whose both sides in the TD direction are made of a starch/polyester composite, examples of which include composites of a polybutylene succinate, a polylactide, a polycaprolactone, a polyhydroxybutylate-valerate, etc. with starch. However, although the starch/polyester composites are improved in biodisintegralibility rates to some extent, many of them often have poor mechanical properties and insufficient biodegradation rates.

JP 09-505613 A discloses a thermoplastic composite materials made of hydrolyzed starch and a synthetic polymer. However, the starch/synthetic polymer composite materials also have the problems that they still have poor biodegradability in spite of some improvement in the biodisintegrability they exhibit.

Even when the conventional aliphatic polyesters are used, the control of the biodegradation rates is very difficult, so generally resins having different degradation rates are blended in order to control the degradation rate. However, no sufficient result has been obtained yet.

Also, when these resins are molded by vacuum molding, blow molding, inflation molding, etc., a problem arises that the molten resin causes drawdown during the molding operation resulting in failure of molding since the resin has poor thermal properties as compared with the general-purpose resins.

An object of the present invention is to solve the various problems as encountered by the above-mentioned prior arts.

Various kinds of moldings have been obtained from the conventional biodegradable resins. In particular, biodegradable agricultural mulch films have been gradually recognized to be useful in recent years and along with this, the market is building up. The biodegradable agricultural mulch film is required to have well balanced performances between the following; one is the performance required for general agricultural mulch films made of the general-purpose plastics, such as workability when the film is spread (extended) over the fields, moisture retention or thermal insulation after the extension, masking, and further growability of crops, and the other is the performance specific to biodegradable resins, such as biodegradation rate and degree of biodegradation. However, among the biodegradable agricultural mulch films that are currently emerging in the market, there is almost none that fully satisfies both performances. Accordingly, in recent years, a biodegradable agricultural mulch film that has a controlled biodegradation rate and physical properties fully bearing practical use is being sought. Furthermore, improvement of practical physical properties of various kinds of biodegradable moldings other than films is also being sought.

That is, an object of the present invention is to provide high molecular weight aliphatic polyester copolymers that can be molded into films, moldings obtained by molding the copolymers, films and other moldings made of biodegradable resin compositions containing the above-mentioned high molecular weight aliphatic polyester copolymers that can be industrially supplied and that have practical physical properties.

DISCLOSURE OF THE INVENTION

To attain the above-mentioned object, the inventors of the present invention have made extensive studies. As a result, they have found that high molecular weight aliphatic polyester copolymers having a weight average molecular weight of 40,000 or more can be industrially produced by performing a condensation polymerization reaction of a mixture made of the three components: an aliphatic diol, an aliphatic dicarboxylic acid, and an aliphatic hydroxycarboxylic acid or its anhydrous cyclic compound (a lactone) to synthesize a low molecular weight polyester copolymer having a weight average molecular weight of 5,000 or more, preferably 10,000 or more, and adding a bifunctional coupler to the polyester copolymer in a molten state, and that use of the this results in improved stability in molecular weight upon molding and good film molding, thereby achieving the group I of the present invention.

Further, to attain the above-mentioned object, the inventors of the present invention have made extensive studies. As a result, they have found that use of a polylactic acid-based high molecular weight aliphatic polyester copolymer (simply abbreviated as a high molecular weight aliphatic polyester copolymer) having a weight average molecular weight of 40,000 or more results in good biodegradability, good stability in molecular weight upon molding, and good film molding, which is obtained by a condensation polymerization reaction of four components: an aliphatic diol, an aliphatic dicarboxylic acid, an aliphatic hydroxycarboxylic acid or its anhydrous cyclic compound (a lactone), and a lactide, thereby achieving the group II of the present invention.

Still further, to attain the above-mentioned object, the inventors of the present invention have made extensive studies. As a result, they have found that upon copolymerizing a dicarboxylic acid having a divalent aliphatic group having 1 to 12 carbon atoms, a diol having a divalent aliphatic group having 1 to 12 carbon atoms, and a lactone having a divalent aliphatic group having 1 to 10 carbon atoms, incorporation of a specified amount of a branched divalent aliphatic group in at least one of the dicarboxylic acid, diol and lactone can attain the above-mentioned object, thereby achieving the group III of the present invention.

Moreover, to attain the above-mentioned object, the inventors of the present invention have made extensive studies. As a result, they have found that an aliphatic polyester copolymer can be produced by reacting four components: (A) an aliphatic dicarboxylic acid, acid anhydrides or esters thereof, (B) an aliphatic diol, (C) an aliphatic diol having an ether bond, or an aliphatic diol or dicarboxylic acid having an alicyclic structure, (D) an oxycarboxylic acid or esters or lactones thereof, which are raw materials, in specified ratios, thereby achieving the group IV of the present invention.

Further, to attain the above-mentioned object, the inventors of the present invention have made extensive studies. As a result, they have found that incorporation of a branched structure into a linear aliphatic polyester along

with an increase in the molecular weight results in an increase in the strain hardening of the resin, thereby achieving the group V of the present invention.

To attain the above-mentioned object, the inventors of the present invention have made extensive studies. As a result, they have found that use of an irradiation-treated resin results in good stability in the molecular weight upon molding, and in moldings, such as films, having excellent degradability, moldability and mechanical properties, which is obtained by performing a condensation polymerization reaction of a mixture made of three components: an aliphatic diol, an aliphatic dicarboxylic acid, and a lactone to synthesize a polyester copolymer having a weight average molecular weight of 30,000 or more, preferably 50,000 or more, and subjecting it to a specified radiation treatment, or adding a bifunctional coupler to the polyester copolymer in a molten state to obtain a copolymer having a higher weight average molecular weight, and then subjecting it to a specified radiation treatment, to form a crosslinked structure or a branched structure in the lactone moieties in the resin, thereby achieving the group VI of the present invention.

To attain the above-mentioned object, the inventors of the present invention have made extensive studies. As a result, they have found that a blend of an engineering plastic having a low flowability with a specified amount of an aliphatic polyester copolymer can increase MFR of the engineering plastic after the blending by a large amount without so much deteriorating the physical properties thereof, which copolymer has a weight average molecular weight of 40,000 or more obtained by performing a condensation polymerization reaction of a mixture made of three components: an aliphatic diol, an aliphatic dicarboxylic acid, and an aliphatic hydroxycarboxylic acid or its anhydrous cyclic compound (a lactone) to synthesize a low molecular weight polyester copolymer having a weight average molecular weight of 5,000 or more, preferably 10,000 or more, and adding a bifunctional coupler to the polyester copolymer in a molten state.

The inventors of the present invention have found that such problems can be solved by charging a large amount of an inorganic additive to a specified high molecular weight aliphatic polyester copolymer.

To attain the above-mentioned object, the inventors of the present invention have made extensive studies. As a result, they have found that use of a high molecular weight polyester copolymer results in good stability in the molecular weight upon molding of a film etc. and in good molding, which has a weight average molecular weight of 40,000 or more, and which is synthesized by performing a condensation polymerization reaction of a mixture made of three components: an aliphatic diol, an aliphatic dicarboxylic acid, and an aliphatic hydroxycarboxylic acid or its anhydrous cyclic compound (a lactone), or use of the aliphatic polyester copolymer together with an other biodegradable resin (b) , thereby achieving the group VII of the present invention.

## BRIEF DESCRIPTION OF THE DRAWINGS

Fig. 1 is a graph illustrating the results of DSC measurements in relation to the high molecular weight aliphatic polyester copolymer obtained in Example I-1;

Fig. 2 is a graph plotting the parameter "$\alpha$", representing the degree of strain hardening obtained by measurements of elongation viscosity in the group V of the present invention;

Fig. 3 is a cross-sectional view showing one example of the construction of the cushioning sheet having closed-cells in the group VII of the present invention;

Fig. 4 is a cross-sectional view showing another example of the construction of the cushioning sheet having closed-cells in the group VII of the present invention;

Fig. 5 is a cross-sectional view showing still another example of the construction of the cushioning sheet having closed-cells in the group VII of the present invention.

## THE BEST MODE FOR CARRYING OUT THE INVENTION

Herein below, the present invention will be described in detail.

That is, according to a first aspect of the present invention, there is provided a high molecular weight aliphatic polyester copolymer having a weight average molecular weight of 40,000 or more, comprising a low molecular weight aliphatic polyester copolymer (D) having a weight average molecular weight of 5,000 or more whose molecular chain is made of a repeating unit (P) represented by the general formula (1):

$$-(-CO-R^1-COO-R^2-O-)- \qquad (1)$$

(wherein $R^1$ represents a divalent aliphatic group having 1 to 12 carbon atoms, and $R^2$ represents a divalent aliphatic

group having 2 to 12 carbon atoms), and
a repeating unit (Q) represented by the general formula (2):

$$-(-CO-R^3-O-)- \quad (2)$$

(wherein $R^3$ represents a divalent aliphatic group having 1 to 10 carbon atoms), and a bifunctional coupler (E) represented by the general formula (7):

$$X^1-R^7-X^2 \quad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure), the low molecular weight aliphatic polyester copolymer (D) being coupled to each other with the coupler (E) in an amount of 0.1 to 5 parts by weight based on 100 parts by weight of the copolymer (D).

According to a second aspect of the present invention, there is provided a high molecular weight aliphatic polyester copolymer according to the first aspect of the present invention, characterized in that the general formula (1) contains a succinic acid residue and/or an adipic acid residue.

According to a third aspect of the present invention, there is provided a high molecular weight aliphatic polyester copolymer according to the first aspect of the present invention, characterized in that the general formula (1) contains an ethylene glycol residue and/or a 1,4-butanediol residue.

According to a fourth aspect of the present invention, there is provided a high molecular weight aliphatic polyester copolymer according to the first aspect of the present invention, characterized in that the general formula (2) contains an ε-oxycaproic acid residue.

According to a fifth aspect of the present invention, there is provided a high molecular weight aliphatic polyester copolymer according to the first aspect of the present invention, characterized in that the reactive group in the bifunctional coupler (E) represented by the general formula (7) is an isocyanate group; an isothiocyanate group; an epoxy group, an oxazoline group; an oxazolone group or an oxazinone group; an aziridine group; or a mixture of these.

According to a sixth aspect of the present invention, there is provided a film molding obtained by molding a high molecular weight aliphatic polyester copolymer according to any one of the first to fifth aspects of the present invention.

According to a seventh aspect of the present invention, there is provided a method of producing a high molecular weight aliphatic polyester copolymer, including the steps of

(a) condensation-polymerizing three components of (A) an aliphatic dicarboxylic acid represented by general formula (3):

$$R^4-OCO-R^1-COO-R^5 \quad (3)$$

(wherein $R^1$ represents a divalent aliphatic group having 1 to 12 carbon atoms, $R^4$ and $R^5$ represent each a hydrogen atom, or an aliphatic group having 1 to 6 carbon atoms or an aromatic group), anhydride thereof or a diester form thereof,
(B) an aliphatic diol represented by general formula (4):

$$HO-R^2-OH \quad (4)$$

(wherein $R^2$ represents a divalent aliphatic group having 2 to 12 carbon atoms), and
(C) a hydroxycarboxylic acid or an ester form thereof represented by general formula (5):

$$R^6OCO-R^3-OH \quad (5)$$

(wherein $R^3$ represents a divalent aliphatic group having 1 to 10 carbon atoms, and $R^6$ represents a hydrogen

atom or an aliphatic group having 1 to 6 carbon atoms, or an aromatic group), or
(C) a lactone represented by general formula (6) :

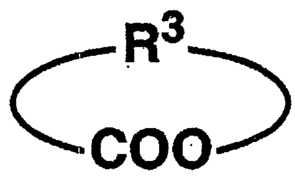 (6)

(wherein, $R^3$ represents a divalent aliphatic group having 1 to 10 carbon atoms) to synthesize a low molecular weight aliphatic polyester copolymer (D) having a weight average molecular weight of 5, 000 or more having a molecular chain made of a repeating unit (P) represented by general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$-(-CO-R^3-O-)- \quad (2)$$

(wherein $R^3$ represents a divalent aliphatic group having 1 to 10 carbon atoms), and
(b) adding 0.1 to 5 parts by weight of a bifunctional coupler (E) represented by general formula (7):

$$X^1-R^7-X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure) to 100 parts by weight of the low molecular weight aliphatic polyester copolymer (D) in a molten state to increase the weight average molecular weight thereof to 40,000 or more.

According to an eighth aspect of the present invention, there is provided a method of producing a high molecular weight aliphatic polyester copolymer according to the seventh aspect of the present invention, characterized in that in the step (a), a catalyst and a phosphorus compound are used in combination.
According to a ninth aspect of the present invention, there is provided a method of producing a high molecular weight aliphatic polyester copolymer according to the seventh or eighth aspect of the present invention, characterized in that as the aliphatic dicarboxylic acid represented by the general formula (3), the anhydride thereof or the ester form thereof, at least one is selected from the group consisting of succinic acid, adipic acid and dimethyl succinate.
According to a tenth aspect of the present invention, there is provided a method of producing a high molecular weight aliphatic polyester copolymer according to the seventh or eighth aspect of the present invention, characterized in that as the aliphatic diol represented by the general formula (4), at least one is selected from the group consisting of ethylene glycol and 1,4-butanediol.
According to an eleventh aspect of the present invention, there is provided a method of producing a high molecular weight aliphatic polyester copolymer according to the seventh or eighth aspect of the present invention, characterized in that as the hydroxycarboxylic acid represented by the general formula (5) or the ester form thereof or the lactone (C) represented by the general formula (6), ε-caprolactone is used.
According to a twelfth aspect of the present invention, there is provided a method of producing a high molecular weight aliphatic polyester copolymer according to the seventh or eighth aspect of the present invention, characterized in that in the coupler (E) represented by the general formula (7), $X^1$ and $X^2$ are one or more groups selected from the group consisting of reactive groups represented by formulae (9) to (11):

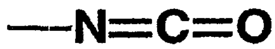 (9) 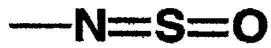 (10)

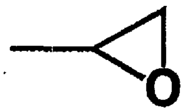 (11)

that are capable of reacting substantially with a hydroxyl group only to form a covalent bond.

According to a thirteenth aspect of the present invention, there is provided a method of producing a high molecular weight aliphatic polyester copolymer according to the seventh or eighth aspect of the present invention, characterized in that in the coupler (E) represented by the general formula (7), $X^1$ and $X^2$ are one or more groups selected from the group consisting of reactive groups represented by general formulae (12) to (15):

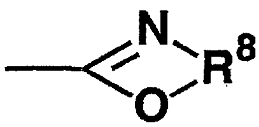 (12) 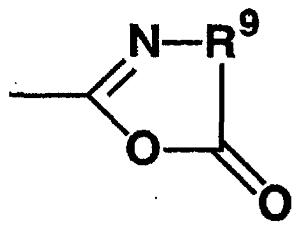 (13)

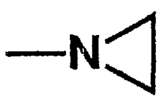 (14) 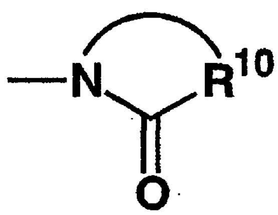 (15)

(wherein $R^8$ to $R^{10}$ represent a divalent aliphatic group or an aromatic group, and the hydrogens directlybonded to the ring may be substituted by an aliphatic group and/or an aromatic group) that are capable of reacting substantially with a carboxyl group only to form a covalent bond.

According to a fourteenth aspect of the present invention, there is provided a method of producing a high molecular weight aliphatic polyester copolymer according to any one of the seventh to thirteenth aspect of the present invention, characterized in that the molar ratio at the time of charging raw materials satisfies expression (i)

$$1.0 \leq [B]/[A] \leq 2.0 \qquad \text{(i)}$$

(wherein [A] represents the mole number of the aliphatic dicarboxylic acid, the anhydride thereof, or the ester form thereof, and [B] represents the mole number of the aliphatic diol).

According to a fifteenth aspect of the present invention, there is provided a method of producing a high molecular weight aliphatic polyester copolymer according to any one of the seventh to fourteenth aspects of the present invention characterized in that the molar ratio at the time of charging raw materials satisfies expression (ii)

$$0.02 \leq [C]/([A] + [C]) \leq 0.40 \qquad \text{(ii)}$$

(wherein [A] represents the mole number of the aliphatic dicarboxylic acid, the anhydride thereof, or the ester form thereof used, and [C] represents the mole number of the hydroxycarboxylic acid, the ester form thereof, or lactone used).

According to a sixteenth aspect of the present invention, there is provided a high molecular weight aliphatic

polyester copolymer having a weight average molecular weight of 40,000 or more including a molecular chain made of a repeating unit (P) represented by the general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms),
a repeating unit (Q) represented by the general formula (2):

$$-(-CO-R^3-O-)- \quad (2)$$

(wherein $R^3$ represents a divalent aliphatic group having 2 to 10 carbon atoms), and
a repeating unit (R) represented by the general formula (19):

$$-(-CO-CR^{11}R^{12}-O-)- \quad (19)$$

(wherein $R^{11}$ and $R^{12}$ each represent a hydrogen atom or a monovalent aliphatic group having 1 to 6 carbon atoms)
According to a seventeenth aspect of the present invention, there is provided a high molecular weight aliphatic polyester copolymer according to the sixteenth aspect of the present invention, comprising a low molecular weight aliphatic polyester copolymer (F) having a weight average molecular weight of 5,000 or more, which is an intermediate for polymerization of the copolymer, and a bifunctional coupler (E) represented by general formula (7) :

$$X^1-R^7-X^2 \quad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure) , the low molecular weight aliphatic polyester copolymer (F) having molecules being coupled to each other with the coupler (E) in an amount of 0.1 to 5 parts by weight based on 100 parts by weight of the copolymer (F).
According to an eighteenth aspect of the present invention, there is provided a high molecular weight aliphatic polyester copolymer according to the sixteenth aspect of the present invention, characterized in that the general formula (1) contains a succinic acid residue and/or an adipic acid residue.
According to a nineteenth aspect of the present invention, there is provided a high molecular weight aliphatic polyester copolymer according to the sixteenth aspect of the present invention, characterized in that the general formula (1) contains an ethylene glycol residue and/or a 1,4-butanediol residue.
According to a twentieth aspect of the present invention, there is provided a high molecular weight aliphatic polyester copolymer according to the sixteenth aspect of the present invention, characterized in that the general formula (2) contains an ε-oxycaproic acid residue.
According to a twenty-first aspect of the present invention, there is provided a high molecular weight aliphatic polyester copolymer according to the sixteenth aspect of the present invention, characterized in that the general formula (19) contains an lactic acid residue.
According to a twenty-second aspect of the present invention, there is provided a high molecular weight aliphatic polyester copolymer according to the seventeenth aspect of the present invention, characterized in that the reactive group of the bifunctional coupler (E) represented by the general formula (7) is an isocyanate group; an isothiocyanate group; an epoxy group; or a mixture of these.
According to a twenty third aspect of the present invention, there is provided a method of producing a high molecular weight aliphatic polyester copolymer, including condensation-polymerizing four components of (A) an aliphatic dicarboxylic acid represented by general formula (3):

$$R^4-OCO-R^1-COO-R^5 \quad (3)$$

(wherein $R^1$ represents a divalent aliphatic group having 1 to 12 carbon atoms, $R^4$ and $R^5$ represent each a hydrogen

atom, or an aliphatic group having 1 to 6 carbon atoms or an aromatic group), anhydride thereof or a diester form thereof, (B) an aliphatic diol represented by general formula (4):

$$HO\text{-}R^2\text{-}OH \quad (4)$$

(wherein $R^2$ represents a divalent aliphatic group having 2 to 12 carbon atoms),
(C-1) a hydroxycarboxylic acid represented by general formula (5) :

$$R^6OCO\text{-}R^3\text{-}OH \quad (5)$$

(wherein $R^3$ represents a divalent aliphatic group having 2 to 10 carbon atoms, and $R^6$ represents a hydrogen atom or an aliphatic group having 1 to 6 carbon atoms, or an aromatic group), or an ester form thereof, or a lactone thereof forming a cyclic monomeric ester thereof, and
(C-2) a hydroxycarboxylic acid represented by general formula (20):

$$R^{13}\text{-}OCO\text{-}CR^{11}R^{12}\text{-}OH \quad (20)$$

(wherein $R^{11}$ and $R^{12}$ represent a hydrogen atom or a monovalent aliphatic group having 1 to 6 carbon atoms, and $R^{13}$ represents a hydrogen atom or an aliphatic group having 1 to 6 carbon atoms or an aromatic group), an ester form thereof or a lactide forming a cyclic dimeric ester, to synthesize a high molecular weight aliphatic polyester copolymer having a weight average molecular weight based on Polystyrene of 40,000 or more having a molecular chain made of a repeating unit (P) represented by general formula (1):

$$\text{-(-}CO\text{-}R^1\text{-}COO\text{-}R^2\text{-}O\text{-)-} \quad (1)$$

(wherein $R^1$ represents a divalent aliphatic group having 1 to 12 carbon atoms, and $R^2$ represents a divalent aliphatic group having 2 to 12 carbon atoms),
a repeating unit (Q) represented by general formula (2):

$$\text{-(-}CO\text{-}R^3\text{-}O\text{-)-} \quad (2)$$

(wherein $R^3$ represents a divalent aliphatic group having 2 to 10 carbon atoms), and
a repeating unit (R) represented by general formula (19):

$$\text{-(-}CO\text{-}CR^{11}R^{12}\text{-}O\text{)-} \quad (19)$$

(wherein $R^{11}$ and $R^{12}$ represent a hydrogen atom or a monovalent aliphatic group having 1 to 6 carbon atoms).

According to a twenty-fourth aspect of the present invention, there is provided a method of producing a high molecular weight aliphatic polyester copolymer according to the twenty third aspect of the present invention, further including the steps of synthesizing a low molecular weight aliphatic polyester copolymer (F) having a weight average molecular weight of 5,000 or more, which is an intermediate for polymerization of the copolymer, and adding 0.1 to 5 parts by weight of a bifunctional coupler (E) represented by general formula (7) :

$$X^1\text{-}R^7\text{-}X^2 \quad (7)$$

(wherein $X^1$ and $X^2$ represent each a reactive group capable of forming a covalent bond by reaction with a hydroxyl group or a carboxyl group and $R^7$ represents a single bond, an aliphatic group having 1 to 20 carbon atoms or an aromatic group, provided that $X^1$ and $X^2$ may be the same or different in chemical structure) to 100 parts by weight of the low molecular weight aliphatic polyester copolymer (F) in a molten state to increase the weight average molecular weight thereof to 40,000 or more.

According to a twenty-fifth aspect of the present invention, there is provided a method of producing a high molecular weight aliphatic polyester copolymer according to the twenty-third aspect of the present invention, characterized in that as the aliphatic dicarboxylic acid represented by the general formula (3), the acid anhydride thereof, or the ester form thereof, at least one is selected from the group consisting of succinic acid, adipic acid and dimethyl succinate.

According to a twenty-sixth aspect of the present invention, there is provided a method of producing a high molecular weight aliphatic polyester copolymer according to the twenty-third aspect of the present invention, characterized in that as the aliphatic diol represented by the general formula (4), at least one is selected from the group consisting of ethylene glycol,1,4-butanediol and diethylene glycol.

According to a twenty-seventh aspect of the present invention, there is provided a method of producing a high molecular weight aliphatic polyester copolymer according to the twenty-third aspect of the present invention, characterized in that the lactone is ε-caprolactone.

According to a twenty-eighth aspect of the present invention, there is provided a method of producing a high molecular weight aliphatic polyester copolymer according to the twenty-third aspect of the present invention, characterized in that the lactide is lactic acid, ester thereof, or lactide.

According to a twenty-ninth aspect of the present invention, there is provided a method of producing a high molecular weight aliphatic polyester copolymer according to the twenty-third aspect of the present invention, characterized in that molar ratio at the time of charging raw materials satisfies expression (i)

$$0.02 \leq [C\text{-}2]/([A]+[C\text{-}1]+[C\text{-}2]) \leq 0.70 \qquad \text{(i)}$$

(wherein [A] represents the mole number of the component (A) used, [C-1] represents the mole number of the component (C-1) used, and
[C-2] represents the mole number of the component (C-2) used).

According to a thirtieth aspect of the present invention, there is provided a method of producing a high molecular weight aliphatic polyester copolymer according to the twenty-third aspect of the present invention, characterized in that molar ratio at the time of charging raw materials satisfies expression (ii)

$$0.02 \leq [C\text{-}1] / ( [A] + [C\text{-}1] + [C\text{-}2] ) \leq 0.40 \qquad \text{(ii)}$$

(wherein [A] represents the mole number of the component (A) used, [C-1] represents the mole number of the component (C-1) used, and
[C-2] represents the mole number of the component (C-2) used).

According to a thirty-first aspect of the present invention, there is provided a method of producing a high molecular weight aliphatic polyester copolymer according to the twenty-third aspect of the present invention, characterized in that the polymerization step is performed at a temperature of 200 to 250°C and at a pressure of atmospheric pressure to 0.2 mmHg (26.6 Pa).

According to a thirty-second aspect of the present invention, there is provided a method of producing a high molecular weight aliphatic polyester copolymer according to the twenty-third aspect of the present invention, characterized in that molar ratio at the time of charging raw materials satisfies expression (iii)

$$1.0 \leq [B]/[A] \leq 2.0 \qquad \text{(iii)}$$

(wherein [A] represents the mole number of the component (A) used, and [B] represents the mole number of the component (B) used).

According to a thirty-third aspect of the present invention, there is provided a method of producing a high molecular weight aliphatic polyester copolymer according to the twenty-third aspect of the present invention, characterized in that an organotitanium compound and an organic or inorganic phosphorus compound are used as a catalyst.

According to a thirty-fourth aspect of the present invention, there is provided a method of producing a high molecular weight aliphatic polyester copolymer according to the twenty-third aspect of the present invention, characterized in that the organotitanium compound is used in an amount of 0.005 to 0.1 % by weight based on succinic acid or a derivative thereof and the organic or inorganic phosphorus compound is used in an amount of 1 to 30% by weight based on the organotitanium compound.

According to a thirty-fifth aspect of the present invention, there is provided a high molecular weight aliphatic polyester copolymer characterized in that the molecular chain thereof is made of a repeating unit (P) represented by

the general formula (1):

$$(\text{-CO-R}^1\text{-COO-R}^2\text{-O-}) \qquad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$(\text{-CO-R}^3\text{-O-}) \qquad (2)$$

(wherein $R^3$ represents a divalent aliphatic group having 1 to 10 carbon atoms), in which at least one of the divalent aliphatic groups represented by $R^1$, $R^2$ and $R^3$ contains a branched divalent aliphatic group in an amount of 0.01 to 50 mol% based on 100 mol% of the sum of the divalent aliphatic groups represented by $R^1$, $R^2$ and $R^3$.

According to a thirty-sixth aspect of the present invention, there is provided a high molecular weight aliphatic polyester copolymer according to the thirty-fifth aspect of the present invention, further including a low molecular weight aliphatic polyester copolymer (having a weight average molecular weight of 5,000 or more), which is a polymerization intermediate of the copolymer, and a bifunctional coupler (E) represented by general formula (7):

$$X^1\text{-R}^7\text{-}X^2 \qquad (7)$$

(wherein $X^1$ and $X^2$ represent each a reactive group capable of forming a covalent bond by reaction with a hydroxyl group or a carboxyl group and $R^7$ represents a single bond or an aliphatic group having 1 to 20 carbon atoms, or an aromatic group, provided that $X^1$ and $X^2$ may be the same or different), the low molecular weight aliphatic polyester copolymer being coupled to each other with the coupler (E) in an amount of 0.1 to 5 parts by weight based on 100 parts by weight of the copolymer.

According to a thirty-seventh aspect of the present invention, there is provided a high molecular weight aliphatic polyester copolymer according to the thirty-fifth or thirty-sixth aspect of the present invention, characterized in that the weight average molecular weight is 40,000 to 700,000.

According to a thirty-eighth aspect of the present invention, there is provided a high molecular weight aliphatic polyester copolymer according to the thirty-fifth or thirty-sixth aspect of the present invention, characterized in that $R^1$ is a succinic acid residue $[(CH_2)_2]$ and/or an adipic acid residue $[(CH_2)_4]$.

According to a thirty-ninth aspect of the present invention, there is provided a high molecular weight aliphatic polyester copolymer according to the thirty-fifth or thirty-sixth aspect of the present invention, characterized in that $R^2$ is an ethylene glycol residue $[(CH_2)_2]$ and/or a 1,4-butanediol residue $[(CH_2)_4]$.

According to a fortieth aspect of the present invention, there is provided a high molecular weight aliphatic polyester copolymer according to any one of the thirty-fifth to thirty-ninth aspects of the present invention, characterized in that $R^3$ is an ε-oxycaproic acid residue.

According to a forty-first aspect of the present invention, there is provided a high molecular weight aliphatic polyester copolymer according to any one of the thirty-fifth to thirty-ninth aspects of the present invention, wherein the branched divalent aliphatic group is (i) a succinic acid residue, a glutaric acid residue, an adipic acid residue, a pimellic acid residue, a suberic acid residue, an azelaic acid residue, or a sebacic acid residue; (ii) an ethylene glycol residue, a 1,3-propanediol residue or a 1,3- or 1,4-butanediol residue; or (iii) a glycolic acid residue, a hydroxypropionic acid residue, a hydroxybutyric acid residue, a hydroxyvaleric acid residue, or a hydroxycaproic acid residue, the one or more branched divalent aliphatic groups being substituted by an alkyl group having 1 to 4 carbon atoms or an alkoxyl group.

According to a forty-second aspect of the present invention, there is provided a high molecular weight aliphatic polyester copolymer according to the thirty-sixth aspect of the present invention, characterized in that the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture of these.

According to a forty-third aspect of the present invention, there is provided a method of producing a high molecular weight aliphatic polyester copolymer, characterized by including condensation-polymerizing (A) an aliphatic dicarboxylic acid represented by general formula (3):

$$R^4\text{-OCO-}R^1\text{-COO-}R^5 \quad (3)$$

(wherein $R^1$ represents a divalent aliphatic group having 1 to 12 carbon atoms and $R^4$ and $R^5$ represent each a hydrogen atom, or an aliphatic group having 1 to 6 carbon atoms or an aromatic group, provided that $R^4$ and $R^5$ may be the same or different) , an acid anhydride thereof or a diester form thereof,
(B) an aliphatic diol represented by general formula (4):

$$HO\text{-}R^2\text{-OH} \quad (4)$$

(wherein $R^2$ represents a divalent aliphatic group having 2 to 12 carbon atoms), and
(C) a hydroxycarboxylic acid or an ester form thereof represented by general formula (5):

$$R^6OCO\text{-}R^3\text{-OH} \quad (5)$$

(wherein $R^3$ represents a divalent aliphatic group having 1 to 10 carbon atoms, and $R^6$ represents a hydrogen atom or an aliphatic group having 1 to 6 carbon atoms, or an aromatic group), or
(C) a lactone represented by general formula (6):

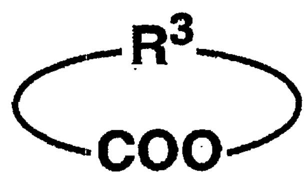
(6)

(wherein, $R^3$ represents a divalent aliphatic group having 1 to 10 carbon atoms),
the copolymer having a molecular chain made of a repeating unit (P) represented by general formula (1):

$$(\text{-CO-}R^1\text{-COO-}R^2\text{-O-}) \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$(\text{-CO-}R^3\text{-O-}) \quad (2)$$

(wherein $R^3$ represents a divalent aliphatic group having 1 to 10 carbon atoms), in which at least one of the divalent aliphatic groups represented by $R^1$, $R^2$ and $R^3$ contains a branched divalent aliphatic group in an amount of 0.01 to 50 mol% based on 100 mol% of the sum of the divalent aliphatic groups represented by $R^1$, $R^2$ and $R^3$.

According to a forty-fourth aspect of the present invention, there is provided a method of producing a high molecular weight aliphatic polyester copolymer according to the forty-third aspect of the present invention, including the steps of synthesizing a low molecular weight aliphatic polyester copolymer (having a weight average molecular weight of 5,000 or more), which is an intermediate for polymerization of the copolymer, and adding 0.1 to 5 parts by weight of a bifunctional coupler (E) represented by general formula (7) :

$$X^1\text{-}R^7\text{-}X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different) to 100 parts by weight of the low molecular

weight aliphatic polyester copolymer in a molten state to increase the weight average molecular weight thereof to 40,000 or more.

According to a forty-fifth aspect of the present invention, there is provided a method of producing a high molecular weight aliphatic polyester copolymer according to the forty-fourth aspect of the present invention, characterized in that in the coupler (E) represented by the general formula (7), $X^1$ and $X^2$ are one or more groups selected from the group consisting of reactive groups represented by formulae (9) to (11):

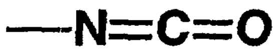 (9) 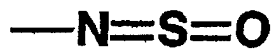 (10)

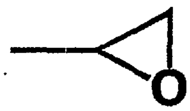 (11)

that are capable of reacting substantially with a hydroxyl group only to form a covalent bond.

According to a forty-sixth aspect of the present invention, there is provided a method of producing a high molecular weight aliphatic polyester copolymer according to the forty-fourth aspect of the present invention, characterized in that in the coupler (E) represented by the general formula (7), $X^1$ and $X^2$ are one or more groups selected from the group consisting of reactive groups represented by formulae (12) to (15):

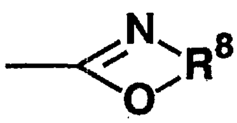 (12) 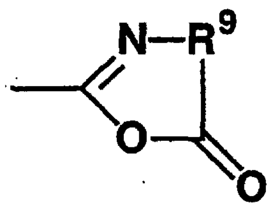 (13)

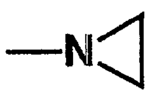 (14) 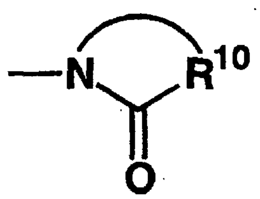 (15)

(wherein $R^8$ to $R^{10}$ represent a divalent aliphatic group or an aromatic group, and the hydrogens directly bonded to the ring may be substituted by an aliphatic group and/or an aromatic group) that are capable of reacting substantially with a carboxyl group only to form a covalent bond.

According to a forty-seventh aspect of the present invention, there is provided a method of producing a high molecular weight aliphatic polyester copolymer according to any one of the forty-third to forty-sixth aspects of the present invention, characterized in that the molar ratio at the time of charging raw materials satisfies the following expression

$$1.0 \leq [B]/[A] \leq 2.0 \quad (8)$$

(wherein [A] represents the mole number of the aliphatic dicarboxylic acid, the acid anhydride thereof, or the ester form thereof, and [B] represents the mole number of the aliphatic diol).

According to a forty-eighth aspect of the present invention, there is provided a method of producing a high molecular weight aliphatic polyester copolymer according to any one of the forty-third to forty-seventh aspects of the present invention, characterized in that the molar ratio at the time of charging raw materials satisfies the following expression

$$0.02 \leq [C]/([A] + [C]) \leq 0.40 \qquad (16)$$

(wherein [A] represents the mole number of the aliphatic dicarboxylic acid, the acid anhydride thereof, or the ester form thereof used, and [C] represents the mole number of the hydroxycarboxylic acid, the ester form thereof, or lactone used).

According to a forty-ninth aspect of the present invention, there is provided a method of producing a high molecular weight aliphatic polyester copolymer according to any one of the forty-third to forty-eighth aspects of the present invention, characterized in that the content of the aliphatic dicarboxylic acid and the aliphatic carboxylic acid contained in the aliphatic dicarboxylic acid diester (A) as an impurity is retained so as to be 0.1 mol% or less based on the aliphatic dicarboxylic acid diester.

According to a fiftieth aspect of the present invention, there is provided a biodegradable aliphatic polyester copolymer in which the molecular chain thereof is made of a repeating unit (P) represented by the general formula (1):

$$(\text{-CO-R}^1\text{-COO-R}^2\text{-O-})_p \qquad (1)$$

(wherein $R^1$ represents a divalent aliphatic group having 1 to 12 carbon atoms, and $R^2$ represents a divalent aliphatic group having 2 to 12 carbon atoms, and p represents the molar fraction of the unit in the molecular chain),
a repeating unit (Q) represented by the general formula (2):

$$(\text{-CO-R}^3\text{-O-})_q \qquad (2)$$

(wherein $R^3$ represents a divalent aliphatic group having 1 to 10 carbon atoms and "q" represents the molar fraction of the unit in the molecular chain), and
a repeating unit (R) represented by the general formula (1'):

$$(\text{-CO-R}^4\text{-COO-R}^5\text{-O-})_r \qquad (1')$$

(wherein $R^4$ represents a divalent aliphatic group having 1 to 20 carbon atoms, $R^5$ represents a divalent aliphatic group having 2 to 20 carbon atoms containing at least one ether bond or an alicyclic skeleton in the main chain thereof, and "r" represents a molar fraction of the unit in the molecular chain), in which the sum of "p", "q" and "r" is 1, the value of "q" is in the range of 0.02 to 0.30, and the value of "r" is in the range of 0.001 to 0.40.

According to a fifty-first aspect of the present invention, there is provided a biodegradable aliphatic polyester copolymer according to the fiftieth aspect of the present invention, further including a low molecular weight aliphatic polyester copolymer (having a weight average molecular weight of 5,000 or more), which is a polymerization intermediate of the copolymer, and abifunctional coupler (E) represented by general formula (7):

$$X^1\text{-R}^6\text{-X}^2 \qquad (7)$$

(wherein $X^1$ and $X^2$ represent each a reactive group capable of forming a covalent bond by reaction with a hydroxyl group or a carboxyl group and $R^6$ represents a single bond, or an aliphatic group having 1 to 20 carbon atoms, or an aromatic group, provided that $X^1$ and $X^2$ may be the same or different), the low molecular weight aliphatic polyester copolymer being coupled to each other with the coupler (E) in an amount of 0.1 to 5 parts by weight based on 100 parts by weight of the copolymer.

According to a fifty-second aspect of the present invention, there is provided a biodegradable aliphatic polyester copolymer according to the forty-eighth or fifty-first aspect of the present invention, characterized in that the weight average molecular weight thereof is 30,000 or more.

According to a fifty-third aspect of the present invention, there is provided a biodegradable aliphatic polyester copolymer according to the fiftieth or fifty-first aspect of the present invention, characterized in that $R^1$ and $R^4$ are a succinic acid residue $[(CH_2)_2]$ and/or an adipic acid residue $[(CH_2)_4]$ ($R^1$ and $R^4$ may be the same or different).

According to a fifty-fourth aspect of the present invention, there is provided a biodegradable aliphatic polyester copolymer according to the fiftieth or fifty-first aspect of the present invention, characterized in that $R^2$ is an ethylene glycol residue $[(CH_2)_2]$ and/or a 1,4-butanediol residue $[(CH_2)_4]$.

According to a fifty-fifth aspect of the present invention, there is provided a biodegradable aliphatic polyester

copolymer according to the fiftieth or fifty-first aspect of the present invention, characterized in that $R^3$ is an ε-oxycaproic acid residue.

According to a fifty-sixth aspect of the present invention, there is provided a biodegradable aliphatic polyester copolymer according to the fiftieth or fifty-first aspect of the present invention or 51, characterized in that $R^5$ is a diethylene glycol residue and/or a cyclohexane dimethanol residue.

According to a fifty-seventh aspect of the present invention, there is provided a biodegradable aliphatic polyester copolymer according to the fifty-first aspect of the present invention, characterized in that the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture of these.

According to a fifty-eighth aspect of the present invention, there is provided a method of producing a biodegradable aliphatic polyester copolymer, whose molecular chain is made of a repeating unit (P) represented by the general formula (1):

$$(\text{-CO-R}^1\text{-COO-R}^2\text{-O-})_p \qquad (1)$$

(wherein $R^1$ represents a divalent aliphatic group having 1 to 12 carbon atoms, and $R^2$ represents a divalent aliphatic group having 2 to 12 carbon atoms, and "p" represents the molar fraction of the unit in the molecular chain),
a repeating unit (Q) represented by the general formula (2):

$$(\text{-CO-R}^3\text{-O-})_q \qquad (2)$$

(wherein $R^3$ represents a divalent aliphatic group having 1 to 10 carbon atoms and "q" represents the molar fraction of the unit in the molecular chain), and
a repeating unit (R) represented by the general formula (1'):

$$(\text{-CO-R}^4\text{-COO-R}^5\text{-O-})_r \qquad (1')$$

(wherein $R^4$ represents a divalent aliphatic group having 1 to 20 carbon atoms, $R^5$ represents a divalent aliphatic group having 1 to 20 carbon atoms containing at least one ether bond or alicyclic skeleton in the main chain thereof, and "r" represents a molar fraction of the unit in the molecular chain), in which the sum of "p", "q" and "r" is 1, the value of "q" is in the range of 0.02 to 0.30, and the value of "r" is in the range of 0.001 to 0.40, the method including condensation-polymerizing (A) an aliphatic dicarboxylic acid represented by general formula (3):

$$\text{R}^7\text{-OCO-R}^1\text{-COO-R}^8 \qquad (3)$$

(wherein $R^1$ represents a divalent aliphatic group having 1 to 12 carbon atoms and $R^7$ and $R^8$ represent a hydrogen atom, or an aliphatic group having 1 to 6 carbon atoms or an aromatic group, provided that $R^7$ and $R^8$ may be the same or different), or an acid anhydride thereof or a diester form thereof,
(B) an aliphatic diol represented by general formula (4):

$$\text{HO-R}^2\text{-OH} \qquad (4)$$

(wherein $R^2$ represents a divalent aliphatic group having 2 to 12 carbon atoms), and
(A') an aliphatic dicarboxylic acid represented by general formula (3'):

$$\text{R}^9\text{-OCO-R}^4\text{-COO-R}^{10} \qquad (3')$$

(wherein $R^4$ represents a divalent aliphatic group having 1 to 20 carbon atoms and $R^9$ and $R^{10}$ represent a hydrogen atom, or an aliphatic group having 1 to 6 carbon atoms or an aromatic group, provided that $R^9$ and $R^{10}$ may be the same or different) , or an acid anhydride thereof or a diester form thereof,

(C) an aliphatic diol represented by general formula (4'):

$$HO\text{-}R^5\text{-}OH \qquad (4')$$

(wherein $R^5$ represents a divalent aliphatic group having 2 to 20 carbon atoms containing at least one ether bond or an alicyclic skeleton in the main chain thereof), and
(D) a hydroxycarboxylic acid represented by general formula (5):

$$R^{11}OCO\text{-}R^3\text{-}OH \qquad (5)$$

(wherein $R^3$ represents a divalent aliphatic group having 1 to 10 carbon atoms, and $R^{11}$ represents a hydrogen atom or an aliphatic group having 1 to 6 carbon atoms or an aromatic group) or an ester form thereof, or (D) a lactone represented by general formula (6):

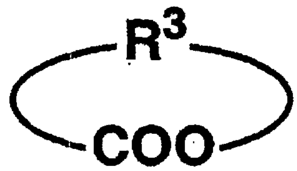 (6)

(wherein $R^3$ represents a divalent aliphatic group having 1 to 10 carbon atoms) (provided that (A) and (A') may be the same or different).

According to a fifty-ninth aspect of the present invention, there is provided a method of producing a biodegradable aliphatic polyester copolymer according to the fifty-eighth aspect of the present invention, further including the steps of synthesizing a low molecular weight aliphatic polyester copolymer (having a weight average molecular weight of 5,000 or more), which is an intermediate for polymerization of the copolymer, and adding 0.1 to 5 parts by weight of a bifunctional coupler (E) represented by general formula (7) :

$$X^1\text{-}R^6\text{-}X^2 \quad (7)$$

(wherein $X^1$ and $X^2$ represent each a reactive group capable of forming a covalent bond by reaction with a hydroxyl group or a carboxyl group and $R^6$ represents a single bond, or an aliphatic group having 1 to 20 carbon atoms or an aromatic group, provided that $X^1$ and $X^2$ may be the same or different) to 100 parts by weight of the low molecular weight aliphatic polyester copolymer in a molten state to increase the weight average molecular weight thereof to 30,000 or more.

According to a sixtieth aspect of the present invention, there is provided a method of producing a biodegradable aliphatic polyester copolymer according to the fifty-ninth aspect of the present invention, characterized in that in the coupler (E) represented by the general formula (7), $X^1$ and $X^2$ are one or more groups selected from the group consisting of reactive groups represented by formulae (9) to (11):

$-N=C=O$ (9) $-N=S=O$ (10)

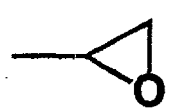 (11)

that are capable of reacting substantially with a hydroxyl group only to form a covalent bond.

According to a sixty-first aspect of the present invention, there is provided a method of producing a biodegradable aliphatic polyester copolymer according to the fifty-ninth aspect of the present invention, characterized in that in the coupler (E) represented by the general formula (7), $X^1$ and $X^2$ are one or more groups selected from the group consisting of reactive groups represented by the general formulae (12) to (15):

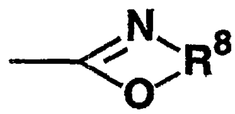 (12) 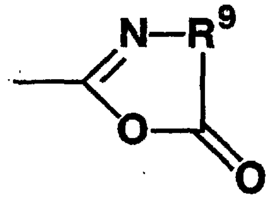 (13)

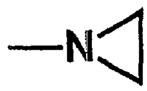 (14) 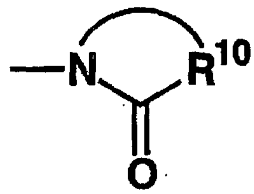 (15)

(wherein $R^8$ to $R^{10}$ represent a divalent aliphatic group or an aromatic group, and the hydrogens directly bonded to the ring may be substituted by an aliphatic group and/or an aromatic group) that are capable of reacting substantially with a carboxyl group only to form a covalent bond.

According to a sixty-second aspect of the present invention, there is provided a method of producing a biodegradable aliphatic polyester copolymer according to the fifty-eighth or fifty-ninth aspect of the present invention, characterized in that the molar ratio at the time of charging raw materials satisfies the following expressions

$$1.0 \leq [(B) + (C)]/[(A) + (A')] \leq 1.1$$

and

$$0.02 \leq [(D)]/[(A) + (A') + (D)] \leq 0.30$$

(wherein (A) and (A') ((A) and (A') may be the same or different) represent the mole numbers of the aliphatic dicarboxylic acid, acid anhydride thereof or ester form thereof, (B) represents the mole number of the aliphatic diol, (C) represents the mole number of the aliphatic diol containing an ether bond in the main chain, and (D) represents the mole number of the hydroxycarboxylic acid or ester form thereof or lactone used).

According to a sixty-third aspect of the present invention, there is provided a method of producing a biodegradable aliphatic polyester copolymer according to the fifty-eighth or fifty-ninth aspect of the present invention, characterized in that the molar ratio at the time of charging raw materials satisfies the following expressions

$$1.0 \leq [(B) + (C)]/[(A) + (A')]) \leq 2.0$$

and

$$0.02 \leq [(D)]/[(A) + (A') + (D)] \leq 0.30$$

(wherein (A) and (A') ((A) and (A') may be the same or different) represent the mole numbers of the aliphatic dicarboxylic acid, acid anhydride thereof or ester form thereof, (B) represents the mole number of the aliphatic diol, (C) represents the mole number of the aliphatic diol containing an ether bond, and (D) represents the mole number of the hydroxycarboxylic acid or ester form thereof or lactone used).

According to a sixty-fourth aspect of the present invention, there is provided a method of producing a biodegradable aliphatic polyester copolymer according to the fifty-eighth or fifty-ninth aspect of the present invention, characterized in that the content of the aliphatic dicarboxylic acid and the aliphatic carboxylic acid contained in the aliphatic

dicarboxylic acid diester ((A) and (A')) as an impurity is retained so as to be 0.1 mol% or less based on the aliphatic dicarboxylic acid diester.

According to a sixty-fifth aspect of the present invention, there is provided an aliphatic polyester satisfying the relationship expressed by mathematical expressions (i) to (iii) described below in measurement of elongation viscosity at a temperature of 150°C and a strain rate in the range of 0.15 to 0.20 $sec^{-1}$:

$$\alpha = \Delta \ln\lambda_n/\Delta\varepsilon = = (\ln\lambda_{n2} - \ln\lambda_{n1})/(\varepsilon_2 - \varepsilon_1) \geq 0.15 \quad \text{(i)}$$

$$\lambda_n = \lambda/\lambda_1 \quad \text{(ii)}$$

$$\varepsilon = \ln(l/l_0) \quad \text{(iii)}$$

(wherein $\alpha$ represents a parameter that indicates the degree of strain hardenability, $\lambda_n$ represents a nonlinear parameter, $\lambda$ represents elongation viscosity in the nonlinear region, $\lambda_1$ represents elongation viscosity in the linear region, $\varepsilon$ represents amount of elongation strain according to Hencky, $l_0$ and l represent lengths of a sample at elongation times 0 and t, respectively, and suffix numbers, 2 and 1, in $\lambda_{n2}$, $\lambda_{n1}$, $\varepsilon_2$, and $\varepsilon_1$ indicate values at elongation times $t_2$ and $t_1$, respectively).

According to a sixty-sixth aspect of the present invention, there is provided an aliphatic polyester according to the sixty-fifth aspect of the present inventions, characterized in that a branching point measured by $^1$H-NMR is (0.3 to 50) $\times 10^{-6}$ mol/g.

According to a sixty-seventh aspect of the present invention, there is provided an aliphatic polyester according to the sixty-fifth or sixty-sixth aspect of the present invention, in which the weight average molecular weight Mw is (0.4 to 7) $\times 10^5$.

According to a sixty-eighth aspect of the present invention, there is provided an aliphatic polyester according to the sixty-fifth or sixty-sixth aspect of the present invention, in which a branching point measured by $^1$H-NMR is (0.3 to 50) $\times 10^{-6}$ mol/g and a weight average molecular weight Mw is (0.4 to 7) $\times 10^5$.

According to a sixty-ninth aspect of the present invention, there is provided an aliphatic polyester according to any one of the sixty-fifth to sixty-eighth aspects of the present invention, characterized in that one molecular chain is constituted by a repeating unit (P) represented by general formula (1):

$$(CO\text{-}R^1\text{-}COO\text{-}R^2\text{-}O) \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$(CO\text{-}R^3\text{-}O) \quad (2)$$

(wherein $R^3$ represents a divalent aliphatic group having 1 to 10 carbon atoms).

According to a seventieth aspect of the present invention, there is provided a method of producing an aliphatic polyester having a branched structure whose molecular chain is constituted by a repeating unit (P) represented by general formula (1):

$$\text{-(-}CO\text{-}R^1\text{-}COO\text{-}R^2\text{-}O\text{-)-} \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$\text{-(-}CO\text{-}R^3\text{-}O\text{-)-} \quad (2)$$

(wherein $R^3$ represents a divalent aliphatic group having 1 to 10 carbon atoms), the method being characterized by including a polymerization reaction of (A) an aliphatic dicarboxylic acid represented by general formula (3):

$$R^4\text{-OCO-}R^1\text{-COO-}R^5 \quad (3)$$

(wherein $R^1$ represents a divalent aliphatic group having 1 to 12 carbon atoms and $R^4$ and $R^5$ represent each a hydrogen atom, or an aliphatic group having 1 to 12 carbon atoms or an aromatic group), an acid anhydride thereof or a diester form thereof,
(B) an aliphatic diol represented by general formula (4):

$$HO\text{-}R^2\text{-}OH \quad (4)$$

(wherein $R^2$ represents a divalent aliphatic group having 2 to 12 carbon atoms), and
(C) a hydroxycarboxylic acid represented by general formula (5):

$$R^6OCO\text{-}R^3\text{-}OH \quad (5)$$

(wherein $R^3$ represents a divalent aliphatic group having 1 to 10 carbon atoms, and $R^6$ represents a hydrogen atom or an aliphatic group having 1 to 6 carbon atoms), or an ester form thereof, or a lactone represented by general formula (6):

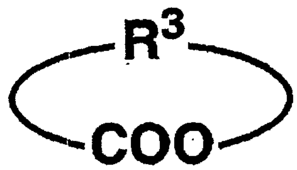

(6)

(wherein, $R^3$ represents a divalent aliphatic group having 1 to 10 carbon atoms) (what is represented by the general formula (5) or the general formula (6) is defined as (C)).

According to a seventy-first aspect of the present invention, there is provided a method of producing an aliphatic polyester according to the seventieth aspect of the present invention, characterized in that the aliphatic dicarboxylic acid, the acid anhydride thereof, or the diester form thereof (A) is at least one selected from the group consisting of succinic acid, adipic acid, dimethyl succinate and dimethyl adipic acid.

According to a seventy-second aspect of the present invention, there is provided a method of producing an aliphatic polyester according to the seventieth aspect of the present invention, characterized in that the aliphatic diol (B) is at least one selected from the group consisting of ethylene glycol, 1,4-butanediol, diethylene glycol and 1,4-cyclohexane dimethanol.

According to a seventy-third aspect of the present invention, there is provided a method of producing an aliphatic polyester according to the seventieth aspect of the present invention,
characterized in that the lactone (C) is ε-caprolactone.

According to a seventy-fourth aspect of the present invention, there is provided a lactone-containing resin, characterized in that the resin is (c) a lactone-containing resin including:

(a) an aliphatic polyester copolymer having a weight average molecular weight of 30,000 or more and having a molecular chain constituted by a repeating unit (P) represented by general formula (1) :

$$\text{-(-CO-}R^1\text{-COO-}R^2\text{-O-)-} \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) derived from a lactone and represented by general formula (2):

$$-(-CO-R^3-O-)- \quad (2)$$

(wherein $R^3$ represents a divalent aliphatic group having 1 to 10 carbon atoms);
(b) another biodegradable resin optionally added; and
(d) a resin additive optionally added, and that the aliphatic polyester copolymer (a) which is one of the constituents of the lactone-containing resin (c) has been subjected to radiation irradiation treatment singly or together with at least one of the other constituents.

According to a seventy-fifth aspect of the present invention, there is provided a lactone-containing resin according to the seventy-fourth aspect of the present invention, characterized in that the lactone of the repeating unit (Q) is at least one selected from the group consisting of ε-caprolactone, 4-methylcaprolactone, 3,5,5-trimethylcaprolactone, 3,3,5-trimethylcaprolactone, β-propiolactone, γ-butyrolactone, δ-valerolactone, and enantolactone.
According to a seventy-sixth aspect of the present invention, there is provided a lactone-containing resin according to the seventy-fourth aspect of the present invention, characterized in that the repeating unit (P) is a structure that is produced by condensation reaction from an aliphatic carboxylic acid containing a succinic acid residue and/or an adipic acid residue and an aliphatic glycol containing an ethylene glycol residue and/or a 1,4-butanediol residue.
According to a seventy-seventh aspect of the present invention, there is provided a lactone-containing resin according to any one of the seventy-fourth to seventy-sixth aspects of the present invention, in which the aliphatic polyester copolymer (a) includes 100 parts by weight of a low molecular weight aliphatic polyester copolymer (D) which is an intermediate of the copolymer (a) coupled with 0.1 to 5 parts by weight of a bifunctional coupler (E) represented by general formula (7):

$$X^1-R^7-X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure).
According to a seventy-eighth aspect of the present invention, there is provided a lactone-containing resin according to the seventy-seventh aspect of the present invention, in which the aliphatic polyester copolymer (a) coupled with a coupler (E) has a weight average molecular weight of 30,000 or more.
According to a seventy-ninth aspect of the present invention, there is provided a lactone-containing resin according to the seventy-seventh or seventy-eighth aspect of the present invention, characterized in that the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture thereof.
According to an eightieth aspect of the present invention, there is provided a lactone-containing resin according to any one of the seventy-fourth to seventy-ninth aspects of the present invention, in which the aliphatic polyester copolymer (a) in the lactone-containing resin has a gel fraction of 0.01 to 90%.
According to an eighty-first aspect of the present invention, there is provided another lactone-containing resin according to the seventy-fourth aspect of the present invention, in which the other biodegradable resin is a synthetic and/or natural polymer.
According to an eighty-second aspect of the present invention, there is provided a lactone-containing resin according to the eighty first aspect of the present invention, in which the synthetic polymer includes an aliphatic polyester, a biodegradable cellulose ester, a polypeptide, a polyvinyl alcohol, a polyvinyl acetate or a mixture thereof.
According to an eighty-third aspect of the present invention, there is provided a lactone-containing resin according to the eighty first aspect of the present invention, in which the natural polymer includes starch, cellulose, paper, pulp, cotton, hemp, wool, silk, hide, carrageenan, chitin/chitosan substance, naturally occurring straight chain polyester resins or mixtures thereof.
According to an eighty-fourth aspect of the present invention, there is provided an aliphatic polyester blend resin composition including a blend of a high molecular weight aliphatic polyester copolymer according to any one of claims 1 to 5, 16 to 22, 35 to 42, 50 to 57, 65 to 69, and 74 to 80 and another aliphatic polyester resin.
According to an eighty-fifth aspect of the present invention, there is provided a biodegradable resin molding molded from an aliphatic polyester biodegradable resin composition including an aliphatic polyester copolymer having a weight average molecular weight of 40,000 or more and having a molecular chain constituted by a repeating unit (P) represented by general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$-(-CO-R^3-O-)- \quad (2)$$

(wherein $R^3$ represents a divalent aliphatic group having 1 to 10 carbon atoms), and another biodegradable resin.

According to an eighty-sixth aspect of the present invention, there is provided a biodegradable resin composition according to the eighty fifth aspect of the present invention, wherein the aliphatic polyester copolymer (a) includes 100 parts by weight of a low molecular weight aliphatic polyester copolymer (D) having a weight average molecular weight of 5,000 or more, which is an intermediate for polymerization of the aliphatic polyester copolymer (a) coupled with 0.1 to 5 parts by weight of a bifunctional coupler (E) represented by general formula (7):

$$X^1-R^7-X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure).

According to an eighty-seventh aspect of the present invention, there is provided a biodegradable resin composition according to the eighty fifth or eighty sixth aspect of the present invention, characterized in that the general formula (1) is a structure that is produced by condensation reaction from an aliphatic carboxylic acid containing a succinic acid residue and/or an adipic acid residue and an aliphatic glycol containing an ethylene glycol residue and/or a 1,4-butanediol residue.

According to an eighty-eighth aspect of the present invention, there is provided a biodegradable resin composition according to the eighty fifth or eighty sixth aspect of the present invention, characterized in that the general formula (2) represents at least one residual selected from the group consisting of ε-caprolactone, 4-methylcaprolactone, 3,5,5-trimethylcaprolactone, 3,3,5-trimethylcaprolactone, β-propiolactone, γ-butyrolactone, δ-valerolactone, and enantolactone.

According to an eighty-ninth aspect of the present invention, there is provided a biodegradable resin composition according to the eighty sixth aspect of the present invention, characterized in that the reactive group of the bifunctional coupler (E) represented by the general formula (7) is an isocyanate group; an isothiocyanate group; an epoxy group; an oxazoline group, an oxazolone group or an oxazinone group; an aziridine group; or a mixture thereof.

According to a ninetieth aspect of the present invention, there is provided a biodegradable resin composition according to any one of the eighty fourth to eighty ninth aspects of the present invention, in which the another biodegradable resin is an aliphatic polyester, a cellulose acetate or a starch.

According to a ninety-first aspect of the present invention, there is provided an aliphatic polyester blend resin composition according to the ninetieth aspect of the present invention, in which the aliphatic polyester is one that has a structure obtained by polymerization of an aliphatic dicarboxylic acid and an aliphatic diol; one that has a structure obtained from polymerization of a hydroxycarboxylic acid; one that has a structure obtained by polymerization of an aliphatic dicarboxylic acid and an aliphatic diol and a hydroxycarboxylic acid; or a mixture of two or more thereof.

According to a ninety-second aspect of the present invention, there is provided an aliphatic polyester blend resin composition according to the ninety first aspect of the present invention, in which the aliphatic polyester is a poly (butylene-succinate) or a poly(butylene-succinate/adipate); a poly(ε-caprolactone) or a polylactic acid; a poly (butylene-succinate-ε-caprolactone); or a mixture of two or more thereof.

According to a ninety-third aspect of the present invention, there is provided an aliphatic polyester blend resin composition according to the ninety first or ninety second aspect of the present invention, wherein the aliphatic polyester is one coupled with the coupler (E) represented by the general formula (7).

According to a ninety-fourth aspect of the present invention, there is provided an aliphatic polyester blend resin composition according to the eighty fourth or eighty fifth aspect of the present invention, in which weight compositional ratio of the aliphatic polyester copolymer to the polylactic acid is 99.9/0.1 to 70/30.

According to a ninety-fifth aspect of the present invention, there is provided an aliphatic polyester blend resin composition according to the ninetieth aspect of the present invention, in which the cellulose acetate is a cellulose

acetate resin blended with a plasticizer.

According to a ninety-sixth aspect of the present invention, there is provided an aliphatic polyester blend resin composition according to the ninety fifth aspect of the present invention, in which the cellulose acetate has an acetylation degree within the range of 48.8 to 62.5.

According to a ninety-seventh aspect of the present invention, there is provided an aliphatic polyester blend resin composition according to the ninety fifth aspect of the present invention, in which the plasticizer is a polycaprolactone, tris(ethoxycarbonyl)methyl citrate, tris(ethoxycarbonyl)methyl acetyl citrate or a mixture thereof.

According to a ninety-eighth aspect of the present invention, there is provided an aliphatic polyester blend resin composition according to the ninety fifth aspect of the present invention, in which the weight compositional ratio of the aliphatic polyester copolymer to the cellulose acetate resin in which the plasticizer is blended is 90/10 to 10/90.

According to a ninety-ninth aspect of the present invention, there is provided an aliphatic polyester blend resin composition according to the ninety fifth or ninety eighth aspect of the present invention, in which the plasticizer has a blending amount of 15 to 50 parts by weight based on 100 parts by weight of the cellulose acetate.

According to a hundredth aspect of the present invention, there is provided an aliphatic polyester blend resin composition according to the ninetieth aspect of the present invention, in which the starch is any one of a granular starch, a plasticized starch that has been plasticizedwithwaterand/oraplasticizer, or a blend of the granular starch and the plasticized starch that has been plasticized with water and/or a plasticizer.

According to a hundred and first aspect of the present invention, there is provided an aliphatic polyester blend resin composition according to the hundredth aspect of the present invention, in which the weight compositional ratio of the aliphatic polyester copolymer to the starch is 95/5 to 20/80.

According to a hundred and second aspect of the present invention, there is provided an aliphatic polyester blend resin composition according to any one of the eighty fourth to hundred and first aspect of the present invention, further including as the resin additive (d), aplasticizer, aheatstabilizer, alubricant, a blocking inhibitor, a nucleating agent, a photolytic agent, a biodegradation accelerator, an antioxidant, an ultraviolet stabilizer, an antistatic agent, a flame retardant, a drop-flowing agent, an antimicrobial agent, a deodorant, a filler, a coloring agent or a mixture thereof, which is added thereto.

According to a hundred and third aspect of the present invention, there is provided a molding molded from the aliphatic polyester blend resin composition according to any one of the eighty fourth to hundred and second aspects of the present invention.

According to a hundred and fourth aspect of the present invention, there is provided a molding according to the hundred and third aspect of the present invention, in which the molding is any one selected from the group consisting of a film-like molding, a foamed body, a cushioning sheet having closed cells, a thick-wall vessel, a thin-wall vessel, a breeding pot, a plant protector, a card, a nonwoven fabric, a water drip net, a garbage bag, wall paper (decorative paper), drain material, a laminate, a throwaway glove, a pole, a coating material and granular agricultural and horticultural coating material.

According to a hundred and fifth aspect of the present invention, there is provided a biodegradable resin molding according to the hundred and third aspect of the present invention, in which the molding is molded by inflation molding, extrusion molding, T-die molding, injection molding, blow molding, calender molding, compression molding, transfer molding, thermal molding, flow molding, or lamination molding.

According to a hundred and sixth aspect of the present invention, there is provided a biodegradable resin molding according to the hundred and fourth aspect of the present invention, in which the film-like molding is molded into a non-stretched film, a monoaxially stretched film or a biaxially stretched film.

According to a hundred and seventh aspect of the present invention, there is provided a molding according to the hundred and fourth or hundred and sixth aspect of the present invention, in which the film-like molding is an agricultural mulching film, a shrink film, or a laminate film.

First, the group I of the present invention will be described in detail.

The high molecular weight aliphatic polyester copolymer according to the group I of the present invention is characterized by including a low molecular weight aliphatic polyester copolymer (D) having a weight average molecular weight of 5,000 or more whose molecular chain is made of a repeating unit (P) represented by the general formula (1)

$$-(-CO-R^1-COO-R^2-O-)- \qquad (1)$$

(wherein $R^1$ represents a divalent aliphatic group having 1 to 12 carbon atoms, and $R^2$ represents a divalent aliphatic group having 2 to 12 carbon atoms), and

a repeating unit (Q) represented by the general formula (2):

$$-(-CO-R^3-O-)- \quad (2)$$

(wherein $R^3$ represents a divalent aliphatic group having 1 to 10 carbon atoms), and a bifunctional coupler (E) represented by the general formula (7):

$$X^1-R^7-X^2 \quad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure) , the low molecular weight aliphatic polyester copolymer (D) having molecules being coupled to each other with the coupler (E) in an amount of 0.1 to 5 parts by weight based on 100 parts by weight of the copolymer (D) so that the copolymer (D) has a weight average molecular weight of 40,000 or more.

Examples of the component (A) that provides the aliphatic dicarboxylic acid residue in the formula (1) include aliphatic dicarboxylic acids, and anhydrides thereof, or mono- or di-esters thereof, which are represented by the general formula (3) described above.

In the formulae (1) and (3), $R^1$ represents a divalent aliphatic group having 1 to 12 carbon atoms.

The divalent aliphatic groups indicated by $R^1$ include acyclic or cyclic alkylene groups preferably having 2 to 8 carbon atoms, particularly linear lower alkylene groups having 2 to 6 carbon atoms, such as $-(CH_2)_2-$, $-(CH_2)_4-$, and $-(CH_2)_6-$. In addition, $R^1$ may have a substituent inert to the reaction, for example, an alkoxy group, a keto group, or the like. $R^1$ may contain a heteroatom and atoms such as oxygen and sulfur in the main chain thereof, or may have a structure separated by, for example, an ether bond, a thioether bond, or the like.

In the formula (3), $R^4$ and $R^5$ represent each a hydrogen atom, an aliphatic group having 1 to 6 carbon atoms, or an aromatic group. $R^4$ and $R^5$ may be the same or different.

The formula (3) represents an aliphatic dicarboxylic acid when $R^4$ and $R^5$ are hydrogen. The examples of the aliphatic dicarboxylic acid include succinic acid, glutaric acid, adipic acid, pimelic acid, azelaic acid, suberic acid, decanedicarboxylic acid, dodecanedicarboxylic acid, sebacic acid, diglycolic acid, ketopimelic acid, malonic acid, methylmalonic acid, and the like.

The aliphatic groups represented by $R^4$ and $R^5$ include linear or branched alkyl groups having 1 to 6 carbon atoms, preferably, 1 to 4 carbon atoms, as well as cycloalkyl groups having 5 to 12 carbon atoms such as a cyclohexyl group.

The aromatic groups represented by $R^4$ and $R^5$ include a phenyl group, a benzyl group, and the like.

Of those, $R^4$ and $R^5$ are lower alkyl groups having 1 to 6 carbon atoms, preferably, 1 to 3 carbon atoms. The examples of such dialkyl esters include dimethyl succinate, diethyl succinate, dimethyl glutarate, diethyl glutarate, dimethyl adipate, diethyl adipate, dimethyl pimelate, dimethyl azelate, dimethyl suberate, diethyl suberate, dimethyl sebacate, diethyl sebacate, dimethyl decanedicarboxylate, dimethyl dodecanedicarboxylate, dimethyl diglycolate, dimethyl ketopimelate, dimethyl malonate, dimethyl methylmalonate, and the like. Those dialkyl esters may be used alone or in combination of two or more of the above-mentioned dialkyl esters.

The component (B) that provides the aliphatic diol residue in the formula (1) includes an aliphatic diol.

The aliphatic diol is represented by the general formula (4) described above.

In the formulae (1) and (4), $R^2$ represents a divalent aliphatic group. The divalent aliphatic groups include acyclic or cyclic alkylene groups having 2 to 12, preferably 2 to 8 carbon atoms. Preferred alkylene groups include linear lower alkylene groups having 2 to 6 carbon atoms, such as $-(CH_2)_2-$, $-(CH_2)_3-$, and $-(CH_2)_4-$. In addition, the divalent group $R^2$ may have a substituent inert to the reaction, for example, an alkoxy group, a keto group, or the like. $R^2$ may contain a heteroatom or atoms such as oxygen and sulfur in the main chain thereof, or may have a structure separated by, for example, an ether bond, a thioether bond, or the like. The examples of the aliphatic diol include ethylene glycol, 1,3-propanediol, 1,2-propanediol, 1,3-butanediol, 2-methylpropanediol, 1,4-butanediol, neopentyl glycol, pentamethylene glycol, hexamethylene glycol, octamethylene glycol, decamethylene glycol, dodecamethylene glycol, 1,4-cyclohexanediol, 1,4-cyclohexanedimethanol, diethylene glycol, dipropyrene glycol, triethylene glycol, tetraethylene glycol, pentaethylene glycol, a polyethylene glycol having a molecular weight of 1000 or less, and the like. Those aliphatic diols may be used alone or in combination of two or more of the above-mentioned aliphatic diols. Furthermore, the aliphatic diol may be used in combination with a small amount of a trifunctional alcohol such as 1,1,1-tris(hydroxymethyl)propane.

The component (C) that provides the aliphatic hydroxycarboxylic acid residue in the formula (2) includes a hydroxycarboxylic acid or a hydroxycarboxylate represented by the general formula (5), or a lactone represented by

the general formula (6).

The hydroxycarboxylic acid or the hydroxycarboxylate is represented by the general formula (5) described above.

In the formula (5), $R^3$ indicates a divalent aliphatic group. The divalent aliphatic groups include acyclic or cyclic alkylene groups having 2 to 10 carbon atoms, preferably 2 to 8 carbon atoms. In addition, $R^3$ may have a substituent inert to the reaction, for example, an alkoxy group, a keto group, or the like. $R^3$ may contain a heteroatom or atoms such as oxygen and sulfur in the main chain thereof, or may have a structure separated by, for example, an ether bond, a thioether bond, or the like.

In the formula (5), $R^6$ represents a hydrogen atom, an aliphatic group, or an aromatic group. The aliphatic groups include linear or branched chain lower alkyl groups having 1 to 6 carbon atoms, preferably 1 to 4 carbon atoms, cycloalkyl groups having 5 to 12 carbon atoms, such as a cyclohexyl group, and the aromatic groups include a phenyl group, a benzyl group, etc.

The examples of the hydroxycarboxylic acid include glycolic acid, L-lactic acid, D-lactic acid, D,L-lactic acid, 2-methyllactic acid, 3-hydroxybutyric acid, 4-hydroxybutyric acid, 2-hydroxy-n-butyric acid, 2-hydroxy-3,3-dimethylbutyric acid, 2-hydroxy-2-methylbutyric acid, 2-hydroxy-3-methylbutyric acid, hydroxypivalic acid, hydroxyisocaproic acid, hydroxycaproic acid, and the like.

The hydroxycarboxylic acid described above can be a cyclic dimeric ester made of two molecules thereof bonded to each other (lactide). Specific examples thereof include glycolides obtained from glycolic acid, those obtained from lactic acid, etc.

Examples of the hydroxycarboxylate include methyl and ethyl esters of the above-mentioned hydroxycarboxylic acid, acetates, etc.

The lactones include those represented by the above-mentioned general formula (6).

In the formula (6), $R^3$ indicates a divalent aliphatic group. The divalent aliphatic groups include linear or branched chain alkylene groups having 4 to 10 carbon atoms, preferably 4 to 8 carbon atoms. In addition, $R^3$ may have a substituent inert to the reaction, for example, an alkoxy group, a keto group, or the like. $R^3$ may contain a heteroatom or atoms such as oxygen and sulfur in the main chain thereof, or may have a structure separated by, for example, an ether bond, a thioether bond, or the like.

The specific examples of the lactones include: for example, β-propiolactone, β-butyrolactone; γ-butyrolactone; β-valerolactone; δ-valerolactone; δ-caprolactone; ε-caprolactone; various methylated caprolactones such as 4-methylcaprolactone, 3,5,5-trimethylcaprolactone and 3,3,5-trimethylcaprolactone; cyclic monomeric esters of hydroxycarboxylic acids such as β-methyl-δ-valerolactone, enantholactone and laurolactone; cyclic dimeric esters of the above-mentioned hydroxycarboxylic acids such as glycolide, L-lactide and D-lactide; as well as cyclic ester-ethers such as 1,3-dioxolan-4-one, 1,4-dioxan-3-one and 1,5-dioxepan-2-one; and the like. Those lactones may be used as a mixture of two or more of the monomers.

The aliphatic polyester copolymer obtained by performing a condensation polymerization reaction of the three components (A), (B), and (C) described above in the group I of the present invention may be random or block. The charging of the above-mentioned monomers may be collective charging (random), or divided charging (block). Alternatively, a lactone may be polymerized with a dicarboxylic acid - diol polymer, or a dicarboxylic acid and a diol may be polymerized with polylactone.

In the group I of the present invention, the step (a) in which the low molecular weight aliphatic polyester copolymer (D) is synthesized by a condensation polymerization reaction of the three components (A), (B), and (C) described above may be divided into, for example, an esterification step in which a dehydration reaction, the first half, mainly proceeds, and a condensation polymerization step in which an interesterification reaction, the latter half, mainly proceeds, depending on the kinds of the raw materials used.

It is desirable that the esterification step be performed under the conditions of a reaction temperature of 80 to 250°C, preferably 100 to 240°C, and more preferably 145 to 230°C for 0.5 to 5 hours and preferably 1 to 4 hours at 760 to 100 Torr. Catalysts are not indispensable. They may be used in an amount of $10^{-7}$ to $10^{-3}$ mol, preferably $10^{-6}$ to $5 \times 10^{-4}$ mol, per mol of the aliphatic dicarboxylic acid or diester used as the raw material.

The latter half, condensation polymerization step, is desirably completed within 2 to 10 hours, preferably 3 to 6 hours, with the reaction temperature increased while the pressure of the reaction system is reduced. It is desirable that finally the reaction temperature reaches 180 to 270°C, preferably 190 to 240°C, and the degree of pressure reduction reaches 3 Torr or less, preferably 1 Torr or less. In this step, it is preferred that general catalysts for interesterification reaction be used in an amount of $10^{-7}$ to $10^{-3}$ mol, preferably $10^{-6}$ to $5 \times 10^{-4}$ mol, per mol of the aliphatic dicarboxylic acid or diester used as the raw material. If the catalyst amount is less than this range, the reaction will not proceed well and the reaction will take a long time. On the other hand, the catalyst amount exceeding this range is not preferable since it causes thermal decomposition, crosslinking, discoloration, etc. of the polymer upon polymerization and also causes thermal decomposition, etc. of the polymer in molding processing of the polymer.

In the step (a), specific examples of the catalyst that can be used in both the esterification step in which mainly

a dehydration reaction proceeds and in the condensation polymerization step in which mainly an interesterification reaction, the latter half, proceeds includes the following. These catalysts may be used singly or in combinations of two or more of them.

As the catalyst, there are exemplified various compounds of metals, for example, carboxylates, carbonates, borates, oxides, hydroxides, hydrogenated compounds, alcoholates and acetylacetonate chelates, and the like. The above-mentioned metals include: alkali metals such as lithium and potassium; alkali earth metals such as magnesium, calcium and barium; typical metals such as tin, antimony and germanium; transition metals such as lead, zinc, cadmium, manganese, cobalt, nickel, zirconium, titanium and iron; lanthanoid metals such as bismuth, niobium, lanthanum, samarium, europium, erbium and ytterbium; and the like.

Nitrogen-containing basic compounds, or boric acids orborates may be used also as the catalyst.

Specifically, an alkali metal compound includes sodium hydroxide, potassium hydroxide, lithium hydroxide, potassium bicarbonate, lithium bicarbonate, sodium carbonate, potassium carbonate, lithium carbonate, sodium acetate, potassium acetate, lithium acetate, sodium stearate, lithium stearate, sodium borohydride, sodium borophenylate, lithium benzoate, sodium dihydrogen phosphate, potassium dihydrogen phosphate, lithium dihydrogen phosphate, and the like.

An alkali earth metal compound includes calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, and the like.

A typical metal compound includes dibutyltin hydroxide, dibutyltin dilaurate, antimony trioxide, germanium oxide, bismuth carbonate hydroxide, bismuth acetate hydroxide, and the like.

A transition metal compound includes lead acetate, zinc acetate. zincacetylacetonate, cadmiumacetate, manganeseacetate, manganese acetylacetonate, cobalt acetate, cobalt acetylacetate, nickel acetate, nickel acetylacetonate, zirconium acetate, zirconium acetylacetonate, titanium acetate, tetrabutoxytitanate, tetraisopropoxytitanate, titanium hydroxyacetylacetonate, iron acetate, iron acetylacetonate, niobium acetate, and the like.

A rare earth compound includes lanthanum acetate, samarium acetate, europium acetate, erbium acetate, ytterbium acetate, and the like.

The nitrogen-containing basic compound includes: specifically, organic ammonium hydroxides derived from aliphatic amines or aromatic amines such as tetramethylammonium hydroxide, tetraethylammonium hydroxide, tetrabutylammonium hydroxide and trimethylbenzylammonium hydroxide; tertiary amines such as trimethylamine, triethylamine, dimethylbenzylamine and triphenylamine; secondary amines represented by $R_2NH$ (wherein, R is an alkyl group such as methyl or ethyl, or an aryl group such as phenyl or tolyl); primary amines represented by $RNH_2$ (wherein, R is as defined above); basic compounds such as ammonia, tetramethylammonium borohydride, tetrabutylammonium borohydride, tetrabutylammonium tetraphenylborate and tetramethylammonium tetraphenylborate; and the like. Among those compounds, tetraalkylammonium hydroxides are particularly preferred.

The borates specifically include trimethyl borate, trihexyl borate, triheptyl borate, triphenyl borate, tritolyl borate, trinaphthyl borate, and the like.

Moreover, a phosphorous compound can be also used in the present invention I. The specific examples of the phosphorous compound include hypophosphorous acid, pyrophosphorous acid, phosphorous acid, hypophosphoric acid, phosphoric acid, pyrophosphoric acid, triphosphoric acid, metaphosphoric acid, peroxophosphoric acid, and magnesium hypophosphite, magnesium pyrophosphite, magnesium phosphite, magnesium hypophosphate, magnesium phosphate, magnesium pyrophosphate, magnesium triphosphate, magnesium metaphosphate, magnesium peroxophosphate, calcium hypophosphite, calcium pyrophosphite, calcium phosphite, calcium hypophosphate, calcium phosphate, calcium pyrophosphate, calcium triphosphate, calcium metaphosphate, calcium perochloposphate, etc. as well as salts or esters thereof. Preferred are magnesium hypophosphite, magnesium pyrophophite, magnesium phosphite, magnesium hypophosphate, magnesium phosphate, magnesium pyrophosphate, magnesium triphosphate, magnesium metaphosphate, magnesium peroxophosphate, calcium hypophosphite, calcium pyrophosphite, calcium phosphite, calcium hypophosphate, calcium phosphate, calcium pyrophosphate, calcium triphosphate, calcium metaphosphate, and calcium peroxophosphate. More preferred are magnesium-based phosphates or phosphites such as magnesium phosphate and magnesium hypophosphite; calcium-based phosphates or phosphites such as calcium phosphite and calcium hypophosphite, etc.

The use amount of the phosphorus compound described above may be selected depending on the kind and amount of the catalyst and the reaction temperature. Generally, it is desirable that the use amount be within the range of 0.1 to 50 mol per 1 mol of the catalyst used. If this amount is 0.1 mol or less, substantially no effect is obtained by adding it. On the other hand, if this amount is 50 mol or more, there appears a tendency that the condensation polymerization reaction will be inhibited and the reaction time will be prolonged.

Raw materials selected from the above-mentioned trifunctional or more polybasic carboxylic acids, polyhydric

alcohols, and polybasic hydroxycarboxylic acids may be also optionally used.

In the step (a) in which the low molecular weight aliphatic polyester copolymer (D) is synthesized, the charging ratio of the raw materials, component (A) and component (B), is desirably selected so as to satisfy the following expression (i):

$$1.0 \leq [B]/[A] \leq 2.0 \qquad (i)$$

(wherein [A] represents the mole number of the component (A), and [B] represents the mole number of the component (B)).

If the value [B] / [A] is smaller than 1, the presence of excess acid promotes the hydrolysis reaction, so that it will be difficult to obtain the aliphatic polyester copolymer (D) having a desired molecular weight. On the other hand, if the value [B] / [A] is greater than 2, the molecular weight of the polymer at the time when the first half esterification step is completed is extremely small, with the result that a longer reaction time will be necessary in the latter half condensation polymerization step.

Group I of the present invention is characterized in that to finally obtain an aliphatic polyester copolymer having a practical strength, the bifunctional coupler (E) represented by the formula (7) described above is added to the low molecular weight aliphatic polyester copolymer (D) in a molten state to increase the weight average molecular weight of the polymer to 40,000 or more. JP 4-189822 A and JP 4-189823 A disclose methods in which a low molecular weight aliphatic polyester is synthesized from an aliphatic dicarboxylic acid or a derivative thereof and an aliphatic diol, and a diisocyanate compound is added to this to increase the molecular weight of the polyester. However, no example is disclosed therein in which such a method is applied to the system using as raw materials three components : (A) an aliphatic dicarboxylic acid, an anhydride thereof or an ester derivative thereof, (B) an aliphatic diol, and (C) a hydroxycarboxylic acid, a hydroxycarboxylate, or a lactone, like the group I of the present invention.

It is desirable that the low molecular weight aliphatic polyester copolymer (D) obtained in the polymerization step (a) has a weight average molecular weight of 5,000 or more, preferably 10,000 or more, the sum of the values of an acid number and hydroxyl number thereof being between 1.0 and 45, and an acid number being 30 or less.

The sum of the values of the acid number and hydroxyl number in the copolymer (D) is proportional to the concentration of terminal groups of the copolymer (D). Where the weight average molecular weight is 5,000 or more, substantially, the sum of the values of the acid number and hydroxyl number is 45 or less. If the sum of the values of the acid number and hydroxyl number is greater than 45, the molecular weight of the copolymer (D) will be lower, so that a larger amount of the coupler will be necessary for increasing the molecular weight of the copolymer to a desired molecular weight by addition of the coupler. If the coupler is used in large amounts, the problem of gelling or the like tends to occur. Where the sum of the values of the acid number and hydroxyl number is 1.0 or less, the viscosity of the copolymer in a molten state increases due to the high molecular weight of the copolymer (D). In this case, the amount of the coupler used is minimal, resulting in that a uniform reaction becomes difficult to perform, so that the problem of gelling or the like still tends to occur. In addition, increasing the temperature at which the copolymer is molten for the purpose of performing uniform reaction causes the problems of thermal decomposition, crosslinking, and discoloration, etc. in the polymer.

The coupler (E) used in the group I of the present invention is represented by the formula (7) described above. Reactive groups $X^1$ and $X^2$ in the coupler (E) may be selected from reactive groups that can react with substantially only hydroxyl groups to form covalent bonds represented by formulae (9) to (11):

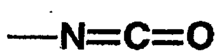 (9) 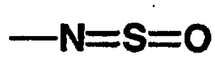 (10)

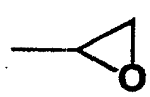 (11)

and/or from 3- to 8-membered cyclic reactive groups that can react with substantially only carboxyl groups represented by general formulae (12) to (15):

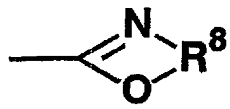 (12) 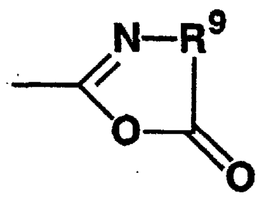 (13)

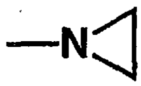 (14) 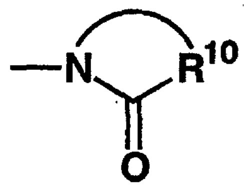 (15)

(wherein $R^8$ to $R^{10}$ represent a divalent aliphatic or aromatic group, respectively, provided that the hydrogens directly bonded to the ring may be substituted by an aliphatic group and/or an aromatic group) . $X^1$ and $X^2$ may be of the same chemical structure or different from each other.

The specific examples of the coupler (E), into which an isocyanate group represented by the formula (9) indicated above is introduced, include a series of diisocyanate compounds. Specifically, the diisocyanate compounds include diisocyanate compounds such as tolylene diisocyanate, xylene diisocyanate, diphenylmethane diisocyanate, naphthylene diisocyanate, hexamethylene diisocyanate, hydrogenated diphenylmethane diisocyanate, lysine diisocyanate, triphenylmethane diisocyanate, trans-cyclohexylene 1,4-diisocyanate, p-phenylene diisocyanate and isophorone diisocyanate, as well as allophanate form derivatives, biuret form derivatives, isocyanurate form derivatives, and derivatives which are adducts with polyols or polythiols thereof, and the like. Particularly preferred diisocyanate compounds include non-yellowing isocyanate compounds such as xylene diisocyanate, isophorone diisocyanate and hexamethylene diisocyanate. Those diisocyanate compounds may be used alone or in combination of two or more of the above-mentioned diisocyanate compounds.

The specific examples of the coupler (E), into which an isothiocyanate group represented by the formula (10) indicated above is introduced, include a series of diisothiocyanate compounds. Specifically, the diisothiocyanate compounds include p-phenylene diisothiocyanate, heptamethylene diisothiocyanate, 4,4'-methylenediphenyl isothiocyanate, isophthaloyl isothiocyanate, and the like. Those diisothiocyanate compounds may be used alone or in combination of two or more of the above-mentioned diisothiocyanate compounds.

The specific examples of the coupler (E), into which an epoxy group represented by the formula (11) indicated above is introduced, include a series of diepoxy compounds. Specifically, the epoxy compounds include: bisphenol-type epoxy compounds such as diglycidyl ether of bisphenol A; novolak-type epoxy compounds such as phenol novolak and cresol novolak; resorcin-type epoxy compounds; alicyclic compounds such as vinylcyclohexene dioxide and dicylopentadiene oxide; glycidyl ethers; polyepoxydized polybutadiene; and the like. Those epoxy compounds may be used alone or in combination of two or more of the above-mentioned epoxy compounds.

As the group represented by the formula (12) indicated above, an oxazoline when $R^8$ is an ethylene group is preferred. The oxazoline is generated by means of reaction of a carboxylic acid with ethanolamine, and thus, the coupler of the formula (7) can be prepared. A bisoxazoline compound is particularly preferred. The specific examples of the bisoxazoline compound include 2,2'-methylene bis(2-oxazoline), 2,2'-ethylene bis(2-oxazoline), 2,2'-ethylene bis(4-methyl-2-oxazoline), 2,2'-propylene bis(2-oxazoline), 2,2'-tetramethylene bis(2-oxazoline), 2,2'-hexamethylene bis(2-oxazoline), 2,2'-octamethylene bis(2-oxazoline), 2,2'-p-phenylene bis(2-oxazoline) 2,2'-p-phenylene bis(4-methyl-2-oxazoline), 2,2'-p-phenylene bis(4,4'-dimethyl-2-oxazoline), 2,2'-p-phenylene bis(4-phenyl-2-oxazoline), 2,2'-m-phenylene bis(2-oxazoline), 2,2'-m-phenylene bis(4-methyl-2-oxazoline), 2,2'-m-phenylene bis(4,4-dimethyl-2-oxazoline), 2,2'-m-phenylene bis(4-phenyl-2-oxazoline), 2,2'-o-phenylene bis(2-oxazoline), 2,2'-phenyl bis(4-methyl-2-oxazoline), 2,2'-bis(2-oxazoline), 2,2'-bis(4-methyl-2-oxazoline), 2,2'-bis(4-ethyl-2-oxazoline), 2,2'-bis(4-phenyl-2-oxazoline), and the like. Those bisoxazoline compounds may be used alone or in combination of two or more of the above-mentioned bisoxazoline compounds. Among those bisoxazoline compounds, preferred are those which contain an aromatic ring, and more preferred are those which contain a phenylene group. Particularly preferred are 2,2'-m-phenylene bis(2-oxazoline) and 2,2'-p-phenylene bis(2-oxazoline).

As the group represented by the formula (13), oxazolone when $R^9$ is methylene , and oxazinone where $R^9$ is ethylene are preferred. These groups can be readily prepared by dehydrogenating an N-acyl-$\alpha$-or $\beta$-aminocarboxylic acid, for example, with acetic anhydride, etc. The examples of the bisoxazolone compound into which the group of the formula (13) is introduced include 2,2'-bis(5(4H)-oxazolone), 2,2'-methylene bis(5(4H)-oxazolone), 2,2'-ethylene bis(5(4H)-oxazolone), 2,2'-tetramethylene bis(5(4H)-oxazolone), 2,2'-hexamethylene bis(5(4H)-oxazolone), 2,2'-decamethylene bis(5(4H)-oxazolone), 2,2'-p-phenylene bis(5(4H)-oxazolone), 2,2'-m-phenylene bis(5(4H)-oxazolone), 2,2'-naphthalene bis(5(4H)-oxazolone), 2,2'-diphenylene bis(5(4H)-oxazolone), 2,2'-(1,4-cyclohexylene)-bis(5(4H)-oxazolone), 2,2'-bis(4-methyl-5(4H)-oxazolone), 2,2'-methylene bis(4-methyl-5(4H)-oxazolone), 2,2'-ethylene bis(4-methyl-5(4H)-oxazolone), 2,2'-tetramethylene bis(4-methyl-5(4H)-oxazolone), 2,2'-hexamethylene bis(4-methyl-5(4H)-oxazolone), 2,2'-decamethylene bis(4-methyl-5(4H)-oxazolone), 2,2'-p-phenylene bis(4-methyl-5(4H)-oxazolone), 2,2'-m-phenylene bis(4-methyl-5(4H)-oxazolone), 2,2'-naphthalene bis(4-methyl-5(4H)-oxazolone), 2,2'-diphenylene bis(4-methyl-5(4H)-oxazolone), 2,2'-(1,4-cyclohexylene)-bis(4-methyl-5(4H)-oxazolone), 2,2'-bis(4,4-dimethyl-5(4H)-oxazolone), 2,2'-methylene bis(4,4-dimethyl-5(4H)-oxazolone), 2,2'-ethylene bis(4,4-dimethyl-5(4H)-oxazolone, 2,2'-tetramethylene bis(4,4-dimethyl-5(4H)-oxazolone), 2,2'-hexamethylene bis(4,4-dimethyl-5(4H)-oxazolone), 2,2'-octamethylene bis(4,4-dimethyl-5(4H)-oxazolone), 2,2'-decamethylene bis(4,4-dimethyl-5(4H)-oxazolone, 2,2'-p-phenylene bis(4,4-dimethyl-5(4H)-oxazolone), 2,2'-m-phenylene bis(4,4-dimethyl-5(4H)-oxazolone), 2,2'-naphthalene bis (4,4-dimethyl-5(4H)-oxazolone), 2,2'-diphenylene bis(4,4-dimethyl-5(4H)-oxazolone), 2,2'-(1,4-cyclohexylene)-bis (4,4-dimethyl-5(4H)-oxazolone), 2,2'-bis(4-isopropyl-5(4H)-oxazolone), 2,2'-methylene bis(4-isopropyl-5(4H)-oxazolone), 2,2'-ethylene bis(4-isopropyl-5(4H)-oxazolone), 2,2'-tetramethylene bis(4-isopropyl-5(4H)-oxazolone), 2,2'-hexamethylene bis(4-isopropyl-5(4H)-oxazolone), 2,2'-p-phenylene bis(4-isopropyl-5(4H)-oxazolone), 2,2'-m-phenylene bis(4-isopropyl-5(4H)-oxazolone), 2,2'-naphthalene bis(4-isopropyl-5(4H)-oxazolone), 2,2'-bis(4-isobutyl-5 (4H)-oxazolone), 2,2'-methylene bis(4-isobutyl-5(4H)-oxazolone), 2,2'-ethylene bis(4-isobutyl-5(4H)-oxazolone), 2,2'-tetramethylene bis(4-isobutyl-5(4H)-oxazolone), 2,2'-hexamethylene bis(4-isobutyl-5(4H)-oxazolone), 2,2'-p-phenylene bis(4-isobutyl-5(4H)-oxazolone), 2,2'-m-phenylene bis(4-isobutyl-5(4H)-oxazolone), 2,2'-naphthalene bis (4-isobutyl-5(4H)-oxazolone), and the like.

The examples of the bisoxazinone compound which is another representative compound to which the group represented by the formula (13) is introduced include 2,2'-bis(3,1-benzoxazin-4-one),2,2'-methylene bis(3,1-benzoxazin-4-on), 2,2'-ethylene bis(3,1-benzoxazin-4-on), 2,2'-tetramethylene bis(3,1-benzoxazin-4-on), 2,2'-hexamethylene bis(3,1-benzoxazin-4-on), 2,2'-decamethylene bis(3,1-benzoxazin-4-on), 2,2'- p -phenylene bis(3,1-benzoxazin-4-on), 2,2'-m-phenylene bis(3,1-benzoxazin-4-on), 2,2'-naphthalene bis(3,1-benzoxazin-4-on), 2,2'-(4,4'-diphenylene) bis (3,1-benzoxazin-4-on), 2,2'-(1,4-cyclohexylene) bis(3,1-benzoxazin-4-on), 2,2'-bis(4,4-dihydro-1,3,6H-oxazin-6-on), 2,2'-methylene bis(4,5-dihydro-1,3,6H-oxazin-6-on), 2,2'-ethylene bis(4,5-dihydro-1,3,6H-oxazin-6-on), 2,2'-tetramethylene bis(4,5-dihydro-1,3,6H-oxazin-6-on), 2,2'-p-phenylene bis(4,5-dihydro-1,3,6H-oxazin-6-on), 2,2'-m-phenylene bis(4,5-dihydro-1,3,6H-oxazin-6-on), 2,2'-bis(4-methyl-5-hydro-1,3,6H-oxazin-6-on), 2,2'-ethylene bis(4-methyl-5-hydro-1,3,6H-oxazin-6-on), 2,2'-o-phenylene bis(4-methyl-5-hydro-1,3,6H-oxazin-6-on), 2,2'-m-phenylene bis(4-methyl-5-hydro-1,3,6H-oxazin-6-on), 2,2'-p-phenylene bis(4-hydro-5-methyl-1,3,6H-oxazin-6-on), 2,2'-m-phenylene bis(4-hydro-5-methyl-1,3,6H-oxazin-6-on), and the like.

The aziridine group represented by formula (14) can be readily produced by reacting ethyleneimine with an acid chloride or with the above-mentioned diisocyanate compound.

Preferably, the lactam group represented by formula (15) is pyrrolidone, for which $R^{10}$ is trimethylene, piperidone, for which $R^{10}$ is tetramethylene, orcaprolactam, for which $R^{10}$ is pentamethylene. This can be readily produced by reacting a lactam with an acid chloride or with an isocyanate compound in the same manner as in the case of formula (14).

Examples of the acid chloride used in these reactions include, for example, derivatives of terephthalic acid, isophthalic acid, naphthalenedicarboxylic acid, adipic acid, sebacic acid, trimellitic acid, succinic acid, etc.

Where reactive groups $X^1$ and $X^2$ in the coupler (E) are selected from the reactive groups that can react with substantially only hydroxyl groups to form covalent bonds, represented by formulae (9) to (11) described above, the low molecular weight aliphatic polyester copolymer (D), which serves as a precursor, has an acid number of 2.0 or less, preferably 1.0 or less. Where the acid number is greater than 2.0, the copolymer (D) has a small terminal hydroxyl concentration, which causes the problems that the coupling reaction cannot be performed efficiently and the acid number after the coupling reaction, that is, that of the final product, will be large, so that a reduction in the molecular weight upon molding tends to occur, and so on.

Where reactive groups $X^1$ and $X^2$ in the coupler (E) are selected from the 3- to 8-membered cyclic reactive groups that can react with substantially only carboxyl groups to form covalent bonds, represented by formulae (12) to (15) described above, it is preferred that the acid number of the copolymer (D) be 0.5 or more and 30 or less. If the acid number is less than 0.5, the amount of the coupler used will be minimal, so that a uniform reaction becomes difficult to perform. If the acid number is greater than 30, problems occur that the acid number of a final product cannot be made low or use of a large amount of the coupler will cause the risk of gelling, and so on.

Desirably, the reaction between the coupler (E) and the low molecular weight aliphatic polyester copolymer (D) is performed in a state where the copolymer (D) is in a uniform molten state or where it contains a small amount of solvent under a condition under which it can be readily stirred. It is desirable that the amount of the coupler (E) used be 0.1 to 5 parts by weight based on 100 parts by weight of the copolymer (D). If the amount of the coupler (E) is less

than this amount, it will be difficult to obtain a final product having a desired molecular weight. On the other hand, if the amount of coupler (E) is more than this amount, problems such as gelling tend to occur.

The reaction for forming a high molecular weight polymer with the coupler (E) can be performed at a temperature equal to or higher than the melting point of the low molecular weight aliphatic polyester copolymer (D), e.g., 270°C or less, preferably 250°C or less, and more preferably 230°C or less. This reaction can be practiced in the same reactor as that where the condensation polymerization reaction is performed, i.e., by adding the coupler (E) to the reactor in which a low molecular weight aliphatic polyester has been produced. Also, the reaction can be practiced by mixing the low molecular weight aliphatic polyester and the coupler in a usual extruder, static mixer, or the like.

In the group I of the present invention, the charging ratio of the raw material, component (A) and component (C) mustbe selected so as to satisfy the following conditional expression (ii):

$$0.02 \leq [C]/([A] + [C]) \leq 0.40 \tag{ii}$$

(wherein [A] indicates the mole number of the component (A) used, and [C] indicates the mole number of the component (C) used).

[C]/([A] + [C]) in the above-mentioned expression represents the molar fraction of the repeating unit Q represented by formula (2) described above that is contained in the aliphatic polyester copolymer of the group I of the present invention. If this value is smaller than 0.02, the obtained polymer will have a high crystallinity, lack flexibility and be hard, as well as be insufficient with respect to biodegradability because of its low biodegradation rate. On the other hand, if the value is greater than 0.40, the obtained polymer will have a low melting point and an extremely decreased crystallinity and hence have no heat resistance, so that it is not suitable for practical use.

The high molecular weight aliphatic polyester copolymer of the group I of the present invention has a weight average molecular weight of 40, 000 or more, usually in the range of 100, 000 to 250, 000. It has a high melting point of usually 80°C or more and the difference between its melting point and decomposition temperature is as great as 100°C or more, so that it is easily thermoformed.

In the aliphatic polyester copolymers of the group I of the present invention, in particular, those represented by general formula (1) described above, in which $R^1$ and $R^2$ are $(CH_2)_2$ or $(CH_2)_4$, and $R_3$ is $(CH_2)_5$, have high melting points and high crystallinities.

To the aliphatic polyester copolymer of the group I of the present invention, other biodegradable resins (b) and additives for resin (d) may be optionally added. These will be described in detail in the description on the group VII described later on.

The high molecular weight aliphatic polyester copolymers of the group I of the present invention or biodegradable resin compositions containing them can be molded to obtain various kinds of moldings.

Moldings include primary molding of the copolymers into preforms such as pellets, plates, and parisons, or secondary molding of the preforms into sheets, films, tapes (including monoaxially or biaxially stretched products, with stretching improving the transparency and mechanical properties), thin-wall vessels, thick-wall vessels, or fibers (including stretched products, with stretching improving the transparency and mechanical properties). Furthermore, films can be processed into bags for commodity products, in particular degradable trash bags, disposable water-draining bags, plastic bags provided by supermarkets, etc., shrink films (which may be directly formed into films), perforated films, agricultural mulch (weed controlling) films, vegetation films, mat films, root-covering films, drainage sheets, cultivation sheets, etc.; laminate sheets can be processed into cards, cushioning sheets having cells ("Puchi-Puchi" sheet), crimpled cushioning materials, etc.; fibers can be processed into threads, ropes, disposable fabrics, fishing threads, nets, fishing nets, cheese cloth, nonwoven fabrics, etc.; nonwoven fabrics can be processed into disposable diapers, feminine hygiene products, towels, oil absorbing materials, filters, etc.; tapes can be processed into packaging tapes, nets, bands, etc.; nets can be processed into those for reinforcement for civil engineering, those for gardening, those for medical goods such as napkins, gauze substitutes; thin-wall vessels can be processed into trays, blister packs, etc.; thick-wall vessels can be processed into bottles, gardening vessels, etc. Also, the copolymers can be processed into daily necessaries such as hoses, pipes, etc. as well as industrial materials; cushioning materials, agricultural materials, etc. in the form of foamed bodies; coatings for granular fertilizers, agricultural chemicals, etc. or microcapsules for medicines, agricultural chemicals in order to impart controlled release or delayed action properties thereto; industrial materials such as drainage materials, retaining walls, frame works, and plant protecting materials as well as vessels (for beverages, foods, mechanical or electrical products, agricultural products, medicines, or seedling pots) as usual moldings; household goods such as eating utensils, knives, forks, spoons, trays, wallpapers, facial tissue, wrapping cords, pillows, and expanded beads for cushioning; medical goods such as fixing materials for fracture and protective films for rips; office goods such as cylinder parts of pens, files, tack sheets, and protective films for CDs, and the like; information media materials such as cards; bodies of outdoor goods, sporting goods such as golf tees, and climbing ropes, leisure goods, etc. The resin compositions can be processed into adhesives, coating compositions,

etc.

The high molecular weight aliphatic polyester copolymer of the group I of the present invention or the biodegradable resin composition containing it can be blended with resins or resin compositions having an MFR of 1.0 or less at 190°C and 2,160 gf to improve the flowability thereof.

As the above-mentioned molding methods, extrusion molding, injection molding, blow molding, calender molding, compression molding, transfer molding, thermoforming, flow molding, extrusion foaming molding, extrusion coating, lamination molding, or the like can be used.

In the case of films and sheets, T-die molding, inflation molding, and calender molding are usually used. Any one of non-stretching, monoaxial stretching and biaxial stretching may be used.

Hereinafter, a preferred example of forming a film from a biodegradable resin composition containing the high molecular weight aliphatic polyester copolymer of the group I of the present invention, in particular by an inflation method, will be described.

The blending ratio of the aliphatic acid amide as a lubricant is preferably in the range of 0.2 to 5 parts by weight, more preferably 0.3 to 1.5 parts by weight, based on 100 parts by weight of the resin. If the aliphatic acid amide is in an amount of less than 0.2 part by weight, the effect of preventing the blocking inside the tube of an inflation film or the blocking between the film and nip rolls or guide rolls is slightly decreased. On the other hand, if it is in an amount of above 5 parts by weight, the slipperiness of the film tends to become unnecessarily higher, not only causing the problem of destruction of roll winding but also indicating the tendency of decreases in printability, adhesion, etc.

Furthermore, liquid lubricants, finely powdered silica, starch, etc. can be optionally added.

The liquid lubricants are used for the purpose of uniformly mixing finely powdered silica having an extremely small bulk density, etc. as described hereinbelow, with copolymers or compositions fed to an inflation film-forming process usually in the form of pellets or beads, the case where it is desirable that the surfaces of the pellets or beads be kept as wet as possible.

The addition amount of the liquid lubricant having such a purpose for which it is used is within the range of preferably 0.1 to 3 parts by weight, more preferably 0.2 to 0.7 part by weight, based on 100 parts by weight of the resin. If the addition amount exceeds 3 parts by weight, the liquid lubricant adheres onto the inside surface of a tumbler for mixing in large amounts and becomes sticky, so that it may be difficult to perform stable mixing. On the other hand, if it is below 0.1 part by weight, it cannot exhibit a sufficient effect as a wetting agent. This tendency can be seen also for those having an addition amount outside of the preferred range of 0.2 to 0.7 part by weight.

On the other hand, it is preferred that the liquid lubricant as a wetting agent has a melting point not higher than 70°C; more preferably, one which is liquid at room temperature is used. For example, stearates such as butyl stearate, monoglyceride stearate, pentaerythritol tetrastearate, and stearyl stearate as well as a liquid paraffin, a paraffin wax, stearyl alcohol, stearic acid, etc., may be mentioned.

It is to be noted that liquid paraffin, the most preferred among the above-mentioned liquid lubricants, has an oral acute toxicity (rat) $LD_{50}$ of 5 g/kg, which indicates that it is very safe, and thus it has been approved as a food additive under the Food Sanitation Law. Thus, it is a very convenient material in view of prevention of environmental pollution when the film containing it is discarded after use.

As described above, a liquid lubricant is selected as the lubricant. However, when a solid lubricant is to be used, the whole system containing the resin composition must have a melting point not lower than that of the solid lubricant. At low temperatures of not higher than the melting point of the solid lubricant, the system is difficult to use. A liquid paraffin, which is liquid at room temperature, is a preferable lubricant in respect of this point.

The purpose for which finely powdered silica is used is to form an inflation film made of a biodegradable resin composition containing the high molecular weight aliphatic polyester copolymer of the group I of the present invention and to prevent the above-mentioned blocking at the time of inflation film formation. To the finely powdered silica used, silica produced by wet process, silica produced by high temperature hydrolysis of silicon tetrachloride in oxyhydrogen flames, or the like is applied. In particular, one having a particle diameter of 50 nm or less is preferable.

As a method for adding it, one in which it is kneaded while heating with the high molecular weight aliphatic polyester copolymer of the group I of the present invention, a composition containing it or a resin composition containing it, and further containing an aliphatic amide is the most preferable. In this method, a considerably strong shearing force is applied to secondary agglomerated particles to cause them to be separated, exhibiting the effect of preventing the blocking or sticking between films and between a film and each role.

It is to be noted that the addition amount of finely powdered silica within the range of 0.1 to 3 parts by weight based on 100 parts by weight of the resin is most preferable in exhibiting the above-mentioned effect.

For the method of obtaining a blend composition by adding the above-mentioned various additives to the copolymer, various methods conventionally used may be applied and are not particularly limited.

The conditions under which the film is formed are not particularly limited and preferably include the followings: an extrusion temperature of 150 to 170°C, a resin temperature of 160 to 180°C, a die diameter of 200 to 300 mm, a lip gap of 1.5 to 2.5, a spread width of 950 to 1500 mm, a thickness of 15 to 30 μm, a blow ratio of 2.5 to 4.8, and a

drawing speed of 15 to 30 m/min.

Hereinafter, the group II of the present invention will be explained in detail.

The high molecular weight aliphatic polyester copolymer of the group II of the present invention is a high molecular weight aliphatic polyester copolymer with a weight average molecular weight of 40,000 or more having a molecular chain made of the repeating unit (P) represented by the general formula (1) described above, the repeating unit (Q) represented by the general formula (2) described above, and the repeating unit (R) represented by the general formula (19) described above.

Also, the high molecular weight aliphatic polyester copolymer of the group II of the present invention is a high molecular weight aliphatic polyester copolymer which includes 100 parts by weight of a low molecular weight aliphatic polyester copolymer (F) with a weight average molecular weight of 5,000 or more, which is an intermediate for polymerization for the above-mentioned high molecular weight aliphatic polyester, coupled with 0.1 to 5 parts by weight of the bifunctional coupler (E) represented by the general formula (7) described above.

For the component (A), the reaction raw material, which gives rise to the aliphatic dicarboxylic acid residue in (1), those explained in detail with respect to the group I of the present invention may be used as they are under the same conditions.

For the component (B), which gives rise to the aliphatic diol residue in the formula (1), those explained in detail with respect to the group I of the present invention may be used as they are under the same conditions. With respect to the formulae (1) and (4), those explained in detail with respect to the group I of the present invention may be applied as they are under the same conditions.

The component (C-1) which gives rise to the aliphatic hydroxycarboxylic acid residue with 2 to 10 carbon atoms of the divalent aliphatic group chain in the formula (2) includes the hydroxycarboxylic acid or hydroxycarboxylate represented by the general formula (5) described above, lactones which are cyclic monomer esters thereof, or the like.

With respect to the formula (5), those explained in detail with respect to the group I of the present invention may be applied as they are. Also, with respect the lactones represented by the formula (6), those explained in detail with respect to the group I of the present invention may be applied as they are.

In the aliphatic group chain in the formula (19), the component (C-2), which gives rise to the aliphatic hydroxycarboxylic acid residue having 1 carbon atom, includes glycolic acid, L-lactic acid, D-lactic acid, D,L-lactic acid, 2-methyllactic acid, 2-hydroxy-n-butyric acid, 2-hydroxy-2-methylbutyric acid, 2-hydroxy-3-methylbutyric acid, 2-hydroxy-3,3-dimethylbutyric acid, etc.

Examples of the above-mentioned hydroxycarboxylate include methyl ester, ethyl ester, etc. of the above-mentioned hydroxycarboxylic acid. and also acetate etc.

The above-mentioned hydroxycarboxylic acids can be in the form of cyclic dimer esters (lactides) each made of two molecules thereof bonded to each other. For example, glycolide obtained from glycolic acid, L-lactide, D-lactide, etc. obtained from the above-mentioned lactic acid may be mentioned.

The aliphatic polyester copolymer obtained by condensation polymerization reaction of the four components (A), (B), (C-1) and (C-2) described above in the group II of the present invention may be either a random copolymer or a block copolymer. The charging of the above-mentioned monomers may be collective charging (random), or divided charging(block). Alternatively, a lactone and/or a lactide may be polymerized with a polymer of a dicarboxylic acid-diol, or a dicarboxylic acid and a diol may be polymerized with a polylactone and/or a polylactide.

The step of synthesizing an aliphatic polyester copolymer by condensation polymerization reaction of the four components (A), (B), (C-1) and (C-2) described above in the group II of the present invention may be divided into, for example, a first half, an esterification step in which mainly dehydration reaction proceeds and, a second half, a condensation polymerization step in which mainly an interesterification reaction proceeds depending on the kind of raw material used.

With respect to both the first half esterification step in which mainly dehydration reaction proceeds and the second half condensation step in which mainly an interesterification reaction proceeds, the conditions explained in detail with respect to the group I of the present invention may be applied as they are. As for the catalysts and charging molar ratio of raw material components (A) and (B) which may be applied to both the reactions, those explained in detail with respect to the group I of the present invention may be also applied as they are under the same conditions.

In the group II of the present invention, to finally obtain aliphatic polyester copolymers which have practical strengths, the bifunctional coupler (E) represented by the formula (7) described above can be added to the low molecular weight aliphatic polyester copolymer (F) in a molten state to increase the weight average molecular weight thereof to 40,000 or more. JP 4-189822 A and JP 4-189823 A disclose methods in which a low molecular weight aliphatic polyester is synthesized from an aliphatic dicarboxylic acid or a derivative thereof and an aliphatic diol, and a diisocyanate compound is added to the resultant to increase the molecular weight thereof. However, there has been no example of applying such a method to a system including the four components (A), (B), (C-1), and (C-2) as in the group II of the present invention.

In the group II of the present invention, it is preferred that the low molecular weight aliphatic polyester copolymer (F) has a weight average molecular weight of 5,000 or more, preferably 10,000 or more, a sum of the acid number and hydroxyl number thereof between 1.0 and 45, and an acid number of 30 or less.

The sum of the values of the acid number and hydroxyl number in the copolymer (F) is proportional to the concentration of the terminal groups of the copolymer (F); when the weight average molecular weight is 5,000 or more, the sum of the values of the acid number and hydroxyl number is substantially 45 or less. If the sum of the values of the acid number and hydroxyl number is greater than 45, the molecular weight of the copolymer (F) is low. As a result, in some cases a large amount of a coupler may be required when it is attempted to increase the molecular weight to a desired molecular weight by addition of the coupler. When the coupler is used in large amounts, a problem such as gelling tends to occur. In the case where the sum of the values of the acid number and hydroxyl number is 1.0 or less, the copolymer (F) has a high molecular weight and hence the viscosity thereof becomes high in a molten state. In this case, the use amount of the coupler becomes a minimum amount, so that it is difficult to make them react uniformly and a problem such as gelling still tends to occur. Furthermore, if the melting temperature is increased for the purpose of performing a uniform reaction, problems such as thermal decomposition, crosslinking and discoloration of the polymer will occur.

As the bifunctional coupler (E) represented by the formula (7) described above in the group II of the present invention, those explained in detail in the group I of the present invention may be applied as they are under the same conditions.

In the group II of the present invention, the reaction between the coupler (E) and the low molecular weight aliphatic polyester copolymer (F) is performed desirably in a condition where the copolymer (F) is in a uniform molten state or contains a small amount of a solvent under the condition under which stirring can be performed with ease; the reaction can be performed at 270°C or less, preferably 250°C, more preferably 230°C or less. The reaction can be practiced in the same reactor as the condensation polymerization reaction by adding a coupler to the reactor in which an aliphatic polyester before increasing the molecular weight thereof has been produced. Also, the reaction may be practiced by mixing an aliphatic polyester before increasing the molecular weight thereof and a coupler by using a conventional extruder, static mixer, or the like. The amount of the coupler (E) used is desirably 0.1 to 5 parts by weight based on 100 parts by weight of the copolymer (F). If the amount of the coupler (E) is smaller than the above-mentioned range, it is difficult to obtain a final product having a desired molecular weight while if the amount is greater than the above-mentioned range, a problem such as gelling tends to occur.

In the group II of the present invention, the charging ratio of the raw material components (A), (C-1), and (C-2) must be selected so as to meet the following conditional expression (i):

$$0.02 \leq [C\text{-}2]/([A] + [C\text{-}1] + [C\text{-}2]) \leq 0.70 \quad \text{(i)}$$

(wherein [A] represents the mole number of the component (A) used, [C-1] represents the mole number of the component (C-1) used, and [C-2] represents the mole number of the component (C-2) used.)

[C-2]/([A] + [C-1] + [C-2]) in the above-mentioned expression represents the molar fraction (r) of the repeating unit R represented by the formula (19) described above contained in the aliphatic polyester copolymer of the group II of the present invention. If this value is smaller than 0.02, the obtained polymer will have high crystallinity and lack flexibility so that it will be hard. Furthermore, it will have an insufficient biodegradability because of a low degradation rate. On the other hand, if this value is greater than 0.70, the obtained polymer will have a low melting point and an extremely decreased crystallinity, resulting in poor heat resistance, which makes the polymer unsuitable for practical use.

Furthermore, in the group II of the present invention, the charging ratio of the raw material components (A), (C-1), and (C-2) must be selected so as to meet the following conditional expression (ii):

$$0.02 \leq [C\text{-}1]/([A] + [C\text{-}1] + [C\text{-}2]) \leq 0.40 \quad \text{(ii)}$$

(wherein [A] represents the mole number of the component (A) used, [C-1] represents the mole number of the component (C-1) used, and [C-2] represents the mole number of the component (C-2) used.)

[C-1]/([A] + [C-1] + [C-2]) in the above-mentioned expression represents the molar fraction (q) of the repeating unit Q represented by the formula (2) described above contained in the aliphatic polyester copolymer of the group II of the present invention. If this value is smaller than 0.02, the obtained polymer will have high crystallinity and lack flexibility so that it will be hard. Furthermore, it will have an insufficient biodegradability because of a low degradation rate. On the other hand, if this value is greater than 0.40, the obtained polymer will have a low melting point and an extremely decreased crystallinity, resulting in poor heat resistance, which makes the polymer unsuitable for practical use.

The high molecular weight aliphatic polyester copolymer of the group II of the present invention has a weight average molecular weight of 40,000 or more, usually in the range of 100,000 to 250,000. Also, the melting point of it is usually as high as 80°C or more and the difference between the melting point and the decomposition temperature is as great as 100°C or more, so that the copolymer can be easily thermoformed.

Among the high molecular weight aliphatic polyester copolymers of the group II of the present invention, in particular, those represented by the above-mentioned general formula (1) in which $R^1$ and $R^2$ are $(CH_2)_2$ or $(CH_2)_4$, respectively, and $R^3$ is $(CH_2)_5$ have a high melting point and a high crystallinity.

To the high molecular weight aliphatic polyester copolymers of the group II of the present invention may be optionally added other biodegradable resins (b) or additives for resins (d), which will be described in detail with respect to group VII of the present invention described hereinbelow. They may be applied under the same conditions.

Molding the high molecular weight aliphatic polyester copolymers of the group II of the present invention or compositions thereof can give rise to various moldings as explained for the group I of the present invention.

For preferred examples of film formation, in particular one by an inflation method, with the high molecular weight aliphatic polyester copolymers of the group II of the present invention, the conditions as described in detail with respect to the group I of the present invention may be applied similarly.

Hereinafter, the group III of the present invention will be explained in detail.

The high molecular weight aliphatic polyester copolymer of the group III of the present invention is a high molecular weight aliphatic polyester copolymer whose molecular chain is made of a repeating unit (P) represented by the general formula (1):

$$(\text{-CO-}R^1\text{-COO-}R^2\text{-O-})\text{-} \qquad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$(\text{-CO-}R^3\text{-O-}) \qquad (2)$$

(wherein $R^3$ represents a divalent aliphatic group having 1 to 10 carbon atoms), in which at least one of the divalent aliphatic groups represented by $R^1$, $R^2$ and $R^3$ contain a branched divalent aliphatic group in an amount of 0.01 to 50 mol% based on 100 mol% of the sum of the divalent aliphatic groups represented by $R^1$, $R^2$ and $R^3$, or a high molecular weight aliphatic polyester copolymer with an increased molecular weight, including a low molecular weight aliphatic polyester copolymer having a weight average molecular weight of 5,000 or more, which is an intermediate for polymerization of the above-mentioned high molecular weight aliphatic polyester copolymer, and the bifunctional coupler (E) represented by the general formula (7) described above, the low molecular weight aliphatic polyester copolymer having molecules being coupled to each other with the coupler (E) in an amount of 0.1 to 5 parts by weight based on 100 parts by weight of the low molecular weight aliphatic polyester copolymer.

In the high molecular weight aliphatic polyester copolymer of the group III of the present invention, the raw material component (A) which gives rise to the aliphatic dicarboxylic acid residue in the formula (1) described above includes the aliphatic dicarboxylic acids represented by the general formula (3) described above, acid anhydrides thereof, or mono- or diester forms thereof; those explained in detail with respect to the group I of the present invention may be used as they are under the same conditions.

Further, in the aliphatic dicarboxylic acids represented by the general formula (3) described above, acid anhydrides thereof, or mono- or diester forms thereof in the high molecular weight aliphatic polyester copolymer of the group III of the present invention, those in which $R^1$ is a branched divalent aliphatic group include a succinic acid residue, a glutaric acid residue, an adipic acid residue, a pimellic acid residue, a suberic acid residue, an azelaic acid residue, a malonic acid residue, a sevacic acid residue, and the like, substituted with one or more alkyl or alkoxyl groups each having 1 to 4 carbon atoms.

The aliphatic dicarboxylic acids corresponding to the above-mentioned residues include, for example, methyl- or ethyl-substituted succinic acid, methyl- or ethyl-substituted malonic acid, methyl- or ethyl-substituted adipic acid, etc.

For the component (B) that gives rise to the aliphatic diol residue in formula (1), those explained in detail with respect to the group I of the present invention may be applied under the same conditions.

Furthermore, in the aliphatic diol residue in the formula (1) described above in the high molecular weight aliphatic polyester copolymer of the group III of the present invention, those in which $R^2$ is a branched divalent aliphatic group include an ethylene glycol residue, a 1,3-propanediol residue, a 1,3- or 1,4-butanediol residue, a 1,3-, 1,4-, or

1,5-pentanediol residue, etc., substituted with one or more alkyl or alkoxyl groups each having 1 to 4 carbon atoms.

The aliphatic diols corresponding to the above-mentioned residues include, for example, propylene glycol, polypropylene glycols such as dipropylene glycol, 1,3-butanediol, 2-methylpropanediol, 2-ethylpropanediol, neopentyl glycol, 1,3-pentanediol, etc.

In the high molecular weight aliphatic polyester copolymer of the group III of the present invention, the component (C) which gives rise to the aliphatic hydroxycarboxylic acid residue in the formula (2) described above includes the hydroxycarboxylic acid represented by the general formula (5) described above, esters thereof, or lactones represented by the general formula (6); those explained in detail with respect to the group I of the present invention may be applied as they are under the same conditions.

In the general formulae (5) or (6) in the high molecular weight aliphatic polyester copolymer of the group III of the present invention, those in which $R^3$ is a branched divalent aliphatic group include a glycolic acid residue, a hydroxypropionic acid residue, a hydroxybutyric acid residue, a hydroxyvaleric acid residue, a hydroxycaproaic acid residue, and the like, substituted with one or more alkyl or alkoxyl groups each having 1 to 4 carbon atoms.

Examples of the branched aliphatic dicarboxylic acid include D-, L- or D,L-lactic acid, dimethyllactic acid, hydroxypivalic acid, etc.

The branched lactones include 4-methylcaprolactone, 3,5,5-trimethylcaprolactone, 3,3,5-trimethylcaprolactone, L-lactide, D-lactide, D,L-lactide, etc.

In the high molecular weight aliphatic polyester copolymer of the group III of the present invention, at least one of the divalent aliphatic group represented by $R^1$, $R^2$ and $R^3$ described above contains a branched divalent aliphatic group in an amount of 0.01 to 50 mol%, preferably 0.5 to 30 mol% based on 100 mol% of the divalent aliphatic groups $R^1$, $R^2$ and $R^3$ in total.

One or more branched divalent aliphatic groups may be present in any one of $R^1$, $R^2$ and $R^3$ or one or more of them may be present in each of plural groups, for example, $R^1$ and $R^2$, $R^1$ and $R^3$, $R^2$ and $R^3$, or $R^1$, $R^2$, and $R^3$.

If theabove-mentionedratioof the branched divalent aliphatic group is below 0.01 mol%, an effect of the side chains is so small as to be on the same level as that of the performance of one having no side chain. On the other hand, if the above-mentioned ratio exceeds 50 mol%, the obtained copolymer has a significantly reduced crystallinity, so that it is no longer suitable for use as a resin for molding.

In the group III of the present invention, the aliphatic polyester copolymer obtained by condensation polymerization reaction of the three components (A), (B) and (C) described above may be either a random copolymer or a block copolymer. The charging of the above-mentioned monomers may be collective charging (random) or divided charging (block). Alternatively, a lactone may be polymerized with a dicarboxylic acid-diol polymer, or a dicarboxylic acid and a diol may be polymerized with a polylactone.

For the step (a) in which there is synthesized a high molecular weight aliphatic polyester copolymer by condensation polymerization reaction of the three components (A), (B) and (C) described above in the group III of the present invention, there may be applied one which has been explained in detail with respect to the group I of the present invention as it is under the same conditions. Also for the catalyst, one which has been explained in detail with respect to the group I of the present invention may be applied as it is under the same conditions.

In the group III of the present invention, in the step (a) where a low molecular weight polyester copolymer (D) is synthesized, the charging ratio of the raw material components (A) and (B) must be selected so as to meet the following conditional expression (8) :

$$1.0 \leq [B]/[A] \leq 2.0 \qquad (8)$$

(wherein [A] represents the mole number of the component (A), and [B] represents the mole number of the component (B).)

If the value of [B]/[A] is smaller than 1, the hydrolysis reaction proceeds due to the presence of excess acid, making it difficult to obtain an aliphatic polyester copolymer (D) having a desired molecular weight. On the other hand, if the value of [B]/[A] is greater than 2, the molecular weight reached at the time of completion of the first half esterification step will be extremely low, so that a long reaction time becomes necessary in the second half condensation polymerization step.

In the group III of the present invention, it is desired that the charging ratio of the raw material components (A) and (C) be selected so as to meet the following conditional expression (16) :

$$0.02 \leq [C]/([A] + [C]) \leq 0.40 \qquad (16)$$

(wherein [A] represents the mole number of the component (A) used, and [C] represents the mole number of the

component (C) used.)

[C]/([A] + [C]) in the above-mentioned expression represents the molar fraction (q) of the repeating unit Q represented by the formula (2) described above contained in the aliphatic polyester copolymer of the group III of the present invention. If this value is smaller than 0.02, the obtained polymer will have high crystallinity and lack flexibility so that it will be hard. Furthermore, it will have an insufficient biodegradability because of a low degradation rate. On the other hand, if this value is greater than 0.40, the obtained polymer will have a low melting point and an extremely decreased crystallinity, resulting in poor heat resistance, which makes the polymer unsuitable for practical use.

In the group III of the present invention, to finally obtain an aliphatic polyester copolymer having a practical strength, the bifunctional coupler (E) represented by the formula (7) described above may be added to the low molecular weight aliphatic polyester copolymer (D) in a molten state to increase the weight average molecular weight of the polymer to 40,000 or more.

It is desirable that the low molecular weight aliphatic polyester copolymer (D) obtained in the polymerization step (a) has a weight average molecular weight of 5,000 or more, preferably 10,000 or more, the sum of the values of a acid number and hydroxyl number thereof being between 1.0 and 45, and an acid number thereof being 30 or less.

As the sum of the values of the acid number and hydroxyl number of the copolymer (D) may be applied the same conditions as those explained in detail with respect to the group I of the present invention.

As the coupler (E) used in the group III of the present invention may be applied one which is represented by the formula (7) described above and which has been described in detail with respect to the group I of the present invention as it is under the same conditions.

For the reaction between the coupler (E) and the copolymer (D), one which has been explained for the group I of the present invention may be applied as it is under the same conditions.

The high molecular weight aliphatic polyester copolymer of the group III of the present invention has a weight average molecular weight of 40,000 or more and 700,000 or less, with the weight in the range of 100,000 to 400,000 being usually used. The melting point of it is usually as high as 80°C or more and the difference between its melting point and decomposition temperature is as great as 100°C or more, so that the copolymer can be easily thermoformed.

In the high molecular weight aliphatic polyester copolymers of the group III of the present invention, in particular those represented by the general formula (1) described above in which $R^1$ and $R^2$ are $(CH_2)_2$ or $(CH_2)_4$, respectively, and $R^3$ is $(CH_2)_5$ have a high melting point and a high crystallinity.

To the high molecular weight aliphatic polyester copolymers of the group III of the present invention, there may be optionally added other biodegradable resins (b) or resin additives (d), which will be described in detail with respect to group VII of the present invention described hereinbelow. They may be applied under the same conditions.

Hereinafter, the group IV of the present invention will be described in detail.

The biodegradable aliphatic polyester copolymer of the group IV of the present invention is a biodegradable aliphatic polyester copolymer whose molecular chain is made of a repeating unit (P) represented by the general formula (1):

$$(-CO-R^1-COO-R^2-O-)_p \quad (1)$$

(wherein $R^1$ represents a divalent aliphatic group having 1 to 12 carbon atoms, and $R^2$ represents a divalent aliphatic group having 2 to 12 carbon atoms, and p represents the molar fraction of the unit in the molecular chain),
a repeating unit (Q) represented by the general formula (2):

$$(-CO-R^3-O-)_q \quad (2)$$

(wherein $R^3$ represents a divalent aliphatic group having 1 to 10 carbon atoms and "q" represents the molar fraction of the unit in the molecular chain), and
a repeating unit (R) represented by the general formula (1'):

$$(-CO-R^4-COO-R^5-O-)_r \quad (1')$$

(wherein $R^4$ represents a divalent aliphatic group having 1 to 20 carbon atoms, $R^5$ represents a divalent aliphatic group having 2 to 20 carbon atoms containing at least one ether bond or alicyclic skeleton in the main chain thereof, and "r" represents a molar fraction of the unit in the molecular chain), in which the sum of "p", "q" and "r" is 1, the value of "q" is in the range of 0.02 to 0.30, and the value of "r" is in the range of 0.001 to 0.40; or a biodegradable aliphatic polyester

copolymer with an increased molecular weight, including a low molecular weight aliphatic polyester copolymer having a weight average molecular weight of 5,000 or more, which is an intermediate for polymerization in the above-mentioned biodegradable aliphatic polyester copolymer, and a bifunctional coupler (E) represented by the general formula (7):

$$X^1\text{-}R^6\text{-}X^2 \qquad (7)$$

(wherein $X^1$ and $X^2$ are each a reactive group capable of forming a covalent bond by reaction with a hydroxyl group or a carboxyl group, $R^6$ is a single bond, or an aliphatic group having 1 to 20 carbon atoms or an aromatic group, provided that $X^1$ and $X^2$ may be the same or different in chemical structure), the low molecular weight aliphatic polyester copolymer having molecules being coupled to each other with the coupler (E) in an amount of 0.1 to 5 parts by weight per 100 parts by weight of the low molecular weight aliphatic polyester copolymer.

The biodegradable aliphatic polyester copolymer of the group IV of the present invention has a weight average molecular weight of 30,000 or more, usually in the range of 100,000 to 350,000, preferably in the range of 160,000 to 250,000.

In the biodegradable aliphatic polyester copolymer of the group IV of the present invention, the component (A) that gives rise to the aliphatic dicarboxylic acid residue in the formula (1) includes the aliphatic dicarboxylic acids represented by the general formula (3) described above, acid anhydrides thereof, or mono- or diester forms thereof; those explained in detail with respect to the group I of the present invention may be applied as they are under the same conditions.

In the biodegradable aliphatic polyester copolymer of the group IV of the present invention, as the component (B) that gives rise to the aliphatic diol residue in the formula (1), aliphatic diols may be mentioned and those explained in detail with respect to the group I of the present invention may be applied as they are under the same conditions.

As the component (A') that gives rise to the aliphatic dicarboxylic acid residue in the formula (1'), the same aliphatic dicarboxylic acid as the above-mentioned component (A) that gives rise to the aliphatic dicarboxylic acid residue in the formula (1) may be used similarly. The component (A') and the component (A) may be the same (in which case $R^4$ in the formula (1') = $R^1$) or different.

In the case where the component (A') that gives rise to the aliphatic dicarboxylic acid residue in the formula (1') is different from the component (A) [$R^4$ in the formula (1') $\neq$ $R^1$], the aliphatic dicarboxylic acid, acid anhydride thereof and mono- or diester form thereof used for the component (A') are represented by the above-mentioned formula (3').

In the formula (1') and the formula (3'), $R^4$ represents a divalent aliphatic group having 1 to 20 carbon atoms, which may be one that contains an alicyclic skeleton, such as cyclohexanedicarboxylic acid.

$R^9$ and $R^{10}$ in the formula (3') represent the same hydrogen atom as $R^7$ and $R^8$ in the formula (3), or an aliphatic residue having 1 to 6 carbon atoms or an aromatic residue. $R^9$ and $R^{10}$ may be the same or different.

The component (C) that gives rise to the aliphatic diol residue in the formula (1') includes a divalent aliphatic diol having 2 to 20 carbon atoms containing at least one ether bond or an alicyclic skeleton in the main chain thereof, which is represented by the above-mentioned general formula (4').

The dihydric aliphatic diols containing an ether linkage include: residues of polyethylene glycols having the molecular weight of 1000 or lower, represented by the following formula, $-CH_2CH_2\text{-}(O\text{-}CH_2CH_2)_n\text{-}$, such as diethylene glycol, triethylene glycol, tetraethylene glycol and pentaethylene glycol; residues of polypropylene glycols having the molecular weight of 1000 or lower represented by the following formula, $-CH_2CH(CH_3)\text{-}[O\text{-}CH_2CH(CH_3)]_n\text{-}$, such as dipropylene glycol and tripropylene glycol; and the like.

The divalent aliphatic diol having 2 to 20 carbon atoms containing an alicyclic skeleton in the main chain thereof includes cyclohexanedimethanol, 1,4-cyclohexanediol, and the like.

These may be used singly or two or more of them may be used in combination.

The component (D) that gives rise to the aliphatic hydroxycarboxylic acid residue in the formula (2) includes hydroxycarboxylic acids or esters thereof, or lactones thereof.

The hydroxycarboxylic acids and esters thereof are represented by the above-mentioned general formula (5).

In the formula (5), $R^3$ represents a divalent aliphatic group. The divalent aliphatic group includes an acyclic or cyclic alkylene group having 2 to 10, preferably 2 to 8, carbon atoms. Also, $R^3$ may have a substituent inert to the reaction, for example, an alkoxy group, a keto group, or the like. $R^3$ may contain a heteroatom such as oxygen and sulfur in the main chain thereof; for example, it may also contain a structure separated by an ether bond, a thioether bond, or the like.

In the formula (5), $R^{11}$ is hydrogen, an aliphatic group or an aromatic group. The aliphatic group includes a straight chain or branched chain lower alkyl group having 1 to 6, preferably 1 to 4 carbon atoms, a cycloalkyl group having 5 to 12 carbon atoms, such as a cyclohexyl group. The aromatic group includes a phenyl group, a benzyl group,

and the like.

As the hydroxycarboxylic acid, those described in detail for the group I of the present invention may be applied as they are under the same conditions.

As the lactones, those described in detail for the group I of the present invention may be applied as they are under the same conditions.

One of the biodegradable aliphatic polyester copolymers of the group IV of the present invention is a biodegradable aliphatic polyester copolymer whose molecular chain is made of the repeating unit (P) represented by the formula (1) described above, the repeating unit (Q) represented by the formula (2) described above, and the repeating unit (R) represented by the formula (1') described above, in which the sum of "p", "q" and "r" is 1 and the value of "q" is in the range of 0.02 to 0.30, and the value of "r" is in the range of 0.001 to 0.40. As for the method of producing it, a biodegradable aliphatic polyester copolymer (F) is synthesized by condensation polymerization reaction of the above-mentioned four components: (A) and (A') (provided that (A) and (A') may be the same or different), (B), (C), and (D).

The condensation polymerization reaction may be performed by a collective charging (random) or divided charging (block) of the above-mentioned four components: (A) and (A'), (B), (C), and (D). Alternatively, the biodegradable aliphatic polyester copolymer (F) may also be one which is obtained by polymerizing the component (D) with a polymer formed by the condensation of the component (A) with the components (B) and (C), by polymerizing the component (D) with a mixture of a polymer formed by the condensation of the component (A) with the component (B) and a polymer formed by the condensation of the component (A') with the component (C), or by condensation-copolymerizing the components (A), (B) and (C) with a polymer of the component (D).

In the group IV of the present invention, the step (a) of synthesizing the biodegradable aliphatic polyester copolymer (F) by the condensation polymerization of the above-mentioned four components: (A) and (A') (provided that (A) and (A') may be the same or different), (B), (C), and (D) may be divided, for example, into a firsthalf, an esterification step in which mainly a dehydration reaction proceeds and a latter half, a condensation polymerization step in which mainly an interesterification reaction proceeds, depending on the kinds of raw materials used. To this, the conditions described in detail with respect to the group I of the present invention may be applied as they are . The same is true for the catalyst to be used.

In the step (a) for synthesizing the biodegradable aliphatic polyester copolymer (F) of the group IV of the present invention, the charging ratio of the raw material components (A) and (A') (provided that (A) and (A') may be the same or different), (B), and (C), is desirably selected so as to meet the following conditional expression:

$$1.0 \leq [(B) + (C)]/[(A) + (A')]) \leq 1.1$$

(wherein [A] and [A'], [B], and [C] represent each the mole number of the components (A) and (A'), (B), and (C), respectively).

If the value of [(B) +(C)]/[(A) + (A')] is smaller than 1, a hydrolysis reaction proceeds due to the presence of excess acid, making it difficult to obtain the aliphatic polyester copolymer (F) having a desired molecular weight. On the other hand, the value of [(B) + (C) ] / [ (A) + (A')] greater than 1.1 is not preferable, since the molecular weight becomes 30,000 or less.

In the group IV of the present invention, the charging ratio of the raw material components (A) and (A'), and of the component (D) must be selected so as to meet the following conditional expression.

$$0.02 \leq [(D)]/[(A) + (A') + (D)]) \leq 0.30$$

(wherein [A], [A'], and [D] represent each the mole number of the components (A) and (A'), and the component (C), respectively).

In the above-mentioned expression, [D]/[(A) + (A') + (D)] represents the molar fraction (q) of the repeating unit Q represented by the above-mentioned formula (2) contained in the aliphatic polyester copolymer of the group IV of the present invention. If this value is smaller than 0.02, the obtained polymer is one that has high crystallinity, that lacks flexibility and that is hard. Further, it is insufficient in respect of biodegradability since its biodegradation rate is low. On the other hand, if the value is greater than 0.30, the obtained polymer has a low melting point and an extremely decreased crystallinity, so that the polymer lacks heat resistance and thus is unsuitable for practical use.

The biodegradable aliphatic polyester copolymer of the group IV of the present invention has a weight average molecular weight of 30,000 or more, usually in the range of 100,000 to 350,000, preferably in the range of 160,000 to 250,000. Further, its melting point is usually as high as 80°C or more and in addition, the difference between its melting point and decomposition temperature is as great as 100°C or more, so that its thermoforming is easy.

In the biodegradable aliphatic polyester copolymers of the group IV of the present invention, in particular,

those in which $R^1$ and $R^2$ in the above-mentioned general formula (1) are each $(CH_2)_2$ or $(CH_2)_4$, $R^3$ in the above-mentioned general formula (2) is $(CH_2)_5$, and $R^5$ in the above-mentioned general formula (1') is $CH_2CH_2$-O-$CH_2CH_2$, have high melting points and high crystallinities.

Another biodegradable aliphatic polyester copolymer of the group IV of the present invention is a biodegradable aliphatic polyester copolymer (G) which includes a low molecular weight aliphatic polyester copolymer having a weight average molecular weight of 5,000 or more, which is a polymerization intermediate (F') obtained in the production step (a) of the above-mentioned biodegradable aliphatic polyester copolymer (F), and the bifunctional coupler (E) represented by the general formula (7) described above, the low molecular weight aliphatic polyester copolymer having molecules being coupled to each other with the coupler (E) in an amount of 0.1 to 5 parts by weight based on 100 parts by weight of the low molecular weight aliphatic polyester copolymer. The method of producing it is as described below.

The method of synthesizing the biodegradable aliphatic polyester copolymer (G) made of the low molecular weight aliphatic polyester copolymer (F') in which molecules thereof are coupled with the component (E) includes the steps of (a') first synthesizing a low molecular weight aliphatic polyester copolymer (F') by condensation polymerization reaction of the above-mentioned four components: (A) and (A') (provided that (A) and (A') may be the same or different), (B), (C), and (D), and (b) adding the bifunctional coupler (E) represented by the above-mentioned general formula (7) to the low molecular weight aliphatic polyester copolymer (F') in a molten state to increase the weight average molecular weight thereof to 30,000 or more, usually to one in the range of 100,000 to 350,000, preferably to one in the range of 160,000 to 250,000.

The step (a') of synthesizing the low molecular weight aliphatic polyester copolymer (F') by condensation polymerization reaction of the four components: (A) and (A') (provided that (A) and (A') may be the same or different), (B), (C), and (D) may be performed in the same manner as the step (a) of synthesizing the above-mentioned biodegradable aliphatic polyester copolymer (F). In this case, the charging ratio of the raw materials is different from those for the above-mentioned biodegradable aliphatic polyester copolymer (F) and is desirably selected so as to meet the following conditions.

$$1.0 \leq [(B) +(C)]/[(A) + (A')]) \leq 2.0$$

In the case where the value of [(B) + (C)]/[(A) + (A')] in the expression described above is greater than 2.0, the molecular weight becomes 5,000 or less, which is undesirable.

It is desirable that the low molecular weight aliphatic polyester copolymer (F') obtained in the polymerization step (a') has a weight average molecular weight of 5,000 or more, preferably 10,000 or more, the sum of the values of the acid number and hydroxyl number being between 1.0 and 45, and an acid number being 30 or less.

The sum of the values of the acid number and hydroxyl number of the copolymer (F') is proportional to the concentration of the terminal groups of the copolymer (F'). In the case where the molecular weight as weight average molecular weight is 5,000 or more, the sum of the values of the acid number and hydroxyl number is substantially 45 or less. If the sum of the values of the acid number and hydroxyl number is greater than 45, the molecular weight of the copolymer (F') is low, so that a large amount of coupler is required for increasing the molecular weight to a desired molecular weight by addition of the coupler. In the case where the amount of the coupler used is large, a problem such as gelling tends to occur. In the case where the sum of the values of the acid number and hydroxyl number is 1.0 or less, the viscosity of the copolymer (F') in a molten state becomes higher because of a higher molecular weight. In this case, the amount of the coupler used also becomes a minimum amount, so that it is difficult to perform the reaction uniformly and a problem such as gelling still tends to occur. On the other hand, if the melting temperature is increased for the purpose of performing the reaction uniformly, problems such as thermal decomposition, crosslinking, and discoloration occur.

It is to be noted that according to JP 4-189822 A and JP 4-189823 A, methods which include synthesizing a low molecular weight aliphatic polyester from an aliphatic dicarboxylic acid or its derivative and an aliphatic diol and adding a diisocyanate compound thereto to increase the molecular weight are disclosed. However, no example is found therein in which the methods are applied to a system containing four components: an aliphatic dicarboxylic acids, acid anhydrides or ester forms thereof (A) and (A'), aliphatic diols (B) and (C), and a hydroxycarboxylic acid, hydroxycarboxylate or lactone (D), as in the group IV of the present invention.

The coupler (E) used in the group IV of the present invention is represented by the above-mentioned formula (7), and those described in detail with respect to the group I of the present invention may be applied as they are under the same conditions.

In the group IV of the present invention, the charging ratio of the raw material components (A), (A') (provided that (A) and (A') may be the same or different) and (D) must be selected so as to meet the following conditional expression:

$$0.02 \le [D]/[(A) + (A') + (D)] \le 0.30 \qquad (8)$$

In the case where the [D]/[(A) + (A') + (D)]) in the above-mentioned expression is greater than 0.30, the polymer obtained has a low melting point and lacks heat resistance due to an extreme decrease in crystallinity, and hence is unsuitable for practical use.

The biodegradable aliphatic polyester copolymer (G) of the group IV of the present invention has a weight average molecular weight of 30,000 or more, usually in the range of 100,000 to 350,000, preferably in the range of 60,000 to 250,000. Also, the melting point of it is usually as high as 80°C or more and the difference between the melting point and the decomposition temperature is as great as 100°C or more, so that the copolymer can be easily thermoformed.

In the biodegradable aliphatic polyester copolymers (G) of the group VI of the present invention, in particular those represented by the general formula (1) in which $R^1$ and $R^2$ are $(CH_2)_2$ or $(CH_2)_4$, respectively, $R^3$ in the general formula (2) is $(CH_2)_5$ and $R^5$ in the general formula (1') described above is $CH_2CH_2$-O-$CH_2CH_2$ have a high melting point and a high crystallinity.

To the biodegradable aliphatic polyester copolymers of the group IV of the present invention, there may be optionally added other biodegradable resins (b) or resin additives (d), and those described in detail with respect to group VII of the present invention described hereinbelow may be applied as they are under the same conditions.

Molding the biodegradable resin composition of the group IV of the present invention can give rise to various moldings as explained in detail for group I of the present invention.

For suitable examples of film formation, in particular, those by an inflation method, the same conditions as those described in detail in the group I of the present invention may be applied as they are.

Hereinafter, the group V of the present invention will be described in detail.

The aliphatic polyester of the group V of the present invention satisfies the relationship expressed by the following mathematical expressions (i) to (iii) in measurement of elongation viscosity at a temperature of 150°C and a strain rate in the range of 0.15 to 0.20 $sec^{-1}$:

$$\alpha = \Delta \ln\lambda_n/\Delta\varepsilon = (\ln\lambda_{n2} - \ln\lambda_{n1})/(\varepsilon_2 - \varepsilon_1) \ge 0.15 \qquad (i)$$

$$\lambda_n = \lambda/\lambda_1 \qquad (ii)$$

$$\varepsilon = \ln(l/l_0) \qquad (iii)$$

(wherein $\alpha$ is a parameter that indicates the degree of strain hardenability, $\lambda_n$ is a nonlinear parameter, $\lambda$ is the elongation viscosity in the nonlinear region, $\lambda_1$ is the elongation viscosity in the linear region, $\varepsilon$ is amount of elongation strain according to Hencky, $l_0$ and l are lengths of a sample at elongation times "0" and "t", respectively. The suffix numbers, 2 and 1, in $\lambda_{n2}$, $\lambda_{n1}$, $\varepsilon_2$, and $\varepsilon_1$ indicates values at elongation times $t_2$ and $t_1$, respectively. It is to be noted that the linear region refers to a region where elongation viscosity is independent of various strain rates but that shows the same time dependence while the nonlinear region refers to a region where elongation viscosity increases with elongation time, departing from the linear region [cf., Koyama, K. and Ishizuka, O., Journal of the Society of Rheology, Japan, 13, 93 (1985)]).

When elongation viscosity is measured, there are some resins that showa property in which the elongation viscosity in a high strain region comes out of the linear region and increases abruptly (that is, strain hardenability) depending on the kind of the resin. It is known that in such resins, logarithm of $\lambda_n$ ($1n\lambda_n$) linearly increases with respect to the amount of elongation strain $\varepsilon$ according to Hencky (Koyama, K. and Ishizuka, O., Journal of Society of Textle, Japan, 37, T-258 (1981))

In the case of resins having no strain hardenability, $\lambda_n$ is $\lambda$ for any amount of elongation strain and the inclination $\alpha$ (=$\Delta\ln\lambda_n/\Delta\varepsilon$) of the straight line is "0", which is obtained by plotting the logarithm of $\lambda_n$ ($\ln\lambda_n$) vs. elongation strain $\varepsilon$ according to Hencky.

Thus, in the case of resins having strain hardenability, the inclination $\alpha$ of the above-mentioned linear plot, in particular in a high strain region, is not 0.

In the group V of the present invention, the inclination $\alpha$ of the straight line obtained by plotting the logarithm of the nonlinear parameter $\lambda_n$ ($\ln\lambda_n$) vs. elongation strain $\varepsilon$ is defined as a parameter indicating the degree of strain hardenability. That is, strain hardenability refers to strain amount dependence of elongation viscosity, which is a property

in which the greater the elongation, the harder the resin concerned. Therefore, if the strain hardenability is high, a portion that has been elongated at the time of blow molding has a higher viscosity so that it is not elongated too much while a portion where no elongation has occurred has a low viscosity so that it is elongated. As a result, a uniform thickness can be obtained.

As such, $\alpha$, which indicates the degree of stain hardenability, is usable as an index that indicates the flowability and moldability (stretchability, low nonuniformity in thickness) of a resin. In the case where the inclination, $\alpha$, of the straight line is 0.15 more in the measurement of the aliphatic polyester of the present invention for elongation viscosity at a temperature of 150°C and strain rate in the range of 0.15 to 0.20 $sec^{-1}$, the resin exhibits high flowability and moldability. The inclination, a (= $\Delta \ln \lambda_n / \Delta \varepsilon$), is on the order of preferably 0.2 to 2, more preferably 0.3 to 1.5, and in particular 0.35 to 1.0. If the above-mentioned inclination of the straight line is less than 0.15, the flowability and moldability of the resin are decreased.

The aliphatic polyester of the group V of the present invention contains (0.3 to 50) $\times 10^{-6}$ mol/g of branching points in the polymer chain in order to give a strain hardenability in the above-mentioned range thereto. The structure of the branching point may be one that is formed by use of a tribasic or more polybasic carboxylic acid or its ester form, or a trihydric or more polyhydric alcohol, or a polyhydroxycarboxylic acid having a plurality of OH groups or COOH groups, or its ester form, or lactone, which is a corresponding cyclic ester. Alternatively, it may be one formed by designing it such that a reaction that forms a branching structure occurs to a suitable extent during the polymerization reaction, by selecting the kind of the catalyst and the reaction conditions.

The structure and concentration of the branching points thus formed can be precisely determined by NMR. When the number of branching points is in the range of (0.3 to 50) $\times 10^{-6}$ mol/g, preferably in the range of (1.0 to 20) $\times 10^{-6}$ mol/g, the aliphatic polyester exhibits good moldability and the obtained moldings have excellent mechanical characteristics. If the number of branching points is smaller than 0.3 $\times 10^{-6}$ mol/g, the aliphatic polyester shows a flowability behavior which is substantially the same as that of the ordinary aliphatic polyester and hence has a poor moldability, and the nonuniformity in thickness comes to be seen to a nonnegligible extent in the molded products. On the other hand, in the case where the number of branching points is greater than 50 $\times 10^{-6}$ mol/g, although the inflation moldability, expansion moldability and the like are good, the mechanical characteristics of the molded products comes to be deteriorated. In particular, in moldings such as films and sheets, the elongation is greatly decreased while the modulus of elasticity is increased, so that the moldings become brittle and tend be broken.

To provide branching points, trifunctional or more polyfunctional compounds may be optionally reacted at the time of synthesizing a linear aliphatic polyester. The polyfunctional compounds include trifunctional or more polyols, polycarboxylic acids, polyhydroxycarboxylic acids, or ester forms or lactone forms thereof.

Specific examples of the above-mentioned polycarboxylic acid include aliphatic polycarboxylic acids, such as butanetetracarboxylic acid.

Specific examples of the above-mentioned polyalcohol include aliphatic polyols, such as glycerol, trimethylolethane, trimethylolpropane, and pentaerythritol.

Specific examples of the above-mentioned polyhydroxycarboxylic acid, ester forms or lactone forms thereof include aliphatic hydroxycarboxylic acids such as dimethylolpropionic acid and dimethylolbutanoic acid; compounds having a structural unit derived from ester-forming derivatives thereof; cyclic esters thereof, cyclic dimeric esters thereof, and the like.

The weight average molecular weight, Mw, in the aliphatic polyester of the group V of the present invention is (0.4 to 7) $\times 10^5$, preferably (0.7 to 3) $\times 10^5$. If Mw is 0.4 $\times 10^5$ or less, the flowability is increased while the strength of moldings becomes too small. On the other hand, if Mw becomes 7 $\times 10^5$ or more, the viscosity at the time of melting becomes too high and the moldability is deteriorated to a great extent.

The aliphatic dicarboxylic acids, acid anhydrides or ester forms thereof used in the group V of the present invention include those represented by the general formula (3) described above and those described in detail for the group I of the present invention may be applied as they are under the same conditions. Further, the aliphatic diols include those represented by the general formula (4) described above and those described in detail for the group I of the present invention may be applied as they are under the same conditions. The same is true for the hydroxycarboxylic acids, hydroxycarboxylic acid esters, and lactones.

The aliphatic polyester copolymer obtained by performing a condensation polymerization reaction of the three components (A), (B), and (C) described above in the group V of the present invention may be a random or block. The charging of the above-mentioned monomers may be collective charging (random), or divided charging (block). Alternatively, a lactone may be polymerized with a dicarboxylic acid-diol polymer, or a dicarboxylic acid and a diol may be polymerized with polylactone.

In the case where the aliphatic dicarboxylic acid or aliphatic dicarboxylic acid ester (A), the aliphatic diol (B), and the hydroxycarboxylic acid, hydroxycarboxylic acid ester or lactone (C) are subjected to polymerization reaction in the presence of a catalyst, it is preferred that the ratio of the components (A), (B) and (C) are selected so as to meet the following conditional expressions.

$$0.02 \leq C/(A + C) \leq 0.40 \quad (8)$$

$$1.0 \leq B/A \leq 2.0 \quad (9)$$

In these expressions, A indicates a mole number of the component (A) used, B indicates a mole number of the component (B) used, and C indicates a mole number of the component (C) used.

The C/ (A + C) in the above-mentioned expressions represents the molar fraction of the repeating unit derived from the component (C) contained in the copolymer. In the case where the value of C/(A + C) is smaller than 0.02, the obtained polymer becomes one that has a high crystallinity, that lacks flexibility and that is hard and in addition that is still insufficient in respect of biodegradability. On the other hand, if it is greater than 0.40, the obtained polymer has a low melting point and an extremely decreased crystallinity, resulting in poor heat resistance, which makes the polymer unsuitable for practical use.

In the case where the above-mentioned components (A) and (B), and (C) are subjected to polymerization reaction according to the group V of the present invention, the reaction is performed at 80°C to 250°C, preferably 100°C to 240°C, more preferably 145°C to 230°C, for 0.5 to 5 hours, preferably 1 to 4 hours, under nitrogen stream at atmospheric pressure in an initial stage of the reaction, and then the reaction is performed with increasing the reaction temperature while reducing the pressure of the reaction system, and finally the reaction is performed at a reaction temperature of 180° to 270°C, preferably 190°C to 240°C, at a degree of reduced pressure of 3 Torr or less, preferably 1 Torr or less, for 3 to 10 hours.

The aliphatic polyester of the group V of the present invention may be one that is obtained by increasing the molecular weight of a low molecular weight aliphatic polyester with a coupler (E) represented by the general formula (7):

$$X^1\text{-}R^7\text{-}X^2 \quad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure). The coupler (E) is used in an amount of 0.1 to 5 parts by weight based on 100 parts by weight of the low molecular weight aliphatic polyester.

As the coupler (E), those described in detail with respect to the group I of the present invention may be applied as they are under the same conditions.

The molecular weight of the aliphatic polyester of the group V of the present invention in terms of weight average molecular weight is 40,000 or more, and is usually in the range of 100,000 to 700,000. Also, the aliphatic polyester of the group V of the present invention has a melting point that is usually as high as 80°C or more and in addition, the difference between its melting point and decomposition temperature is as great as 100°C or more, so that it is easily thermoformed. Among the aliphatic polyesters of the group V of the present invention, in particular, those in which $R_1$, $R_2$, and $R_3$ in the general formula (1) described above are $(CH_2)_2$, $(CH_2)_4$, and $(CH_2)_5$, respectively, have high melting points and high crystallinities.

In the group V of the present invention, when the aliphatic polyester is synthesized, no catalyst has to be used in the esterification reaction step. However, generally known catalysts for interesterification may be preferably used. In the deglycolation step, it is preferred that a catalyst be used.

As the catalyst used when the aliphatic polyester in the group V of the present invention is to be produced, those described in detail with respect to group I of the present invention may be applied as they are under the same conditions.

In the case of the aliphatic polyester in the group V of the present invention, for the purpose of forming a branched structure in the reaction system in the polymer production thereof, the rate of a branching reaction that occurs besides the linear polymerization reaction can be adjusted by contolling the kind and amount of a phosphorus compound, the reaction temperature, the polymerization time, and the like.

As specific examples of the phosphorus compound that can be used for the introduction of the above-mentioned branched structure, those described in detail for the group I of the present invention may be applied as they are under the same conditions.

To the aliphatic polyester in the group V of the present invention may be optionally added another biodegradable resin (b) and resin additive (d) that will be described in detail with respect to the group VII of the present invention hereinbelow and they may be applied as they are under the same conditions.

Molding the aliphatic polyester in the group V of the present invention can give rise to various moldings described in detail with respect to the group I of the present invention.

A preferred example of forming a film, in particular, by an inflation method, will be described.

In the aliphatic polyester, the ratio of the repeating unit (Q) that is derived from a lactone to the repeating unit (P) that is derived from an aliphatic polyester resin is preferably 70 to 5% by weight of the former to 30 to 95% by weight of the latter (with the sum of both being 100% by weight). In this case, it is particularly preferred that the upper limit of the former be set to 60% by weight or less, and the range of 40 to 10% by weight of the former to 60 to 90% by weight of the latter is suitable.

In this case, if (Q) is above 70% by weight, the mechanical physical properties of the molding, such as a film, at high temperatures show a tendency to be decreased while if it is below 5% by weight, there is the possibility that the disintegrability based on biochemical degradation is decreased. This tendency is the same for the case where (Q) is outside the range of 40 to 10% by weight.

On the other hand, if the amount of (P) is above 95% by weight, the biodegradation tends to proceed slowly. On the contrary, if it is below 30% by weight, the heat resistance of when the aliphatic polyester is processed into, for example, a film, tends to be decreased. This tendency is the same for the case where (P) is outside the range of 60 to 90% by weight.

As conditions for film forming other than those described above, those described in detail with respect to the group I of the present invention may be applied as they are under the same conditions.

Hereinafter, the group VI of the present invention will be described in detail.

The lactone-containing resin (c) of the group VI of the present invention is characterized in that it includes (a) an aliphatic polyester copolymer having a weight average molecular weight of 30,000 or more alone or together with (b) another biodegradable resin and/or (d) an additive for resins added there to and that the aliphatic polyester copolymer (a) alone or together with at least one of the other constituents is subjected to a radiation treatment.

The aliphatic polyester copolymer (a) according to the group VI of the present invention may be one whose molecular chain is made of a repeating unit (P) represented by the general formula (1) :

$$-(-CO-R^1-COO-R^2-O-)- \qquad (1)$$

(wherein $R^1$ represents a divalent aliphatic group having 1 to 12 carbon atoms, and $R^2$ represents a divalent aliphatic group having 2 to 12 carbon atoms), and
a lactone-derived repeating unit (Q) represented by the general formula (2):

$$-(-CO-R^3-O-)- \qquad (2)$$

(wherein $R^3$ represents a divalent aliphatic group having 1 to 10 carbon atoms), or may be a high molecular weight one made of a low molecular weight aliphatic polyester copolymer (D) having a weight average molecular weight of 5,000 or more, which is an intermediate of the copolymer (a) and a bifunctional coupler (E) represented by the general formula (7):

$$X^1-R^7-X^2 \qquad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure) , the low molecular weight aliphatic polyester copolymer having molecules (D) having molecules being coupled to each other with the coupler (E) in an amount of 0.1 to 5 parts by weight based on 100 parts by weight of the copolymer (D).

The weight average molecular weight of the aliphatic polyester copolymer (a) is 30,000 or more, preferably 50,000 or more and in the case where it is a film, 100,000 or so is required.

To the component (A) that gives rise to the aliphatic dicarboxylic acid residue in the formula (1), those explained in detail with respect to the group I of the present invention may be applied as they are under the same conditions.

As the component (B) which gives rise to the aliphatic diol residue in the formula (1), aliphatic diols may be mentioned. As the aliphatic diols, those explained in detail with respect to the group I of the present invention may applied as they are under the same conditions.

The component (C) that gives rise to the aliphatic hydroxycarboxylic acid residue in the formula (2) includes the hydroxycarboxylic acid or hydroxycarboxylic acid ester represented by the general formula (5):

$$R^6OCO\text{-}R^3\text{-}OH \qquad (5)$$

or lactones represented by the general formula(6), and those that are the same as those described in detail with respect to the group I of the present invention may be applied under the same conditions.

The aliphatic polyester copolymer (a) obtained by condensation polymerization reaction of the three components (A), (B), and (C) described above in the group VI of the present invention may be either a random copolymer or a block copolymer. The charging of the monomers may be collective charging (random), or divided charging (block). Alternatively, a lactone may be polymerized with a polymer of a dicarboxylic acid-diol, or a dicarboxylic acid and a diol may be polymerized with a polylactone.

The step (i) of synthesizing the aliphatic polyester copolymer (a) by the condensation polymerization of the above-mentioned three components: (A), (B), and (C) may be divided, for example, into a first half, an esterification step in which mainly a dehydration reaction proceeds and a latter half, a condensation polymerization step in which mainly an interesterification reaction proceeds, depending on the kinds of raw materials used. As the operation conditions, catalysts that are usable, and the like, those that are the same as those described in detail with respect to the group I of the present invention may be applied under the same conditions.

As the charging ratio of the raw material components (A) and (B) in the step (i) of synthesizing the aliphatic polyester copolymer (a), the ratio described in detail with respect to the group I of the present invention may be applied under the same conditions.

In the group VI of the present invention, to obtain finally an aliphatic polyester copolymer having a practical strength, the bifunctional coupler (E) represented by the formula (7) described above may be added to the aliphatic polyester copolymer (D) in a molten state to increase the weight average molecular weight thereof to 30,000 or more, 40,000 or more and so on.

The aliphatic polyester copolymer (a) obtained in the polymerization step (i) has a weight average molecular weight of 30,000 or more, preferably 50,000 or more.

It is desirable that the low molecular weight aliphatic polyester copolymer (D) has a weight average molecular weight of 5,000 or more, that the sum of the values of the acid number and hydroxyl number of it before the molecular weight is increased with the coupler (E) is between 1.0 and 45, and further that the acid number is 30 or less. The sum of the values of the acid number and hydroxyl number of the copolymer (D) is proportional to the concentration of terminal groups of the copolymer (D), and when the molecular weight thereof in terms of weight average molecular weight is 5,000, the sum of the values of the acid number and hydroxyl number is substantially 45 or less. In the case where the sum of the values of the acid number and hydroxyl number is greater than 45, the molecular weight of the copolymer (D) is low, so that a large amount of coupler is required for increasing the molecular weight to a desired molecular weight by addition of the coupler. In the case where the amount of the coupler used is large, a problem such as gelling tends to occur. In the case where the sum of the values of the acid number and hydroxyl number is 1.0 or less, the viscosity of the copolymer (D) in a molten state becomes higher because of its higher molecular weight. In this case, the amount of the coupler used also becomes a minimum amount, so that it is difficult to perform the reaction uniformly and also a problem such as gelling tends to occur. On the other hand, if the melting temperature is increased for the purpose of performing the reaction uniformly, problems such as thermal decomposition, crosslinking, and discoloration occur.

The coupler (E) used in the group VI of the present invention is represented by the above-mentioned formula (7), and those described in detail with respect to the group I of the present invention may be applied under the same conditions.

In the group VI of the present invention, the charging ratio of the raw material components (A) and (C) may also be selected so as to meet the conditional expression (2) described for the group I of the present invention.

The aliphatic polyester copolymer (a) of the group VI of the present invention, when made to have an increased molecular weight, has a weight average molecular weight of 30,000 or more, preferably 50, 000 or more, more preferably 60, 000 or more, still more preferably 80,000 or more, and usually one in the range of 100,00 to 250,000. In addition, the melting point is usually as high as 80°C or more and the difference between the melting point and the decomposition temperature is as great as 100°C or more, so that its thermoforming is easy.

Among the aliphatic polyester copolymers, in particular, those represented by the general formula (1) described above, in which $R^1$ and $R^2$ are $(CH_2)_2$ or $(CH_2)_4$, and $R_3$ is $(CH_2)_5$, have high melting points and high crystallinities.

As the copolymer (a) that is not to be irradiated with radiation, one having a number average molecular weight of 30,000 to 500,000 is preferred, and one having a number average molecular weight of 40,000 to 200,000 is particularly preferred in view of efficient crosslinking. The copolymer (a) having the above-mentioned molecular weight is preferably one having a relative viscosity of 1.15 to 2.80, particularly preferably 1.50 to 2.80, according to the prescription of JIS K6726.

The lactone-containing resin (c) used for the group VI of the present invention is the copolymer (a) alone or a mixture of the copolymer (a), optionally, the other biodegradable resin (b) and the additive for resins (d). As (b) and (d), the same ones as those described in detail with respect to the group I of the present invention may be applied under the same conditions.

In the group VI of the present invention, the copolymer (a) at least is one that has been subjected to a predetermined radiation irradiation treatment.

In the group VI of the present invention, "the copolymer (a) is one that alone or together with at least one of the other constituents has been subjected to a radiation irradiation treatment" means that the copolymer (a) in a state where it is alone, in a state of a mixture of the copolymer (a) with the other biodegradable resin (b), in a state of a mixture of the copolymer (a) and the resin additive (d), or further in a state of a mixture of the three: (a), (b) and (d) is irradiated before molding, during molding or after molding.

The shape may be powder, pellet or one in a state that it is during molding or in a state of a product.

Therefore, the group VI of the present invention includes a resin composition obtained by preliminarily subjecting the copolymer (a) alone to a predetermined radiation irradiation treatment and mixing, for example, a synthetic aliphatic polyester resin with the resultant or further adding a fatty acid amide thereto; a resin composition obtained by mixing the copolymer and synthetic aliphatic polyester resin or fatty acid amide and subjecting the mixture to the same radiation irradiation treatment and then mixing the remaining components with the resultant; and a resin composition obtained by mixing the copolymer, synthetic aliphatic polyester resin, and fatty acid amide and subjecting the mixture to the above-mentioned radiation irradiation treatment; and the like.

Further, the mode in which, for example, the above-mentioned three in a mixed state are subjected to a radiation irradiation treatment includes a mode where the composition for producing pellets for molding is irradiated (for example, strand and the like for the production of pellets) , a mode in which a film during film-forming is irradiated, and a mode in which the molding is irradiated.

Irradiation such that the gel fraction of the copolymer (a) becomes 0.01 to 10%, preferably 0.05 to 5.0% forms crosslinking to increase the heat resistance, improve the tensile strength and the tear strength, decrease the roll-sticking and releasability from a metallic mold, and prevent the crystallinity to increase the transparency.

Also, a mode in which initially irradiation is performed at a low radiation dose and in a later stage the irradiation is performed at a high radiation dose is included. For example, the irradiation may be performed so that the gel fraction becomes 0.01 to 10%, preferably 0.05 to 5.0% in the stage of pellets, and 5 to 90%, preferably 10 to 90%, during or after molding.

This makes the melt viscosity higher than that of the non-irradiated one, so that re-irradiation can be performed at higher temperatures while maintaining the shape, resulting in that crosslinking occurs at high frequencies, thereby increasing the heat resistance.

As the radiation source used in the radiation irradiation treatment in the group VI of the present invention, $\alpha$-rays, $\beta$-rays, $\gamma$-rays, X-rays, electron beams, ultraviolet rays, and the like may be used. Of those, $\gamma$-Rays, electron beams, and X-rays from cobalt 60 are more preferred. Among them $\gamma$-rays and electron beam irradiation treatment by use of an electron accelerator are most convenient for introducing crosslinked structures into polymeric materials.

The irradiation dose is determined by taking the gel fraction of the copolymer (a), which serves as a guide for introducing a crosslinked structure into a polymeric material, as a measure.

In the case where the copolymer (a) is irradiated before molding, the gel fraction is 0.01 to 10% taking the moldability into consideration; for example, in films the gel fraction on the order of 0.1 to 3% is preferred.

In the case where the molding is irradiated, the gel fraction of the copolymer (a) can be increased to as high as one on the order of 90%. In the case where the gel fraction is raised to 10% or more, crosslinking occurs centered on a noncrystalline region of the polymeric material. Accordingly, with the irradiation treatment in the vicinity of room temperature, a large radiation dose, for example, 200 kGy is required. With the irradiation treatment performed at a temperature in the vicinity of the melting point, there is a tendency that many voids are generated to decrease the strength. Therefore, in such case, the irradiation is performed in a state in which the copolymer (a) is melted at a temperature not lower than the melting point and then cooled to a temperature at which no crystallization is reached after the melting. Performing the above-mentioned treatment in this state enables one to obtain a product having an extremely high gel fraction even at a low radiation dose. As described above, as one condition of the radiation irradiation treatment, the condition for "a state in which no crystallization is reached after melting" is specified. The "state in which no crystallization is reached" indicates that "when measured by X-ray diffraction, the degree of crystallinity is 5% or less". It is to be noted that even in the case where the above-mentioned various kinds of compositions including the other components but not the copolymer (a) alone are treated, it is sufficient if the molten state alone of the above-mentioned copolymer component (a) is taken into consideration.

According to the results of observation of the effects of the radiation treatment of the copolymer (a) in the group VI of the present invention, measurement of the degree of crosslinking in terms of gel fraction and melt index

(MI) indicates that the effect comes to be exhibited at the point in time at which the radiation irradiation dose reaches 10 kGy, and the gel fraction shows an abrupt rise at 100 kGy while MI shows a tendency to be decreased further at 60 kGy and stabilized at greater radiation doses.

Concerning the biodegradability, measurement was performed in sludge, with the result that the higher the radiation irradiation dose, the more improved the degradation rate. Immersion for 4 to 5 days initiated biodegradation and after about 10 days, the result of a degradation rate of 50% was obtained.

Besides this, improvements were seen in mechanical characteristics (tensile strength, tensile elongation, tear strength, impact strength), the anti-blocking property of a film against nip rolls, and the like.

Molding the lactone-contained resin(c) in the group VI of the present invention can give rise to various moldings described in detail with respect to the group I of the present invention.

Hereinbelow, a preferred example of forming a film, in particular by an inflation method, will be described.

At first, the ratio of the repeating unit (Q) that is derived from a lactone to the repeating unit (P) that is derived from an aliphatic polyester resin in the copolymer (a) is preferably 70 to 5% by weight of the former to 30 to 95% by weight of the latter (with the sum of the both being 100% by weight). In this case, it is particularly preferred that the upper limit of the former be set to 60% by weight or less, and 40 to 10% by weight of the former to 60 to 90% by weight of the latter is suitable.

In this case, if (Q) is above 70% by weight, the mechanical physical property of the moldings, such as a film, at high temperatures shows a tendency to be decreased while if it is below 5% by weight, there is the possibility that the degradability based on biochemical degradation is decreased. The same is true for this tendency when (Q) is outside the range of 40 to 10% by weight.

On the other hand, if the amount of (P) is above 95% by weight, the biodegradation tends to proceed slowly. On the contrary, if it is below 30% by weight, the heat resistance tends to be decreased when the aliphatic polyester is processed into, for example, a film. The same is true for this tendency when (P) is outside the range of 60 to 90% by weight.

Further, the compounding ratio of the fatty acid amide as a lubricant is preferably 0.2 to 5 parts by weight, more preferably in the range of 0.3 to 1.5 parts by weight based on 100 parts by weight of the copolymer (a). If the fatty acid amide is present in an amount of less than 0.2 part by weight, it decreases a little the effect of preventing blocking in a tube of an inflation film or blocking between the nip rolls or between the guide rolls becomes. On the other hand, if it is above 5 parts by weight, the slipperiness of the film tends to become unnecessarily higher and, in addition to a problem of off-balance of roll winding, printability, adhesion, and the like also come to show a decreasing tendency.

Furthermore, liquid lubricants, finely powdered silica, starch, and the like may be also optionally added.

The purpose of using the liquid lubricant is as follows. That is, it is used in the case where it is intended to uniformly mix finely powdered silica having an extremely low bulk density as described hereinbelow with the copolymer (a) or composition, which is usually supplied in the form of pellets or beads through an inflation film forming step, and it is preferred that the surface of the pellets or beads be kept as wet as possible.

The liquid lubricant having such purpose of use is added in an addition amount ranging in 0.1 to 3 parts by weight, more preferably 0.2 to 0.7 part by weight based on 100 parts by weight of the copolymer (a). If the addition amount is above 3 parts by weight, the liquid lubricant adheres in large amounts on the inner surface of a mixing tumbler to make it sticky so that stable mixing may become difficult while if the addition amount is less than 0.1 part, the effect of the liquid lubricant as a wetting agent may become difficult to be exhibited sufficiently. This tendency is also seen outside the more preferred range of 0.2 to 0.7 part by weight.

On the other hand, the liquid lubricant as a wetting agent preferably has a melting point of 70°C or less and one that is liquid at room temperature is more preferably used. For example, there may be exemplified liquid paraffin, paraffin wax, stearyl alcohol, stearic acid etc., and in addition stearic acid esters such as butyl stearate, monoglyceride stearate, pentaerythritol tetrastearate, and stearyl stearate.

It is to be noted that among the above-mentioned liquid lubricants, liquid paraffin, which is most preferable, has an oral acute toxicity (rat) $LD_{50}$ of 5 g/kg and hence is very safe and has been recognized as a food additive under the Food Sanitation Law and is a very convenient material in view of preventing environmental pollution in the case where films after use are discarded.

As described above, the liquid lubricant is selected as a lubricant. In contrast, in the case where a solid lubricant is used, the entire system containing the resin composition must have a melting point not lower than the melting point of the solid lubricant and at a low temperature as low as that melting point or less, the system cannot be used. Liquid paraffin, which is liquid at room temperature, is a preferred lubricant in this respect.

The purpose of using the finely powdered silica is to prevent the above-mentioned blocking of inflation film according to the group VI of the present invention as well as that at the time of inflation film formation. As the finely powdered silica used, silica prepared by a wet method, silica produced by high temperature hydrolysis of silicon tetrachloride in oxyhydrogen flame or the like is applied; in particular, those having a particle diameter of 50 nm or less are preferred.

As the method of adding it, a method is most preferred, in which it is heat-kneaded with the copolymer (a) in the group VI of the present invention, a composition thereof, or a resin composition further containing a fatty acid amide. In this method, a relatively high shearing force is exerted to disentangle the secondary agglomerated particles, thereby exhibiting the effect of preventing blocking or sticking between the films and between the film and each roll.

It is to be noted that the addition amount of finely powdered silica is most preferably within the range of 0.1 to 3 parts by weight based on 100 parts by weight of the mixture of the lactone resin and the aliphatic polyester resin in respect of exhibiting the above-mentioned effect.

For the method of adding the above-mentioned various additives to the copolymer (a) or composition thereof to obtain a blend composition, various methods conventionally used may be applied and is not particularly limited.

For example, one example of the method of producing the above-mentioned blend composition is described below. First, the copolymer (a) and the liquid lubricant are charged in a tumbler and stirred and mixed for 10 to 20 minutes. Then, a fatty acid amide is added followed by adding finely powdered silica and starch and this is further stirred and mixed for 20 to 30 minutes. Thereafter, melt-kneading is performed at about 140 to 210°C in a single or twin screw extruder, and as a result, powder or pellets of the resin composition containing various additives can be obtained. As already explained, the irradiation treatment by radiation rays may be performed as appropriate in this step.

The melt flowability of the copolymer (a) or composition thereof subjected to the above-mentioned irradiation treatment by radiation rays is not limited particularly as far as it can be used in the film forming process. However, for the film forming, the MI (measured at 190°C under a load of 2,160 g) is preferably 0.3 to 20 g/10 min, with 0.5 to 3 g/10 min being particularly suitable.

Hereinafter, film forming will be described.

The copolymer (a) or composition thereof is supplied to an extruder provided with a circular die and melt-kneaded at a temperature of around 180°C and extruded through a circular die slit in the form of a tube. On this occasion, an extruder having an extrusion diameter on the order of 40 to 65 mm, a ratio of length/diameter (L/D) of 26 to 32, and a diameter of circular die of 50 to 150 mm, can be adopted and the gap of the die slit is preferably within the range of 0.5 to 1.5 mm.

The extruded tube-like unsolidified inflation film is inflated to have a predetermined diameter at a blow ratio (tube diameter of tube/diameter of die) of 2 or more by the pressure of a gas introduced through a gas blowing tube inserted through the die and then folded and drawn at a constant rate by nip rolls and wound as a cylindrical film or as a wide film by being cut open in the drawing direction.

The copolymer (a) or composition thereof obtained through the treatment step by radiation rays can be stably produced into a film regardless of the temperature of the resin extruded from the circular die, which may be due to the crosslinked structure of the copolymer (a).

According to group VI of the present invention, the additive-containing resin composition in the form of powder or pellets can be also applied to various conventional molding methods other than the inflation film forming method because of an increase in melt viscosity that is considered to be based on the crosslinked structure thereof as compared with the conventional copolymer (a) or composition thereof that has not been subjected to an irradiation treatment by radiation rays.

It is to be noted that in the case where molding into a film is performed, the degree of crosslinking such that the MI of the copolymer (a) after the irradiation becomes 0.3 or less (that is, low gel fraction) is preferred whereas in the case where irradiation is performed onto the article after molding such as a housing or a flower pot, the degree of crosslinking may be such that the MI becomes 0.1 or less (that is, high gel fraction) . Further, depending on an article to be molded, crosslinking may be performed before molding to such an extent that the melting point is somewhat increased or MI is maintained at 0.1 or more, followed by molding the resin composition into the form of a final product and performing crosslinking such that the MI becomes 0.1 or less.

Hereinafter, group VII of the present invention will be described in detail.

The high molecular weight aliphatic polyester copolymer used in the group VII of the present invention is the high molecular weight aliphatic polyester copolymer that has been described in detail in the above-mentioned group I of the present invention and the production method, physical properties and the like thereof are all as described above.

The group VII of the present invention relates to an aliphatic polyester blend resin composition obtained by mixing the aliphatic polyester copolymer in the above-mentioned inventions 1 to 5, the aliphatic polyester copolymer in the groups II to VI or the aliphatic polyester copolymer (a) having a weight average molecular weight of 40,000 or more composed of the repeating unit (P) represented by the general formula (1) described above and the repeating unit (Q) represented by the general formula (2) described above, and other biodegradable resin (F), and relates to a molding obtained by molding the above-mentioned resin composition.

The above-mentioned aliphatic polyester copolymer (a) has a weight average molecular weight of 40,000 or more, usually one in the range of 100,000 to 350,000, preferably in the range of 70,000 to 250,000, composed of the repeating unit (P) represented by the general formula (1) described above and the repeating unit (Q) represented by the general formula (2) described above.

The above-mentioned aliphatic polyester copolymer (a) may be one in which a low molecular weight aliphatic polyester copolymer (D) is coupled with the bifunctional coupler (E) represented by the general formula (7) of 0.1 to 5 parts by weight of described above based on 100 parts by weight of the copolymer (D). The copolymer (D) has a weight average molecular weight of 5,000 or more and a molecular chain made of the repeating unit (P) represented by the general formula (1) described above and the repeating unit (Q) represented by the general formula (2) described above, and which is an intermediate for polymerization in the above-mentioned high molecular weight aliphatic polyester copolymer (a). The aliphatic polyester copolymer (a) has a weight average molecular weight of 40,000 or more, usually one in the range of 100,000 to 350,000, preferably in the range of 70,000 to 250,000.

The component (A) that gives rise to the aliphatic dicarboxylic acid residue of the formula (1) includes aliphatic dicarboxylic acids, acid anhydrides thereof, or mono- or diester forms thereof, which are represented by the general formula (3) :

$$R^4\text{-OCO-}R^1\text{-COO-}R^5 \qquad (3)$$

(wherein $R^1$ represents a divalent aliphatic group having 1 to 12 carbon atoms, $R^4$ and $R^5$ represent each a hydrogen atom, an aliphatic group having 1 to 6 carbon atoms, or an aromatic group). For the general formula (3), those explained in detail with respect to the group I of the present invention may be applied under the same conditions.

The component (B) that gives rise to the aliphatic diol residue in the formula (1) includes aliphatic diols.

The aliphatic diol is represented by the general formula (4) :

$$HO\text{-}R^2\text{-}OH \qquad (4)$$

(wherein $R^2$ represents a divalent aliphatic group having 2 to 12 carbon atoms). With respect to the general formula (4), those explained in detail with respect to the group I of the present invention may be applied under the same conditions.

The component (C) that gives rise to the aliphatic hydroxycarboxylic acid residue in the formula (2) includes hydroxycarboxylic acids or hydroxycarboxylic acid esters, or lactones.

The hydroxycarboxylic acid or hydroxycarboxylic acid ester is represented by the general formula (5):

$$R^6\text{OCO-}R^3\text{-OH} \qquad (5)$$

(wherein $R^3$ is a divalent aliphatic group having 1 to 10 carbon atoms, and $R^6$ represents a hydrogen atom, an aliphatic group having 1 to 6 carbon atoms, or an aromatic group) . With respect to the general formula (5), those explained in detail with respect to the group I of the present invention may be applied under the same conditions.

The lactones include those represented by the general formula (6) explained in detail with respect to the group I of the present invention.

The aliphatic polyester copolymer obtained by the condensation polymerization reaction of the three components (A), (B) and (C) described above in the group VII of the present invention may be either a random copolymer or a block copolymer. The charging of the above-mentioned monomers may be collective charging, or divided charging. Alternatively, a lactone may be polymerized with a dicarboxylic acid-diol polymer, or a dicarboxylic acid and a diol may be polymerized with a polylactone.

In the group VII of the present invention, the step (a) of synthesizing the aliphatic polyester copolymer (a) or low molecular weight copolymer (D) by the condensation polymerization of the above-mentioned three components (A), (B), and (C) may be divided, for example, into a first half, an esterification step in which mainly a dehydration reaction proceeds, and a latter half, a condensation polymerization step in which mainly an interesterification reaction proceeds, depending on the kinds of raw materials used.

In step (a), with respect to the esterification step in which mainly a dehydration reaction proceeds and the latter half condensation polymerization step in which mainly an interesterification reaction proceeds, those explained in detail with respect to the group I of the present invention may be applied under the same conditions.

As the charging ratio of the above-mentioned raw material components (A) and (B), those described in detail with respect to the group I of the present invention may be applied under the same conditions.

In the group VII of the present invention, it is desired that the low molecular weight aliphatic polyester copolymer (D) obtained in the polymerization step (a) has a weight average molecular weight of 5,000 or more, preferably 10,000 or more, a sum of the acid number and hydroxyl number between 1.0 and 45, and further, an acid number of

30 or less.

The sum of the values of the acid number and hydroxyl number of the copolymer (D) is proportional to the concentration of the terminal groups of the copolymer (D); when the molecular weight in terms of weight average molecular weight is 5,000 or more, the sum of the values of the acid number and hydroxyl number is substantially 45 or less.

In the present invention, as the above-mentioned charging ratio of the raw material components (A) and (B), those described in detail with respect to the group I of the present invention may be applied under the same conditions.

The above-mentioned high molecular weight aliphatic polyester copolymer in the group VII of the present invention has a weight average molecular weight of 40,000 or more, usually one in the range of 100,000 to 350,000, preferably in the range of 70,000 to 250,000. Also, it has a high melting point of usually 80°C or more and the difference between its melting point and decomposition temperature is as great as 100°C or more, so that it is easily thermoformed.

Among the above-mentioned high molecular weight aliphatic polyester copolymers used for the group VII of the present invention, in particular, those represented by general formula (1) described above, in which $R^1$ and $R^2$ are $(CH_2)_2$ or $(CH_2)_4$, and $R_3$ is $(CH_2)_5$, have high melting points and high crystallinities. Hereinafter, other biodegradable resins will be described.

As the above-mentioned other biodegradable resin, synthetic and/or naturally occurring polymers are used.

The synthetic polymers include aliphatic polyesters, polyamides, polyamide esters, biodegradable cellulose esters, polypeptides, polyvinyl alcohols, or mixtures thereof.

Hereinafter, the synthetic aliphatic polyester resins are abbreviated simply as aliphatic polyester resins, and those naturally occurring are specifically indicated as such.

In particular, in the case of polylactic acid (PLA), it is used for the purpose of controlling the biodegradation rate and the weight ratio of the aliphatic polyester copolymer to the polylactic acid in the polyester blend resin composition of the present invention is from 99.9/0.1 to 70/30, preferably from 99.9/0.1 to 80/20, and more preferably 99.9/0.1 to 85/15. If the amount of the polylactic acid is less too than 0.1, the biodegradation retarding effect by compounding the polylactic acid is not recognized while if the amount of the polylactic acid is too larger than 30, the mechanical properties close to that of polyethylene, which is one of the features of the polyester copolymer of the present invention is deteriorated. These enable control of the degradation rate that is particularly suitable for agricultural films.

Examples of the biodegradable cellulose esters include organic acid esters such as cellulose acetate, cellulose butyrate, and cellulose propionate; inorganic acid esters such as cellulose nitrate, cellulose sulfate, and cellulose phosphate; and mixed esters such as cellulose acetate butyrate, cellulose acetate phthalate, and cellulose nitrate acetate. These cellulose esters may be used singly or two or more of them may be used as mixtures. Among the cellulose esters, organic acid esters, cellulose acetate propionate, and cellulose acetate butyrate are preferable. Further, cellulose acetate with which a plasticizer is compounded is also preferable. With respect to the acetylation degree of cellulose acetate, those cellulose acetate having an acetylation degree of 40.03 to 62.55, that is, those having an acetyl substitution degree of 1.5 to 3.0 per cellulose repeating unit, are known to be useful. In the case where cellulose acetate compounded with a plasticizer is used, cellulose acetate having an acetylation degree of 48.8 to 62.5%, in particular one having an acetylation degree of 50 to 62.5%, is useful.

As the above-mentioned plasticizer specifically used for the plasticization of cellulose acetate, those that will hardly bleed out with a lapse of time when they are added to cellulose acetate and molten and kneaded are preferably used. As such, polycaprolactones, tris(ethoxycarbonyl)methyl citrate, tris(ethoxycarbonyl)methyl acetyl citrate or mixtures thereof can be preferably used.

As the above-mentioned polycaprolactone, one having a weight average molecular weight of 500 to 5,000 can be used.

The compounding ratio of the plasticizer may vary depending on the kind of plasticizer and it is 15 to 50 parts by weight, preferably 20 to 40 parts by weight, and more preferably 20 to 30 parts by weight based on 100 parts by weight of cellulose acetate.

The compounding ratio of the plasticizer above 50 parts by weight is not preferable since the plasticizer considerably bleeds out, while the compounding ratio of the plasticizer below 15 parts by weight is not preferable since the raw material of cellulose acetate will not exhibit thermoplastic property.

It is to be noted that the plasticizer is preferably added to a cellulose acetate in advance, which is then aged. However, it maybe added at the time of mixing the aliphatic polyester copolymer with the cellulose acetate.

By use of the cellulose acetate resin in which the plasticizer is compounded, compositions or moldings that hardly bleed out (a property of non-bleeding out) can be obtained.

The weight compositional ratio of the aliphatic polyester copolymer to the cellulose acetate resin in which the plasticizer is compounded, is from 90/10 to 10/90, preferably from 80/20 to 20/80.

The weight compositional ratio of the aliphatic polyester copolymer above 90/10 is not preferable since the property of the cellulose acetate resin is not exhibited sufficiently while that below10/90 is not preferable since the practical physical properties of the blend resin composition becomes insufficient.

Further, as the polypeptide, polyamino acids such as polymethylglutamic acid, polyamide esters, and the like may be exemplified.

The polyamide esters include those resins synthesized from ε-caprolactone, ε-caprolactam, and the like.

The naturally occurring polymers include starch, cellulose, paper, pulp, cotton, hemp, wool, silk, hides, carrageenan, chitin/chitosan substances, naturally occurring linear polyester resins, and mixtures thereof.

As the above-mentioned starch (G) , starch derived from natural products, processed (modified) starch, or mixtures of both may be used.

Starch includes natural starches such as potato starch, corn starch, sweet potato starch, wheat starch, rice starch, tapioca starch, sago starch, cassava starch, bean starch, arrowroot starch, bracken starch, lotus starch, and water chestnut starch, as well as decomposates of these, amylose-decomposed starch, amylopectin decomposed starch, etc.

The starch may be optionally solubilized before it is used. For example, water may be added to starch and warmed to form a viscous liquid before it is used. Further, those starches plasticized and liquefied with ethylene glycol or glycerin in place of water may also be used.

The processed starches include those obtained by subjecting natural starch to various physical modifications, for example, α-starch, fractionated amylose, moist heat treated starch, and the like; starches obtained by subjecting natural starch to various enzymatic modification, for example, hydrolyzed dextrin, enzymatically decomposed dextrin, amylose decomposed starch, amylopectin decomposed starch, and the like; natural starch subjected to various chemical treatments, for example, acid treated starch, hypochlorous oxidized starch, dicarboxylic acid starch subjected to an oxidation treatment, acetyl starch subjected to an acetylation treatment, and other chemically modified starch derivatives, for example, esterified starch subjected to an esterification treatment, etherified starch subjected to an etherification treatment, crosslinked starch subjected to treatment with a crosslinking agent, cationized starch aminated with 2-dimethylaminoethyl chloride, and the like.

Among those described above, the esterified starches include the acetate-esterified starches, succinate-esterified starches, nitrate-esterified starches, phosphate-esterified starches, urea phosphate-esterified starches, xanthogenate-esterified starches, and acetoacetate-esterified starches; the etherified starches include allyl-etherified starches, methyl-etherified starches, carboxymethyl-etherified starches, hydroxyethyl-etherified starches, and hydroxypropyl-etherified starches; the cationized starches include the reaction products of starches with 2-dimethylaminoethyl chloride or 2-diethylaminoethyl chloride, and the reaction product of starches with 2,3-epoxypropyltrimethylsilylammonium chloride; the crosslinked starches include formaldehyde-crosslinked starches, aldehyde-crosslinked starches, dialdehyde-crosslinked starches, epichlorohydrin-crosslinked starches, and phosphate-crosslinked starches, acrolein-crosslinked starches.

Preferred starches include granular starch, plasticized starch that has been plasticized with water and/or a plasticizer, and mixtures of granular starch and plasticized starch that has been plasticized with water and/or a plasticizer.

The weight compositional ratio of the aliphatic polyester copolymer to the starch is 95/5 to 20/80, preferably 90/10 to 40/60. If the ratio of starch is less than 5 parts, the improvement of in the rate of disintegration of the shape is insufficient and the effect of cost reduction is insufficient, while if the ratio of starch is more than 80 parts, the resin-like function that the aliphatic copolymer polyester has is not exhibited, so that such weight compositional ratio is not preferable.

The additives for resins include plasticizers, thermal stabilizers, lubricants, antiblocking agents, nucleating agents, photolyzing agents, biodegradation accelerators, antioxidants, ultraviolet stabilizers, antistatic agents, flame retardants, antistick agents, antimicrobial agents, deodrants, fillers and coloring agents, as well as mixtures thereof.

As the plasticizers, there are exemplified aliphatic dibasic acid esters, phthalates, polyhydroxycarboxylates, polyester-based plasticizers, fatty esters and epoxy plasticizers, as well as mixtures thereof. Specifically, the plasticizers include: phthalate such as di-2-ethylhexyl phthalate (DOP), dibutyl phthalates (DBP) and diisodecyl phthalate (DIDP); adipates such as di-2-ethylhexyl adipate (DOA) and diisodecyl adipate (DIDA); azelates such as di-2-ethylhexyl azelate (DOZ); polyhydroxycarboxylates such as tri-2-ethylhexyl acetylcitrate and tributyl acetylcitrate; and polyester-based plasticizers such as polypropylene glycol adipate. Those plasticizers are used alone or as a mixture of two or more of the above-mentioned plasticizers.

The addition amount of the plasticizers may vary depending on the purpose but generally it is preferably within the range of 3 to 30 parts by weight based on 100 parts by weight of the copolymer. In the case of films, the range of 5 to 15 parts by weight is preferable. If the addition amount is less than 3 parts by weight, elongation at break and impact strength become low while if it is above 30 parts by weight, it may cause reduction in the strength at break and impact strength.

The thermal stabilizers include salts of aliphatic carboxylic acids. As the aliphatic carboxylic acid, aliphatic hydroxycarboxylic acids are particularly preferred. The naturally occurring aliphatic hydroxycarboxylic acids such as lactic acid and hydroxybutyric acid are preferred as the aliphatic hydroxycarboxylic acid.

The salts include salts of sodium, calcium, aluminum, barium, magnesium, manganese, iron, zinc, lead, silver, copper, or the like. Those salts can be used alone or as a mixture of two or more of the above-mentioned salts.

The addition amount of the thermal stabilizer is within the range of 0.5 to 10 parts by weight based on 100 parts by weight of the copolymer. Use of a heat stabilizer in the above-mentioned range has the effect of increasing the impact strength (Izod impact value) and decreasing the fluctuations of elongation at break, strength at break, and impact strength.

As the lubricant, lubricants that are commonly used as internal lubricants or external lubricants can be used. The examples of those lubricants include fatty esters, hydrocarbon resins, paraffin, higher fatty acids, oxy fatty acids, fatty amides, alkylene bis fatty amides, aliphatic ketones, lower alcohol esters of fatty acids, polyhydric alcohol esters of fatty acids, polyglycol esters of fatty acids, aliphatic alcohols, polyhydric alcohols, polyglycols, polyglycerol, metallic soaps and modified silicones, as well as mixtures thereof. Preferably, the lubricants are fatty esters, hydrocarbon resins, and the like.

In the case where the lubricant is selected, the lubricant must be selected depending on the melting points of the lactone resin and other biodegradable resins such that the melting point of the lubricant is not higher than those of the lactone resin and other biodegradable resins. For example, as the fatty acid amide, a fatty acid amide having a melting point of 160°C or less is selected taking into consideration the melting point of the aliphatic polyester resin.

Taking an example of a film, the compounding amount of the lubricant is 0.05 to 5 parts by weight based on 100 parts by weight of the resin. If the compounding amount is below 0.05 part by weight, the effect of it is insufficient, while if the compounding amount is above 5 parts by weight, the resulting film will not wind around rolls and will have deteriorated physical properties.

For use in films, ethylenebis(stearic acid amide), stearic acid amide, oleic acid amide, and erucic acid amide that have high safety and are registered by FDA (Federal Food and Drug Administration, U.S.A.) are preferable in consideration of preventing environmental pollution.

As the above-mentioned photolysis accelerator, for example, benzophenone and derivatives thereof, such as benzoins, benzoin alkyl ethers, benzophenone and 4,4-bis(dimethylamino)benzophenone; acetophenone and derivatives thereof, such as acetophenone, α,α-diethoxyacetophenone; quinones; thioxanthones; photoexciting agents such as phthalocyanines, anatase type titanium oxide, ethylene-carbon monoxide copolymers, sensitizing agents made of an aromatic ketone and a metal salt, and the like are exemplified. These photolysis accelerators may be used singly or two or more of them may be used in combination.

The above-mentioned biodegradation accelerators include, for example, organic acids, such as oxo acids (for example, oxo acids having about 2 to 6 carbon atoms such as glycolic acid, lactic acid, citric acid, tartaric acid, and malic acid), saturated dicarboxylic acids (for example, lower saturated dicarboxylic acids having about 2 to 6 carbon atoms, such as oxalic acid, malonic acid, succinic acid, succinic anhydride, and glutaric acid); and lower alkyl esters of these organic acids with alcohols having about 1 to 4 carbon atoms. Preferred examples of the biodegradation accelerator include organic acids having about 2 to 6 carbon atoms, such as citric acid, tartaric acid, and malic acid, and coconut shell-activated carbon and the like. The biodegradation accelerators may be used singly or two or more of them may be used in combination.

As the above-mentioned filler (including extenders), various fillers may be mentioned, for example, besides the above-mentioned calcium carbonate or talc, inorganic fillers such as mica, calcium silicate, finely powdered silica (anhydride), white carbon (hydrate), asbestos, pot earth (calcined), Bakuhanseki, various kinds of titanium oxide, glass fibers, as well as organic fillers such as granules of natural materials.

The finely powdered silica as the inorganic filler may be silica prepared by a wet method, silica produced by the high temperature hydrolysis of silicon tetrachloride in oxyhydrogen flame, or the like; in particular, those having a particle diameter of 50 nm or less are preferred.

Since the addition of the inorganic filler further increases the biodegradability and at the same time increases the melt strength (viscosity) of the resin composition, the drawdown at the time of melt-molding is prevented and the moldability of vacuum molding, blow molding, inflation molding, and the like is improved.

Although the addition amount of the filler is not particularly limited, the weight ratio of the filler to the copolymer, i.e., filler/copolymer, is (5 to 50)/(95 to 50), preferably (10 to 45) / (90 to 55), more preferably (20 to 40)/(80 to 60), and particularly preferably (25 to 35)/(75 to 65).

If the amount of the filler is in excess, the resin causes blooming while if it is too small, there occur significant drawdown, necking, unevenness in thickness, and exudation at the time of molding.

The finely powdered silica as the inorganic filler may be silica prepared by a wet method, silica produced by high temperature hydrolysis of silicon tetrachloride in oxyhydrogen flame, or the like; in particular, those having a particle diameter of 50 nm or less are preferred.

As the organic filler, fine particles produced from paper having a diameter of 50 microns or less may be mentioned of. The addition amount of the organic filler is the same as in the case of the inorganic filler.

The extender includes wood powder, glass balloons, etc. The addition amount of the extender is the same

as in the case of the inorganic filler.

For the method of adding the above-mentioned various additives to the above-mentioned biodegradable resin composition to obtain a blend composition, various methods conventionally used can be applied and is not particularly limited. For example, one example of the production method of the above-mentioned blend composition is described below. First, the resin composition and the liquid lubricant in accordance with the present invention are charged in a tumbler and stirred and mixed for 10 to 20 minutes. Then, a fatty acid amide and other additives for resins are added and further stirred and mixed for 20 to 30 minutes. Thereafter, melt-kneading is performed at about 140 to 210°C in a single or twin screw extruder, etc. and, as a result, powder or pellets of the resin composition containing various additives can be obtained.

Various moldings explained in detail with respect to the group I of the present invention can be obtained by molding the resin composition of the group VI of the present invention. As the molding method, that explained with respect to the group I of the present invention may be applied under the same conditions.

The other aliphatic polyester (F) used in the group VII of the present invention is not particularly limited but one having a melting point of 60°C or more and having thermoplasticity is preferable.

The other aliphatic polyester (F) includes aliphatic polyester (F-1) having a structure obtained by condensation polymerization of an aliphatic dicarboxylic acid and an aliphatic diol; an aliphatic polyester (F-2) having a structure obtained by condensation polymerization of a hydroxycarboxylic acid or ring opening polymerization of a lactone corresponding thereto; an aliphatic polyester (F-3) having a structure obtained by polymerization of an aliphatic dicarboxylic acid, an aliphatic diol and a lactone; and mixtures of two or more of these.

The aliphatic polyester (F-1) is, for example, a polymer having a repeating unit (P) represented by the general formula (1) described above, and can be obtained by condensation polymerization of one, two, or more of the component (A) with one, two, or more of the component (B). Preferred examples thereof include a poly(butylene succinate) (PBS) obtained from succinic acid and 1,4-butanediol, a poly(butylene-succinate/adipate (PBS/A) obtained from succinic acid, adipic acid and 1,4-butanediol, a polyester resin (PES) obtained from succinic acid and ethylene glycol, a polyester resin (PNPGO) obtained form oxalic acid and neopentyl glycol, a polyester resin (PBO) obtained from oxalic acid and 1,4-butanediol, apolyester resin (PEO) obtained from oxalic acid and ethylene glycol, and the like. More preferably, it includes (PBS), (PBS/A), and the like.

The aliphatic polyester (F-2) is, for example, a polymer having a repeating unit (Q) represented by the general formula (2) described above and includes those obtained by condensation polymerization or ring opening polymerization of one, two, or more of the component (C), which includes the above-mentioned hydroxycarboxylic acids, lactones, or lactides. For example, poly(ε-caprolactone) (abbreviated as polycaprolactone) (PCL), polylactic acid (PLA), copolymer of lactic acid and hydroxycarboxylic acid as described in JP 7-177826 A, and the like may be mentioned of.

The aliphatic polyester (F-3) is, for example, a polymer having the repeating unit (P) represented by the general formula (1) described above and the repeating unit (Q) represented by the general formula (2) described above, which is an aliphatic polyester having a structure obtained by polymerization of the components (A), (B), and (C) described above. Examples thereof include poly(butylene-succinate-ε-caprolactone (PBS-CL) and the like. Also, the aliphatic polyester copolymers of the groups II to VI are included.

As the above-mentioned various aliphatic polyester resins, one having a weight average molecular weight of 40,000 or more, usually 100,000 to 250,000, preferably 120,000 to 200,000 in terms of standard polystyrene by GPC may be used.

Also, as the other aliphatic polyester (F), an aliphatic polyester resin (F') may also be used, which contains a urethane bond in the molecular chain obtained by the reaction of the aliphatic polyester (F-1), (F-2) and/or (F-3) with a small amount of a chain extender such as a diisocyanate compound or a diepoxy compound. The aliphatic polyester resin containing a urethane bond corresponds to the above-mentioned aliphatic polyester resin converted to have an increased molecular weight with preferably an aliphatic diisocyanate compound.

Examples of the aliphatic diisocyanate compound include hexamethylene diisocyanate, lysine diisocyanate methyl ester {$OCN-(CH_2)_4-CH(-NCO)(-COOCH_3)$}, trimethylhexamethylene diisocyanate, and the like. Among them, hexamethylene diisocyanate is preferred. Also, the aliphatic polyester resin containing a urethane bond has a weight average molecular weight within the range of 40,000 or more, usually 100,000 to 250,000, and preferably 120, 000 to 200,000.

Further, among the low molecular weight aliphatic polyester copolymers (D) having the units represented by the general formulae (1) and (2) described above, those having the above-mentioned weight average molecular weight in terms of standard polystyrene by GPC may also be used as the other aliphatic polyester (F).

The weight compositional ratio of the aliphatic polyester copolymer to the other aliphatic polyester in the polyester blend resin composition of the group VII of the present invention is from 90/10 to 10/90, preferably from 90/10 to 30/70. If the aliphatic polyester copolymer is much more than 90, the effect of compounding the other aliphatic polyester is not exhibited while if it is much less than 10, the sufficient effect of controlling the biodegradation rate after having balanced the mechanical properties becomes impossible.

The weight average molecular weight of the low molecular weight aliphatic polyester copolymer composed of the repeating unit (P) represented by the general formula (1) described above and the repeating unit (Q) represented by the general formula (2) described above is 40,000 or more, usually one in the range of 100,000 to 350,000, preferably 70,000 to 250,000.

In the group VII of the present invention, the above-mentioned other biodegradable resin (b) may further be added to the aliphatic polyester copolymer (a) . Furthermore, besides the above-mentioned other biodegradable resin (b), members of the above-mentioned other various additives (c) may be added as needed.

By molding the polyester blend resin composition of the group VII of the present invention, various moldings of the group VII of the present invention as those explained in detail with respect to the group I of the present invention can be obtained.

The moldings of the aliphatic polyester blend resin composition of the group VII of the present invention include film-like moldings.

As the molding method, injection molding, extrusion molding, compression molding, transfermolding, thermoforming, flowmolding, extrusion foaming molding, extrusion coating, blow molding, calender molding, lamination molding, or the like can be used.

Hereinafter, preferred examples of the biodegradable moldings of the aliphatic polyester blend resin composition of the group VII of the present invention will be described.

Hereinafter, novel aliphatic polyester copolymers (in some cases, symbol (a) was attached) provided by the inventions 1 to 5 and the groups II to VI are referred to simply as aliphatic polyester copolymers.

(Method of kneading a high molecular weight aliphatic polyester biodegradable resin)

As the method of kneading an aliphatic polyester copolymer with other biodegradable resin (b) and/or other additive (c), a general method may be preferably used. Specifically, pellets or powder, solid chips, or the like of the raw material resin may be mixed by dry process in a Henschel mixer or a ribbon mixer and supplied to a known melt-mixer such as a single or twin screw extruder, a Banbury mixer, a kneader, or a mixing roll, and be melt-kneaded therein.

(Pile)

A biodegradable pile comprising a molding of the aliphatic polyester blend resin composition of the group VII of the present invention can be obtained by molding the biodegradable resin composition of the group VII of the present invention.

The shape of the pile includes rod-like, round bar-like, wedge-like, T-like, dog spike-like, spike-like, andpin-like shapes. The tip of the pile on the side that is driven into the ground may be sharp-pointed, not sharp-pointed but in the form of a hollow cylinder (tube-like), or of another configuration. The pile may be provided at a part thereof with at least one hole for passing a rope for drawing the trunk or branch of a tree therethrough. A protrusion for preventing disengagement maybe provided on an outside intermediate part of the pile or a protrusion for support may be provided on the ground side of the top of a T-shaped pile or other-shaped piles.

As fertilizers and/or chemicals contained in the inside of a pile may be exemplified the following.

The fertilizers include natural fertilizers such as droppings of livestock, fish meal, oilseed meal, compost, and plant ash; nitrogen fertilizers such as ammonium sulfate and urea; phosphorus fertilizers such as ammonium phosphate and superphosphate of lime; potassium fertilizers such as potassium chloride, potassium sulfate and potassium nitrate; composite fertilizers thereof, compounded fertilizers compounded with the following chemicals; and the like.

As the chemicals, there may be added nutrients, growth regulators, minerals, pH adjusters, and soil improvers, and in addition thereto, agricultural chemicals such as herbicides, fungicides, insecticides as far as they do not prevent the biodegradability of the pile for a predetermined period of time.

The shape of the fertilizers and/or chemicals contained in the inside of the pile may be powder, grains, jelly, liquid or mixtures thereof, or further they may be degradable or water-soluble capsules containing them, or those wrapped by a biodegradable resin film.

The method of making the pile for containing fertilizers and/or chemicals in the inside thereof includes the following methods.

(a) A method in which the inside of the pile is made into the form of a hollow vessel, in which fertilizers and/or chemicals are housed, thereby letting the fertilizers and/or chemicals be released into the ground with a lapse of time according as the biodegradable pile is degraded or dissolved.

(b) A method according to (a) described above, in which at least one small hole, preferably a number of small holes are provided at a lower side or bottom part of the pile and the fertilizers and/or chemicals are housed in the part of the hollow vessel, thereby letting the fertilizers and/or chemicals be supplied with a lapse of time into the

ground through the small holes. The pile may be designed to have more durable days so that the fertilizers and/or chemicals can be replenished again in the part of the hollow vessel.

(c) A method according (b) described above, in which the pile is in the form of a tube and the fertilizers and/or chemicals is housed in the inside of the tube, thereby letting the fertilizers and/or chemicals be supplied with a lapse of time into the ground through an open bottom portion thereof.

In the methods (a) to (c) described above, the fertilizers are filled through a vessel-like open end of the pile. Of course, a port for filling fertilizers may be provided on a side or bottom part of the pile.

The open end may be closed with a lid or a stopper so that the contents do not come out. As the material of the lid or the like, a biodegradable resin of the same kind as or of the different kind from that of the pile may be used..

After the pile is driven into the ground, the fertilizers and/or chemicals may be filled through the open end or the pile may be replenished again with the fertilizers and/or chemicals.

(d) A method in which the pile is provided with a number of fine pores and the fertilizers and/or chemicals is stored in the fine pores (in this case, filling powder, or impregnating in the form of a liquid or letting it be contained after drying), is also included.

(e) A method in which the fertilizers and/or chemicals are kneaded with the above-mentioned biodegradable resin used in the present invention and molded into a form of a pile. The pile is driven into the ground as it is.

(f) A method in which the biodegradable resin is molded into a form of a thin-walled case-like pile into which the pile-like product of the fertilizer and/or chemical obtained in (e) is stored. In this case, the pile in which the fertilizers and/or chemicals is stored is driven into the ground and the fertilizers and/or chemicals are supplied to the ground with a lapse of time according as the case made of the biodegradable resin is degraded or dissolved.

It is to be noted that the fertilizers and/or chemicals to be stored in the case-like piles may be housed in the form of grains or powder without molding it into a form of a pile. This corresponds to the method (a) or (b) described above.

As the method for molding the pile, various molding methods such as injection molding, extrusion molding, transfer molding, compression molding, and the like may be used.

The sizes of the pile are not particularly limited and those having a length of several cm to several m and a diameter of several mm to several tens of cm may be used.

To drive the pile into the ground, it is hit with a hammer or the like in the case where the pile is large. On the other hand, in the case of a small pile or in the case where the ground is soft, the pile may be inserted by hand. The pile to which an inorganic filler is added has increased strength so that it becomes easy to be driven in with a hammer or the like even when it has a small thickness.

In the case of a biodegradable pile molded from the aliphatic polyester blend resin composition of the group VII of the present invention, piles having improved biodegradability can be readily obtained by using aliphatic polyester resins. Further, piles containing fertilizers and/or chemicals in the inside of the biodegradable pile may be advantageously used for vegetation, civil engineering, construction, underwater construction or the like, or either on a horizontal plane or on an oblique plane since the fertilizers and/or chemicals are supplied from the pile so that the time and trouble of nourishing, etc. can be saved, the utilization of the fertilizers and/or chemicals are improved, and after use, the pile is biodegraded. Because it is designed to degrade in the natural environment in the case where it is no longer necessary, and in addition, to contain the fertilizers and/or chemicals in the inside of the pile, it can be used for breeding plants such as for domestic horticulture, for orchards, for farming, for planting, for paddy fields, and for water culture.

(Thick-walled vessels, thin-walled vessels, drain materials, seedling pots)

The aliphatic polyester copolymer or composition thereof according to the group VII of the present invention can be molded into thick-walled vessels, thin-walled vessels, drain materials, seedling pots, and the like, in addition to the above-mentioned articles.

Taking the above-mentioned vessel as one example, the molding may include a primary molding into preforms such as pellets, plates, parisons, and the like and a secondary molding in which these are subsequently molded into a vessel.

The vessel includes those for foods, those for toiletry, those for medicines, those for transporting general substances, and bottles, trays, planting vessels, and the like for use as a vessel for cultivating plants and they can contain liquid, cream or solid ones.

As the molding method, extrusion molding, injection molding, blow molding, compression molding, transfer molding, thermoforming, flow molding, lamination molding, or the like can be used.

Also, in the case where bottles or the like are molded from aparison, vacuum molding, air-pressure forming, vacuumair-pressure forming or the like can be used.

Taking bottles for a beverage as an example for explanation of a vessel, stretch blow molding is used for

bottles for a beverage taking reduction in weight and the strength of the vessel into consideration.

The preform (parison) includes a screw portion, a flange portion playing a role of supporting the preform at the time of stretch molding, and a preform body closed-end cylinder.

It is to be noted that as for the stretch blow molding method, the molding is possible either by a cold parison method in which the process is divided into a preform molding step and a stretch blow molding, performed in two steps, or a hot parison method in which the preform molding step and the stretch blow molding step are performed in a series of steps.

(Cushioning sheet having closed cells (also called "air foam" or "Puchi Puchi sheet")

(1) Structure of a cushioning sheet having closed cells

In the cushioning sheet having closed cells of the present invention, an isolated air chamber is formed between a height 3 of an embossed film 2 and a flat surface base film 1 (Fig. 3).

Further, the cushioning sheet having closed cells may be one that uses two embossed films 2, 2, which are bonded to each other such that the corresponding heights 3, 3 can be registered to form an isolated air chamber (Fig. 4).

Furthermore, the closed cell buffer sheet may be one that uses the base film 1 between two embossed films 2, 2 to bond them to each other, thereby forming an isolated air chamber on both sides of the base film 1 (Fig. 5).

Hereinafter, in order to simplify the explanation, a cushioning sheet having closed cells made of one embossed film 2 and one base film 1 will be described.

In the cushioning sheet having closed cells in accordance with the present invention, the size of the projection 3 is as follows. In the case where the bottom of the projection 3 is of a circle, it has a diameter of about 1 to 100 mm and a projection of about 1 to 50 mm. The number of the projection 3 is 10 or more, preferably 100 to 100,000, per $1/m^2$. The shape of the height 3 is not particularly limited and may be in various forms such as circular bar-like, rod-like, cone-like, pyramid-like, semi-spherical, spheroidal, rugby ball-like, ovoidal, and cocoon-like forms. In the case where the bottom is not of a circle, an equivalent radius used in place of a diameter is to be within the above-mentioned range.

The arrangement of the projection 3 is not particularly limited and may be arranged at random or zigzaggedly. In production, it is preferred that the projection 3 be arranged on the embossed film 2 regularly, longitudinally and bilaterally.

(2) Material of a cushioning sheet having closed cells

In the group VII of the present invention, the embossed film 2 and/or the base film 1 are made of the high molecular weight aliphatic polyester biodegradable resin alone or a composition of it with other biodegradable resin.

Therefore, either one of the embossed film 2 and the base film 1 is made of the above-mentioned high molecular weight aliphatic polyester biodegradable resin alone or a composition of it with other biodegradable resin. The base film 1 to be combined with the high molecular weight aliphatic polyester biodegradable resin alone or with at least one other constituent may be preferably of the same material or maybe made of other biodegradable resin. Depending on the application, it may be an ordinary nonbiodegradable film.

In the case where a film is molded as described above, the film has a smooth curve of shrinkage and when the film is attached to a vessel and allowed to shrink, occurrence of wrinkles at this time can be prevented. This property is still maintained when a cushioning sheet having closed cells is produced from the above-mentioned film.

In the case where the embossed film 2 and the base film 1 are each a multilayer film, the above-mentioned material is used for the layer (B).

The aliphatic polyester copolymer (a) and other biodegradable resin (b) that constitute the layer (A) of the multilayer film may be the same as or different from the aliphatic polyester copolymer (a) and other biodegradable resin (b) that constitute the layer (B) of the multilayer film.

(3) Additives for resins

To the above-mentioned aliphatic polyester copolymer (a) and other biodegradable resin (b), these may be optionally added the above-mentioned additives for resins.

It is to be noted that the addition amount of the finely powdered silica is most preferably within the range of 0.1 to 3 parts by weight based on 100 parts by weight of the sum of the aliphatic polyester copolymer (a) and other biodegradable resin (b) in respect of exhibition of the above-mentioned effects.

When the cushioning sheet having closed cells is used for packaging electronic components such as IC, static electrification of the sheet raises a problem, so that electroconductive materials such as carbon, metal powder, electroconductive resins, etc. as well as nonionic, cationic, or anionic known antistatic agents are used.

(4) Processing into raw material films

The powdery or pellet-form high molecular weight aliphatic polyester biodegradable resin made of the aliphatic polyester copolymer and other biodegradable resin (b) can be molded into a film or sheet by various conventional molding methods such as an inflation method and a T-die method because of its increased melt viscosity.
The obtained films can be used as the base film 1 or embossed film 2 as they are.

(4.1) Monolayer film

In the group VII of the present invention, the embossed film (2) and/or base film (1) can be molded by a conventional method by using a composition containing the aliphatic polyester copolymer and other biodegradable resin (b), in which the aliphatic polyester copolymer is alone or together with at least one constituent.
For example, films can be produced by T-die molding, inflation molding, blow molding, or the like. Films may be monoaxially or biaxially stretched.
The stretched films may be used also as a film for a shrinkable-type cushioning sheet having closed cells.
The conditions in obtaining various film-form moldings, in particular, in molding the aliphatic polyester blend resin composition of the group VII of the present invention, will be described in more detail.
The molding includes a primary molding into pellets or the like and a secondary molding converting them into a sheet, film or tape (these including monoaxial or biaxial stretched products, the stretching increasing transparency and mechanical strengths thereof), and further includes processing the films into a bag, in particular a degradable trash bag, a water-draining bag, a shrink film (which may be directly film-formed), a perforated film, a mulching (herb controlling) film for agriculture, a vegetation film, a mat film, a root-covering film, a water-draining sheet, a cultivating sheet or the like; processing a laminate film into a card or the like, and processing the film into a cushioning sheet having closed cells, a buffer with ridges and grooves, or the like.
In the case of film-formed moldings such as films and sheets, T-die molding, inflation molding or calender molding is usually used as the molding method and these may be non-stretched or mono- or biaxially stretched.
Hereinafter, preferred examples of film formation in particular by an inflation method will be described.
First, in the aliphatic polyester copolymer, the ratio of the repeating unit (Q) derived from lactone to the repeating unit (P) derived from the aliphatic polyester resin is preferably 70 to 5% by weight of the former to 30 to 95% by weight of the latter (with the sum of both being 100% by weight). In this case, it is particularly preferable that the upper limit of the former be set to 60% by weight or less and the range of 40 to 10% by weight of the former to 60 to 90% by weight of the latter is preferable.
In this case, if (Q) is above 70% by weight, the mechanical properties of the film or the like molding at high temperatures tend to be decreased while if (Q) is below 5% by weight, there is the possibility that disintegrability based on biochemical degradation will be decreased. The same holds true for this tendency outside the range of 40 to 10% by weight.
On the other hand, if the amount of (P) is above 95% by weight, the biodegradation tends to become slower. On the contrary, when the amount of (P) is below 30% by weight, there is the possibility that the heat resistance of the aliphatic polyester copolymer will be decreased when it is molded into, for example, a film. The same holds true for this tendency outside the range of 60 to 90% by weight. On other points, the same as that described in detail with respect to the group I of the present invention is applicable.
As the above-mentioned applications, since the moldings have biodegradability and give no problem to the environment when discarded in soil, such as land reclamation, in particular, films (for example, mulching film for agriculture), sheets, foamed sheets and the like, and their secondary moldings and the like can be preferably used.

(4.2)Multilayer film (it is to be noted that general multilayer films referred to hereinbelow may also be referenced.)

In the group VII of the present invention, a biodegradable multilayer film containing a layer (A) made of a high molecular weight aliphatic polyester biodegradable resin composition may be used as the embossed film (2) and/or base film (1).
The constitution of the multilayer film sheet used for the above-mentioned purpose includes one having one layer (A) and another layer (B), one having two layers (A) and one layer (B) sandwiched therebetween, one having plural layers (A) and plural layers (B) alternately provided, and so forth. In particular, one having two layers (A) and one layer (B) sandwiched therebetween is preferable. In this case, the compositions of the two layers (A) that sandwiches the layer (B) may be the same or different.
The biodegradation rate is higher in the layer (B) than in the layer (A). Therefore, comparing films having the

same thickness, the film having two layers (A) and one layer (B) sandwiched therebetween have good biodegradability than the film having only the layer (A).

Further, the film having two layers (A) and one layer (B) sandwiched therebetween has improved lateral tensile strength.

The thickness of the multilayer film is not particularly limited and is, for example, 1 μm to 10 mm, preferably, 10 μm to 1.0 mm. The ratio of the thickness of the layer (A) to that of the layer (B) is not particularly limited and may be determined depending on the purpose. The thicknesses of the two layers (A) sandwiching the layer (B) may be the same or different.

(4.3) Method of molding multilayer films

The multilayer film sheet can be molded by a co-extrusion method in a conventional manner by using a raw material for constituting the above-mentioned layer (A) and a raw material constituting the above-mentioned layer (B).

For example, use of a coextruder enables production of multilayer films by T-die molding, inflation molding or blow molding. In the case of coextrusion, a flat die or a circular die can be used.

Also, the multilayer film may be produced by individually molding films corresponding to the above-mentioned layers (A) and (B) by a T-die method, an inflation method, a blow method, a calendering method, a casting method or the like and then bonding or fusing them.

The multilayer film may be mono- or biaxially stretched.

The stretched multilayer film can be used as a film for a shrink-type cushioning sheet having closed cells.

(4.4) Processing into an embossed film

As the above-mentioned embossed film 2, the above-mentioned base film 1 is used. The embossed film 2 is obtained by using the base film 1 and subjecting it to vacuum molding, forming by compressed air, vacuum/forming by compressed air or the like with heating as needed to provide a large number of projections 3 on the entire surface thereof.

(5) Processing into a cushioning sheet having closed cells

The flat surface base film 1 and the embossed film 2 having a number of projections 3 thus obtained are bonded by heating or with an adhesive to give rise to a cushioning sheet having closed cells.

The above-mentioned cushioning sheet having closed cells may be laminated with a craft paper or cardboard on its height side or flat surface side.

The above-mentioned cushioning sheet having closed cells is not particularly limited in its application but preferably it is used for articles that have the possibility that they are left in the natural environment after use.

For example, it can be used for precision apparatuses, electronic components, ceramic ware, glassware, furniture, fruits, confectioneries, cardboard lining, and other articles and is excellent in each of properties such as cushioning, heat insulation, moisture proof, weight reduction, and hygiene.

As described above, a cushioning sheet having closed cells is obtained that has improved heat resistance and biodegradability as well as good balance between moldability of a shrink film, physical properties upon use (in particular, having sufficient tensile strength two-dimensionally), and biochemical degradability after being discarded. In particular, it has a degradation ratio of above 20%, preferably above 30% after cultivation for 4 weeks in a city sludge as prescribed in JIS K6950.

(Foamed body)

The aliphatic polyester biodegradable resin composition made of the aliphatic polyester copolymer of the group VII of the present invention and other biodegradable resin (b) can be made into a foamed body by adding a heat decomposing foaming agent or a low-boiling solvent, or by adding water or carbon dioxide.

The foaming agents include decomposing type foaming agents that generate a gas when being heated and decomposed, for example, inorganic foaming agents such as sodium bicarbonate, and organic foaming agents such as azodicarbonamide, N',N'-dinitrosopentamethylenetetramine, p,p'-oxbis(benzenesulfonylcarbazide), azobisisobutyronitrile, and benzenesulfonyl hydrazide.

Similarly, evaporating type foaming agents that evaporate to cause foaming may also be used. Examples of such foaming agent include hydrocarbons such as ethane, propane, butane, pentane, hexane, heptane, ethylene, propylene, and petroleum ether, halogenated hydrocarbons such as methyl chloride, monochlorotrifluoromethane, dichlorodifluoromethane, and dichlorotetrafluoroethane, carbon dioxide gas, nitrogen gas, and water.

The addition amount of such foaming agent is preferably 0.1 to 30% by weight, in particular 0.5 to 10% by weight based on the weight of the resin or composition thereof. Further, organic acids such as stearic acid, oxalic acid, salicylic acid, phthalic acid, benzoic acid, citric acid, and tartaric acid, inorganic acids such as boric acid, salts of the above-mentioned organic acids or inorganic acids, carbonates such as sodium carbonate, zinc oxide, calcium oxide, titanium oxide, silica, alumina, clay, kaolin, diatomaceous earth, and the like may be added as a foaming aid, foam stabilizer, or a nucleating agent in suitable amounts.

The foaming ratio may differ depending on the purpose for which the foamed body is used; in the case of, for example, a large food-packaging box that is required of relative high strength, the ratio is preferably 1.5 to 6 times. In the case of a small tray for food, heat insulating material, cushioning material, or the like that is not required of so high a strength, the ratio is preferably about 3 to 25 times.

The size of the bubbles of the foamed body is 1.0 cm or less, preferably 0.01 mm or more, and particularly preferably 0.1 to 5 mmϕ. If the size is above 1 cmϕ, the roughness of the surface of the foamed body is conspicuous and the foamed body tends to become brittle.

It is to be noted that in the case where the foamed body is used as a heat insulating material, it is desirable that it has a closed cell ratio of 90% or more. The lower the closed cell ratio, the lower the heat insulating property, which is undesirable.

A film made of a foamed body with small bubbles having a diameter (ϕ) on the order of 0.01 mm has glossiness and can be printed or painted thereon so that it can be used for packaging cosmetic soap or the like.

A foamed body with bubbles having a diameter (ϕ) on the order of 0.1 to 5 mm may be made either open cell type or closed cell type, and used in various applications. In particular, a moisture retention box for packaging food that is made of a foamed body of a closed cell type with a foaming ratio within the range of 1.5 to 6 times and a tray for food, a heat insulating material or a cushion made of a foamed body having a foaming ratio within the range of 3 to 25 times may be exemplified.

On the other hand, a foamed body with large bubbles having a diameter on the order of several mm of an open cell type can be used as a throw-away scrubber for use for cleaning vehicles, bathing in hotels or the like.

(Plant protecting material)

The aliphatic polyester biodegradable resin composition made of the aliphatic polyester copolymer of the group VII of the present invention or other biodegradable resin (b) may be used to obtain a plant protecting material.

Also, the plant protecting materials of the present invention may be optionally blended with the above-mentioned other biodegradable resin and/or various additives for resins in order to improve the mechanical properties of a net as the plant protecting material as far as they do not inhibit the biodegradability of the resin components.

The plant protecting materials may contain repellents in order to prevent eating damages by animals. Examples of the repellent include organic compounds such as terpene-based compounds, cycloheximide, and nonanoylvanilylamide, and inorganic compounds such as copper powder and sulfur powder.

The above-mentioned composition is kneaded and molded into a plant protective material by a molding machine. The shape of the plant protecting material includes a net, a sheet, a mesh sheet, a grid, a bar, a tube, and the like. In the present invention, these are collectively called a plant protecting material.

A net is made of fibers combined crisscross and fixed. To combine and fix the warp and weft, weaving, bonding, or fusing is performed. The net has the same thickness, width and height as those of the above-mentioned sheet. The thickness of the fiber or fiber bundle that constitutes the net may vary depending on the kind of the plant, the kind of the animal that causes the damage, the strength of wind and so on but preferably is 100 to 10,000 deniers. Also, the mesh of the net is 0.1 to 100 mm. The net may be wound around the trunk of a tree directly or may be used like a fence by fixing it to supports that are arranged as surrounding a fruit tree.

The sheet has a thickness of 0.1 mm to 10 mm, preferably 0.5 mm to 5 mm. The height and width of the sheet are not particularly limited. A sheet may be cut from a wide section in compliance with the size of the plant or a sheet having a desired width and a desired length may be formed by using plural sheets molded in accordance with a predetermined standard. The sheet may be provided with grid-like unevenness on the surface thereof to have a reinforcing effect. The sheet is used in the same manner as the net.

The mesh sheet is one formed by perforating the above-mentioned sheet or one molded into a perforated sheet. The form of the hole that can be used includes circle, tetragon, hexagon, and any other forms. The mesh sheet has the same thickness, width, and height as those of the above-mentioned sheet. The thickness of the warp member and weft member that constitutes the mesh is 0.1 to 10 mm, and the aperture of the mesh is 0.1 to 10 mm. The mesh sheet is used in the same manner as the sheet.

The grid has an overall configuration of something like a barrier or fence has the warp member and the weft member of the mesh sheet being in the form of a bar or plate and is used in the case where strength is needed. The thickness or maximum width of the members is 1 to 100 mm and the mesh of the grid is 10 to 500 mm. The warp and

weft members are fitted, bonded, or fused to each other at their intersection points. The grid may be produced by preliminarily molding the material into a desired form, by molding the material into parts of a unit form and combining then, or molding the material into warp and weft members and fitting, bonding, or fusing them at their intersections. The grid can be used to cover the entire plant or surround the periphery of fruit trees or the like.

The bar or tube is pegged into the ground around a plant in the form of a fence to prevent the invasion of animals and at the same time it serves as a support for preventing the leaning or falling of the plant.

As the method of molding the plant protecting material, there may be used various molding methods such as injection molding, extrusion molding, transfer molding, compression molding, and blow molding.

For example, as the method of molding a net, the molding may be performed by a diagonal knot fixing method for making a net for containing Japanese mandarins or by a square knot fixing method, or a method in which warp and weft are extruded from separate dies and fused. Warp and weft may be knitted to be heated and fused. Also, the yarn that forms a net may be stretched in advance.

The method of molding the sheet includes T-die extrusion, blow molding, calender molding, and the like.

Besides, as the method of molding mesh or grid, injection molding methods for plastic-made basket, sieve basket, golf club separator, net or fence for vegetation, and the like may be used.

Also, it may be fabricated by coating the above-mentioned high molecular weight aliphatic polyester biodegradable resin, dissolved or molten, on a net made of cellulose fiber.

Concerning the size of the plant protecting material, for example, a large size one having a width of 0.3 to 3 m or pieces cut from them to any desired size may be exemplified.

The plant to which the plant protecting material is applied is not particularly limited and includes any of trees, herbs, farm crops, and the like.

The plant protecting material can be used by winding it around the trunk or the like of a plant, by covering specified portion of the plant, such as roots, buds, leaves, flowers, fruits, or the like, by sheathing a plant in the form of a dome, or by surrounding a plant in the form of a fence.

Also, among the plant protecting materials, those molded to be thin can be used for controlling temperature, light, or the like.

By the group VII of the present invention, plant protecting materials having improved biodegradability by use of the aliphatic polyester resin can be easily obtained. The plant protecting material of the present invention can be utilized for the prevention of eating damages of plants by animals and for other purposes.

(Card)

A card, one of the moldings in the present invention can be obtained by molding a resin composition containing the high molecular weight aliphatic polyester biodegradable resin and optionally a filer kneaded therein.

The base material has suitable properties such as rigidity, durability, resistance to bending, resistance to water, resistance to chemicals, water proofing property, surface smoothness, gloss, processability, and resistance to heat of resin alone at a blocking temperature of 100°C or more. The card retains mechanical properties such as durability, rigidity, molding processability, mechanical strength, hardness, impact strength, dimension stability, and resistance to bending as well as excellent printability of the information recording layer with a magnetic component or heat-sensitive component and thus exhibits gate properties for machine reading/writing in a reading/writing apparatus. Further, after it is discarded, it can be spontaneously degraded sufficiently due to its improved biodegradability.

By having a specified composition, the card exhibits increased hardness, improved dimension stability, and improved printability of the recording layer, in particular the printability of the magnetic component described hereinbelow, without decreasing the biodegradability.

As the filler used in the group VII of the present invention, those substances described in the common matter described above. Preferred examples thereof include calcium carbonate, mica, calcium silicate, white carbon, finely powdered silica, asbestos, pot earth (calcined), glass fiber, and the like and mixtures thereof. In the case where the filler is in the form of fiber, the card has an improved resistance to bending in the direction of stretching.

A card, one of the moldings of the group VII of the present invention uses the above-mentioned resin or composition as a main component of the card base material. The resin component that constitutes them has a complete biodegradability. It is to be noted that the polyesters are classified into an aliphatic family from their structure and it has been already known that the aliphatic polyester in the group VII of the present invention (except the novel aliphatic polyester copolymer provided in the present invention) has biodegradability ("Tales on Biodegradable Plastics", Japanese Standard Association, p.59-66 (1991)).

By use of the resin prescribed in the group VII of the present invention or composition thereof, the above-mentioned card base material has characteristics equivalent to those of conventional cards from polyester or vinyl chloride resin as the material in respect of rigidity, molding processability, mechanical strength, hardness, impact strength, dimension stability, resistance to bending, surface smoothness, gloss, resistance to water, resistance to chemicals, and water proofing property.

Further, by biaxially stretching the resin having the composition of the group VII of the present invention, the obtained sheet-like card base material has improved characteristics such as rigidity, molding processability, mechanical strength, impact strength, dimension stability, and resistance to bending.

The above-mentioned card base material is produced by molding the biodegradable and thermoplastic resin composition obtained as described above into a form of a sheet, usually by a known extrusion method, further processing the sheet by biaxial stretching, and then calendering the sheet. It is to be noted that in addition to the monolayer construction, the card base material may be of a multilayer construction produced by making plural sheets made of the same material or made of different resin materials having different characteristics.

To the card obtained as described above, printing/processing methods may be used as well as those for conventional paper or plastic cards. Characters, pictures or the like visible information/design parts are printed on the card base material by a printing method such as offset printing, screen printing, or gravure printing, followed by being processed to a card size by use of a punching machine to produce a card.

Further, the card of the group VII of the present invention may be formed of an information recording layer such as a magnetic recording layer or a heat-sensitive recording layer. The magnetic recording layer and the heat-sensitive recording layer may also be formed on the same card. It is to be noted that the method of forming a magnetic recording layer is to coat a magnetic recording material with a coating solution containing a binder having dispersed therein or laminating a sheet on which a magnetic recording layer is formed, or the like method. Similarly, the heat-sensitive recording layer may be formed by coating a known heat-sensitive recording material with a coating solution containing, for example, a heat-sensitive leuco dye, a heat-sensitive diazo dye, or the like or providing a thin film of a low-melting metal such as tin or aluminum.

In the group VII of the present invention, use of the above-mentioned biodegradable resin composition results in an improvement of capability of forming an information recording layer, in particular a magnetic recording layer, by printing on the base material.

The composition that constitutes the card provided by the group VII of the present invention when it contains the resin alone has a biodegradability in terms of degradation ratio of preferably above 30%, and more preferably above 60%, after cultivation for 4 weeks in a city sludge as prescribed in JIS K6950 described above. The biodegradable resin composition provided by the present invention can be used in a wide variety of applications as a substitute for conventional polyolefins. In particular, it is used preferably for use in articles that are prone to be left in the environment.

As described above, the card of the group VII of the present invention is excellent in biodegradability, rigidity, toughness, and heat resistance at a blocking temperature of 100°C or more. Addition of fillers to the resin provides the card with excellent mechanical properties such as rigidity, molding processability, mechanical strength, hardness, impact strength, dimension stability, and resistance to bending and with gate properties that makes the card usable in a mechanical reading/writing machine and allows the card to give less adverse influence to the environment due to disposal when it is left in the nature without being burned at the time of disposal, since its biodegradability by microbes has been much more improved.

Further, since it has excellent mechanical strength, the thickness of the biodegradable resin used, that is, use amount can be reduced so that the production cost can be reduced and in addition since it has substantially the same strength and resistances as in the case where conventional plastics are used, the biodegradable resin can sufficiently bear applications to current disposable cards.

The biodegradable resin used in the card of the group VII of the present invention may have somewhat poor physical properties and processability in some aspects as compared with the conventional plastics but can be improved in the physical property and processability by mixing therewith additives and nondegradable plastics to such an extent that the degradability is not decreased.

(Laminate)

The biodegradable laminate of the group VII of the present invention includes a biodegradable resin layer (1) made of the above-mentioned aliphatic polyester biodegradable resin and at least one sheet-like article (2) selected from the group consisting of paper, pulp sheet, and cellulose-based filn.

In the group VII of the present invention, the biodegradable resin may be compounded with the above-mentioned additives for resins.

For example, use of a heat stabilizer gives rise to effects of increasing impact strength (dart impact value, or Izod impact value), and reducing the fluctuations in elongation at break, strength at breakage, and impact strength. Also, a crosslinking agent, a herbicide, or the like can be optionally added.

The above-mentioned finely powdered silica is heat-kneaded in the mixture of the high molecular weight aliphatic polyester biodegradable resin in the group VII of the present invention, when considerably strong shear force is exerted to disentangle the secondary agglomerate particles, thereby exhibiting an effect of preventing blocking in

the laminate as a product.

The resin or resin composition for obtaining the biodegradable resin layer (1) used in the group VII of the present invention has a melt flow index of 0.5 to 100 g/10 min, preferably 1 to 20 g/10 min, and particularly preferably 1 to 5 g/10 min.

The thickness of the biodegradable resin layer (1) is selected depending on the purpose and is not particularly limited; for example, it is 0.1 μm to 10 mm, preferably 1 μm to 1 mm, and particularly preferably 10 μm to 0.1 mm.

The sheet-like article (2) used in the group VII of the present invention may be any material that is degradable in the natural environment, examples of which include paper, pulp sheet, and cellulose film.

The biodegradable laminate of the group VII of the present invention may be constructed by one biodegradable resin layer (1) and one sheet-like article (2); two biodegradable resin layers (1) and one sheet-like article (2) sandwiched therebetween; two sheet-like articles (2) and one biodegradable resin layer sandwiched therebetween; or plural biodegradable resins layers (1) and plural sheet-like articles (2) alternately laminated.

The biodegradable laminate of the group VII of the present invention is used in general packaging materials, compost bags, paper ware, cups (for other than foods), and the like.

In the biodegradable laminate of the present invention, there are imparted a water proofing property and a heat sealing property by the biodegradable resin layer (1). In addition, since the biodegradable resin layer (1) has good biodegradability, it loses its form within one year when it is left in the natural environment.

According to the group VII of the present invention, there are obtained biodegradable laminates having well balanced properties in respect of moldability, physical properties upon use, degradability after disposal, and the like.

Further, as compared with the case where the whole is produced from the biodegradable resin, the cost for the raw material is reduced accordingly by the amount corresponding to that of the paper used.

(Multilayer film)

The group VII of the present invention relates to a biodegradable multilayer film or sheet including a layer (A) made of a high molecular weight aliphatic polyester biodegradable resin composition composed of 100 parts by weight of an aliphatic polyester copolymer (a) and another biodegradable resin (b) andahighmolecular weight aliphatic biodegradable polyester resin (B) other than the high-polymer aliphatic polyester biodegradable resin (unless otherwise described specifically, both are simply called multilayer film/sheet in the group VII of the present invention). It is to be noted that the multilayer film/sheet is also called laminate film/sheet or composite film/sheet.

The obtained powder or pellet-like additive-containing resin composition can be processed into films or sheets by molding it by various conventional molding methods such as an inflation method or a T-die method, because of its improved melt viscosity.

The biodegradable multilayer film/sheet of the group VII of the present invention includes the layer (A) of the high molecular weight polymer aliphatic polyester biodegradable resin made of the above-mentioned aliphatic polyester copolymer alone or a blend thereof with the other biodegradable resin (b) and the layer (B) of the different formulation.

The construction of the multilayer film/sheet includes, for example, one having one layer (A) and one layer (B), one having two layers (A) and one layer (B) sandwiched therebetween, one having plural layers (A) and plural layers (B) alternately provided, and so on. In particular, one having two layers (A) and one layer (B) sandwiched therebetween is preferable. In this case, the compositions of the two layers (A) that sandwiche the layer (B) may be the same or different.

The biodegradation rate is higher in the layer (B) than in the layer (A). Therefore, comparing film/sheets having the same thickness, the film/sheet having only the layer (A) has good biodegradability than the film/sheet having two layers (A) and one layer (B) sandwiched therebetween.

Further, the film/sheet having two layers (A) and one layer (B) sandwiched therebetween has improved lateral tensile strength.

The thickness of the multilayer film/sheet is not particularly limited and, for example, the sheet can be used in a thickness of 1 μm to 1 mm, preferably 10 μm to 0.5 mm, and the sheets can be used in a thickness of 0.1 mm to 10 mm, preferably 0.5 mm to 5 mm. The ratio of the thickness of the layer (A) to that of the layer (B) is not particularly limited and may be determined depending on the purpose. The thicknesses of the two layers (A) that sandwiches the layer (B) may be the same or different.

The multilayer film/sheet can be molded by a co-extrusion method in a conventional manner by using as a raw material a composition of the high molecular weight biodegradable aliphatic polyester resin for constituting the above-mentioned layer (A) and the high molecular weight biodegradable aliphatic polyester resin constituting the above-mentioned layer (B).

For example, use of a coextruder enables production of multilayer film or sheet by T-die molding or inflation molding, multilayer extrusion moldings by blow molding, profile shape by profile molding, or other multilayer pipe and tube covered moldings. In the case of coextrusion, a flat manifold die is used for the multilayer sheet and a flat die or

a circular die can be used for the multilayer film.

Also, the multilayer film/sheet may be produced by individually molding film/sheets corresponding to the above-mentioned layers (A) and (B) by a T-die method, an inflation method, a blow method, a calendering method, a casting method, or the like and then bonding or fusing them.

The multilayer film/sheet may be monoaxially or biaxially stretched.

The biodegradable multilayer film/sheet provided in the group VII of the present invention can be used in a variety of applications as a substitute for the conventional polyolefin resins, polyvinyl chloride resins, polyvinylidene chloride resins, polyester resins, polyether resins, polyamide resins, and the like.

For example, the use of the film include films for completed packaging materials such as bags and pouches; films for deep drawing in automatic packaging for meats or fishery products and the like; shrink films for packaging by heat shrinking; films for skin pack in tight packing; films for co-stretching or thermally fixing with other resins, films for thermally fixing with a metal foil, and so on. The use of the sheet includes sheets for secondary processing into vessels for foods; sheets for general vessels including bottles and for industrial use such as for surfacing materials, light transmitting materials, packaging materials for house moving, and the like.

It goes without saying that these multilayer products may be applied to tubes, pipes, coating materials, patterned moldings, cables, and other profile shape as described in the film/sheet. In particular, they are preferably used in articles and applications that are prone to be left in the environment.

By the group VII of the present invention, there can be obtained multilayer films and sheets having sufficient tensile strength two-dimensionally and high biodegradation rates.

The biodegradable multilayer film/sheet provided by the group VII of the present invention has a degradation ratio of above 20%, preferably above 30% after cultivation of 4 weeks in a city sludge as prescribed in JIS K6950.

(Trash bag)

The resin composition in the form of powder or pellets thus obtained is processed into films by molding by various conventional methods such as an inflation method, a T-die method or the like.

The thickness of the film may vary depending on the use thereof and as the trash bag for domestic use, one having a thickness of 10 to 100 μm may be used and, as the larger trash bag for heavier contents, one having a thickness of 50 to 200 μm may be used.

In the case where the film is of one plane as in a film obtained by a T-die method, a film cut into an appropriate size is folded and, for example, the sides are bonded to give a trash bag. In the case where the film is cylindrical as in one obtained by an inflation method, the bottom portion is bonded to give a trash bag.

The method of the above-mentioned bonding may be either by heat fusion or by use of an adhesive.

(Water drainig net)

Further, in the case of the trash bag for water draining, a number of holes for water draining are provided in the surface thereof. The position of the holes may be either one or both sides, either upper or lower part, or over the entire surface thereof.

The diameter of the holes is 0.1 to 5 mm, preferably 1 to 3 mm and the number of holes is 10 to 2,000 pieces, preferably 100 to 1,500 pieces per 10 $cm^2$.

The form and relative positions of the holes are not particularly limited as far as the strength and function and so on of the trash bag are within the purpose. The form may be, for example, a circular hole, and the relative positions may be such that they are in a regular arrangement one upon another or in an obliquely shifted arrangement, or irregularly.

The water draining bag thus obtained may be laid in the inside of a housing vessel placed at a corner or a suitable part of a kitchen sink for draining water from kitchen garbages.

The water draining trash bag according to the group VII of the present invention is effective in housing kitchen garbages and the garbages bag housing the kitchen garbages as it is can be thrown into a compost vessel and allowed to be converted into compost together with the kitchen garbages or collected by a car for collecting for garbages and burned.

According to the group VII of the present invention as described above, trash bag and water draining trash bag that readily exhibit biodegradability or disintegrability in a short time in the natural environment can be obtained.

(Throwaway glove)

The throwaway glove is obtained by molding a film from the biodegradable polyester resin composition of the present invention and processing it.

As the method of molding the composition into a biodegradable film, there may be used various molding methods, such as a T-die extrusion method, a T-die casting method, a blow molding method, an inflation molding method and a calendering method.

The thickness of the film is 10 to 100 μm, preferably 20 to 50 μm, and particularly preferably 30 to 40 μm.

On at least one surface of the film may be provided patterns, for example, by embossing. Embossing practiced on the outer surface of the film gives the effect of preventing the slippage upon handling a thing by hand wearing gloves or makes it easy to take out one by one superimposed gloves or films. On the other hand, embossing practiced on the inner side of the glove makes it easy for one to put it on and gives good feeling upon use since the film does not closely adhere to the skin during operation. Therefore, embossing may be practiced on both the inner and outer sides of the glove and the size of embosses on the inner and outer sides may be varied depending on the purpose.

In consideration of adhesion of the film, it may be designed such that no embossing is practiced in the bond area.

The embosses are provided by passing a film between a chill roll having a suitable roughness and a pressure roll at the time of producing the film. The kind of embosses may be any of hexagon, grid, matte finish, diamond-cut finish, nacre velvet finish, linette finish, satin finish, spray finish and so on. The depth of embosses is 2 to 300 μm.

In a part of the film, a number of holes having a size of 1 μm to 10 mm may be formed for air flow, or the like.

Gloves of various kinds in shape and size may be produced.

The glove may be of five-finger type or mitten type bifurcated into thumb and other four fingers or of a one-bag type without finger portions.

The film is cut into a predetermined size and shape. The size of the cut film is not particularly limited as far as it is in a size allowing punching of a glove. It may be either rectangular or may be cut into an outline shape of a glove in advance. To double the film, a single cut film may be folded twofold or two cut films may be superimposed one on another.

The superimposed films are bonded in the form of a glove. The bonded portion is an outer peripheral portion of a hand except an opening for inserting the hand.

For the bonding, an adhesive may be used. However, it is performed preferably by heat sealing. The heat sealing temperature is a temperature equivalent to or less than the melting temperature of the resin composition, i.e., 250°C or less.

The width of heat sealing is 1 mm or less, preferably 0.7 mm or less, more preferably 0.5 mm or less, and particularly preferably 0.2 mm or less. If the width of heat sealing can be reduced, it is convenient for performing exacting task since less obstructing part is present.

The superimposed films after bonding are cut into the form of a glove and an excess part of the film is removed. Although the cutting may be performed by use of an edged pattern after the heat sealing, it is preferred that cutting be performed at the same time with the heat sealing.

In the case where a single film which is cut is folded twofold and bonded to a form of a glove, the folded portion does not have to be bonded and cutting is unnecessary too. In the case where the opening for inserting a hand is bonded, the bonded portion may be cut off at the time of cutting or upon use.

The film may be produced by only fusing two long films one for front side and another for backside so that a plurality of rectangular gloves can be obtained as connected in series since no unnecessary portion is present, with tear-off perforation therebetween so that each can be torn off upon use. In this case, tear-off perforations may be provided between the finger portions so that upon use, they can be torn off and the finger portions can be formed independently. In such method, gloves as whole forms a rectangular assembly of gloves connected in series in the form of a band, so that they are easy to store, take out and so on.

The biodegradable throwaway glove may have a moisture adsorption sheet (for example, a nonwoven fabric) inserted between the two films for front side and back side, as needed. As the material of the moisture adsorption layer, there may be used the above-mentioned composition of the aliphatic polyester and caprolactone used in the present invention or the above-mentioned other biodegradable resin.

The throwaway glove of the group VII of the present invention can be used widely in various applications as a substitute for the conventional throwaway gloves made of polyolefin. In particular, it is preferably used in articles that are prone to be left in the environment, in applications where hygroscopicity is required, in applications where dust is difficult to attach and so on.

The biodegradable throwaway glove of the group VII of the present invention is comfortable to hand, difficult to get stuffy or make the hand coarse, less slippery inside the glove due to sweat, and less susceptible to attach dust on the outer surface due to its hygroscopicity so that it can be used for industrial applications such as production and handling of precision machines or electricalappliances, semiconductors, drugs or substances, for medical applications, for horticultural applications, for processing and handling foods, for domestic use, and in addition, it can be used in hotels, banquet rooms, wedding party rooms, coating worksites, laboratories and the like.

(Wall paper (decorative paper))

The aliphatic polyester biodegradable composition including the aliphatic polyester copolymer or this copolymer and other biodegradable resin (b) according to the group VII of the present invention can be used also for wall paper (decorative paper).

(Nonwoven fabric)

The aliphatic polyester biodegradable composition including the aliphatic polyester copolymer or this copolymer and other biodegradable resin (b) according to the group VII of the present invention can be molded into single fiber or conjugate fiber. The fibers may be used for nonwoven fabric.

(Coating material)

The group VII of the present invention relates to granular products having a degradable coating layer.

The high molecular weight aliphatic polyester biodegradable resin (first coating component) may be alone or coexist together with other coating materials.

In the group VII of the present invention, the contents in the degradable coating layer of the granular products having a degradable coating layer may be solid, jelly-like or liquid; the solid may be either particulate or powdery.

The coating material in the form of a solution or emulsion is sprayed to, for example, a granular products and at the same time dried to coat the granular products, so that a granular products having a coating layer can be obtained.

Examples of the substance used as other coating materials in the group VII of the present invention include natural resins, cellulose acetate resins, biodegradable cellulose esters, biodegradable aliphatic polyesters, polyvinyl alcohols, polypeptides, olefin polymers, olefin-containing copolymers, vinylidene chloride polymers, vinylidene chloride-containing copolymers, diene polymers, waxes, petroleum resins, oils and fats, starches and modified products thereof. One or more of them may be used in combination with polycaprolactone.

The olefin polymers as the other coating materials include polyethylene, polypropylene, ethylene/propylene copolymers, polybutene, butene/ethylene copolymers, butene/propylene copolymers, polystyrenes, and the like. The olefin-containing copolymers include ethylene/vinyl acetate copolymers, ethylene/acrylic acid copolymers, ethylene/acrylate copolymers, ethylene/methacrylic acid copolymers, ethylene/methacrylate copolymers, ethylene/carbon monoxide copolymers, ethylene/vinyl acetate/carbon monoxide copolymers, and the like. The vinylidene chloride-containing copolymers include vinylidene chloride/vinyl chloride copolymers. The diene polymers include butadiene polymers, isoprene polymers, chloroprene polymers, butadiene/styrene copolymers, EPDM polymers, styrene/isoprene copolymers, and the like. The waxes include beeswax, Japan wax, paraffin, and the like. The natural resins include natural rubber, rosin, and the like. The oils and fats and modified products thereof include hardened oils, solid fatty acids and metal salts thereof. The polypeptides include polyamino acids and polyamide esters and the like. The starches include natural starch and processed starch.

In the group VII of the present invention, the weight percentage of the coating material to the unit weight of the granular products to be coated, that is, coverage, is within the range of 1 to 40%, preferably 2 to 30%, and more preferably 4 to 20%.

It is to be noted that there may be optionally used a third coating component and a fourth coating component and the like as described below, that can be mixed as needed.

The third coating component to be used include surfactants as elution adjusting agents, talc, calcium carbonate, metal oxides and other various lubricants as insoluble fillers, plasticizers, heat stabilizers and the like. Mixtures of these must be uniformly dispersed. If the mixture is not uniform, a portion of the fine particles is localized so that the continuous phase of the coating material is damaged and the effect of coating is lost.

In the group VII of the present invention, further a fourth coating component is optionally used. As the fourth coating component, for example, photolysis accelerators and biodegradation accelerators, elution adjusters, fillers, cellulose powder and the like may be mentioned. These components are uniformly dispersed and used.

As the biodegradation accelerators, those described above may be used.

Also, the biodegradation accelerators include biodegrading enzymes, for example, hydrolases such as lipase, cellulase, and esterase. The biodegrading enzymes are used as suspended or dispersed in solvents. It is to be noted that that the above-mentioned photolysis accelerators and biodegradation accelerators may be used in combination. Also, cellulose powder may be mixed in order to prevent the agglomeration of coated granules.

In the group VII of the present invention, the coating material is dissolved or dispersed in water or volatile organic solvents and retained at high temperatures and applied to the surface of the granular products in the form of spray and at the same time, a hot air stream is applied at high speed to that position to instantaneously dry it to give coated granular products. Examples of the organic solvent include ketones such as acetone; ethers such as diisopropyl

ether and tetrahydrofuran; alcohols such as methanol, ethanol and isopropanol; esters such as ethyl acetate; chlorinated hydrocarbons such as methane chloride; and the like.

According to the group VII of the present invention, there can be obtained coated fertilizers, coated agricultural chemicals, encapsulated drugs or microcapsules for no-carbon paper that are degraded and will not remain even when they are left in the natural environment and that has excellent storage stability.

(Granular agricultural and horticultural coating products)

Among the above-mentioned coating materials, granular agricultural and horticultural coating products represented by coated fertilizer will be described in more detail.

The granular agricultural and horticultural coating products can be obtained by spraying a solution of the high molecular weight aliphatic polyester biodegradable resin composed of the above-mentioned aliphatic polyester copolymer and other biodegradable resin (b) to granular fertilizer and applying a hot air stream at high speed to that position to cover it while instantaneously drying it for coating. It is used for coated granular fertilizers with a coating layer that has degradability and the effective period as a fertilizer of which can be controlled by controlling the thickness or compositional ratio of the coating layer.

As the other components of the granular agricultural and horticultural coating product, there may be added petroleum resins, rosins, or mixtures thereof as well as shellac, zeins, gum Arabic and the like.

The petroleum resin is a resin that is obtained by polymerizing the fractions having 5 to 11 carbon atoms out of petroleum cracking oils. The specific gravity of the petroleum resin used in the present invention is on the order of 0.970 to 0.975.

The rosins include rosin, hardened rosin, and ester gum. The specific gravity d (25/25) of the rosin used in the present invention is on the order of 1.07 to 1.08.

The rosin esters include methyl esters of rosin or abietic acid which is a major component thereof, hydrogenation products thereof, ethylene glycol ester of rosin or abietic acid, diethylene glycol ester of rosin or abietic acid, and pentaerythritol ester of rosin or abietic acid; the ester gum includes glycerin ester of rosin or abietic acid and the like.

The shellac is a secretion of an insect and one having an acid number of around 80 and a softening point of around 80°C may be mentioned.

The zein is preferably a plant protein extracted from a plant such as corn.

The Arabic gum is a secretion of a plant and one that is colorless or pale yellow is preferable.

As the other component and the component that can be added thereto, natural ones, for example, ester gum and zein in combination provide complete biodegradability and hence are preferable.

To the above-mentioned coating product, a third component may be added.

As such third component, surfactants as elution adjusters, talc, calcium carbonate, and metal oxides as insoluble fillers, and the like may be mentioned. These third components must be uniformly dispersed. If the mixture is not uniform, a portion of the fine particles is localized so that the continuous phase of the coating material is damaged and the effect of coating is lost.

The addition amount of the third components is preferably 20% by weight or less based on the total weight of the coating since the water vapor permeability of the coating layer does not increase too high.

Further, a fourth component is optionally used. As such the fourth component, for example, the photolysis accelerators and biodegradationaccelerators, elution adjusters, fillers, cellulose powder and the like described in the above-mentioned common matter may be mentioned. These components can be used by uniformly dispersing them. Also, cellulose powder may be mixed therein in order to prevent the agglomeration of the coated granules.

These components are usually mixed uniformly in the degradable coating composed of the high molecular weight aliphatic polyester degradable resin (A) and the other component (B). It may be optionally coated in the form of a layer on the inside or outside of the degradable coating layer.

The degradable coating has a thickness of on the order of 0.5 to 5.0 μm, which can be adjusted depending on the purpose and the degree of slow action for use in, for example, paddy field, farm, orchard, turf or the like.

The thickness of the degradable coating layer smaller than the above-mentioned range results in high water vapor permeability and the effect of the present invention to control the duration of the activity of the fertilizer cannot be obtained. On the other hand, if the thickness of the degradable coating layer is larger than the above-mentioned range, not only it takes a long time for disintegration/degradation but also results in costs increase.

The degradable coating used in the granular agricultural and horticultural coated composition according to the group VII of the present invention has specific gravity greater than water, so that when it is used to be spread over a paddy field or the like, it will not float on the surface of water even after the fertilizer and the like are dissolved and during the time through which the coating is being biodegraded and its shape being lost.

The granular agricultural and horticultural composition may contain besides the fertilizer other agricultural chemicals.

As the fertilizer, various ones such as nitrogen fertilizers, phosphorus fertilizers, and sulfur fertilizers may be used. As the agricultural chemicals, herbicides, insecticides, fungicides, and the like may be mentioned.
As for the size of the granular product, granulated products, pulverized products, and the like having a diameter on the order of 0.1 to 10 mm may be mentioned.
In the group VII of the present invention, the coating material is dissolved or dispersed in solvents such as hydrocarbons, chlorinated hydrocarbons, alcohols, ketones, esters, and ethers, kept at high temperatures, and sprayed onto the surface of the granular fertilizer and at the same time a high speed hot air stream is applied at that position to coat while instantaneously drying it to obtain a coated granular fertilizer.
When the granular agricultural and horticultural composition according to the group VII of the present invention is used, the water vapor permeability of the coating layer after the covering is 1,000 $g/m^2$.day.atm or less (1 atmosphere is abbreviated as 1 atm.), preferably 500 $g/m^2$.day.atm or less, with less solidification due to adsorption of moisture during storage.
According to the group VII of the present invention, the granular fertilizer can be adjusted of its duration for effectiveness of the fertilizer and after the fertilizer is eluted, the coating layer is disintegrated and degraded by soil microbes and will not remain in the soil. Further, the residual components after the cultivation period for crops will disappear due to disintegration and degradation of the coating, resulting in an effect of facilitating the management of cultivation and so on.

EXAMPLES

Hereinafter, the groups I to VII of the present invention will be specifically described by Examples and Comparative Examples. However, the present invention should not be considered as being limited by these examples.
In the Examples and Comparative Examples, various measured values of the aliphatic polyester copolymers were obtained by the following methods.

(Molecular weight and molecular weight distribution)

By using gel permeation chromatography (GPC) was prepared a calibration curve with a standard polystyrene, from which number average molecular weight (Mn) , weight average molecular weight (Mw) , and molecular weight distribution (Mw/Mn) were obtained. The eluent used was chloroform.

(Acid number and hydroxyl number)

Measured according to JIS K0070.

(Thermal properties)

Melting point and glass transition point were obtained by a differential scanning calorimetric analyzer (DSC).

(Mechanical strength)

Tensile elongation and strength of a test piece were obtained based on JIS K7113.

(Biodegradability/group II of the present invention)

A test piece of about 1 mm in thickness was prepared by a hot press and buried in soil for a predetermined time, and then the biodegradability of the test piece was visually observed.

(Biodegradability/group IV of the present invention, and a part of the group VII of the present invention)

Evaluation of biodegradability was performed in accordance with a simplified degradability test (JIS K-6950) using activated sludge.
By using standard activated sludge from the city of Himeji, the biodegradability (% by weight) after a test period of 28 days (or 6 months maximum if a plateau was not reached) was measured. In addition, as for the value of biodegradability obtained as described above, the test piece showing 60% or less was expressed as x, one showing 60% or more was expressed as ○, and one showing 80% or more was expressed as ◎ .
Hereinafter, Examples in the group I of the present invention will de described.

<Example I-1>

In a preliminary polymerization tank equipped with a stirrer, a fractionating condenser, and a temperature-controlling device were charged 2.91 kg of 1,4-butanediol, 3.63 kg of succinic acid, and 0.62 kg of ε-caprolactone en bloc. Here, [B]/[A]=1.05 in the above-mentioned expression (i) and [C]/([A]+[C])=0.15 in the above-mentioned expression (ii).

To this, 4.37 g of tetraisopropyl titanate ester and 0.89 g of dibasic magnesium phosphate trihydrate were added and stirred at atmospheric pressure at a temperature of 145 to 225°C to perform an esterification reaction. When the amount of the distillate exceeded 0.8 kg, the preliminary polymerization step was completed and the reaction mixture was transferred into a main polymerization tank. The reaction mixture was kept at a temperature of 220 to 240°C and stirred with decreasing the pressure to finally 1.0 mmHg (133 Pa) and stirred for 3 hours to carry out a deglycolation reaction (interesterification reaction). The obtained low molecular weight polyester (D) had a weight average molecular weight of 56,000 and an acid number of 1.6 mgKOH/g.

After completion of the deglycolation reaction, 60 g of hexamethylene diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 159,000 and an acid number of 1.6 mgKOH/g and was capable of being molded into a film.

The mechanical strength of the film was 320 $kgf/cm^2$ in tensile strength and 600% in tensile elongation. As a result of a DSC measurement, the melting point of this copolymer was observed at 98°C as a single peak, from which it was confirmed to be a copolymer.

Fig. 1 is a chart that indicates the results of the DSC measurement of the above-mentioned copolymer. The horizontal axis indicates measuring temperature (°C) and the vertical axis indicates amount of heat absorbed (unit: μW).

<Example I-2>

In a preliminary polymerization tank equipped with a stirrer, a fractionating condenser, and a temperature-controlling device were charged 36.25 kg of 1,4-butanediol, 43.18 kg of succinic acid, and 10.32 kg of 6-caprolactone en bloc. Here, [B]/[A]= 1.09 in the above-mentioned expression (i) and [C]/([A]+[C])=0.20 in the above-mentioned expression (ii). In addition, 52.01 g of tetrasiopropyl titanate and 10.46 g of dibasic magnesium phosphate trihydrate were added and stirred at atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 230°C and stirred with decreasing the pressure to finally 1.0 mmHg (133 Pa) and stirred for 4 hours to carry out a deglycolation reaction (interesterification reaction). The obtained low molecular weight polyester (D) had a weight average molecular weight of 56,000 and an acid number of 1.6 mgKOH/g.

After completion of the deglycolation reaction, 600 g of hexamethylene diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 182,000 and an acid number of 1.6 mgKOH/g. In the DSC, the melting point of this copolymer was observed at 96°C as a single peak, as in Example I-1 and the copolymer was capable of being molded into a film.

The mechanical strength of the film was 310 $kgf/cm^2$ in tensile strength and 660% in tensile elongation.

<Comparative Example I-1>

In a preliminary polymerization tank equipped with a stirrer, a fractionating condenser, and a temperature-controlling device were charged 36.25 kg of 1,4-butanediol, 43.18 kg of succinic acid, and 10.32 kg of ε-caprolactone en bloc. Here, [B]/[A]= 1.09 in the above--mentioned expression (i) and $[C]/([A]^+[C])$=0.20 in the above-mentioned expression (ii). In addition, 52.01 g of tetrasiopropyl titanate and 10.46 g of dibasic magnesium phosphate trihydrate were added and stirred at atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 230°C and stirred with decreasing the pressure to finally 1.0 mmHg (133 Pa) and stirred for 4 hours to carry out a deglycolation reaction (interesterification reaction). The obtained low molecular weight polyester (D) had a weight average molecular weight of 56,000 and an acid number of 1.6 mgKOH/g.

After completion of the deglycolation reaction, 30 g of hexamethylene diisocyanate was added to the polyester (D) that was in a molten state at 190°C, but no system viscosity rising was observed and molecular weight is not increased.

<Comparative Example I-2>

In a preliminary polymerization tank equipped with a stirrer, a fractionating condenser, and a temperature-controlling device were charged 36.25 kg of 1,4-butanediol, 43.18 kg of succinic acid, and 10.32 kg of ε-caprolactone en bloc. Here, [B]/[A]= 1.09 in the above-mentioned expression (i) and [C]/([A]+[C])=0.20 in the above-mentioned expression (ii). In addition, 52.01 g of tetrasiopropyl titanate and 10.46 g of dibasic magnesium phosphate trihydrate were added and stirred at atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 230°C and stirred with decreasing the pressure to finally 1.0 mmHg (133 Pa) and stirred for 4 hours to carry out a deglycolation reaction (interesterification reaction). The obtained low molecular weight polyester (D) had a weight average molecular weight of 56,000 and an acid number of 1.6 mgKOH/g.

After completion of the deglycolation reaction, 5,400 g of hexamethylene diisocyanate was added to the polyester (D) that was in a molten state at 190°C and the mixture was stirred. At this time, the viscosity increased abruptly and gelling proceeded, but forming a film by the obtained polymer was difficult.

<Comparative Example I-3>

In a preliminary polymerization tank equipped with a stirrer, a fractionating condenser, and a temperature-controlling device were charged 36.25 kg of 1,4-butanediol, 43.18 kg of succinic acid, and 10.32 kg of ε-caprolactone en bloc. Here, [B]/[A] = 1.09 in the above-mentioned expression (i) and [C]/([A]+[C])=0.20 in the above-mentioned expression (ii). In addition, 72.70 g of tetrasiopropyl titanate and 5.02 g of phosphate were added and stirred at atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 230°C and stirred with decreasing the pressure to finally 1.0 mmHg (133 Pa) and stirred for 9 hours to carry out a deglycolation reaction (interesterification reaction) . The obtained low molecular weight polyester (D) had a weight average molecular weight of 170,000, an acid number of 7.9 mgKOH/g and a melting point of 98°C. Even with a copolymer which has not undergone chain extension reaction, it is possible to form a film, but molecular weight is reduced at the time of film formation.

<Example I-3>

In a preliminary polymerization tank equipped with a stirrer, a fractionating condenser, and a temperature-controlling device were charged 36.25 kg of 1,4-butanediol, 43.18 kg of succinic acid, and 7.37 kg of ε-caprolactone en bloc. Here, [B] / [A] = 1.09 in the above-mentioned expression (i) and [C]/([A]+[C])=0.15 in the above-mentioned expression (ii). In addition, 52.01 g of tetrasiopropyl titanate and 10.46 g of dibasic magnesium phosphate trihydrate were added and stirred under atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 230°C and the pressure was decreased to finally 1.0 mmHg (133 Pa) and the reaction mixture was stirred for 4 hours to carry out a deglycolation reaction (interesterification reaction) . The obtained low molecular weight polyester (D) had a weight average molecular weight of 63,000 and an acid number of 1.8 mgKOH/g.

After completion of the deglycolation reaction, 600 g of hexamethylene diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 202,000 and an acid number of 1.8 mgKOH/g. In the DSC, the melting point of this copolymer was observed at 101°C as a single peak, as in Example I-1, and the copolymer was capable of being molded into a film.

The mechanical strength of the film was 370 kgf/cm$^2$ in tensile strength and 580% in tensile elongation.

<Example I-4>

In a preliminary polymerization tank equipped with a stirrer, a fractionating condenser, and a temperature-controlling device were charged 30.44 kg of 1,4-butanediol, 38.00 kg of succinic acid, and 12.24 kg of ε-caprolactone en bloc. Here, [B] / [A] = 1.05 in the above-mentioned expression (i) and [C]/([A]+[C])=0.25 in the above-mentioned expression (ii). In addition, 46.04 g of tetrasiopropyl titanate and 9.41 g of dibasic magnesium phosphate trihydrate were added and stirred under atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature

of about 245°C and the pressure was decreased to finally 1.0 mmHg (133 Pa) and the reaction mixture was stirred for 2.5 hours to carry out a deglycolation reaction (interesterification reaction). The obtained low molecular weight polyester (D) had a weight average molecular weight of 64,000 and an acid number of 1.7 mgKOH/g.

After completion of the deglycolation reaction, 600 g of hexamethylene diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 212,000 and an acid number of 1.7 mgKOH/g. In the DSC, the melting point of this copolymer was observed at 85°C as a single peak, as in Example i-1, and the copolymer was capable of being molded into a film.

The mechanical strength of the film was 290 kgf/cm$^2$ in tensile strength and 880% in tensile elongation.

<Example I-5>

In a preliminary polymerization tank equipped with a stirrer, a fractionating condenser, and a temperature-controlling device were charged 32.70 kg of 1,4-butanediol, 36.27 kg of succinic acid, 5.60 kg of adipic acid, and 4.37 kg of ε-caprolactone en bloc. Here, [B]/[A]= 1.05 in the above-mentioned expression (i) and [C]/([A]+[C])=0.10 in the above-mentioned expression (ii). In addition, 49.17 g of tetrasiopropyl titanate and 10.11 g of dibasic magnesium phosphate trihydrate were added and stirred under atmospheric pressure at a temperature of 145 to 225°C to perform an esterification reaction. When the amount of the distillate exceeded 10.0 kg, the preliminary polymerization step was completed and the reaction mixture was transferred into a main polymerization tank. The reaction mixture was kept at a temperature of about 245°C and the pressure was decreased to finally 1.0 mmHg (133 Pa) and the reaction mixture was stirred for 2.5 hours to carry out a deglycolation reaction (interesterification reaction). The obtained low molecular weight polyester (D) had a weight average molecular weight of 64,000 and an acid number of 1.3 mgKOH/g.

After completion of the deglycolation reaction, 600 g of hexamethylene diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 211,000 and an acid number of 1.3 mgKOH/g. In the DSC, the melting point of this copolymer was observed at 92°C as a single peak, as in Example I-1, and the copolymer was capable of being molded into a film.

The mechanical strength of the film was 320 kgf/cm$^2$ in tensile strength and 800% in tensile elongation.

<Example I-6>

In a preliminary polymerization tank equipped with a stirrer, a fractionating condenser, and a temperature-controlling device were charged 31.63 kg of 1,4-butanediol, 34.54 kg of succinic acid, and 8.35 kg of ε-caprolactone en bloc. Here, [B]/[A]= 1.20 in the above-mentioned expression (i) and [C]/([A]+[C])=0.20 in the above-mentioned expression (ii). Under atmospheric pressure, the mixture was stirred at a temperature of 145 to 225°C to perform an esterification reaction. When the amount of the distillate exceeded 10.0 kg, the preliminary polymerization step was completed and the reaction mixture was transferred into a main polymerization tank. Further, 12.00 g of tetrasiopropyl titanate was added in the main polymerization tank and the reaction mixture was kept at a temperature of 210 to 220°C and the pressure was decreased to finally 1.0 mmHg (133 Pa) and the reaction mixture was stirred for 6 hours to carry out a deglycolation reaction (interesterification reaction). The obtained low molecular weight polyester (D) had a weight average molecular weight of 30,000 and an acid number of 1.3 mgKOH/g.

After completion of the deglycolation reaction, 600 g of isophorone diisocyanate was added to the polyester (D) that was in a molten state at 190°C and the mixture was stirred. At this time, the viscosity increased abruptly but no gelling occurred. The obtained high molecular weight aliphatic polyester copolymer of the present invention had Mw of 216,000, an acid number of 1.1 mgKOH/g and a melting point of 93°C and the copolymer was capable of being molded into a film.

The mechanical strength of the film was 300 kgf/cm$^2$ in tensile strength and 800% in tensile elongation.

<Example I-7>

In a preliminary polymerization tank equipped with a stirrer, a fractionating condenser, and a temperature-controlling device were charged 31.63 kg of 1,4-butanediol, 27.68 kg of succinic acid, and 8.35 kg of ε-caprolactone en bloc. Here, [B]/[A]= 1.20 in the above-mentioned expression (i) and [C]/([A]+[C])=0.20 in the above-mentioned expression (ii). Under atmospheric pressure, the mixture was stirred at a temperature of 145 to 225°C to perform an esterification reaction. When the amount of the distillate exceeded 10.0 kg, the preliminary polymerization step was completed and the reaction mixture was transferred into a main polymerization tank. Further, 12.00 g of tetrasiopropyl titanate was added in the main polymerization tank and the reaction mixture was kept at a temperature of 210 to 220°C and the pressure was decreased to finally 1.0 mmHg (133 Pa) and the reaction mixture was stirred for 6 hours to carry

out a deglycolation reaction (interesterification reaction). The obtained low molecular weight polyester (D) had a weight average molecular weight of 30,000 and an acid number of 6.0 mgKOH/g.

After completion of the deglycolation reaction, 600 g of 2,2' -m- phenylene bis (2- Oxazoline) was added to the polyester (D) that was in a molten state at 190°C and the mixture was stirred for 5 hours. At this time, the viscosity increased. The obtained high molecular weight aliphatic polyester copolymer of the present invention had Mw of 202,000,an acid number of 2.1 mgKOH/g and the melting point of 94°C.

The mechanical strength of the film was 330 kgf/$cm^2$ in tensile strength and 740% in tensile elongation.

<Example I-8>

By using the high molecular weight aliphatic polyester copolymer A having a Mw of 202,000 obtained in Reference Example VII-1 described hereinbelow, films were molded under the same conditions as those described in Examples VII-4 to VII-7 described hereinbelow except that the lip width, extrusion temperature and cooling method were changed as shown in Table I-1, and various evaluations were performed similarly. The results are shown inTable I-1.

Table I-1

| | | Example I-8-1 | Example I-8-2 | Example I-8-3 | Example I-8-4 | Example I-8-5 |
|---|---|---|---|---|---|---|
| Lip width | mm | 2.5 | 3 | 1 | 2.5 | 2.5 |
| Blow ratio | - | 4 | 4 | 4 | 4 | 2 |
| Extrusion temperature | °C | 160 | 160 | 160 | 130 | 160 |
| Film thickness | μm | 20 | 20 | 20 | 20 | 20 |
| Cooling method | | Air cooling | Air cooling | Air cooling | Air cooling | Air cooling |
| Hand-tearing feeling | 10-stage<br>Organoleptic evaluation | 10<br>◎ | 7<br>○ | 6<br>○ | 9<br>○ | 7<br>○ |
| Tear strength | <br>Organoleptic evaluation | 265<br>◎ | 190<br>○ | 165<br>○ | 240<br>◎ | 150<br>○ |
| Haze | % | 19.9 | 25.1 | 20.1 | 27.1 | 29.3 |
| Tensile strength at break<br>(MD)<br>(TD) | $kg/cm^2$ | <br>635<br>485 | <br>645<br>470 | <br>650<br>430 | <br>755<br>510 | <br>650<br>420 |
| Tensile elongation<br>(MD)<br>(TD) | % | <br>650<br>1060 | <br>640<br>760 | <br>630<br>630 | <br>795<br>1185 | <br>620<br>675 |
| Modulus of elasticity in tension<br>(MD)<br>(TD) | $kg/cm^2$ | <br>1405<br>1890 | <br>1510<br>1830 | <br>1520<br>1820 | <br>1585<br>2210 | <br>1420<br>1750 |
| Moldability | | ◎ | ◎ | ◎ | ◎ | ◎ |
| Biodegradability<br><br>Tensile elongation after burying | %<br>Organoleptic evaluation | 90<br>◎<br>830 | 90<br>◎<br>510 | 90<br>◎<br>420 | 92<br>◎<br>110 | 90<br>◎<br>430 |

The high molecular weight aliphatic polyester copolymer A was usable as a film and also had good biodegradability.

According to the method of the group I of the present invention, a high molecular weight aliphatic polyester copolymer having a weight average molecular weight of above 100,000 in terms of polystyrene can be industrially produced with a high degree of efficiency from a mixture of 1,4-butanediol, succinic acid or its derivative, and ε-caprolactone in specified ratios.

The aliphatic polyester copolymer obtained by the group I of the present invention is a polymer having a sufficiently high molecular weight, so that it can be also molded into films and fibers and has a practically sufficient flexibility. Also, because of its low acid number, it has good stability in molecular weight at the time of molding and at the same time has excellent degradability. Therefore, the aliphatic polyester copolymer of the group I of the present invention can be utilized by molding it into a wide variety of moldings such as films, fibers, sheets and bottles. After use, they can be rapidly biodegraded by means such as burying in soil or converting into compost.

Hereinafter, Examples in the group II of the present invention will be described.

<Example II-1>

In a preliminary polymerization tank equipped with a stirrer, a fractionating condenser, and a temperature controlling device were charged 18.13 kg (201.1 mol) of 1,4-butanediol, 21.59 kg (182.7 mol) of succinic acid, 13.90 kg (121.8 mol) of ε-caprolactone, and 22.89 kg (197.2 mol as lactic acid) of lactic acid (85% aqueous lactic acid solution) en bloc.

Here, [B]/[A]=1.1 in the above-mentioned expression (iii), [C-2] / ( [A] + [C-1] + [C-2] ) = 0.39 in the above-mentioned expression (i) , and [C-1] / ( [A] + [C-1] + [C-2] ) = 0.24 in the above-mentioned expression (ii).

Under atmospheric pressure, the mixture was stirred at a temperature of 145 to 225°C to perform an esterification reaction. When the amount of the distillate exceeded 7.0 kg, the preliminary polymerization step was completed and the reaction mixture was transferred into a main polymerization tank. Further, 27.30 g of tetraisopropyl titanate ester was added to the main polymerization tank and the reaction mixture was stirred while keeping a temperature at 225 to 245°C and the pressure was decreased to finally 1.0 Torr (133 Pa) and the reaction mixture was stirred for 6 hours to carry out a deglycolation reaction (interesterification reaction). The obtained polyester had a weight average molecular weight of 237, 000 and an acid number of 1.5 mgKOH/g. The high molecular weight aliphatic polyester copolymer had a melting point of 118°C and was capable of being molded into a film.

The mechanical strength of the film was 310 kgf/$cm^2$ in tensile strength and 600% in tensile elongation.

As a result of biodegradability tests, test pieces after three months showed a number of worm-bore like holes, which confirmed good biodegradability.

<Comparative Example II-1>

In a preliminary polymerization tank equipped with a stirrer, a fractionating condenser, and a temperature controlling device were charged 18.13 kg (201.1 mol) of 1,4-butanediol, 21.59 kg (182.7 mol) of succinic acid, and 22.89 kg (197.2 mol as lactic acid) of lactic acid (85% aqueous lactic acid solution) en bloc.

Here, [B]/[A]=1.1 in the above-mentioned expression (iii), [C-2] / ( [A] + [C-1] + [C-2] ) = 0.40 in the above-mentioned expression (i), and [C-1] / ( [A] + [C-1] + [C-2] ) = 0 in the above-mentioned expression (ii).

Under atmospheric pressure, the mixture was stirred at a temperature of 145 to 225°C to perform an esterification reaction. When the amount of the distillate exceeded 7.0 kg, the preliminary polymerization step was completed and the reaction mixture was transferred into a main polymerization tank. Further, 27.30 g of tetraisopropyl titanate was added to the main polymerization tank and the reaction mixture was kept at a temperature of 225 to 245°C and the pressure was decreased to finally 1.0 Torr (133 Pa) and the reaction mixture was stirred for 6 hours to carry out a deglycolation reaction (interesterification reaction). The obtained aliphatic polyester had a weight average molecular weight of 230,000 and an acid number of 1.5 mgKOH/g. The high molecular weight aliphatic polyester copolymer had a melting point of 158°C and was capable of being molded into a film.

The mechanical strength of the film was 290 kgf/$cm^2$ in tensile strength and 100% in tensile elongation.

As a result of biodegradability tests, no change appears in test pieces after three months.

<Example II-2>

In a preliminary polymerization tank equipped with a stirrer, a fractionating condenser, and a temperature controlling device were charged 25.38 kg (281.6 mol) of 1,4-butanediol, 30.23 kg (255.7 mol) of succinic acid, 5.16 kg (45.2 mol) of ε-caprolactone, and 13.36 kg (115.1 mol as lactic acid) of L-lactide en bloc.

Here, [B]/[A]=1.1 in the above-mentioned expression (iii), [C-2] / ( [A] + [C-1] + [C-2] ) = 0.28 in the above-mentioned expression (i) , and [C-1] / ( [A] + [C-1] + [C-2] ) = 0.11 in the above-mentioned expression (ii).

Under atmospheric pressure, the mixture was stirred at a temperature of 145 to 225°C to perform an esterification reaction. When the amount of the distillate exceeded 7.0 kg, the preliminary polymerization step was completed and the reaction mixture was transferred into a main polymerization tank. Further, 38.22 g of tetraisopropyl titanate was added to the main polymerization tank and the reaction mixture was kept at a temperature of 225 to 245°C and the pressure was decreased to finally 1.0 Torr (133 Pa) and the reaction mixture was stirred for 5 hours to carry out a deglycolation reaction (interesterification reaction). The obtained aliphatic polyester had a weight average molecular weight of 220,000 and an acid number of 1.8 mgKOH/g. The high molecular weight aliphatic polyester copolymer had a melting point of 118°C and was capable of being molded into a film.

The mechanical strength of the film was 360 kgf/$cm^2$ in tensile strength and 500% in tensile elongation.

As a result of biodegradability tests, good biodegradability was confirmed equal to that of Example II-1.

<Example II-3>

In a preliminary polymerization tank equipped with a stirrer, a fractionating condenser, and a temperature controlling device were charged 18.13 kg (201.1 mol) of 1,4-butanediol, 21.59 kg (182.7 mol) of succinic acid, 5.22 kg (45.7 mol) of ε-caprolactone, and 14.72 kg (126.8 mol as lactic acid) of lactic acid (85% aqueous lactic acid solution) en bloc.

Here, [B]/[A]=1.1 in the above-mentioned expression (iii), [C-2] / ( [A] + [C-1] + [C-2] ) = 0.36 in the above-mentioned expression (i) , and [C-1] / ( [A] + [C-1] + [C-2] ) = 0.13 in the above-mentioned expression (ii).

Under atmospheric pressure, further, 27.30 g of tetraisopropyl titanate and 5.25 g of dibasic magnesium phosphate trihydrate were added, and the mixture was stirred at a temperature of 145 to 225°C to perform an esterification reaction. When the amount of the distillate exceeded 7.0 kg, the preliminary polymerization step was completed and the reaction mixture was transferred into a main polymerization tank. The reaction mixture was kept at a temperature of 225 to 245°C and the pressure was decreased to finally 1.0 Torr (133 Pa) and the reaction mixture was stirred for 6 hours to carry out a deglycolation reaction (interesterification reaction). The obtained aliphatic polyester had a weight average molecular weight of 245,000 and an acid number of 2.3 mgKOH/g. The high molecular weight aliphatic polyester copolymer had a melting point of 121°C and was capable of being molded into a film.

The mechanical strength of the film was 310 kgf/$cm^2$ in tensile strength and 550% in tensile elongation.

As a result of biodegradability tests, good biodegradability was confirmed equal to that of Example II-1.

<Example II-4>

In a preliminary polymerization tank equipped with a stirrer, a fractionating condenser, and a temperature controlling device were charged 18.13 kg (201.1 mol) of 1,4-butanediol, 21.59 kg (182.7 mol) of succinic acid, 8.94 kg (78.3 mol) of ε-caprolactone, and 14.85 kg (127.9 mol as lactic acid) of L-lactide en bloc.

Here, [B]/[A]=1.1 in the above-mentioned expression (iii), [C-2]/([A]+[C-1]+[C-2])=0.33 in the above-mentioned expression (i), and [C-1]/([A]+[C-1]+[C-2])=0.20 in the above-mentioned expression (ii).

Under atmospheric pressure, the mixture was stirred at a temperature of 145 to 225°C to perform an esterification reaction. When the amount of the distillate exceeded 7.0 kg, the preliminary polymerization step was completed and the reaction mixture was transferred into a main polymerization tank. Further, 38.22 g of tetraisopropyl titanate was added to the main polymerization tank and the reaction mixture was kept at a temperature of 225 to 245°C and the pressure was decreased to finally 1.0 Torr (133 Pa) and the reaction mixture was stirred for 7 hours to carry out a deglycolation reaction (interesterification reaction). The obtained aliphatic polyester had a weight average molecular weight of 225,000 and an acid number of 2.8 mgKOH/g. The high molecular weight aliphatic polyester copolymer had a melting point of 115°C and was capable of being molded into a film.

The mechanical strength of the film was 280 kgf/$cm^2$ in tensile strength and 630% in tensile elongation.

As a result of biodegradability tests, good biodegradability was confirmed equal to that of Example II-1.

<Example II-5>

In a preliminary polymerization tank equipped with a stirrer, a fractionating condenser, and a temperature controlling device were charged 25.38 kg (281.6 mol) of 1,4-butanediol, 30.23 kg (255.7 mol) of succinic acid, 12.51 kg (109.6 mol) of ε-caprolactone, and 3.46 kg (127.9 mol as lactic acid) of L-lactide en bloc.

Here, [B]/[A]=1.1 in the above-mentioned expression (iii), [C-2] / ( [A] + [C-1] + [C-2] ) = 0.26 in the above-mentioned expression (i) , and [C-1] / ( [A] + [C-1] + [C-2] ) = 0.22 in the above-mentioned expression (ii).

Under atmospheric pressure, the mixture was stirred at a temperature of 145 to 225°C to perform an esterification reaction. When the amount of the distillate exceeded 7.0 kg, the preliminary polymerization step was completed

and the reaction mixture was transferred into a main polymerization tank. Further, 38.22 g of tetraisopropyl titanate was added to the main polymerization tank and the reaction mixture was kept at a temperature of 225 to 245°C and the pressure was decreased to finally 1.0 Torr (133 Pa) and the reaction mixture was stirred for 7 hours to carry out a deglycolation reaction (interesterification reaction). The obtained aliphatic polyester had a weight average molecular weight of 233,000 and an acid number of 2.1 mgKOH/g. The high molecular weight aliphatic polyester copolymer had a melting point of 103°C and was capable of being molded into a film.

The mechanical strength of the film was 230 kgf/cm$^2$ in tensile strength and 800% in tensile elongation.

As a result of biodegradability tests, good biodegradability was confirmed equal to that of Example II-1.

<Example II-6>

In a preliminary polymerization tank equipped with a stirrer, a fractionating condenser, and a temperature controlling device were charged 10.88 kg (120.7 mol) of 1,4-butanediol, 12.95 kg (109.6 mol) of succinic acid, 18.9 kg (165.6 mol) of ε-caprolactone, and 30.90 kg (266.3 mol as lactic acid) of lactic acid (85% aqueous lactic acid solution) en bloc.

Here, [B]/[A]=1.1 in the above-mentioned expression (iii), [C-2]/([A]+[C-1]+[C-2])=0.49 in the above-mentioned expression (i), and [C-1]/([A]+[C-1]+[C-2])=0.31 in the above-mentioned expression (ii).

Under atmospheric pressure, further, 27.30 g of tetraisopropyl titanate and 5.25 g of dibasic magnesium phosphate trihydrate were added, and the mixture was stirred at a temperature of 145 to 225°C to perform an esterification reaction. When the amount of the distillate exceeded 7.0 kg, the preliminary polymerization step was completed and the reaction mixture was transferred into a main polymerization tank. The reaction mixture was kept at a temperature of 225 to 245°C and the pressure was decreased to finally 1.0 Torr (133 Pa) and the reaction mixture was stirred for 6 hours to carry out a deglycolation reaction (interesterification reaction). The obtained aliphatic polyester had a weight average molecular weight of 196,000 and an acid number of 2.2 mgKOH/g. The high molecular weight aliphatic polyester copolymer had a melting point of 161°C and was capable of being molded into a film.

The mechanical strength of the film was 360 kgf/cm$^2$ in tensile strength and 200% in tensile elongation.

As a result of biodegradability tests, good biodegradability was confirmed equal to that of Example II-1.

<Example II-7>

In a preliminary polymerization tank equipped with a stirrer, a fractionating condenser, and a temperature controlling device were charged 18.13 kg (201.1 mol) of 1,4-butanediol, 16.19 kg (137.0 mol) of succinic acid, 6.67 kg (45.7 mol) of adipic acid, 13.9 kg (121.8 mol) of ε-caprolactone, and 20.17 kg (173.8 mol as lactic acid) of lactic acid (85% aqueous lactic acid solution) en bloc.

Here, [B]/[A]=1.1 in the above-mentioned expression (iii), [C-2] / ( [A] + [C-1] + [C-2] ) = 0.36 in the above-mentioned expression (i) , and [C-1] / ( [A] + [C-1] + [C-2]) = 0.25 in the above-mentioned expression (ii).

Under atmospheric pressure, further, 27.30 g of tetraisopropyl titanate and 5.25 g of dibasic magnesium phosphate trihydrate were added, and the mixture was stirred at a temperature of 145 to 225°C to perform an esterification reaction. When the amount of the distillate exceeded 7.0 kg, the preliminary polymerization step was completed and the reaction mixture was transferred into a main polymerization tank. The reaction mixture was kept at a temperature of 225 to 245°C and the pressure was decreased to finally 1.0 Torr (133 Pa) and the reaction mixture was stirred for 6 hours to carry out a deglycolation reaction (interesterification reaction). The obtained aliphatic polyester had a weight average molecular weight of 212,000 and an acid number of 1.6 mgKOH/g. The high molecular weight aliphatic polyester copolymer had a melting point of 96°C and was capable of being molded into a film.

The mechanical strength of the film was 250 kgf/cm$^2$ in tensile strength and 1000% in tensile elongation.

As a result of biodegradability tests, good biodegradability was confirmed equal to that of Example II-1.

According to the method of the group II of the present invention, a high molecular weight aliphatic polyester copolymer having a weight average molecular weight of above 100,000 in terms of polystyrene can be industrially produced with a high degree of efficiency from a mixture of 1,4-butanediol, succinic acid or its derivative, ε-caprolactone, and lactide in specified ratios.

The aliphatic polyester copolymer obtained by the group II of the present invention is a polymer having a sufficiently high molecular weight, so that it can be also molded into films and fibers and has a practically sufficient flexibility. Also, because of its low acid number, it has good stability in molecular weight at the time of molding as well as excellent degradability. Therefore, the aliphatic polyester copolymer of the present invention can be utilized by molding it into a wide variety of moldings such as films, fibers, sheets and bottles. After use, they can be rapidly biodegraded by such a method of burying in soil or converting into compost.

Hereinafter, Examples in the group III of the present invention will be described.

<Example III-1>

In a glass-made four-mouthed flask having an inner volume of 2,000 ml equipped with a stirrer were charged 431.8 g (A: 3.66 mol) of succinic acid, 362.5 g (B: 4.02 mol) of 1,4-butanediol, 73.7 g (C: 0.65 mol) of ε-caprolactone, 20.4 g (C: 0.2 mol) of 1,3-pentanediol having a branched divalent aliphatic group, 546 mg of titanium tetraisopropoxide as a catalyst, and 105 mg of dibasic magnesium phosphate trihydrate and the reaction was started in a nitrogen atmosphere at 180°C. After 1.0 hour, the reaction was continued while the reaction temperature was gradually elevated to 240°C. After 4.0 hours, reduction in pressure was started and the reaction was carried out for additional 6.0 hours.

The obtained polymer had molecular weight and molecular weight distribution of Mn: 61,200, Mw: 146,000, and Mw/Mn: 2.4, as well as thermal property of a melting point of 97°C. The obtained polymer was capable of being molded into a film and flexible and tough. The mechanical strength of it was 420 kgf/cm$^2$ in tensile strength and 680% in tensile elongation.

<Example III-2>

In a preliminary polymerization tank equipped with a stirrer, a fractionating condenser, and a temperature controlling device were charged 36.25 kg (B: 402 mol) of 1,4-butanediol, 43.18 kg (A: 336 mol) of succinic acid, 10.43 kg (C: 91 mol) of ε-caprolactone, and 1.14 kg (10 mol) of 2 - methyl propanediol having a branched divalent aliphatic group en bloc.

Under atmospheric pressure, the mixture was stirred at a temperature of 145 to 225°C to perform an esterification reaction. When the amount of the distillate exceeded 13.0 kg, the preliminary polymerization step was completed and the reaction mixture was transferred into a main polymerization tank. Further, 54.6 g of tetraisopropyl titanate was added to the main polymerization tank and the reaction mixture was kept at a temperature of 210 to 220°C and the pressure was decreased to finally 1.0 Torr (133 Pa) and the reaction mixture was stirred for 6 hours while 1,4-butanedila was distilled off to carry out a deglycolation reaction (interesterification reaction). The obtained low molecular weight polyester had a weight average molecular weight of 28,800 and an acid number of 0.6 mgKOH/g.

After completion of the deglycolation reaction, 655 g (E: 4.2 mol) of hexamethylene diisocyanate was added to the obtained low molecular weight polyester that was in a molten state at 190°C and the mixture was stirred. At this time, the viscosity increased abruptly but no gelling occurred. The obtained high molecular weight aliphatic polyester copolymer had Mw of 112,000, an acid number of 0.7 mgKOH/g and melting point of 94°C and was capable of being molded into a film.

The mechanical strength of the film was 360 kgf/cm$^2$ in tensile strength and 700% in tensile elongation.

<Example III-3>

In a preliminary polymerization tank which is the same as that of Example III-2 was charged 30.45 kg (B: 338 mol) of 1,4-butanediol, 38.0 kg (A: 322 mol) of succinic acid, 12.24 kg (C: 107 mol) of ε-caprolactone, and 1.7 kg (15 mol) of 2 - methyl propanediol having a branched divalent aliphatic group en bloc. Under atmospheric pressure, the mixture was stirred at a temperature of 145 to 225°C to perform an esterification reaction. When the amount of the distillate exceeded 11.5 kg, the preliminary polymerization step was completed and the reaction mixture was transferred into a main polymerization tank. Further, 48.1 g of tetraisopropyl titanate was added to the main polymerization tank and the reaction mixture was kept at a temperature of 210 to 220°C and the pressure was decreased to finally 1.0 Torr (133 Pa) and the reaction mixture was stirred for 6 hours to carry out a deglycolation reaction (interesterification reaction). The obtained low molecular weight polyester had a weight average molecular weight of 31,200 and an acid number of 0.8 mgKOH/g.

After completion of the deglycolation reaction, 593 g (E: 3.8 mol) of hexamethylene diisocyanate was added to the low molecular weight polyester that was in a molten state at 190°C and the mixture was stirred. At this time, the viscosity increased abruptly but no gelling occurred. The obtained high molecular weight aliphatic polyester copolymer had Mw of 148,000, an acid number of 1.0 mgKOH/g and melting point of 88°C and was capable of being molded into a film.

The mechanical strength of the film was 320 kgf/cm$^2$ in tensile strength and 860% in tensile elongation.

According to the group III of the present invention, there can be obtained a biodegradable high molecular weight aliphatic polyester copolymer that can be molded into films and sheets having mechanical properties close to those of polyethylene.

The high molecular weight aliphatic polyester copolymer obtained by the group III of the present invention is a polymer having a sufficiently high molecular weight, so that it can be also molded into films and fibers and has a practically sufficient flexibility. Also, because of its low acid number, it has good stability in molecular weight at the time of molding as well as excellent degradability. Therefore, the high molecular weight aliphatic polyester copolymer of the

present invention can be utilized by molding it into a wide variety of moldings such as films, fibers, sheets and bottles. After use, they can be rapidly biodegraded by such a method of burying in soil or converting into compost.

Hereinafter, Examples in the group IV of the present invention will be described.

<Example IV-1>

In a glass-made four-mouthed flask having an inner volume of 200 ml equipped with a stirrer were charged 36.3 g (A: 0.307 mol) of succinic acid, 27.8 g (B: 0.308 mol) of 1,4-butanediol, 6.19 g (D: 0.054 mol) of ε-caprolactone, 0.86g (C: 0.008mol) of diethylene glycol, 43.6 mg of titanium tetraisopropoxide as a catalyst, and 8.9 mg of dibasic magnesium phosphate trihydrate and the reaction was started in a nitrogen atmosphere at 180°C. After 1.0 hour, the reaction was continued while the reaction temperature was gradually elevated to 240°C. After 4.0 hours, reduction in pressure was started and the reaction was carried out for additional 6.0 hours.

The obtained polymer had molecular weight and molecular weight distribution of Mn: 106,000, Mw: 225,000, and Mw/Mn: 2.1, as well as thermal property of a melting point of 97°C. The obtained polymer was capable of being molded into a film and was flexible and tough.

<Example IV-2>

In a glass-made four-mouthed flask having an inner volume of 200 ml equipped with a stirrer were charged 36.3 g (A: 0.307 mol) of succinic acid, 27.8 g (B: 0.308 mol) of 1,4-butanediol, 6.19 g (D: 0.054 mol) of ε-caprolactone, 1.15 g (C: 0.008 mol) of cyclohexane dimethanol, 43.6 mg of titanium tetraisopropoxide as a catalyst, and 8.9 mg of dibasic magnesium phosphate trihydrate and the reaction was started in a nitrogen atmosphere at 180°C. After 1.0 hour, the reaction was continued while the reaction temperature was gradually elevated to 240°C. After 4.0 hours, reduction in pressure was started and the reaction was carried out for additional 6.0 hours.

The obtained polymer had molecular weight and molecular weight distribution of Mn: 98,000, Mw: 205,000, and Mw/Mn: 2.1, as well as thermal property of a melting point of 93°C. The obtained polymer was capable of being molded into a film and was flexible and tough.

<Example IV-3>

In a preliminary polymerization tank equipped with a stirrer, a fractionating condenser, and a temperature controlling device were charged 28.75 kg (B: 319 mol) of 1,4-butanediol, 38.00 kg (A: 321 mol) of succinic acid, 6.48 kg (D: 56.8 mol) of ε-caprolactone, and 2.01 kg (C: 18.9 mol) of diethylene glycol en bloc.

Under atmospheric pressure, the mixture was stirred at a temperature of 145 to 240°C to perform an esterification reaction. When the amount of the distillate exceeded 10.4 kg, the preliminary polymerization step was completed and the reaction mixture was transferred into a main polymerization tank. Further, 18.25 g of tetraisopropyl titanate was added to the main polymerization tank and the reaction mixture was kept at a temperature of 210 to 220°C and the pressure was decreased to finally 1.0 Torr (133 Pa) and the reaction mixture was stirred for 2 hours while 1,4-butanediol was distilled off to carry out a deglycolation reaction (interesterification reaction) . The obtained low molecular weight polyester had a weight average molecular weight of 53,000 and an acid number of 1.6 mgKOH/g.

After completion of the deglycolation reaction, 679 g (E: 4.04 mol) of hexamethylene diisocyanate was added to the obtained low molecular weight polyester that was in a molten state at 190°C and the mixture was stirred. At this time, the viscosity increased abruptly but no gelling occurred. The obtained high molecular weight aliphatic polyester copolymer had Mw of 184,000, an acid number of 1.4 mgKOH/g and a melting point of 88°C and was capable of being molded into a film.

The mechanical strength of the film was 600 kgf/$cm^2$ in tensile strength and 800% in tensile elongation. In addition, biodegradability was 80% (◎ )

<Example IV-4>

In a preliminary polymerization tank which is the same as that used in Example IV-3 was charged 28.11 kg (B: 312 mol) of 1,4-butanediol, 38.00 kg (A: 321 mol) of succinic acid, 6.48 kg (D: 56.8mol) of ε-caprolactone, and 2.01 kg (C: 18.9 mol) of diethylene glycol en bloc . Under atmospheric pressure, the mixture was stirred at a temperature of 145 to 225°C to perform an esterification reaction. When the amount of the distillate exceeded 10.4 kg, the preliminary polymerization step was completed and the reaction mixture was transferred into a main polymerization tank. Further, 18.25 g of tetraisopropyl titanate was added to the main polymerization tank and the reaction mixture was kept at a temperature of 210 to 220°C and the pressure was decreased to finally 1.0 Torr (133 Pa) and the reaction mixture was stirred for 3 hours to carry out a deglycolation reaction (interesterification reaction). The obtained low molecular weight

polyester had a weight average molecular weight of 93,000 and an acid number of 3.2 mgKOH/g.

After completion of the deglycolation reaction, 1235 g (E: 5.71 mol) of 2,2' -m- phenylene bis (2- Oxazoline) was added to the low molecular weight polyester that was in a molten state at 190°C and the mixture was stirred. At this time, the viscosity increased abruptly but no gelling occurred. The obtained high molecular weight aliphatic polyester copolymer had Mw of 167,000, an acid number of 2.9 mgKOH/g and a melting point of 88°C and was capable of being molded into a film.

The mechanical strength of the film was 530 kgf/cm$^2$ in tensile strength and 740% in tensile elongation. In addition, biodegradability was 82% (◎)

According to the method of the group IV of the present invention, a high molecular weight aliphatic polyester copolymer having a weight average molecular weight of 30,000 or more, in particular above 100,000, in terms of polystyrene can be industrially produced with a high degree of efficiency.

The biodegradable aliphatic polyester copolymer obtained by the group IV of the present invention is a polymer having a sufficiently high molecular weight, so that it can be also molded into films and fibers and has a practically sufficient flexibility. Also, because of its low acid number, it has good stability in molecular weight at the time of molding as well as excellent degradability. Therefore, the biodegradable aliphatic polyester copolymer of the present invention can be utilized by molding it into a wide variety of moldings such as films, fibers, sheets and bottles. After use, they can be rapidly biodegraded by such a method of burying in soil or converting into compost.

Hereinafter, examples in the group V of the present invention will be described.

It is to be noted that, properties of aliphatic polyesters in the group V of the present invention were measured by the following methods.

(1) Inclination $\alpha$ of linear plot

Under the conditions described hereinbelow, a sample in the form of a flat plate was supported by pinch rollers or caterpillars at both ends thereof and then rotated at a constant strain rate to apply elongation deformation to the sample. The cross-sectional area of the sample during the deformation and torque exerted on the pinch rollers or caterpillars were detected and elongation viscosity was obtained therefrom. From the obtained elongation viscosity and an elongation viscosity in the linear region in the same elongation time as the obtained elongation viscosity, a nonlinear parameter was calculated according to the above-mentioned mathematical expression (ii). Further, according to the above-mentioned mathematical expression (iii), the quantity of strain was calculated from the lengths of the sample at elongation times "0" and "t", respectively, and logarithm of the nonlinear parameter and the quantity of strain were plotted for a plurality of points differing in elongation time as shown in Fig. 2 and the inclination $\alpha$ was calculated according to the mathematical expression (i) described above.

Measuring temperature: 150°C
Strain rate: 0.01 to 0.5 sec$^{-1}$
Measuring apparatus: MELTEN RHEOMETER [manufactured by Toyo Seiki Co., Ltd.]

(2) Number of branching points

The number of branching points was obtained by comparing the area of proton of the methylene bonded to ester groups with the area of methyne proton formed by branching by $^1$H-NMR.

Also, the caprolactone content in the polymer was obtained by $^1$H-NMR.

(3) Measurement of molecular weight

A sample of the obtained aliphatic polyester dissolved in chloroform was measured by a gel permeation chromatography (GPC) method at 40°C by using a differential refractive index detector and a differential pressure viscosity detector and a weight average molecular weight was calculated by a universal calibration curve calibrated with standard polystyrene.

(4) Evaluation of moldability

The moldability of the aliphatic polyester was performed based on the results of overall evaluation including evaluations on appearance, average thickness difference (the molded film being measured of thicknesses at intervals of about 2 cm, with a root of sum of squares of differences between the thickness at each measuring point and an average thickness, the root of sum divided by total number of measuring points being used for indicating an average thickness difference), tensile elongation and so on of a film inflation-molded from the obtained aliphatic polyester.

Standards of evaluation were as follows.

◎ : Particularly excellent in moldability
○: Excellent in moldability
×: Poor in moldability

<Example V-1>

In a nitrogen atmosphere, in a preliminary polymerization tank were charged 3.02 kg of 1,4-butanediol, 3.41 kg of succinic acid, and 0.88 kg of ε-caprolactone, 7.27 g of tetraisopropyl titanate ester, and 0.51 g of calcium phosphate en bloc. Under atmospheric pressure, the mixture was stirred at a temperature of 145 to 225°C to perform an esterification reaction. When the amount of the distillate exceeded 1.0 kg, the preliminary polymerization step was completed to obtain an aliphatic polyester copolymer prepolymer.
Subsequently, the reaction mixture was kept at a temperature of 235°C and while stirring, the pressure was gradually decreased from the atmospheric pressure and finally to a degree of reduced pressure of 1.0 torr and condensation polymerization reaction was continued for 5.5 hours. The reaction product was discharged from the polymerization tank, cooled in a water tank, and cut with a cutter to obtain a polyester in the form of pellets. The polyester had a weight average molecular weight of 156,000 and a melting point of 109.8°C. It had a caprolactone content of 15% by weight and the number of branching of $5.2\times10^{-6}$ mol/g as measured by the $^1$H-NMR method.

<Example V-2>

In a nitrogen atmosphere, in a preliminary polymerization tank were charged 2.76 kg of 1,4-butanediol, 3.41 kg of succinic acid, and 1.26 kg of ε-caprolactone, 7.27 g of tetraisopropyl titanate, and 0.51 g of calcium phosphate en bloc as in the same manner as in Example V-1. Under atmospheric pressure, the mixture was stirred at a temperature of 145 to 225°C to perform an esterification reaction. When the amount of the distillate exceeded 1.0 kg, the preliminary polymerization step was completed to obtain an aliphatic polyester copolymer prepolymer.
Subsequently, the reaction mixture was kept at a temperature of 230°C and while stirring, the pressure was decreased from the atmospheric pressure and finally to a degree of reduced pressure of 1.0 torr and condensation polymerization reaction was continued for 6.5 hours. The reaction product was discharged from the polymerization tank, cooled in a water tank, and cut with a cutter to obtain a polyester in the form of pellets. The polyester had a weight average molecular weight of 132,000 and a melting point of 106.8°C. It had a caprolactone content of 19% by weight and a number of branching of $3.2\times10^{-6}$ mol/g as measured by the $^1$H-NMR method.

Table V-1

| Example | Polymerization temperature | Number of branching points | Moldability |
|---|---|---|---|
| V-1 | 235°C | 5.2 × 10 - 6 mol/g | ◎ |
| V-2 | 230°C | 3.2 × 10-6 mol/g | ○ |

According to the group V of the present invention, an aliphatic polyester that can give rise to moldings having excellent moldability, in particular, excellent film moldability, excellent sheet moldability and excellent foam moldability and further excellent mechanical properties can be obtained. By using these aliphatic polyesters showing certain strain curability, uniform stretching and foaming can be performed with ease.
Hereinafter, Examples and Comparative Examples in the group VI of the present invention will be described.

[Example VI-1]

In a glass ampoule having a diameter of 1.5 cm was charged 10 g of pellets of the copolymer (A) obtained in Production Example VII-1 described hereinbelow and the ampoule was connected to a vacuum line to remove the air and then closed by fusing. This sample was completely molten in an oven at 80°C and then inserted into a metallic block preliminarily adjusted to 45°C and irradiated with 10 kGy of γ-ray from cobalt 60 at a dosage rate of 10 kGy/hr. After the irradiation, the glass ampoule was opened and a cylindrical resin of 1.5 cm in diameter was taken out therefrom. From this, a thin plate of about 5 mm in thickness was cut out and wrapped by a 200 mesh stainless steel wire gauge. This was immersed in acetone for 12 hours and a gel fraction (it is insoluble ratio representing a crosslinking degree) was obtained according to the following expression, which revealed to be 40%.

$$\text{Gel fraction (\%)} = (W_2/W_1) \times 100$$

(wherein $W_1$ represents the dry weight of PCL before the immersion and $W_2$ represents the dry weight of PCL after the immersion.)

Further, to examine the heat resistance of the sample, the sample was sliced to a thickness of 2 to 3 mm and compression molded into a film by hot press at 200°C. The obtained film had extremely excellent transparency. For the heat resistance, tensile strength and elongation at break were obtained by using a high temperature tensile tester under the conditions of a tension speed of 100 mm/min and 120°C.

The copolymer (a) after the irradiation step, 0.5 part of liquid paraffin and 1 part of stearamide were charged in a vented extruder of a double screw type (40 mm in diameter) and extruded at a die temperature of 180°C to obtain pellets of the resin composition.

The resin composition had an MI of 0.2 g/10 min.

[Example VI-2]

The same procedures as in Example VI-1 were followed except that the copolymer (A) obtained in Production Example VII-1 described hereinbelow was irradiated by γ-ray at a dosage of 30 kGy. The obtained copolymer (a) had a gel fraction (%) of 52%. Further, the heat resistance tests were carried out in the same manner as described above.

By using 60 parts of the copolymer (a) after the above-mentioned irradiation step, 0.5 part of liquid paraffin, 0.8 part of stearamide, and 0.8 part of finely powdered silica ("Aerosil #200", manufactured by Nippon Aerosil Co., Ltd.), pellets of the resin composition were obtained in the same manner as in Example VI-1.

The resin had an MI of 0.1 g/10 min.

[Example VI-3]

By using 100 parts of the same copolymer (a) after the irradiation as that used in Example VI-2, 0.5 part of liquid paraffin, 0.5 part of stearamide, and 0.5 part of finely powdered silica ("Aerosil #200" as described above), pellets of the resin composition were obtained in the same manner as in Example VI-1. The resin composition had an MI of 0.1 g/10 min.

[Example VI-4]

By using 100 parts of the same copolymer (a) after the irradiation as that used in Example VI-2, 0.5 part of liquid paraffin, 0.5 part of stearamide, 0.5 part of finely powdered silica ("Aerosil #200" as described above), and 50 parts of corn starch, pellets of the resin composition were obtained in the same manner as in Example VI-1. The resin composition had an MI of 0.1 g/10 min.

[Comparative Example VI-1]

By using 100 parts of nonirradiated copolymer (a), 0.5 part of liquid paraffin, 0.8 part of stearamide, and 0.8 part of finely powdered silica ("Aerosil #200", manufactured by Nippon Aerosil Co., Ltd.), pellets of the resin composition were obtained in the same manner as in Example VI-1. The resin composition had an MI of 1.5 g/10 min.

By using the pellets of the resin compositions obtained in Examples VI-1 to VI-4 and Comparative Example VI-1, inflation films having an folding diameter (width) of 650 mm were molded by an inflation film forming method under the molding conditions as described below.

(Molding conditions)

Extruder: a 40 mm diameter extruder
Screw: L/D=28, a screw for MDPE (medium density polyethylene)
Die: a lip diameter of 150 mm, a die gap of 1 mm
Extrusion temperature: 170°C at the tip of the cylinder
Die temperature: 170°C
Resin temperature (T1) : 160°C
Rotation number of screw: 15 rpm

Discharge amount: 15 kg/hr
Blow ratio: 2.5

Inflation film forming was performed by using each of the resin compositions in Examples VI-1 to VI-4 described above. Stable film forming was performed in each case and films having excellent biodegradability were obtained.

On the other hand, although molding of film could be performed by using the raw material containing the resin composition of Comparative Example VI-1, the molding stability was low since no effect of irradiation treatment of radiation was available, so that no film having a uniform thickness was obtained.

According to the group VI of the present invention, degradable resin having excellent degradability, excellent moldability and excellent mechanical properties can be obtained. In particular, the heat resistance is increased and the resin of the present invention can be molded and used at higher temperatures than conventional one and also has improved degradability.

In films produced by the inflation method, irradiation treatment with radiation rays enables providing stabilized inflation films. The obtained film has excellent degradability and can be used for packaging materials and agricultural films and the like that are environmentally-friendly.

Hereinafter, Examples in the group VII of the present invention will be described.

<Reference Example VII-1>

In a preliminary polymerization tank equipped with a stirrer, a fractionating condenser, and a temperature controlling device were charged 36.25 kg (402.2 mol) of 1,4-butanediol, 43.18 kg (365.7 mol) of succinic acid, and 7.37 kg (64.6 mol) of ε-caprolactone, en bloc. Here, [B]/[A]=1.1 in the above-mentioned expression (8), and [C]/([A]+[C]) =0.15 in the above-mentioned expression (16).

Under atmospheric pressure, the mixture was stirred at a temperature of 145 to 225°C to perform an esterification reaction. When the amount of the distillate exceeded 9.8 kg, the preliminary polymerization step was completed and the reaction mixture was transferred into a main polymerization tank. Further, 20.79 g of tetraisopropyl titanate was added to the main polymerization tank and the reaction mixture was stirred while keeping a temperature at 210 to 220°C. The pressure was decreased to finally 1.0 mmHg (133 Pa) and the reaction mixture was stirred for 2 hours to distill 1,4-butanediol, that is, to carry out an interesterification reaction through a deglycolation reaction. The obtained low molecular weight polyester had a weight average molecular weight of 53,000 and an acid number of 1.6 mgKOH/g.

After completion of the deglycolation reaction, 773.7 g of hexamethylene diisocyanate was added to the obtained low molecular weight polyester that was in a molten state at 190°C and the mixture was stirred. At this time, the viscosity increased abruptly but no gelling occurred. The obtained high molecular weight aliphatic polyester copolymer A had Mw of 202,000, an acid number of 1.4 mgKOH/g and melting point of 101°C.

The mechanical strength of the film was 600 kgf/cm$^2$ in tensile strength and 740% in tensile elongation.

<Reference Example VII-2>

In the same preliminary polymerization tank as that used in Reference Example VII-1 were charged 29.86 kg of 1,4-butanediol, 38.00 kg of succinic acid, and 12.24 kg of ε-caprolactone en bloc. Under atmospheric pressure, the mixture was stirred at a temperature of 145 to 225°C to perform an esterification reaction. When the amount of the distillate exceeded 10.4 kg, the preliminary polymerization step was completed and the reaction mixture was transferred into a main polymerization tank. Further, 18.29 g of tetraisopropyl titanate was added to the main polymerization tank and the reaction mixture was stirred while keeping a temperature at 210 to 220°C. The pressure was decreased to finally 1.0 mmHg (133 Pa) and the reaction mixture was stirred for 3 hours to carry out a deglycolation reaction (interesterification reaction). The obtained low molecular weight polyester had a weight average molecular weight of 93,000 and an acid number of 4.2 mgKOH/g.

After completion of the deglycolation reaction, 1,353 g of 2,2'-p-phenylene bis(2-oxazoline) was added to the obtained low molecular weight polyester (D) that was in a molten state at 190°C and the mixture was stirred. At this time, the viscosity increased abruptly but no gelling occurred. The obtained high molecular weight aliphatic polyester copolymer B had Mw of 172,000, an acid number of 2.1 mgKOH/g and melting point of 88°C and was capable of being molded into a film.

The mechanical strength of the film was 530 kgf/cm$^2$ in tensile strength and 800% in tensile elongation.

<Example VII>

[Compound/inflation molding]

The resins blended in formulations described below (Table VII-1) were compounded and pelletized by using a twin-screw extruder under the extrusion conditions described below. The raw resin materials dried (60°C × 10 hours or more) in advance were used. Blending each formulation was performed by using a tumbler. The thus pelletized resins were molded into films by using an inflation film forming apparatus.

The raw materials used in Example group VII are shown below.

Copolymer polyester resin: PCL/PBS = 15/85 (molar ratio) (one obtained in Reference Example VII-1)
PH7: Polycaprolactone (manufactured by Daicel Chemical Industries, Ltd., number average molecular weight 70,000)
Bionolle #1001: Succinic acid/1,4-BG copolymer (manufactured by Showa Highpolymer Co., Ltd., number average molecular weight 70,000)
Bionolle #3001: Succinic acid/adipic acid/1,4-BG copolymer (manufactured by Showa Highpolymer Co., Ltd., number average molecular weight 70,000)

<Compounding conditions>

C1: 100°C (under hopper), C2: 180°C, C3: 200°C, C4: 200°C, C5: 200°C, C6: 210°C, C7: 210°C, AD: 210°C (adapter), D: 200°C (die)

The number 1 to 7 of C increases from under hopper of C1 toward the die. It is to be noted that the numbering of the film formation step is the same. The resin supplied from the hopper is extruded through C1 to D and then cut by a pelletizer.

[Film formation]

Film formation was performed by using the above-mentioned pellets. The method of film formation is not particularly limited and an inflation molding method or a T-die extrusion method may be used. In the present example, an inflation molding method was used to form films. The molding conditions are as follows.

<Inflation molding conditions>

C1 (under hopper) : 100°C, C2: 140°C, C3: 150°C, C4: 160°C, C5: 160°C, C6: 160°C, AD: 160°C (adapter), D1: 155°C (die), D2: 155°C

The pellets supplied from the hopper were extruded from C1 to D. In D, they were extruded upwards and inflated by air pressure cylindrically to form a film.

Film uptake speed: 17.0 to 20.0 m/min
Lip width: 1.0 mm
Film width: 1,350 mm
Film thickness: 20 μm

By using the thus obtained resin pellets and film test pieces, various evaluations described below were performed. The results are shown in Table 1.

[Tensile tests]

Tensile tests were performed by using tensile test dumbbell pieces molded by injection molding (JIS K-7113 No.1 dumbbell pieces).

Samples were moisture-conditioned in a thermohygrostat at 23°C × 50% RH for 24 hours before the measurement was performed. It is to be noted that the measuring conditions were as follows.

<Measuring conditions>

Shape of sample: JIS K-7113 No. 1 dumbbell piece
Length of sample: 50 mm
Device used: Manufactured by OLIENTEC Co. Ltd.; trade name, RTA-500
Load cell: 500 kgf, 40%
Crosshead speed: 20 mm/min
Number of tests: n=3

[Hand-tear tests]

A polyethylene film (inflation-molded film) currently widely used as a general-purpose film was provided with a cut and then torn by hand. The feeling at this moment was scored 10 points as a full score and organoleptic evaluation (full score 10 points) of films of various formulations for hand-tearing feeling was performed. As the standards for judgement on this occasion, not only strength but overall tearability including resistance felt by the hand when the film was torn by hand, the manner of being torn (presence or absence of linearity), undulation of the torn face and so forth was organoleptically evaluated.

The evaluation standards for the organoleptic evaluation were as follows.

◎ : Sample showing undulated torn face with strong tear resistance
○: Sample having a linear torn face with less undulation and less tear resistance
×: Sample torn linearly with substantially no resistance

[Tearing tests]

Films molded by inflation molding or T-die extrusion were cut into a width of 50 mm and a length of 100 mm and provided with a 30-mm cut in the longitudinal direction (MD direction) and were used in tearing tests. The samples were moisture-conditioned in a thermohygrostat at 23°C × 50% RH for 24 hours before the measurement was performed. Note that the measuring conditions were as follows.

Length of sample: 30 mm
Device used: Manufactured by OLIENTEC Co. Ltd.; trade name, RTA-500
Load cell: 5 kgf, 20%
Crosshead speed: 500 mm/min
Number of tests: n=3, the result being shown in average

On the biodegradability, tests were performed in the same method as described on the top of the Example.

Table VII-1

| | Example VII-1 | Example VII-2 | Example VII-3 | Example VII-4 | Comparative Example VII-1 | Comparative Example VII-2 | Comparative Example VII-3 | Comparative Example VII-4 |
|---|---|---|---|---|---|---|---|---|
| (Composition: part by weight) | | | | | | | | |
| Copolymer polyester resin | 70 | 50 | 30 | 30 | | | | |
| #1001 | 30 | 50 | 70 | | 100 | 70 | 50 | 70 |
| PH7 | | | | 70 | | 30 | 50 | |
| #3001 | | | | | | | | 30 |
| (Tensile test) | | | | | | | | |
| Maximum stress MD ($kgf/cm^2$) | 320 | 340 | 350 | 310 | 320 | 300 | 230 | 220 |
| TD ($kgf/cm^2$) | 290 | 310 | 350 | 270 | 380 | 300 | 280 | 270 |
| Elongation at break MD (%) | 640 | 610 | 580 | 900 | 250 | 450 | 480 | 520 |
| TD (%) | 1100 | 1150 | 1000 | 1250 | 800 | 840 | 1000 | 850 |
| (Hand-tearing test) | | | | | | | | |
| MD | ◎ | ◎ | ◎ | ○ | ○ | × | × | ○ |
| (Tearing test) | | | | | | | | |
| Tear strength MD (g/20μm) | 270 | 230 | 210 | 260 | 150 | 35 | 50 | 210 |
| TD (g/20μm) | 280 | 310 | 240 | 280 | 250 | 230 | 250 | 230 |
| (Biodegradability) | | | | | | | | |
| Degree of biodegradation | ◎ | ◎ | ○ | ◎ | × | ○ | ○ | × |

First, in Comparative Example VII-1, the hand-tearing tests gave good results since the resin alone was used but the film was poor in both elongation and biodegradability and was not practically usable. In contrast, Comparative Examples VII-2 and VII-3 used blends of polyester resin. As shown in Comparative Example VII-4, blending a flexible resin improved the elongation of the film but on the contrary resulted in that both the hand-tearing evaluation and tear strength were decreased to very low levels, which could not be said to be practically acceptable physical properties. To increase the hand-tearing property and tear strength, further selection of polyester resin to be blended was made but this resulted in a decrease in biodegradability against the expectation. In these studies, no formulation was obtained that exhibited all of elongation, tear strength and biodegradability in good balance.

In contrast, Examples VII-1, VII-2 and VII-3 that contained the copolymer polyester resin of the present invention as one of the components exhibited good elongation and tear strength as well as good biodegradability in spite of varied blending amount of the polyester resin as the mate resin. By selecting the polyester resin serving as the mate resin, the properties of the film of the blend were further increased as shown in Example VII-4.

According to the group VII of the present invention, there are provided an aliphatic polyester blend resin composition and moldings thereof that have excellent mechanical properties, biodegradability, in particular controllability of biodegradation rate, and in particular excellent film elongation and biodegradability and also have good balance between these properties.

Hereinafter, Examples in which cellulose acetate blended with a plasticizer was used as the other biodegradable resin and Comparative Examples thereof will be described.

[Compound/injection molding]

Resins blended to have formulations shown in Table VII-2 by using the high molecular weight polyester copolymers A and B produced in Reference Examples VII-1 and VII-2 were compounded by use of a twin screw extruder under the extrusion conditions described below and pelletized. The raw materials of the resins used were dried (50°C × 10 hours or more) before use. Further, for making each blend, a tumbler was used.

The thus pelletized resins were molded into physical properties evaluation test pieces by use of an injection molding apparatus.

By using the obtained resin pellets and physical properties evaluation test pieces, various evaluations shown below are performed and the results obtained are shown in Table VII-2.

<Compounding conditions>

C1 (under hopper) : 100°C, C2: 180°C, C3: 200°C, C4: 200°C, C5: 200°C, C6: 210°C, C7: 210°C, AD: 210°C (before die), D: 200°C (die)

The number 1 to 7 of C increases from under hopper toward the die. It is to be noted that the numbering of the injection molding step is the same.

The resin supplied from the hopper is extruded through C1 (under hopper) to D (die) and then cut by a pelletizer.

<Injection molding conditions>

C1 (Under hopper) : 100°C, C2: 200°C, C3: 220°C, C4: 220°C, nozzle: 210°C
Injection time: 20 seconds
Cooling time: 25 seconds

[Tensile tests]

Tensile tests were performed by using samples injection-molded into No. 1 dumbbells based on JIS K-7113.

Samples were moisture-conditioned in a thermohygrostat at 23° × 50% RH for 24 hours before the measurement was performed. It is to be noted that the measuring conditions were as follows.

<Measuring conditions of Tensile tests >

Shape of sample: JIS K-7113 No. 1 dumbbell piece

Length of sample: 80 mm
Device used: Manufactured by OLIENTEC Co. Ltd.; trade name, RTA-500
Load cell: 500 kgf, 40%
Crosshead speed: 20 mm/min
Number of tests: n=5, the result being shown in average

[Bending tests]

Bending tests were performed by using bending test pieces (JIS K-7203) molded by injection molding. The samples were moisture-conditioned in a thermohygrostat at 23°C × 50% RH for 24 hours before the measurement was performed. It is to be noted that the measuring conditions were as follows.

Shape of sample:

Distance between fulcrums: 100 mm
Device used: Manufactured by OLIENTEC Co. Ltd.; trade name, RTA-500
Load cell: 100 kgf, 40%
Crosshead speed: 10 mm/min
Number of tests: n=3, the result being shown in average

[Izod impact tests]

Izod impact tests were performed by using Izod impact test pieces (notched) (JIS K-7110) molded by injection molding. The samples were moisture-conditioned in a thermohygrostat at 23°C × 50% RH for 24 hours before the measurement was performed. It is to be noted that the measuring conditions were as follows.

[Heat distortion temperature]

Heat distortion temperature (HDT) was measured by using bending test pieces (JIS K-7203) molded by injection molding.

[Bleeding out property]

Bleeding out evaluation tests were performed by using press sheets of a square of 1 mm in thickness and 5 cm in each side. It is to be noted that the measuring conditions were as described below. Evaluation was performed based on the evaluation of appearance and a decrease in weight.

○: No change at all on the appearance, with no decrease in weight
Δ: Attachment of some plasticizer on the surface of the sheet, with substantially no decrease in weight
×: Attachment of plasticizer on the surface of the sheet, with a considerable decrease in weight
Temperature: 60°C
Humidity: 80% RH
Standing time: 1 Hour

The biodegradability was evaluated by the method described at the outset of the Example.

Table VII-2

| | Example | | | | Reference Example | | Comparative Example | |
|---|---|---|---|---|---|---|---|---|
| | VII-2-1 | VII-2-2 | VII-2-3 | VII-2-4 | VII-2-1 | VII-2-2 | VII-2-1 | VII-2-2 |
| ((Composition) : part by weight) | | | | | | | | |
| Polyester copolymer A | 20 | 40 | | | 20 | 20 | | |
| Polyester copolymer B | | | 20 | 40 | | | | |
| Cellulose acetate A | 80 | 60 | 80 | 60 | | | | |
| Cellulose acetate B | | | | | 80 | | | |
| Cellulose acetate C | | | | | | 80 | | |
| HIPS | | | | | | | 100 | |
| GPPS | | | | | | | | 100 |
| ((Evaluation results)) | | | | | | | | |
| Tensile tests | | | | | | | | |
| Yield stress ($kgf/cm^2$) | 300 | 270 | 280 | 230 | 290 | 200 | 470 | 590 |
| Maximum stress ($kgf/cm^2$) | 350 | 320 | 300 | 280 | 330 | 210 | 510 | 590 |
| Elongation at break (%) | 80 | 140 | 120 | 200 | 85 | 80 | 40 | 5 |
| Modulus of elasticity ($kgf/cm^2$) | 3200 | 2800 | 2900 | 2200 | 3000 | 1800 | 22000 | 25000 |
| Bending tests | | | | | | | | |
| Maximum stress ($kgf/cm^2$) | 440 | 350 | 420 | 270 | 430 | 230 | 700 | 920 |
| Modulus of elasticity ($kgf/cm^2$) | 13500 | 11000 | 12700 | 8800 | 13000 | 7400 | 42000 | 45000 |
| Izod impact strength (kgf・cm/cm) | 18 | 32 | 19 | 38 | 18 | 17 | 38 | 2 |
| Heat distortion temperature | | | | | | | | |
| Low load (°C) | 82 | 77 | 80 | 76 | 80 | 82 | - | - |
| High load (°C) | 59 | 53 | 59 | 52 | 56 | 60 | - | - |
| Bleeding out | ○ | ○ | ○ | ○ | × | × | ○ | ○ |
| Biodegradability | ○ | ○ | ○ | ○ | ○ | ○ | × | × |

Polyester copolymer A: PCL/PBS = 15/85 (molar ratio) (produced in Reference Example VII-1)
Polyester copolymer B: PCL/PBS = 25/75 (molar ratio) (produced in Reference Example VII-2)
Cellulose acetate resinA : cellulose acetate/PCL305 = 100/20 (weight ratio)
Cellulose acetate resin B : cellulose acetate/PCL305 = 100/60 (weight ratio)
Cellulose acetate resin C : cellulose acetate/PCL305 = 100/80 (weight ratio)
(Cellulose acetate used: weight average molecular weight of about 150,000; acetylation degree of 50.4%, plasticizer PCL305: polycaprolactone having weight average molecular weight of about 500 (both manufactured by Daicel Chemical Industries, Ltd.))
HIPS: High impact polystyrene HIPS
GPPS: General-purpose polystyrene GPPS

(both were manufactured by Daicel Chemical Industries, Ltd.)

The aliphatic polyester copolymer/cellulose acetate resin composition of the group VII of the present invention has excellent biodegradability and can be molded into injection moldings, films, fibers and the like and has practically sufficient flexibility. Therefore, the aliphatic polyester copolymer/cellulose acetate resin composition of the group VII of the present invention can be utilized by processing it into a wide variety of moldings such as films, fibers, sheets, cards, and bottles. After use, it can be quickly biodegraded by means such as burying it in soil or converting it into compost.

Hereinafter, Examples in the group VII of the present invention in which starch was used as the other biodegradable resin and Comparative Examples thereof will be described.

[Compound/injection molding]

The resins blended in formulations described below by using the high molecular weight polyester copolymer A produced in Reference Example VII-1 (Table VII-3) were compounded and pelletized by using a twin-screw extruder under the extrusion conditions described below. The raw resin materials dried (60°C × 10 hours or more) in advance were used. Blending each formulation was performed by using a tumbler.

The thus pelletized resins were subjected to injection molding to make physical properties evaluation test pieces.

By using the thus obtained pellets and physical properties evaluation test pieces, evaluations were made on the physical properties, biodegradability and biodisintegrability of the resins were performed. The evaluation results are shown in Table VII-3.

<Compounding conditions>

C1: 100°C (under hopper) , C2: 140°C, C3: 150°C, C4: 160°C, C5: 160°C, C6: 160°C, C7: 160°C, AD: 155°C (adapter), D: 155°C (die)

The number 1 to 7 of C increases from under hopper toward the die. It is to be noted that the numbering of the injection molding step is the same. The resin supplied from the hopper is extruded through C1 to D and then cut by a pelletizer.

<Injection molding conditions>

C1: 100°C, C2: 180°C, C3: 200°C, C4: 200°C, nozzle: 210°C Injection time: 20 seconds, Cooling time: 25 seconds

<Press Condition>

Model: 50 × 50 × 0.1mm
Temperature: 180°C
Pressure: 200kgf/cm$^2$
Press Time: 180 seconds
Cooling Time: 180 seconds

[Tensile tests]

Tensile tests were performed by using tensile test dumbbell pieces molded by injection molding (JIS K-7113 No.1 dumbbell pieces) .

Samples were moisture-conditioned in a thermohygrostat at 23° × 50% RH for 24 hours before the measurement was performed. It is to be noted that the measuring conditions were as follows.

Shape of sample: JIS K-7113 No. 1 dumbbell piece
Length of sample: 50 mm
Device used: Manufactured by OLIENTEC Co. Ltd.; trade name, RTA-500
Load cell: 500 kgf, 40%
Crosshead speed: 20 mm/min
Number of tests: n=3, the results being shown in average of three tests

[Bending tests]

Bending tests were performed by using bending test pieces (JIS K-7203) molded by injection molding. The samples were moisture-conditioned in a thermohygrostat at 23°C × 50% RH for 24 hours before the measurement was performed. It is to be noted that the measuring conditions were as follows.

Shape of sample:

Distance between fulcrums: 100 mm
Device used: Manufactured by OLIENTEC Co. Ltd.; trade name, RTA-500
Load cell: 100 kgf, 40%
Crosshead speed: 10 mm/min
Number of tests: n=3, the result being shown in average

[Izod impact tests]

Izod impact tests were performed by using Izod impact test pieces (notched) (JIS K-7110) molded by injection molding. The samples were moisture-conditioned in a thermohygrostat at 23°C × 50% RH for 24 hours before the measurement was performed. It is to be noted that the measuring conditions were as follows.

Shape of sample: molded notch based on JIS K-7110
Number of tests: n=6, the result being shown in average of six tests

[Heat distortion temperature]]

Heat dis tortion temperature (HDT) was measured by using bending test pieces (JIS K-7203) molded by injection molding.

[Biodegradability]

Evaluation of the biodegradability of samples was performed according to the simplified degradation degree test using activated sludge (JIS K-6950). This was done by using the standard activated sludge in Himeji city for a test period of 28 days. Evaluation was performed on 3-ranks of ◎ , ○, and ×.

◎ : Sample that was degraded by 80% or more
○: Sample that was degraded by 60% or more
×: Sample that was degraded only by 60% or less.

[Biodisintegrability]

Biodisinte grability tests were performed by using press sheets molded by hot press. Press sheets were buried in soil composed of a blend of leaf soil/horticultural soil = 50/50 for 20 days under the environment of 23°C and 50% RH and then taken out. The appearance and degree of loss of weight of the press sheets were evaluated. The evaluation was performed according to the degree of disintegration ranked ◎ , ○, and × as indicated below.

◎ : One showing a considerable decrease in weight and almost failing to retain original appearance
○: One showing little decrease in weight but showing a change in the appearance
×: One showing no decrease in weight or no change in the appearance

First, in Reference Example VII-3-1, the resin alone was used so that it had mechanical properties and biodegradability but it had poor biodisintegrability. Accordingly, for applications where it is desired that the shape of the molding be disintegrated soon, for example, thin molding such as agricultural mulching films and compost bags, the resin is not practically usable. In contrast, Comparative Examples VII-3-1 and VII-3-3 relate to blends of other polyester resins, which however have insufficient biodegradability and biodisintegrability. As shown in Comparative Example VII-3-2, although the blend of the other polyester resins had improved biodisintegrability by increasing the ratio of starch, it did not have improved biodegradability. In addition, the blends of the other polyester resins had decreased heat deformation temperatures at high loads, resulting in a decreased heat resistance. In the aliphatic polyester copolymer/starch blend resin composition of the present invention, blending starch did not give adverse influences on the mechanical properties and thermal properties and both the biodegradability and biodisintegrability were improved.

Table VII-3

| | Example VII-3-1 | Example VII-3-2 | Example VII-3-3 | Example VII-3-4 | Reference Example VII-3-1 | Comparative Example VII-3-1 | Comparative Example VII-3-2 | Comparative Example VII-3-3 |
|---|---|---|---|---|---|---|---|---|
| <<Composition : part by weight>> | | | | | | | | |
| Polyester copolymer resin A | 80 | 60 | 80 | 60 | 100 | | | |
| PH7 | | | | | | 20 | 20 | 20 |
| #1001 | | | | | | 60 | 60 | 60 |
| Starch | 20 | 40 | | | | 20 | 40 | |
| Plasticized starch | | | 20 | 40 | | | | 20 |
| <<Evaluation results>> | | | | | | | | |
| Tensile tests | | | | | | | | |
| Yield stress ($kgf/cm^2$) | 290 | 320 | 250 | 240 | 270 | 300 | 330 | 250 |
| Maximum stress ($kgf/cm^2$) | 410 | 450 | 360 | 330 | 370 | 380 | 410 | 320 |
| Elongation at break (%) | 440 | 400 | 560 | 720 | 500 | 400 | 320 | 570 |
| Modulus of elasticity ($kgf/cm^2$) | 3600 | 4400 | 2600 | 2300 | 2800 | 2600 | 3000 | 2500 |
| Bending tests | | | | | | | | |
| Maximum stress ($kgf/cm^2$) | 330 | 420 | 280 | 250 | 280 | 260 | 300 | 230 |
| Modulus of elasticity ($kgf/cm^2$) | 6800 | 8100 | 5200 | 4500 | 6000 | 5800 | 6400 | 4200 |
| Izod impact strength (kgf・cm/cm) | 41 | 38 | 46 | 44 | 48 | 38 | 32 | 37 |
| Heat distortion temperature | | | | | | | | |
| Low load (°C) | 78 | 73 | 76 | 74 | 78 | 72 | 72 | 70 |
| High load (°C) | 60 | 58 | 58 | 58 | 60 | 52 | 54 | 51 |
| Biodegradability | ◎ | ◎ | ◎ | ◎ | ○ | × | × | × |
| Biodisintegrability | ○ | ◎ | ○ | ◎ | × | × | ○ | × |

Polyester copolymer resin A: PCL/PBS = 15/85 (molar ratio) (produced in Reference Example VII-1)
PH7: Polycaprolactone (manufactured by Daicel Chemical Industries, Ltd., number average molecular weight 70,000)
Bionolle #1001:succinic acid/1,4BG copolymer(manufactured by Showa Highpolymer Co., Ltd., number average molecular weight 70,000)] Starch: Granular starch (manufactured by Nihon Shokuhin Kako Co., Ltd.)
Plasticized starch: Plasticized starch (manufactured by Nihon Shokuhin Kako Co., Ltd., plasticized with a plasticizer)

With the aliphatic polyester copolymer/starch resin composition of the present invention, it is possible to readily control the shape disintegration time while retaining excellent mechanical properties and biodegradability of the aliphatic polyester copolymer and also reduce the cost.
Hereinafter, Examples in the group VII of the present invention relating to moldings other than films and Comparative Examples thereof will be described.

(Synthesis of aliphatic polyester copolymer)

[Production Example VII-1]

In a preliminary polymerization tank equipped with a stirrer, a fractionating condenser, and a temperature controlling device were charged 31.63 kg (355.1 mol) of 1,4-butanediol (Mw=90), 34.54 kg (292.7 mol) of succinic acid (Mw=118), and 8.35 kg (73.2 mol) of ε-caprolactone en bloc. Here, [B]/[A] =1.2 in the above-mentioned expression (8), and [C]/([A]+[C])=0.20 in the above-mentioned expression (16).
Under atmospheric pressure, the mixture was stirred at a temperature of 145 to 225°C to perform an esterification reaction. When the amount of the distillate exceeded 10. 0 kg, the preliminary polymerization step was completed and the reaction mixture was transferred into a main polymerization tank. Further, 12.00 g of tetraisopropyl titanate was added to the main polymerization tank and the reaction mixture was stirred while keeping a temperature at 210 to 220°C. The pressure was decreased to finally 1.0 mmHg (133 Pa) and the reaction mixture was stirred for 6 hours to distill 1,4-butanediol, that is, to carry out an interesterification reaction through a deglycolation reaction. The obtained low molecular weight polyester had a weight average molecular weight of 30,000 and an acid number of 1.3 mgKOH/g.
After completion of the deglycolation reaction, 600 g of hexamethylene diisocyanate (Mw=168) was added to the obtained low molecular weight polyester that was in a molten state at 190°C and the mixture was stirred. At this time, the viscosity increased abruptly but no gelling occurred. The obtained aliphatic polyester copolymer A had Mw of 216,000, an acid number of 1.1 mgKOH/g and melting point of 103.8°C and was capable of being molded into a film. This resin is referred to as a polyester copolymer (A).
The mechanical strength of the film was 600 kgf/$cm^2$ in tensile strength and 800% in tensile elongation.

[Production Example VII-2]

In the same preliminary polymerization tank as that used in Production Example VII-1 were charged 31.63 kg of 1,4-butanediol, 27.68 kg of succinic acid, and 8.35 kg of ε-caprolactone en bloc. Under atmospheric pressure, the mixture was stirred at a temperature of 145 to 225°C to perform an esterification reaction. When the amount of the distillate exceeded 10.0 kg, the preliminary polymerization step was completed and the reaction mixture was transferred into a main polymerization tank. Further, 12.00 g of tetraisopropyl titanate was added to the main polymerization tank and the reaction mixture was stirred while keeping a temperature at 210 to 220°C and the pressure was decreased to finally 1.0 mmHg (133 Pa). The reaction mixture was stirred for 6 hours to carry out a deglycolation reaction (interesterification reaction). The obtained low molecular weight polyester had a weight average molecular weight of 30,000 and an acid number of 4.0 mgKOH/g.
After completion of the deglycolation reaction, 600 g of 2,2'-m-phenylene bis(2-oxazoline) was added to the obtained low molecular weight polyester that was in a molten state at 190°C and the mixture was stirred. At this time, the viscosity increased abruptly but no gelling occurred. The obtained aliphatic polyester copolymer B had Mw of 202,000, an acid number of 1.2 mgKOH/g and melting point of 104.8°C and was capable of being molded into a film. This resin is referred to as a polyester copolymer (B).
The mechanical strength of the film was 530 kgf/$cm^2$ in tensile strength and 740% in tensile elongation.

[Compound]

The resins blended in formulations shown in Table VII-3 were compounded and pelletized by using a twin-screw extruder under the extrusion conditions described below. The resin raw materials dried (50°C × 10 hours or more) in advance were used. Blending each formulation was performed by using a tumbler.

<Extrusion conditions>

C1 (under hopper): 100°C, C2: 180°C, C3: 200°C, C4: 200°C, C5: 200°C, C6: 210°C, C7: 210°C, AD: 210°C (before die), D: 200°C (die)
The number 1 to 7 of C increases from under hopper of C1 toward the die. It is to be noted that the numbering of the film formation step is the same.
The resin supplied from the hopper is extruded through C1 (upper hopper) to D (die) and then cut by a pelletizer.
By using the resin pellets thus obtained, various moldings were molded and various evaluations were made thereon as described below.
The physical properties of the moldings were measured by the following.

Melt index (MI): Extrusion output (unit: g/10 min) per 10 minutes under a load of 2,160 g at 190°C
Melt tension (MT): Value of tensile force (unit: g) when a resin was extruded at a cylinder temperature of 150°C, a cylinder speed of 1 mm/min, an extrusion diameter of 1 mmϕ, L/D = 10, an inlet angle of 90° into a rod, and the extruded rod-shaped resin was drawn under the conditions of up take speed of 10 m/min and a distance of 50 cm between capillary and load cells.
Yield strength, elongation at break and modulus of elasticity in tension: According to JIS K-7113.
Dupont impact strength: According to JIS K-7211
Izod impact strength (23°C): According to JIS K-7110

The biodegradability of the resin was evaluated by the method described at the outset of the Example.

(Examples VII-4-1 to VII-4-3 and Comparative Example VII-4-1)

The aliphatic polyester copolymer (A) produced in Production Example VII-1, polycaprolactone PH7 as the other biodegradable resin (b), and talc as the additive for resins (d) were blended in the weight ratio shown in Table VII-4 and the resin compositions were supplied to a Laboplastomill and kneaded at 150°C at 30 rpm. After the torque became stable, the resins were heat-kneaded for additional 10 minutes and the obtained high molecular weight aliphatic polyester biodegradable resins were each extrusion-molded into a sheet. The results are shown in Table VII-4.

Extrusion molding conditions

Cylinder temperature: 160°C
Number of rotations of screw: 60 rpm
Resin pressure: 210 to 260 kg/$cm^2$
Roll temperature: 60°C
Roll speed: 0.5 m/min
Sheet: Width 250 mm, thickness 0.5 mm

Table VII-4

| | Example VII-4-1 | Example VII-4-2 | Example VII-4-3 | Reference example VII-4-1 |
|---|---|---|---|---|
| Compositional ratio (part by weight) | | | | |
| Polyester copolymer (A) | 56 | 49 | 42 | 70 |
| Polycaprolactone PH7 | 24 | 21 | 18 | 30 |
| Talc | 20 | 30 | 40 | 0 |
| Sheet extrusion moldability | Slight unevenness in thickness | Good | Good | Considerable necking, with thickness and width being insufficient |
| Specific gravity ($g/cm^3$) | 1.361 | 1.463 | 1.586 | - |
| Vicat softening point (°C) | 95.2 | 98.2 | 102.3 | - |
| Bending strength ($kg/cm^2$) | 250 | 231 | 320 | - |
| Modulus of elasticity in bending ($kg/cm^2$) | 3400 | 4500 | 5900 | - |
| Tensile strength ($kg/cm^2$) | 260 (Yield point) | 288 (Yield point) | 340 (Breaking point) | - |
| Modulus of elasticity in tension ($kg/cm^2$) | 3800 | 4600 | 5800 | - |
| Tensile elongation (%) | 420 | 92 | 36 | - |

According to the group VII of the present invention, various moldings other than films can be obtained by various molding methods by using the high molecular weight aliphatic polyester biodegradable resin.
Hereinafter, Examples relating to films in the group VII of the present invention and Comparative Examples thereof will be described.

[Examples VII-5-1 to VII-5-4 and Reference Examples VII-5-1 to VII-5-3]

[Compound]

The resins blended in formulations shown in Table VII-5 were compounded and pelletized by using a twin-screw extruder. The resin raw materials dried (50°C × 10 hours or more) in advance were used. Also, blending for each resin was performed by using a tumbler. It is to be noted that the aliphatic polyester copolymers A and B are respectively obtained in Reference Examples VII-1 and VII-2 in the group VII of the present invention.

[Film formation]

Film formation was performed by using the pellets obtained in the above.

Film drawing speed: 17.0 to 22.0 m/min
Lip width: 2.0 mm
Film width: 1,350 mm
Film thickness: 20 μm

By using the thus obtained resin pellets and film moldings, various evaluations described below were performed. The results are shown in Table VII-5.

[Hand-tearing property)

A polyethylene film (inflation-molded film) currently widely used as a general-purpose film was provided with a cut and then torn by hand. The feeling at this moment was set as a standard (full score 10 points) and evaluation of films obtained in the above for hand-tearing feeling was performed based on full score of 10 points.
As the standards for judgement on this occasion, not only strength but overall tearability including resistance felt by the hand when the film was torn by hand, the manner of being torn (presence or absence of linearity), undulation of the torn face and so on was organoleptically evaluated.
The evaluation standards for the organoleptic evaluation were as follows.

◎ : Sample showing undulated torn face and torn obliquely with strong tear resistance
○: Sample having a linear torn face with less undulation and strong tear resistance
×: Sample torn linearly with small tear resistance
××: Sample having smaller tear resistance than the x sample with tear easily spread

[Tear strength]

Sample: films obtained above are cut to a width of 50 mm and a length (MD direction) of 100 mm and provided with a 30 - mm cut in the longitudinal direction in the middle at one end of the width to be used.
The samples were moisture-conditioned in a thermohygrostat at 23°C × 50% RH for 24 hours before the measurement was performed.

<Measuring conditions of tear strength)

Length of sample: 30 mm
Device used: Manufactured by OLIENTEC Co. Ltd.; trade name, RTA-500
Load cell: 500 kgf, 20%
Crosshead speed: 5 mm/min
Number of tests: n=3, the result being shown in average of three tests

The evaluation standards for the organoleptic evaluation were as follows.

◎ : One having high tear strength, tearing obliquely with the torn face undulating
○: One having high tear strength with the torn surface being linear and undulating
×: One having low tear strength with the torn surface being linear
××: One having very low tear strength with the torn surface being linear with substantially no undulation

[Tensile tests]

Tensile tests were performed for films obtained above that are punched into No. 2 dumbbell pieces based on JIS K-7113. Note that, punching of the films is conducted in both directions of MD and TD.
Samples were moisture-conditioned in a thermohygrostat at 23°C × 50% RH for 24 hours before the measurement was performed. Note that the measuring conditions were as follows.

<Measuring conditions of Tensile tests >

Length of sample: 40 mm
Device used: Manufactured by OLIENTEC Co. Ltd.; trade name, RTA-500
Load cell: 10 kgf, 40%
Crosshead speed: 500 mm/min
Number of tests: n=3, the results being shown in average of three tests.

[Degradation rate]

Each of the films obtained as described above was punched into No. 2 dumbbell piece according to JIS K-7113, which was buried in horticultural soil for 60 hours under the conditions of 28°C × 99% RH. Before and after the burying, the above-mentioned tensile tests were performed on the film and the elongation percentage of the film in the TD direction was compared. It is to be noted that the film after the burying is also called a film after the degradation rate evaluation.
Evaluation of the biodegradability of the film was performed by the method as described at the outset of the Example.

Table VII-5

| | Example | | | | Reference Example | | |
|---|---|---|---|---|---|---|---|
| | VII-5-1 | VII-5-2 | VII-5-3 | VII-5-4 | VII-5-1 | VII-5-2 | VII-5-3 |
| Aliphatic polyester copolymer A | | 70 | | 80 | 10 | 20 | |
| Aliphatic polyester copolymer B | 70 | | 70 | | | | 20 |
| #1001 | | 30 | 30 | | 90 | 80 | 80 |
| #3001 | 30 | | | | | | |
| PH7 | | | | 20 | | | |
| Hand-tearing feeling 10-stage evaluation | 10 | 9 | 10 | 10 | 3 | 4 | 4 |
| Organoleptic evaluation | ◎ | ○ | ◎ | ◎ | ×× | × | × |
| Tear strength (MD direction) (g/20μm) | 336 | 265 | 280 | 248 | 35 | 46 | 65 |
| Organoleptic evaluation | ◎ | ◎ | ◎ | ◎ | ×× | ×× | × |
| Tensile tests | | | | | | | |
| (MD direction) | | | | | | | |
| Tensile stress at break ($kgf/cm^2$) | 360 | 520 | 480 | 380 | 780 | 740 | 715 |
| Elongation at break (%) | 650 | 610 | 480 | 550 | 380 | 510 | 330 |
| (TD direction) | | | | | | | |
| Tensile stress at break ($kgf/cm^2$) | 250 | 320 | 280 | 300 | 400 | 320 | 280 |
| Elongation at break (%) | 1150 | 780 | 820 | 1300 | 250 | 580 | 420 |
| Moldability Organoleptic evaluation | ◎ | ○ | ◎ | ◎ | ○ | × | ○ |
| Biodegradability (%) | 94 | 68 | 76 | 92 | 3 | 6 | 6 |
| Organoleptic evaluation | ◎ | ○ | ○ | ◎ | × | × | × |
| Elongation at break after burying <TD direction>(%) | 800 | 650 | 720 | 960 | 240 | 500 | 380 |

Reference Example VII-5-1 relates to a system in which #1001 was added in an amount of 90% by weight, and shows results in which the moldability and initial physical properties of film were both insufficient for thin films presumably due to a high content of #1001 having less flexibility. Also, as for the biodegradability, 90% by weight of #1001 results in a very slow degradation rate, so that such is not suitable for use as a mulching film or the like which is used in a short period of time.

Reference Examples VII-5-2 and VII-5-3 relate to systems in which #1001 was decreased to 80% by weight. Even in this case, as for their film properties their elongation at break in the MD direction and further elongation at break in the TD direction were insufficient, so that they were insufficient for use in particular as a mulching film or the like. Although retention ratio of the elongation at break in the TD direction after the evaluation of the degradation rate was high, the initial elongation was insufficient, so that this was not practically acceptable, either.

In contrast, Examples VII-5-3 and VII-5-4 relate to systems in which the addition amount of #1001 was 30% by weight. They had no problem with respect to moldability and the elongation at break after film molding, in particular that in the TD direction increased considerably. When the elongation at break increased to above about 700%, practical usability could be imparted. On this occasion, the elongation at break in the TD direction after the evaluation of the degradation rate was also retained well.

Examples VII-5-1 and VII-5-4 relate to systems in which #30001 and flexible polyester which was the PH7 component were blended. They had a markedly increased TD elongation at break and also a markedly increased tear strength due to such composition. The obtained films had sufficient numerical values for practical usability as an agricultural mulching film or the like. Also, the elongation at break in the TD direction after the evaluation of the degradation rate was well retained.

From the above, it was confirmed that biodegradable films having practically acceptable physical properties, in particular biodegradable agricultural mulching films could be provided.

The aliphatic polyester biodegradable resin film-like moldings in the group VII of the present invention can be provided industrially and have practically acceptable physical properties; in particular, agricultural mulching films can be practically and preferably used and are useful.

[Examples VII-6-1 to VII-6-4 and Reference Examples VII-6-1 and VII-6-2]

The aliphatic polyester copolymers produced by the same method as in Example I-2 and polylactic acid were melt-kneaded in the weight ratio shown in Table VII-6 and the obtained polyester blend resin compositions were molded into inflation films having a thickness of 20 μm. The films were cut and were each applied to a nondegradable frame with an opening of a length of 15 cm × a width of 10 cm to form samples. Commercially available horticultural soil and leaf soil were mixed in a weight ratio of 1:1 and the moisture was adjusted so that it became 50% of the maximum water holding capacity, and then the samples were buried therein and left at 23°C for 20 days with adjusting the water content.

The samples were taken out and the surface of the film was washed with water, dried and the area of holes formed in the film was measured by image processing by using Image Analyzer V10 manufactured by TOYOBO and the void area was calculated.

Also, the polyester blend resin compositions obtained in the same manner as described above were molded into pressed pieces of 5 cm in length × 5 cm in width × 600 μm in thickness and buried in soil prepared in the same manner as described above, and left for 30 days with retaining the water content. The samples were taken out, washed with water, dried and measured of weight. The ratio of reduction in weight as compared with the samples before burying is shown in Table VII-6.

As Reference Examples, Bionolle #1001 manufactured by Showa Highpolymer Co., Ltd. was used instead of polylactic acid and the same tests were performed. The results are shown in Table VII-6.

Table VII-6

| | Aliphatic polyester copolymer (wt%) | Polylactic acid (wt%) | Void area after 20 days (%) | Ratio of reduction in weight after 30 days (%) |
|---|---|---|---|---|
| Example VII-6-1 | 97 | 3 | 5.8 | - |
| Example VII-6-2 | 95 | 5 | 3.2 | - |
| Example VII-6-3 | 93 | 7 | 1.2 | - |
| Example VII-6-4 | 90 | 10 | 0.5 | 12 |
| | Aliphatic polyester copolymer (wt%) | Bionolle #1001 (wt%) | Void area after 20 days (%) | Ratio of reduction in weight after 30 days (%) |
| Reference Example VII-6-1 | 100 | 0 | 7.1 | 25 |
| Reference Example VII-6-2 | 90 | 10 | 7.0 | 24 |

From the above, although substantially no effect of inhibition of the biodegradation was observed by mixing Bionolle #1001 that had lower biodegradation rate than the aliphatic polyester copolymer of the present invention, considerable biodegradation inhibiting effect was observed by mixing polylactic acid.

## Claims

1. A high molecular weight aliphatic polyester copolymer having a weight average molecular weight of 40,000 or more, comprising a low molecular weight aliphatic polyester copolymer (D) having a weight average molecular weight of 5,000 or more whose molecular chain is made of a repeating unit (P) represented by the general formula (1):

$$-(-CO-R^1-COO-R^2-O-)- \qquad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$-(-CO-R^3-O-)- \qquad (2)$$

(wherein $R^3$ represents a divalent aliphatic group having 1 to 10 carbon atoms), and a bifunctional coupler (E) represented by the general formula (7):

$$X^1-R^7-X^2 \qquad (7)$$

(wherein $X^1$ and $X^2$ are each a reactive group capable of forming a covalent bond by reaction with a hydroxyl group or a carboxyl group,
$R^7$ is a single bond, an aliphatic group having 1 to 20 carbon atoms, or an aromatic group, provided that $X^1$ and $X^2$ may be the same or different in chemical structure) , the low molecular weight aliphatic polyester copolymer (D) being coupled to each other with the coupler (E) in an amount of 0.1 to 5 parts by weight based on 100 parts by weight of the copolymer (D).

2. A high molecular weight aliphatic polyester copolymer according to claim 1, **characterized in that** the general formula (1) contains a succinic acid residue and/or an adipic acid residue.

3. A high molecular weight aliphatic polyester copolymer according to claim 1, **characterized in that** the general formula (1) contains an ethylene glycol residue and/or a 1,4-butanediol residue.

4. A high molecular weight aliphatic polyester copolymer according to claim 1, **characterized in that** the general formula (2) contains an ε-oxycaproic acid residue.

5. A high molecular weight aliphatic polyester copolymer according to claim 1, **characterized in that** the reactive group in the bifunctional coupler (E) represented by the general formula (7) is an isocyanate group; an isothiocyanate group; an epoxy group, an oxazolidine group; an oxazolone group or an oxazinone group; an aziridine group; or a mixture of these.

6. A film molding obtained by molding a high molecular weight aliphatic polyester copolymer according to any one of claim 1 to 5.

7. A method of producing a high molecular weight aliphatic polyester copolymer, comprising the steps of

   (a) condensation-polymerizing three components of (A) an aliphatic dicarboxylic acid represented by general formula (3):

$$R^4\text{-OCO-}R^1\text{-COO-}R^5 \quad (3)$$

(wherein $R^1$ represents a divalent aliphatic group having 1 to 12 carbon atoms, $R^4$ and $R^5$ represent each a hydrogen atom, or an aliphatic group having 1 to 6 carbon atoms or an aromatic group), anhydride thereof or a diester form thereof,
(B) an aliphatic diol represented by general formula (4):

$$HO\text{-}R^2\text{-OH} \quad (4)$$

(wherein $R^2$ represents a divalent aliphatic group having 2 to 12 carbon atoms), and
(C) a hydroxycarboxylic acid or an ester form thereof represented by general formula (5):

$$R^6OCO\text{-}R^3\text{-OH} \quad (5)$$

(wherein $R^3$ represents a divalent aliphatic group having 1 to 10 carbon atoms, and $R^6$ represents a hydrogen atom or an aliphatic group having 1 to 6 carbon atoms, or an aromatic group), or
(C) a lactone represented by general formula (6):

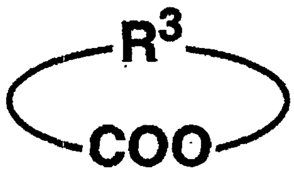

(6)

(wherein, $R^3$ represents a divalent aliphatic group having 1 to 10 carbon atoms) to synthesize a low molecular weight aliphatic polyester copolymer (D) having a weight average molecular weight of 5,000 or more having a molecular chain made of a repeating unit (P) represented by general formula (1):

$$\text{-(-CO-}R^1\text{-COO-}R^2\text{-O-)-} \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$\text{-(-CO-}R^3\text{-O-)-} \quad (2)$$

(wherein $R^3$ represents a divalent aliphatic group having 1 to 10 carbon atoms), and
(b) adding 0.1 to 5 parts by weight of a bifunctional coupler (E) represented by general formula (7):

$$X^1\text{-}R^7\text{-}X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure) to 100 parts by weight of the low molecular weight aliphatic polyester copolymer (D) in a molten state to increase the weight average molecular weight thereof to 40,000 or more.

**8.** A method of producing a high molecular weight aliphatic polyester copolymer according to claim 7, **characterized in that** in the step (a), a catalyst and a phosphorus compound are used in combination.

**9.** A method of producing a high molecular weight aliphatic polyester copolymer according to claim 7 or 8, **characterized in that** as the aliphatic dicarboxylic acid represented by the general formula (3), the anhydride thereof or the ester form thereof, at least one is selected from the group consisting of succinic acid, adipic acid and dimethyl succinate.

**10.** A method of producing a high molecular weight aliphatic polyester copolymer according to claim 7 or 8, **characterized in that** as the aliphatic diol represented by the general formula (4), at least one is selected from the group consisting of ethylene glycol and 1,4-butanediol.

**11.** A method of producing a high molecular weight aliphatic polyester copolymer according to claim 7 or 8, **characterized in that** as the hydroxycarboxylic acid represented by the general formula (5) or the ester form thereof or the lactone (C) represented by the general formula (6), ε-caprolactone is used.

**12.** A method of producing a high molecular weight aliphatic polyester copolymer according to claim 7 or 8, **characterized in that** in the coupler (E) represented by the general formula (7), $X^1$ and $X^2$ are one or more groups selected from the group consisting of reactive groups represented by formulae (9) to (11):

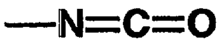 (9) 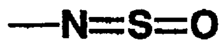 (10)

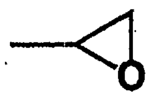 (11)

that are capable of reacting substantially with a hydroxyl group only to form a covalent bond.

**13.** A method of producing a high molecular weight aliphatic polyester copolymer according to claim 7 or 8, **characterized in that** in the coupler (E) represented by the general formula (7), $X^1$ and $X^2$ are one or more groups selected from the group consisting of reactive groups represented by general formulae (12) to (15):

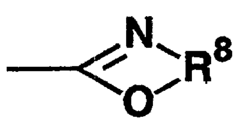 (12) 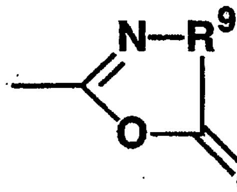 (13)

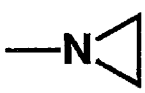 (14) 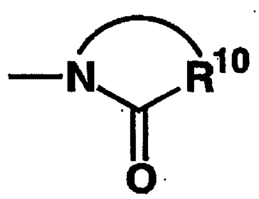 (15)

(wherein $R^8$ to $R^{10}$ represent a divalent aliphatic group or an aromatic group, and the hydrogens directly bonded to the ring may be substituted by an aliphatic group and/or an aromatic group) that are capable of reacting substantially with a carboxyl group only to form a covalent bond.

**14.** A method of producing a high molecular weight aliphatic polyester copolymer according to any one of claims 7 to 13, **characterized in that** the molar ratio at the time of charging raw materials satisfies expression (i)

$$1.0 \leq [B]/[A] \leq 2.0 \qquad (i)$$

(wherein [A] represents the mole number of the aliphatic dicarboxylic acid, the anhydride thereof, or the ester form thereof, and [B] represents the mole number of the aliphatic diol).

**15.** A method of producing a high molecular weight aliphatic polyester copolymer according to any one of claims 7 to 14, **characterized in that** the molar ratio at the time of charging raw materials satisfies expression (ii)

$$0.02 \leq [C]/([A] + [C]) \leq 0.40 \qquad \text{(ii)}$$

(wherein [A] represents the mole number of the aliphatic dicarboxylic acid, the anhydride thereof, or the ester form thereof used, and
[C] represents the mole number of the hydroxycarboxylic acid, the ester form thereof, or lactone used).

**16.** A high molecular weight aliphatic polyester copolymer having a weight average molecular weight of 40,000 or more, comprising molecular chain made of a repeating unit (P) represented by the general formula (1):

$$\text{-(-CO-R}^1\text{-COO-R}^2\text{-O-)-} \qquad (1)$$

(wherein $R^1$ represents a divalent aliphatic group having 1 to 12 carbon atoms, and $R^2$ represents a divalent aliphatic group having 2 to 12 carbon atoms),
a repeating unit (Q) represented by the general formula (2):

$$\text{-(-CO-R}^3\text{-O-)-} \qquad (2)$$

(wherein $R^3$ represents a divalent aliphatic group having 2 to 10 carbon atoms), and
a repeating unit (R) represented by the general formula (19):

$$\text{-(-CO-CR}^{11}\text{R}^{12}\text{-O-)-} \qquad (19)$$

(wherein $R^{11}$ and $R^{12}$ each represent a hydrogen atom or a monovalent aliphatic group having 1 to 6 carbon atoms).

**17.** A high molecular weight aliphatic polyester copolymer according to claim 16, comprising a low molecular weight aliphatic polyester copolymer (F) having a weight average molecular weight of 5,000 or more, which is an intermediate for polymerization of the copolymer, and a bifunctional coupler (E) represented by general formula (7):

$$X^1\text{-}R^7\text{-}X^2 \qquad (7)$$

(wherein $X^1$ and $X^2$ are each a reactive group capable of forming a covalent bond by reaction with a hydroxyl group or a carboxyl group, $R^7$ is a single bond, an aliphatic group having 1 to 20 carbon atoms, or an aromatic group, provided that $X^1$ and $X^2$ may be the same or different in chemical structure) , the low molecular weight aliphatic polyester copolymer (F) having molecules being coupled to each other with the coupler (E) in an amount of 0.1 to 5 parts by weight based on 100 parts by weight of the copolymer (F).

**18.** A high molecular weight aliphatic polyester copolymer according to claim 16, **characterized in that** the general formula (1) contains a succinic acid residue and/or an adipic acid residue.

**19.** A high molecular weight aliphatic polyester copolymer according to claim 16, **characterized in that** the general formula (1) contains an ethylene glycol residue and/or a 1,4-butanediol residue.

**20.** A high molecular weight aliphatic polyester copolymer according to claim 16, **characterized in that** the general formula (2) contains an ε-oxycaproic acid residue.

**21.** A high molecular weight aliphatic polyester copolymer according to claim 16, **characterized in that** the general

formula (19) contains an lactic acid residue.

**22.** A high molecular weight aliphatic polyester copolymer according to claim 17, **characterized in that** the reactive group of the bifunctional coupler (E) represented by the general formula (7) is an isocyanate group; an isothiocyanate group; an epoxy group; or a mixture of these.

**23.** A method of producing a high molecular weight aliphatic polyester copolymer, comprising condensation-polymerizing four components of (A) an aliphatic dicarboxylic acid represented by general formula (3):

$$R^4\text{-OCO-}R^1\text{-COO-}R^5 \quad (3)$$

(wherein $R^1$ represents a divalent aliphatic group having 1 to 12 carbon atoms, $R^4$ and $R^5$ represent each a hydrogen atom, or an aliphatic group having 1 to 6 carbon atoms or an aromatic group), anhydride thereof or a diester form thereof,
(B) an aliphatic diol represented by general formula (4):

$$\text{HO-}R^2\text{-OH} \quad (4)$$

(wherein $R^2$ represents a divalent aliphatic group having 2 to 12 carbon atoms),
(C-1) a hydroxycarboxylic acid represented by general formula (5):

$$R^6\text{OCO-}R^3\text{-OH} \quad (5)$$

(wherein $R^3$ represents a divalent aliphatic group having 2 to 10 carbon atoms, and $R^6$ represents a hydrogen atom or an aliphatic group having 1 to 6 carbon atoms, or an aromatic group) , or an ester form thereof, or a lactone thereof forming a cyclic monomeric ester thereof, and
(C-2) a hydroxycarboxylic acid represented by general formula (20) :

$$R^{13}\text{-OCO-C}R^{11}R^{12}\text{-OH} \quad (20)$$

(wherein $R^{11}$ and $R^{12}$ represent a hydrogen atom or a monovalent aliphatic group having 1 to 6 carbon atoms, and $R^{13}$ represents a hydrogen atom or an aliphatic group having 1 to 6 carbon atoms or an aromatic group), an ester form thereof or a lactide forming a cyclic dimeric ester, to synthesize a high molecular weight aliphatic polyester copolymer having a weight average molecular weight based on Polystyrene of 40,000 or more having a molecular chain made of a repeating unit (P) represented by general formula (1):

$$\text{-(-CO-}R^1\text{-COO-}R^2\text{-O-)-} \quad (1)$$

(wherein $R^1$ represents a divalent aliphatic group having 1 to 12 carbon atoms, and $R^2$ represents a divalent aliphatic group having 2 to 12 carbon atoms),
a repeating unit (Q) represented by general formula (2):

$$\text{-(-CO-}R^3\text{-O-)-} \quad (2)$$

(wherein $R^3$ represents a divalent aliphatic group having 2 to 10 carbon atoms), and
a repeating unit (R) represented by general formula (19):

$$\text{-(-CO-C}R^{11}R^{12}\text{-O)-} \quad (19)$$

(wherein $R^{11}$ and $R^{12}$ represent a hydrogen atom or a monovalent aliphatic group having 1 to 6 carbon atoms).

**24.** A method of producing a high molecular weight aliphatic polyester copolymer according to claim 23, further comprising the steps of synthesizing a low molecular weight aliphatic polyester copolymer (F) having a weight average molecular weight of 5,000 or more, which is an intermediate for polymerization of the copolymer, and adding 0.1 to 5 parts by weight of a bifunctional coupler (E) represented by general formula (7):

$$X^1\text{-}R^7\text{-}X^2 \tag{7}$$

(wherein $X^1$ and $X^2$ represent each a reactive group capable of forming a covalent bond by reaction with a hydroxyl group or a carboxyl group and $R^7$ represents a single bond, an aliphatic group having 1 to 20 carbon atoms or an aromatic group, provided that $X^1$ and $X^2$ may be the same or different in chemical structure) to 100 parts by weight of the low molecular weight aliphatic polyester copolymer (F) in a molten state to increase the weight average molecular weight thereof to 40,000 or more.

**25.** A method of producing a high molecular weight aliphatic polyester copolymer according to claim 23, **characterized in that** as the aliphatic dicarboxylic acid represented by the general formula (3), the acid anhydride thereof, or the ester form thereof, at least one is selected from the group consisting of succinic acid, adipic acid and dimethyl succinate.

**26.** A method of producing a high molecular weight aliphatic polyester copolymer according to claim 23, **characterized in that** as the aliphatic diol represented by the general formula (4), at least one is selected from the group consisting of ethylene glycol, 1,4-butanediol and diethylene glycol.

**27.** A method of producing a high molecular weight aliphatic polyester copolymer according to claim 23, **characterized in that** the lactone is ε-caprolactone.

**28.** A method of producing a high molecular weight aliphatic polyester copolymer according to claim 23, **characterized in that** the lactide is lactic acid, ester thereof, or lactide.

**29.** A method of producing a high molecular weight aliphatic polyester copolymer according to claim 23, **characterized in that** molar ratio at the time of charging raw materials satisfies expression (i)

$$0.02 \leq [C\text{-}2]/([A]+[C\text{-}1]+[C\text{-}2]) \leq 0.70 \tag{i}$$

(wherein [A] represents the mole number of the component (A) used, [C-1] represents the mole number of the component (C-1) used, and [C-2] represents the mole number of the component (C-2) used).

**30.** A method of producing a high molecular weight aliphatic polyester copolymer according to claim 23, **characterized in that** molar ratio at the time of charging raw materials satisfies expression (ii)

$$0.02 \leq [C\text{-}1] / ( [A] + [C\text{-}1] + [C\text{-}2] ) \leq 0.40 \tag{ii}$$

(wherein [A] represents the mole number of the component (A) used, [C-1] represents the mole number of the component (C-1) used, and [C-2] represents the mole number of the component (C-2) used).

**31.** A method of producing a high molecular weight aliphatic polyester copolymer according to claim 23, **characterized in that** the polymerization step is performed at a temperature of 200 to 250°C and at a pressure of atmospheric pressure to 0.2 mmHg (26.6 Pa).

**32.** A method of producing a high molecular weight aliphatic polyester copolymer according to claim 23, **characterized in that** molar ratio at the time of charging raw materials satisfies expression (iii)

$$1.0 \leq [B]/[A] \leq 2.0 \tag{iii}$$

(wherein [A] represents the mole number of the component (A) used, and [B] represents the mole number of the component (B) used).

**33.** A method of producing a high molecular weight aliphatic polyester copolymer according to claim 23, **characterized in that** an organotitanium compound and an organic or inorganic phosphorus compound are used as a catalyst.

**34.** A method of producing a high molecular weight aliphatic polyester copolymer according to claim 23, **characterized in that** the organotitanium compound is used in an amount of 0.005 to 0.1 % by weight based on succinic acid or a derivative thereof and the organic or inorganic phosphorus compound is used in an amount of 1 to 30% by weight based on the organotitanium compound.

**35.** A high molecular weight aliphatic polyester copolymer **characterized in that** the molecular chain thereof is made of a repeating unit (P) represented by the general formula (1):

$$(\text{-CO-}R^1\text{-COO-}R^2\text{-O-}) \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$(\text{-CO-}R^3\text{-O-}) \quad (2)$$

(wherein $R^3$ represents a divalent aliphatic group having 1 to 10 carbon atoms), wherein at least one of the divalent aliphatic groups represented by $R^1$, $R^2$ and $R^3$ contains a branched divalent aliphatic group in an amount of 0.01 to 50 mol% based on 100 mol% of the sum of the divalent aliphatic groups represented by $R^1$, $R^2$ and $R^3$.

**36.** A high molecular weight aliphatic polyester copolymer according to claim 35, further comprising a low molecular weight aliphatic polyester copolymer (having a weight average molecular weight of 5,000 or more), which is a polymerization intermediate of the copolymer, and a bifunctional coupler (E) represented by general formula (7):

$$X^1\text{-}R^7\text{-}X^2 \quad (7)$$

(wherein $X^1$ and $X^2$ represent each a reactive group capable of forming a covalent bond by reaction with a hydroxyl group or a carboxyl group and $R^7$ represents a single bond or an aliphatic group having 1 to 20 carbon atoms, or an aromatic group, provided that $X^1$ and $X^2$ may be the same or different) , the low molecular weight aliphatic polyester copolymer being coupled to each other with the coupler (E) in an amount of 0.1 to 5 parts by weight based on 100 parts by weight of the copolymer.

**37.** A high molecular weight aliphatic polyester copolymer according to claim 35 or 36, **characterized in that** the weight average molecular weight is 40,000 to 700,000.

**38.** A high molecular weight aliphatic polyester copolymer according to claim 35 or 36, **characterized in that** $R^1$ is a succinic acid residue $[(CH_2)_2]$ and/or an adipic acid residue $[(CH_2)_4]$.

**39.** A high molecular weight aliphatic polyester copolymer according to claim 35 or 36, **characterized in that** $R^2$ is an ethylene glycol residue $[(CH_2)_2]$ and/or a 1,4-butanediol residue $[(CH_2)_4]$.

**40.** A high molecular weight aliphatic polyester copolymer according to any one of claims 35 to 39, **characterized in that** $R^3$ is an ε-oxycaproic acid residue.

**41.** A high molecular weight aliphatic polyester copolymer according to any one of claims 35 to 39, wherein the branched divalent aliphatic group is (i) a succinic acid residue, a glutaric acid residue, an adipic acid residue, a pimellic acid residue, a suberic acid residue, an azelaic acid residue, or a sebacic acid residue; (ii) an ethylene glycol residue, a 1,3-propanediol residue or a 1,3- or 1,4-butanediol residue; or (iii) a glycolic acid residue, a hydroxypropionic acid residue, a hydroxybutyric acid residue, a hydroxyvaleric acid residue, or a hydroxycaproic acid residue, the one or more branched divalent aliphatic groups being substituted by an alkyl group having 1 to 4 carbon atoms or an alkoxyl group.

**42.** A high molecular weight aliphatic polyester copolymer according to claim 36, **characterized in that** the reactive group of the bifunctional coupler (E) represented by the general formula (7) is an isocyanate group; an isothiocyanate group; an epoxy group; an oxazolidine group; an oxazolone group or an oxazinone group; an aziridine group; or a mixture of these.

**43.** A method of producing a high molecular weight aliphatic polyester copolymer, **characterized by** comprising condensation-polymerizing (A) an aliphatic dicarboxylic acid represented by general formula (3):

$$R^4\text{-OCO-}R^1\text{-COO-}R^5 \quad (3)$$

(wherein $R^1$ represents a divalent aliphatic group having 1 to 12 carbon atoms and $R^4$ and $R^5$ represent each a hydrogen atom, or an aliphatic group having 1 to 6 carbon atoms or an aromatic group, provided that $R^4$ and $R^5$ may be the same or different), an acid anhydride thereof or a diester form thereof,
(B) an aliphatic diol represented by general formula (4):

$$HO\text{-}R^2\text{-OH} \quad (4)$$

(wherein $R^2$ represents a divalent aliphatic group having 2 to 12 carbon atoms), and
(C) a hydroxycarboxylic acid or an ester form thereof represented by general formula (5):

$$R^6OCO\text{-}R^3\text{-OH} \quad (5)$$

(wherein $R^3$ represents a divalent aliphatic group having 1 to 10 carbon atoms, and $R^6$ represents a hydrogen atom or an aliphatic group having 1 to 6 carbon atoms, or an aromatic group), or
(C) a lactone represented by general formula (6):

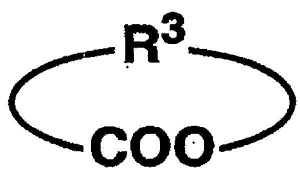

(6)

(wherein, $R^3$ represents a divalent aliphatic group having 1 to 10 carbon atoms),
the copolymer having a molecular chain made of a repeating unit (P) represented by general formula (1):

$$(\text{-CO-}R^1\text{-COO-}R^2\text{-O-}) \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by the general formula (2):

$$(\text{-CO-}R^3\text{-O-}) \quad (2)$$

(wherein $R^3$ represents a divalent aliphatic group having 1 to 10 carbon atoms), in which at least one of the divalent aliphatic groups represented by $R^1$, $R^2$ and $R^3$ contains a branched divalent aliphatic group in an amount of 0.01 to 50 mol% based on 100 mol% of the sum of the divalent aliphatic groups represented by $R^1$, $R^2$ and $R^3$.

**44.** A method of producing a high molecular weight aliphatic polyester copolymer according to claim 43, comprising the steps of synthesizing a low molecular weight aliphatic polyester copolymer (having a weight average molecular weight of 5,000 or more), which is an intermediate for polymerization of the copolymer, and adding 0.1 to 5 parts by weight of a bifunctional coupler (E) represented by general formula (7):

$$X^1\text{-}R^7\text{-}X^2 \qquad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different) to 100 parts by weight of the low molecular weight aliphatic polyester copolymer in a molten state to increase the weight average molecular weight thereof to 40,000 or more.

**45.** A method of producing a high molecular weight aliphatic polyester copolymer according to claim 44, **characterized in that** in the coupler (E) represented by the general formula (7), $X^1$ and $X^2$ are one or more groups selected from the group consisting of reactive groups represented by formulae (9) to (11):

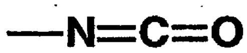 (9) 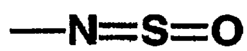 (10)

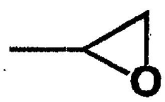 (11)

that are capable of reacting substantially with a hydroxyl group only to form a covalent bond.

**46.** A method of producing a high molecular weight aliphatic polyester copolymer according to claim 44, **characterized in that** in the coupler (E) represented by the general formula (7), $X^1$ and $X^2$ are one or more groups selected from the group consisting of reactive groups represented by formulae (12) to (15):

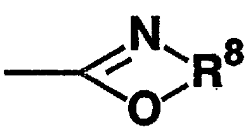 (12) 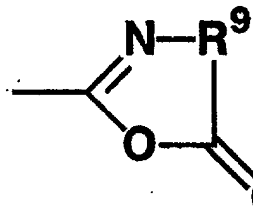 (13)

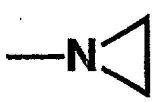 (14) 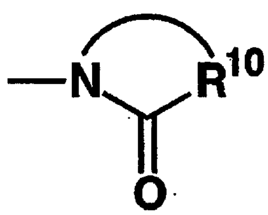 (15)

(wherein $R^8$ to $R^{10}$ represent a divalent aliphatic group or an aromatic group, and the hydrogens directly bonded to the ring may be substituted by an aliphatic group and/or an aromatic group) that are capable of reacting substantially with a carboxyl group only to form a covalent bond.

**47.** A method of producing a high molecular weight aliphatic polyester copolymer according to any one of claims 43 to 46, **characterized in that** the molar ratio at the time of charging raw materials satisfies the following expression

$$1.0 \leq [B]/[A] \leq 2.0 \qquad (8)$$

(wherein [A] represents the mole number of the aliphatic dicarboxylic acid, the acid anhydride thereof, or the ester form thereof, and [B] represents the mole number of the aliphatic diol).

**48.** A method of producing a high molecular weight aliphatic polyester copolymer according to any one of claims 43 to 47, **characterized in that** the molar ratio at the time of charging raw materials satisfies the following expression

$$0.02 \leq [C]/([A] + [C]) \leq 0.40 \qquad (16)$$

(wherein [A] represents the mole number of the aliphatic dicarboxylic acid, the acid anhydride thereof, or the ester form thereof used, and [C] represents the mole number of the hydroxycarboxylic acid, the ester form thereof, or lactone used).

**49.** A method of producing a high molecular weight aliphatic polyester copolymer according to any one of claims 43 to 48, **characterized in that** the content of the aliphatic dicarboxylic acid and the aliphatic carboxylic acid contained in the aliphatic dicarboxylic acid diester (A) as an impurity is retained so as to be 0.1 mol% or less based on the aliphatic dicarboxylic acid diester.

**50.** A biodegradable aliphatic polyester copolymer wherein the molecular chain thereof is made of a repeating unit (P) represented by the general formula (1):

$$(\text{-CO-R}^1\text{-COO-R}^2\text{-O-})_p \qquad (1)$$

(wherein $R^1$ represents a divalent aliphatic group having 1 to 12 carbon atoms, and $R^2$ represents a divalent aliphatic group having 2 to 12 carbon atoms, and p represents the molar fraction of the unit in the molecular chain), a repeating unit (Q) represented by the general formula (2):

$$(\text{-CO-R}^3\text{-O-})_q \qquad (2)$$

(wherein $R^3$ represents a divalent aliphatic group having 1 to 10 carbon atoms and q represents the molar fraction of the unit in the molecular chain), and
a repeating unit (R) represented by the general formula (1'):

$$(\text{-CO-R}^4\text{-COO-R}^5\text{-O-})_r \qquad (1')$$

(wherein $R^4$ represents a divalent aliphatic group having 1 to 20 carbon atoms, $R^5$ represents a divalent aliphatic group having 2 to 20 carbon atoms containing at least one ether bond or an alicyclic skeleton in the main chain thereof, and "r" represents a molar fraction of the unit in the molecular chain), wherein the sum of "p", "q" and "r" is 1, the value of "q" is in the range of 0.02 to 0.30, and the value of "r" is in the range of 0.001 to 0.40.

**51.** A biodegradable aliphatic polyester copolymer according to claim 50, further comprising a low molecular weight aliphatic polyester copolymer (having a weight average molecular weight of 5,000 or more), which is a polymerization intermediate of the copolymer, and a bifunctional coupler (E) represented by general formula (7):

$$X^1\text{-R}^6\text{-X}^2 \qquad (7)$$

(wherein $X^1$ and $X^2$ represent each a reactive group capable of forming a covalent bond by reaction with a hydroxyl group or a carboxyl group and $R^6$ represents a single bond, or an aliphatic group having 1 to 20 carbon atoms, or an aromatic group, provided that $X^1$ and $X^2$ may be the same or different), the low molecular weight aliphatic polyester copolymer being coupled to each other with the coupler (E) in an amount of 0.1 to 5 parts by weight

based on 100 parts by weight of the copolymer.

**52.** A biodegradable aliphatic polyester copolymer according to claim 48 or 51, **characterized in that** the weight average molecular weight thereof is 30,000 or more.

**53.** A biodegradable aliphatic polyester copolymer according to claim 50 or 51, **characterized in that** $R^1$ and $R^4$ are a succinic acid residue $[(CH_2)_2]$ and/or an adipic acid residue $[(CH_2)_4]$ ($R^1$ and $R^4$ may be the same or different).

**54.** A biodegradable aliphatic polyester copolymer according to claim 50 or 51, **characterized in that** $R^2$ is an ethylene glycol residue $[(CH_2)_2]$ and/or a 1,4-butanediol residue $[((H_2)_4]$.

**55.** A biodegradable aliphatic polyester copolymer according to claim 50 or 51, **characterized in that** $R^3$ is an ε-oxycaproic acid residue.

**56.** A biodegradable aliphatic polyester copolymer according to claim 50 or 51, **characterized in that** $R^5$ is a diethylene glycol residue and/or a cyclohexane dimethanol residue.

**57.** A biodegradable aliphatic polyester copolymer according to claim 51, **characterized in that** the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture of these.

**58.** A method of producing a biodegradable aliphatic polyester copolymer, whose molecular chain is made of a repeating unit (P) represented by the general formula (1):

$$(\text{-CO-}R^1\text{-COO-}R^2\text{-O-})_p \qquad (1)$$

(wherein $R^1$ represents a divalent aliphatic group having 1 to 12 carbon atoms, and $R^2$ represents a divalent aliphatic group having 2 to 12 carbon atoms, and "p" represents the molar fraction of the unit in the molecular chain), a repeating unit (Q) represented by the general formula (2):

$$(\text{-CO-}R^3\text{-O-})_q \qquad (2)$$

(wherein $R^3$ represents a divalent aliphatic group having 1 to 10 carbon atoms and "q" represents the molar fraction of the unit in the molecular chain), and
a repeating unit (R) represented by the general formula (1'):

$$(\text{-CO-}R^4\text{-COO-}R^5\text{-O-})_r \qquad (1')$$

(wherein $R^4$ represents a divalent aliphatic group having 1 to 20 carbon atoms, $R^5$ represents a divalent aliphatic group having 1 to 20 carbon atoms containing at least one ether bond or alicyclic skeleton in the main chain thereof, and "r" represents a molar fraction of the unit in the molecular chain), in which the sum of "p", "q" and "r" is 1, the value of "q" is in the range of 0.02 to 0.30, and the value of "r" is in the range of 0.001 to 0.40, the method comprising condensation-polymerizing (A) an aliphatic dicarboxylic acid, represented by general formula (3):

$$R^7\text{-OCO-}R^1\text{-COO-}R^8 \qquad (3)$$

(wherein $R^1$ represents a divalent aliphatic group having 1 to 12 carbon atoms and $R^7$ and $R^8$ represent a hydrogen atom, or an aliphatic group having 1 to 6 carbon atoms or an aromatic group, provided that $R^7$ and $R^8$ may be the same or different), or an acid anhydride thereof or a diester form thereof,
(B) an aliphatic diol represented by general formula (4):

$$HO\text{-}R^2\text{-}OH \quad (4)$$

(wherein $R^2$ represents a divalent aliphatic group having 2 to 12 carbon atoms), and (A') an aliphatic dicarbonxylic acid represented by general formula (3'):

$$R^9\text{-}OCO\text{-}R^4\text{-}COO\text{-}R^{10} \quad (31)$$

(wherein $R^4$ represents a divalent aliphatic group having 1 to 20 carbon atoms and $R^9$ and $R^{10}$ represent a hydrogen atom, or an aliphatic group having 1 to 6 carbon atoms or an aromatic group, provided that $R^9$ and $R^{10}$ may be the same or different), or an acid anhydride thereof or a diester form thereof,
(C) an aliphatic diol represented by general formula (4'):

$$HO\text{-}R^5\text{-}OH \quad (4')$$

(wherein $R^5$ represents a divalent aliphatic group having 2 to 20 carbon atoms containing at least one ether bond or an alicyclic skeleton in the main chain thereof), and
(D) a hydroxycarboxylic acid represented by general formula (5):

$$R^{11}OCO\text{-}R^3\text{-}OH \quad (5)$$

(wherein $R^3$ represents a divalent aliphatic group having 1 to 10 carbon atoms, and $R^{11}$ represents a hydrogen atom or an aliphatic group having 1 to 6 carbon atoms or an aromatic group) or an ester form thereof, or (D) a lactone represented by general formula (6):

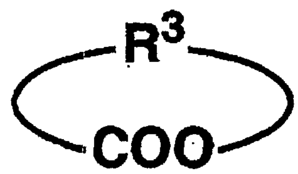

(6)

(wherein $R^3$ represents a divalent aliphatic group having 1 to 10 carbon atoms) (provided that (A) and (A') may be the same or different).

**59.** A method of producing a biodegradable aliphatic polyester copolymer according to claim 58, further comprising the steps of synthesizing a low molecular weight aliphatic polyester copolymer (having a weight average molecular weight of 5,000 or more), which is an intermediate for polymerization of the copolymer, and adding 0.1 to 5 parts by weight of a bifunctional coupler (E) represented by general formula (7):

$$X^1\text{-}R^6\text{-}X^2 \quad (7)$$

(wherein $X^1$ and $X^2$ represent each a reactive group capable of forming a covalent bond by reaction with a hydroxyl group or a carboxyl group and $R^6$ represents a single bond, or an aliphatic group having 1 to 20 carbon atoms or an aromatic group, provided that $X^1$ and $X^2$ may be the same or different) to 100 parts by weight the low molecular weight aliphatic polyester copolymer in a molten state to increase the weight average molecular weight thereof to 30,000 or more.

**60.** A method of producing a biodegradable aliphatic polyester copolymer according to claim 59, **characterized in that** in the coupler (E) represented by the general formula (7), $X^1$ and $X^2$ are one or more groups selected from the group consisting of reactive groups represented by formulae (9) to (11):

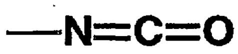 (9) 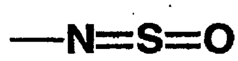 (10)

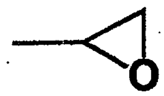 (11)

that are capable of reacting substantially with a hydroxyl group only to form a covalent bond.

**61.** A method of producing a biodegradable aliphatic polyester copolymer according to claim 59, **characterized in that** in the coupler (E) represented by the general formula (7), $X^1$ and $X^2$ are one or more groups selected from the group consisting of reactive groups represented by the general formulae (12) to (15):

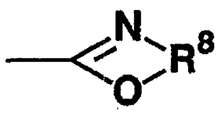 (12) 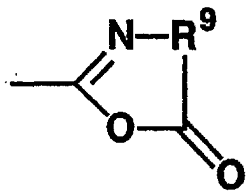 (13)

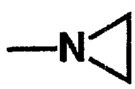 (14) 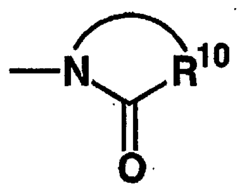 (15)

(wherein $R^8$ to $R^{10}$ represent a divalent aliphatic group or an aromatic group, and the hydrogens directlybonded to the ring may be substituted by an aliphatic group and/or an aromatic group) that are capable of reacting substantially with a carboxyl group only to form a covalent bond.

**62.** A method of producing a biodegradable aliphatic polyester copolymer according to claim 58 or 59, **characterized in that** the molar ratio at the time of charging raw materials satisfies the following expressions

$$1.0 \leq [(B) + (C)]/[(A) + (A')] \leq 1.1$$

and

$$0.02 \leq [(D)]/[(A) + (A') + (D)] \leq 0.30$$

(wherein (A) and (A') ((A) and (A') may be the same or different) represent the mole numbers of the aliphatic dicarboxylic acid, acid anhydride thereof or ester form thereof, (B) represents the mole number of the aliphatic diol, (C) represents the mole number of the aliphatic diol containing an ether bond in the main chain, and (D) represents the mole number of the hydroxycarboxylic acid or ester form thereof or lactone used).

**63.** A method of producing a biodegradable aliphatic polyester copolymer according to claim 58 or 59, **characterized in that** the molar ratio at the time of charging raw materials satisfies the following expressions

$$1.0 \leq [(B) + (C)]/[(A) + (A')]) \leq 2.0$$

and

$$0.02 \leq [(D)]/[(A) + (A') + (D)] \leq 0.30$$

(wherein (A) and (A') ((A) and (A') may be the same or different) represent the mole numbers of the aliphatic dicarboxylic acid, acid anhydride thereof or ester form thereof, (B) represents the mole number of the aliphatic diol, (C) represents the mole number of the aliphatic diol containing an ether bond, and (D) represents the mole number of the hydroxycarboxylic acid or ester form thereof or lactone used).

**64.** A method of producing a biodegradable aliphatic polyester copolymer according to claim 58 or 59, **characterized in that** the content of the aliphatic dicarboxylic acid and the aliphatic carboxylic acid contained in the aliphatic dicarboxylic acid diester ((A) and (A')) as an impurity is retained so as to be 0.1 mol% or less based on the aliphatic dicarboxylic acid diester.

**65.** An aliphatic polyester satisfying the relationship expressed by mathematical expressions (i) to (iii) described below in measurement of elongation viscosity at a temperature of 150°C and a strain rate in the range of 0.15 to 0.20 $sec^{-1}$:

$$\alpha = \Delta \ln\lambda_n/\Delta\varepsilon = (\ln\lambda_{n2} - \ln\lambda_{n1})/(\varepsilon_2 - \varepsilon_1) \geq 0.15 \quad (i)$$

$$\lambda_n = \lambda/\lambda_1 \quad (ii)$$

$$\varepsilon = \ln(l/l_0) \quad (iii)$$

(wherein $\alpha$ represents a parameter that indicates the degree of strain hardenability, $\lambda_n$ represents a nonlinear parameter, $\lambda$ represents elongation viscosity in the nonlinear region, $\lambda_1$ represents elongation viscosity in the linear region, $\varepsilon$ represents amount of elongation strain according to Hencky, $l_0$ and l represent lengths of a sample at elongation times 0 and t, respectively, and suffix numbers, 2 and 1, in $\lambda_{n2}$, $\lambda_{n1}$, $\varepsilon_2$, and $\varepsilon_1$ indicate values at elongation times $t_2$ and $t_1$, respectively).

**66.** An aliphatic polyester according to claim 65, **characterized in that** a branching point measured by $^1$H-NMR is (0.3 to 50) $\times 10^{-6}$ mol/g.

**67.** An aliphatic polyester according to claim 65 or 66, wherein the weight average molecular weight Mw is (0.4 to 7) $\times 10^5$.

**68.** An aliphatic polyester according to claim 65 or 66, wherein a branching point measured by $^1$H-NMR is (0.3 to 50) $\times 10^{-6}$ mol/g and a weight average molecular weight Mn is (0.4 to 7) $\times 10^5$.

**69.** An aliphatic polyester according to any one of claims 65 to 68, **characterized in that** one molecular chain is constituted by a repeating unit (P) represented by general formula (1):

$$(CO-R^1-COO-R^2-O) \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$(CO-R^3-O) \quad (2)$$

(wherein $R^3$ represents a divalent aliphatic group having 1 to 10 carbon atoms).

**70.** A method of producing an aliphatic polyester having a branched structure whose molecular chain is constituted by a repeating unit (P) represented by general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$-(-CO-R^3-O-)- \quad (2)$$

(wherein $R^3$ represents a divalent aliphatic group having 1 to 10 carbon atoms), the method being **characterized by** comprising a polymerization reaction of (A) an aliphatic dicarboxylic acid represented by general formula (3):

$$R^4-OCO-R^1-COO-R^5 \quad (3)$$

(wherein $R^1$ represents a divalent aliphatic group having 1 to 12 carbon atoms and $R^4$ and $R^5$ represent each a hydrogen atom, or an aliphatic group having 1 to 12 carbon atoms or an aromatic group), an acid anhydride thereof or a diester form thereof,
(B) an aliphatic diol represented by general formula (4):

$$HO-R^2-OH \quad (4)$$

(wherein $R^2$ represents a divalent aliphatic group having 2 to 12 carbon atoms), and
(C) a hydroxycarboxylic acid represented by general formula (5) :

$$R^6OCO-R^3-OH \quad (5)$$

(wherein $R^3$ represents a divalent aliphatic group having 1 to 10 carbon atoms, and $R^6$ represents a hydrogen atom or an aliphatic group having 1 to 6 carbon atoms), or an ester form thereof, or a lactone represented by general formula (6) :

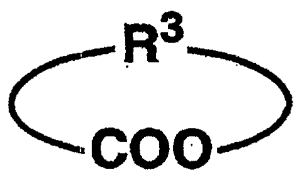

(6)

(wherein, $R^3$ represents a divalent aliphatic group having 1 to 10 carbon atoms) (what is represented by the general formula (5) or the general formula (6) is defined as (C)).

**71.** A method of producing an aliphatic polyester according to claim 70, **characterized in that** the aliphatic dicarboxylic acid, the acid anhydride thereof, or the diester form thereof (A) is at least one selected from the group consisting of succinic acid, adipic acid, dimethyl succinate and dimethyl adipic acid.

**72.** A method of producing an aliphatic polyester according to claim 70, **characterized in that** the aliphatic diol (B) is at least one selected from the group consisting of ethylene glycol, 1,4-butanediol, diethylene glycol and 1,4-cyclohexane dimethanol.

**73.** A method of producing an aliphatic polyester according to claim 70, **characterized in that** the lactone (C) is ε-caprolactone.

**74.** A lactone-containing resin, **characterized in that** the resin is (c) a lactone-containing resin comprising:

(a) an aliphatic polyester copolymer having a weight average molecular weight of 30,000 or more and having a molecular chain constituted by a repeating unit (P) represented by general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) derived from lactone and represented by general formula (2):

$$-(-CO-R^3-O-)- \quad (2)$$

(wherein $R^3$ represents a divalent aliphatic group having 1 to 10 carbon atoms);
(b) another biodegradable resin optionally added; and
(d) a resin additive optionally added, and that the aliphatic polyester copolymer (a) which is one of the constituents of the lactone-containing resin (c) has been subjected to radiation irradiation treatment singly or together with at least one of the other constituents.

**75.** A lactone-containing resin according to claim 74, **characterized in that** the lactone of the repeating unit (Q) is at least one selected from the group consisting of ε-caprolactone, 4-methylcaprolactone, 3,5,5-trimethylcaprolactone, 3,3,5-trimethylcaprolactone, β-propiolactone, γ-butyrolactone, δ-valerolactone, and enantolactone.

**76.** A lactone-containing resin according to claim 74, **characterized in that** the repeating unit (P) is a structure that is produced by condensation reaction from an aliphatic carboxylic acid containing a succinic acid residue and/or an adipic acid residue and an aliphatic glycol containing an ethylene glycol residue and/or a 1,4-butanediol residue.

**77.** A lactone-containing resin according to any one of claims 74 to 76, wherein the aliphatic polyester copolymer (a) comprises 100 parts by weight of a low molecular weight aliphatic polyester copolymer (D) which is an intermediate of the copolymer (a) coupled with 0.1 to 5 parts by weight of a bifunctional coupler (E) represented by general formula (7):

$$X^1-R^7-X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure).

**78.** A lactone-containing resin according to claim 77, wherein the aliphatic polyester copolymer (a) coupled with a coupler (E) has a weight average molecular weight of 30,000 or more.

**79.** A lactone-containing resin according to claim 77 or 78, **characterized in that** the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture thereof.

**80.** A lactone-containing resin according to any one of claims 74 to 79, wherein the aliphatic polyester copolymer (a) in the lactone-containing resin has a gel fraction of 0.01 to 90%.

**81.** A lactone-containing resin according to claim 74, wherein the other biodegradable resin is a synthetic and/or natural polymer.

**82.** A lactone-containing resin according to claim 81, wherein the synthetic polymer comprises an aliphatic polyester, a biodegradable cellulose ester, a polypeptide, a polyvinyl alcohol, a polyvinyl acetate or a mixture thereof.

**83.** A lactone-containing resin according to claim 81, wherein the natural polymer comprises starch, cellulose, paper, pulp, cotton, hemp, wool, silk, hide, carrageenan, chitin/chitosan substance, naturally occurring straight chain polyester resins or mixtures thereof.

**84.** An aliphatic polyester blend resin composition comprising a blend of a high molecular weight aliphatic polyester copolymer according to any one of claims 1 to 5, 16 to 22, 35 to 42, 50 to 57, 65 to 69, and 74 to 80 and another aliphatic polyester resin.

**85.** A biodegradable resin molding molded from an aliphatic polyester biodegradable resin composition comprising an aliphatic polyester copolymer having a weight average molecular weight of 40,000 or more and having a molecular chain constituted by a repeating unit (P) represented by general formula (1):

$$-(-CO-R^1-COO-R^2-O-)- \quad (1)$$

(wherein $R^1$ represents a divalent aliphatic group having 1 to 12 carbon atoms, and $R^2$ represents a divalent aliphatic group having 2 to 12 carbon atoms), and
a repeating unit (Q) represented by general formula (2):

$$-(-CO-R^3-O-)- \quad (2)$$

(wherein $R^3$ represents a divalent aliphatic group having 1 to 10 carbon atoms), and another biodegradable resin.

**86.** A biodegradable resin composition according to claim 85, wherein the aliphatic polyester copolymer (a) comprises 100 parts by weight of a low molecular weight aliphatic polyester copolymer (D) having a weight average molecular weight of 5,000 or more, which is an intermediate for polymerization of the aliphatic polyester copolymer (a) coupled with 0.1 to 5 parts by weight of a bifunctional coupler (E) represented by general formula (7):

$$X^1-R^7-X^2 \quad (7)$$

(wherein $X^1$ and $X^2$ represent each a reactive group capable of forming a covalent bond by reaction with a hydroxyl group or a carboxyl group and $R^7$ represents a single bond, or an aliphatic group having 1 to 20 carbon atoms or an aromatic group, provided that $X^1$ and $X^2$ may be the same or different in chemical structure).

**87.** A biodegradable resin composition according to claim 85 or 86, **characterized in that** the general formula (1) is a structure that is produced by condensation reaction from an aliphatic carboxylic acid containing a succinic acid residue and/or an adipic acid residue and an aliphatic glycol containing an ethylene glycol residue and/or a 1,4-butanediol residue.

**88.** A biodegradable resin composition according to claim 85 or 86, **characterized in that** the general formula (2) represents at least one residual selected from the group consisting of ε-caprolactone, 4-methylcaprolactone, 3,5,5-trimethylcaprolactone, 3,3,5-trimethylcaprolactone, β-propiolactone, γ-butyrolactone, δ-valerolactone, and enantolactone.

**89.** A biodegradable resin composition according to claim 86, **characterized in that** the reactive group of the bifunctional coupler (E) represented by the general formula (7) is an isocyanate group; an isothiocyanate group; an epoxy group; an oxazoline group; an oxazolone group or an oxazinone group; an aziridine group; or a mixture thereof.

**90.** A biodegradable resin composition according to any one of claims 84 to 89, **characterized in that** the another biodegradable resin is an aliphatic polyester, a cellulose acetate or a starch.

**91.** An aliphatic polyester blend resin composition according to claim 90, wherein the aliphatic polyester is one that has a structure obtained by polymerization of an aliphatic dicarboxylic acid and an aliphatic diol; one that has a structure obtained from polymerization of a hydroxycarboxylic acid; one that has a structure obtained by polymerization of an aliphatic dicarboxylic acid and an aliphatic diol and a hydroxycarboxylic acid; or a mixture of two or more thereof.

**92.** An aliphatic polyester blend resin composition according to claim 91, wherein the aliphatic polyester is a poly (butylene-succinate) or a poly(butylene-succinate/adipate); a poly(ε-caprolactone) or a polylactic acid; a poly (butylene-succinate-s-caprolactone); or a mixture of two or more thereof.

**93.** An aliphatic polyester blend resin composition according to claim 91 or 92, wherein the aliphatic polyester is one coupled with the coupler (E) represented by the general formula (7).

**94.** An aliphatic polyester blend resin composition according to claim 84 or 85, wherein weight compositional ratio of the aliphatic polyester copolymer to the polylactic acid is 99.9/0.1 to 70/30.

**95.** An aliphatic polyester blend resin composition according to claim 90, wherein the cellulose acetate is a cellulose acetate resin blended with a plasticizer.

**96.** An aliphatic polyester blend resin composition according to claim 95, wherein the cellulose acetate has an acetylation degree within the range of 48.8 to 62.5.

**97.** An aliphatic polyester blend resin composition according to claim 95, wherein the plasticizer is a polycaprolactone, tris(ethoxycarbonyl)methyl citrate, tris(ethoxycarbonyl)methyl acetyl citrate or a mixture thereof.

**98.** An aliphatic polyester blend resin composition according to claim 95, wherein the weight compositional ratio of the aliphatic polyester copolymer to the cellulose acetate resin in which the plasticizer is blended is 90/10 to 10/90.

**99.** An aliphatic polyester blend resin composition according to claim 95 or 98, wherein the plasticizer has a blending amount of 15 to 50 parts by weight based on 100 parts by weight of the cellulose acetate.

**100.** An aliphatic polyester blend resin composition according to claim 90, wherein the starch is any one of a granular starch, a plasticized starch that has been plasticized with water and/or a plasticizer, or a blend of the granular starch and the plasticized starch that has been plasticized with water and/or a plasticizer.

**101.** An aliphatic polyester blend resin composition according to claim 100, wherein the weight compositional ratio of the aliphatic polyester copolymer to the starch is 95/5 to 20/80.

**102.** An aliphatic polyester blend resin composition according to any one of claim 84 to 101, further comprising, as the resin additive (d), aplasticizer, aheat stabilizer, a lubricant, a blocking inhibitor, a nucleating agent, a photolytic agent, a biodegradation accelerator, an antioxidant, an ultraviolet stabilizer, an antistatic agent, a flame retardant, a drop-flowing agent, an antimicrobial agent, a deodorant, a filler, a coloring agent or a mixture thereof, which is added thereto.

**103.** A molding molded from the aliphatic polyester blend resin composition according to any one of claims 84 to 102.

**104.** A molding according to claim 103, wherein the molding is any one selected from the group consisting of a film-like molding, a foamed body, a cushioning sheet having closed cells, a thick-wall vessel, a thin-wall vessel, a breeding pot, a plant protector, a card, a nonwoven fabric, a water drip net, a garbage bag, wall paper (decorative paper) , drain material, a laminate, a throwaway glove, a pole, a coating material and granular agricultural and horticultural coating material.

**105.** A biodegradable resin molding according to claim 103, wherein the molding is molded by inflation molding, extrusion molding, T-die molding, injection molding, blow molding, calender molding, compression molding, transfer molding, thermal molding, flow molding, or lamination molding.

**106.** A biodegradable resin molding according to claim 104, wherein the film-like molding is molded into a non-stretched film, a monoaxially stretched film or a biaxially stretched film.

**107.** A molding according to claim 104 or 106, wherein the film-like molding is an agricultural mulching film, a shrink film, or a laminate film.

Figure 1

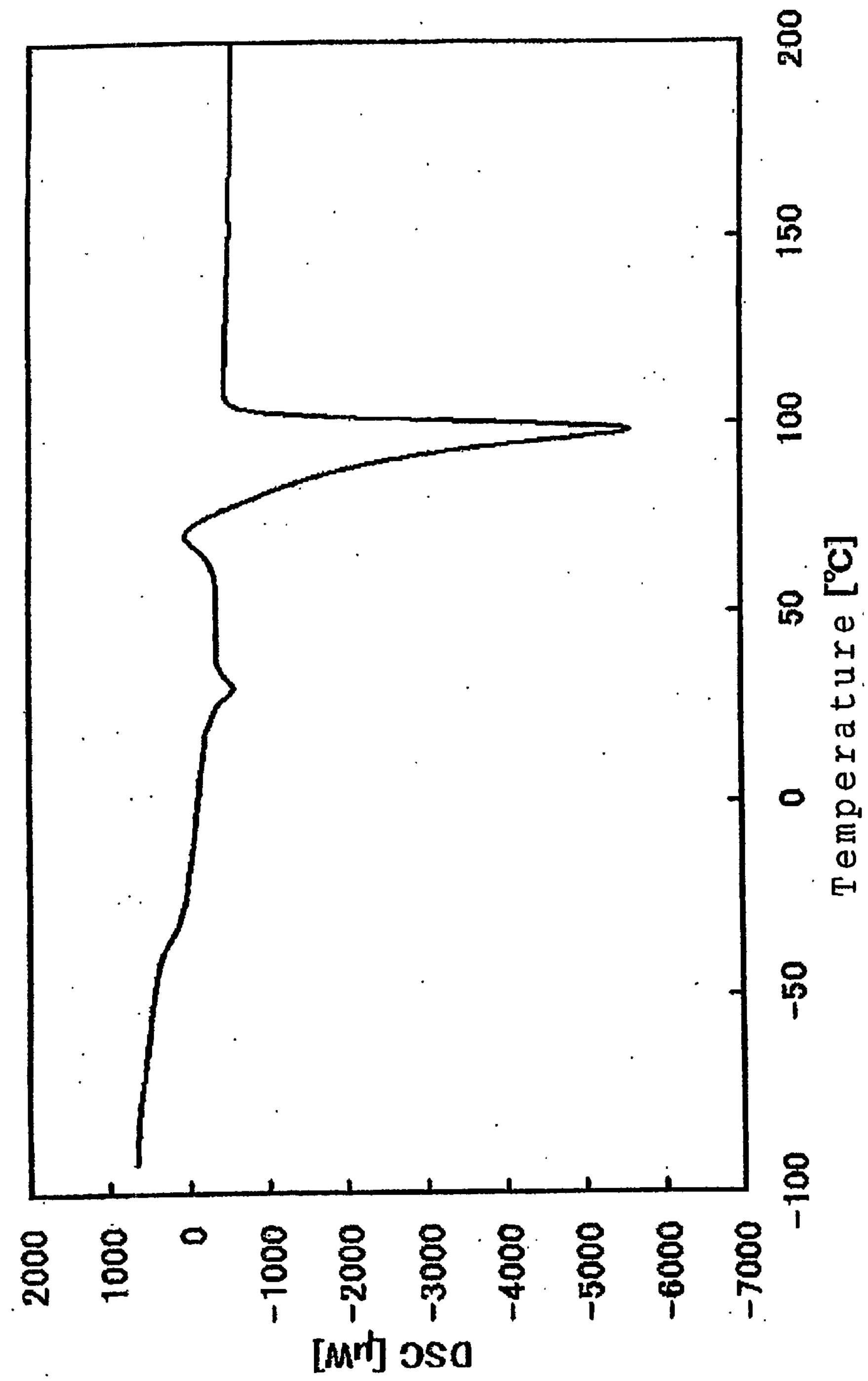
DSC [μW]
2000
1000
0
-1000
-2000
-3000
-4000
-5000
-6000
-7000
Temperature [°C]
-100
-50
0
50
100
150
200

Figure 2

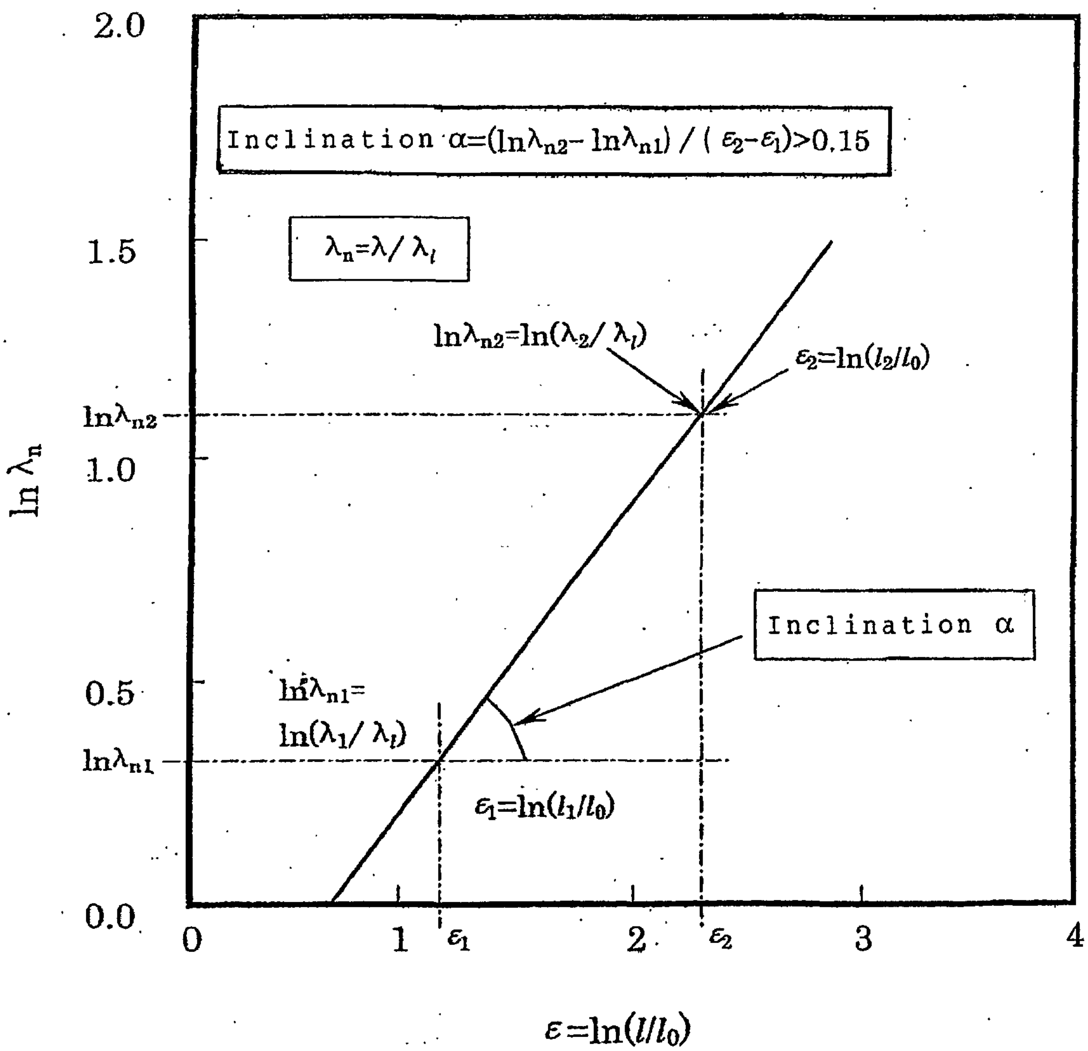
2.0
1.5
1.0
0.5
0.0
ln λn
lnλn2
lnλn1
Inclination α=(lnλn2− lnλn1) / ( ε2-ε1)>0.15
λn=λ/ λl
lnλn2=ln(λ2/ λl)
ε2=ln(l2/l0)
Inclination α
lnλn1=
ln(λ1/ λl)
ε1=ln(l1/l0)
0
1
ε1
2
ε2
3
4
ε=ln(l/l0)

Figure 3

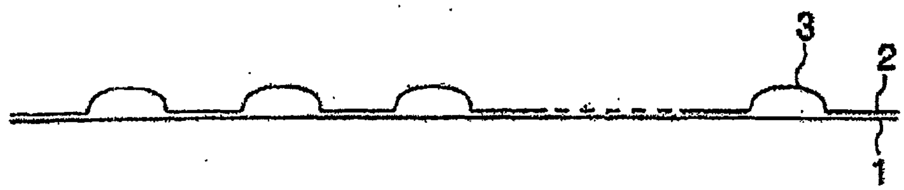


Figure 4

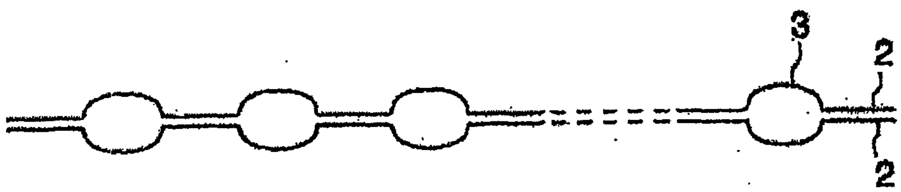


Figure 5

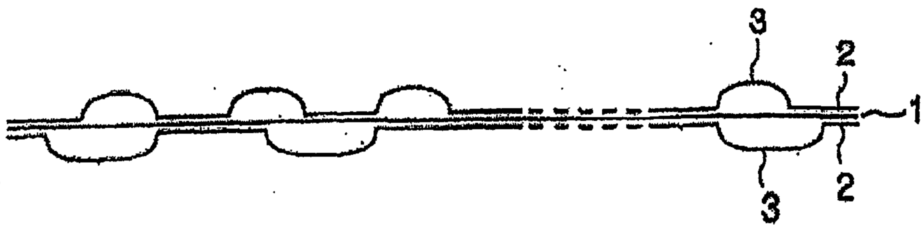

## INTERNATIONAL SEARCH REPORT

International application No.
PCT/JP01/10502

A. CLASSIFICATION OF SUBJECT MATTER
Int.Cl$^7$ C08G85/00, C08G63/68, C08J5/00, // C08L67:00

According to International Patent Classification (IPC) or to both national classification and IPC

B. FIELDS SEARCHED

Minimum documentation searched (classification system followed by classification symbols)
Int.Cl$^7$ C08G85/00, C08G63/68, C08J5/00, // C08L67:00

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP, 9-158021, A (Dainippon Ink And Chemicals, Inc.), 17 June, 1997 (17.06.97), Claims; page 3, Par. No. [0021] to page 4, Par. Nos. [0025], [0028], [0032], [0034]; page 5, Par. Nos. [0044] to [0046], [0049]; pages 7 to 8, Par. Nos. [0071] to [0074]; page 9, Par. Nos. [0096] to [0097] (Family: none) | 1-12,14-32, 35-45,47-60, 62-64,70-73, 84-105<br>13,46,61, 65-69,74-79, 80-83<br>33,34,106, 107 |
| X<br>Y<br>A | JP, 2000-212260, A (Mitsui Chemicals, Ltd.), 02 August, 2000 (02.08.00), Claims; page 3, Par. No. [0010] to page 4, Par. No. [0019], page 5, Par. Nos. [0027], [0029] (Family: none) | 1-7,9-12,14-32,35-45,47-60,62-64,70-73,84-105<br>13,46,61,65-69,74-79, 80-83<br>8,33,34,106, 107 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March, 2002 (08.03.02) | 19 March, 2002 (19.03.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP01/10502

C (Continuation). DOCUMENTS CONSIDERED TO BE RELEVANT

| Category* | Citation of document, with indication, where appropriate, of the relevant passages | Relevant to claim No. |
|---|---|---|
| X | JP, 2000-327761, A (Mitsubishi Gas Chemical Co., Inc.), 28 November, 2000 (28.11.00), Claims; page 3, Par. No. [0007] to page 4, Par. No. [0016]; page 5, Par. Nos. [0019] to [0020] (Family: none) | 1-4,6-11,14-21,23-41,43, 44,47-56,58, 59,62-64,70-73,84-88,90-107 |
| Y | | 65-69,74-78, 80-83 |
| A | | 5,12,13,22, 42,45,46,57, 60,61,79,89 |
| Y | EP, 569143, A2 (Showa Highpolymer Co., Ltd.), 10 November, 1993 (10.11.93), Claims; page 6, lines 50 to 57 & JP 7-47598 A Page 6, Par. No. [0034] & US 5310872 A & DE 69317466 E | 13,46,61 |
| Y | EP, 1008629, A1 (Daicel Chemical Industries, Ltd.), 14 June, 2000 (14.06.00), Claims & JP 2000-15765 A & WO 99/63001 A1 | 65-69,74-83 |
| Y | JP, 2000-86750, A (Shimadzu Corp.), 28 March, 2000 (28.03.00), Claims; page 3, Par. Nos. [0010] to [0011] (Family: none) | 65-69,74-83 |
| A | JP, 7-268057 A (Dainippon Ink And Chemicals, Inc.), 17 October, 1995 (17.10.95), Claims (Family: none) | 1-107 |
| PA | JP, 2001-114905, A (Daicel Chemical Industries, Ltd.), 24 April, 2001 (24.04.01), Claims (Family: none) | 1-107 |
| PA | JP, 2001-316578, A (Daicel Chemical Industries, Ltd.), 16 November, 2001 (16.11.01), Claims (Family: none) | 1-107 |
| EA | JP, 2002-47402, A (Daicel Chemical Industries, Ltd.), 12 February, 2002 (12.02.02), Claims (Family: none) | 1-107 |

Form PCT/ISA/210 (continuation of second sheet) (July 1998)